# EUROPÄISCHE PATENTSCHRIFT

(11) **EP 1 962 599 B1**
(45) Veröffentlichungstag und Bekanntmachung des Hinweises auf die Patenterteilung: **16.03.2016**
(21) Anmeldenummer: 06840968.9
(22) Anmeldetag: 11.12.2006
(51) Int. Cl.: A01N 43/12, A01N 59/02, A01N 43/90, A01N 43/40, A01N 43/38, A01N 43/16, A01N 43/86, A01N 43/08, A01N 35/06, A01N 25/04, A01N 25/02, A01P 7/00

(54) **INSEKTIZIDE ZUSAMMENSETZUNGEN, DIE PHENYLSUBSTITUIERTE CYCLISCHE KETOENOLE ENTHALTEN**
INSECTICIDE COMPOUNDS WITH IMPROVED EFFECT
COMPOSITIONS INSECTICIDES À ACTION AMÉLIORÉE

(30) Priorität: 13.12.2005 DE 102005059469
(43) Veröffentlichungstag der Anmeldung: 03.09.2008
(73) Patentinhaber: Bayer Intellectual Property GmbH, 40789 Monheim am Rhein (DE)
(72) Erfinder: FISCHER, Reiner, 40789 Monheim (DE); LEHR, Stefan, 65835 Liederbach (DE); MARCZOK, Peter, 50739 Köln (DE); RECKMANN, Udo, 51063 köln (DE); ARNOLD, Christian, 40764 Langenfeld (DE); HEMPEL, Waltraud, 65835 Liederbach (DE); SANWALD, Erich, 24159 Kiel (DE); PONTZEN, Rolf, 42799 Leichlingen (DE)
(74) Vertreter: BIP Patents
(86) Internationale Anmeldenummer: PCT/EP2006/011912
(87) Internationale Veröffentlichungsnummer: WO 2007/068428

(56) Entgegenhaltungen:
- EP-A- 0 528 156
- EP-A- 0 664 081
- WO-A-01/17352
- WO-A-98/05638
- WO-A-99/55673
- WO-A-02/098230
- WO-A-03/099005
- WO-A-2005/084435
- WO-A-2006/024411
- WO-A-2006/079079

## Beschreibung

Die vorliegende Erfindung betrifft die Steigerung der Wirkung von Pflanzenschutzmitteln enthaltend Inhibitoren der Fettsäure-Biosynthese, insbesondere phenylsubstituierte cyclische Ketoenole, durch die Zugabe von Ammonium- oder Phosphoniumsalzen und Penetrationsförderern, die entsprechenden Mittel, Verfahren zu ihrer Herstellung und ihre Anwendung im Pflanzenschutz, insbesondere als Insektizide und/oder Akarizide.

Von 3-Acyl-pyrrolidin-2,4-dionen sind pharmazeutische Eigenschaften vorbeschrieben (S. Suzuki et al. Chem. Pharm. Bull. 15 1120 (1967)). Weiterhin wurden N-Phenylpyrrolidin-2,4-dione von R. Schmierer und H. Mildenberger (Liebigs Ann. Chem. 1985, 1095) synthetisiert. Eine biologische Wirksamkeit dieser Verbindungen wurde nicht beschrieben.

In EP-A-0 262 399 und GB-A-2 266 888 werden ähnlich strukturierte Verbindungen (3-Aryl-pyr-rolidin-2,4-dione) offenbart, von denen jedoch keine herbizide, insektizide oder akarizide Wirkung bekannt geworden ist. Bekannt mit herbizider, insektizider oder akarizider Wirkung sind unsubstituierte, bicyclische 3-Aryl-pyrrolidin-2,4-dion-Derivate (EP-A-355 599, EP-A-415 211 und JP-A-12-053 670) sowie substituierte monocyclische 3-Aryl-pyrrolidin-2,4-dion-Derivate (EP-A-377 893 und EP-A-442 077).

Weiterhin bekannt sind polycyclische 3-Arylpyrrolidin-2,4-dion-Derivate (EP-A-442 073) sowie 1H-Arylpyrrolidin-dion-Derivate (EP-A-456 063, EP-A-521 334, EP-A-596 298, EP-A-613 884, EP-A-613 885, WO 95/01 997, WO 95/26 954, WO 95/20 572, EP-A-0 668 267, WO 96/25 395, WO 96/35 664, WO 97/01 535, WO 97/02 243, WO 97/36 868, WO 97/43275, WO 98/05638, WO 98/06721, WO 98/25928, WO 99/16748, WO 99/24437, WO 99/43649, WO 99/48869 und WO 99/55673, WO 01/17972, WO 01/23354, WO 01/74770, WO 03/013249, WO 04/007448, WO 04/024688, WO 04/065366, WO 04/080962, WO 04/111042, WO 05/044791, WO 05/044796, WO 05/048710, WO 05/049569, WO 05/066125, WO 05/092897, WO 06/000355, WO 06/029799, WO 06/056281, WO 06/056282, WO 06/089633).

Es ist bekannt, dass bestimmte substituierte Δ³-Dihydrofuran-2-on-Derivate herbizide Eigenschaften besitzen (vgl. DE-A-4 014 420). Die Synthese der als Ausgangsverbindungen verwendeten Tetronsäurederivate (wie z.B. 3-(2-Methyl-phenyl)-4-hydroxy-5-(4-fluorphenyl)-Δ³-di-hydrofuranon-(2)) ist ebenfalls in DE-A-4 014 420 beschrieben. Ähnlich strukturierte Verbindungen ohne Angabe einer insektiziden und/oder akariziden Wirksamkeit sind aus der Publikation Campbell et al., J. Chem. Soc., Perkin Trans. 1, 1985, (8) 1567-76 bekannt. Weiterhin sind 3-Aryl-Δ³-dihydrofuranon-Derivate mit herbiziden, akariziden und insektiziden Eigenschaften aus EP-A-528 156, EP-A-0 647 637, WO 95/26 345, WO 96/20 196, WO 96/25 395, WO 96/35 664, WO 97/01 535, WO 97/02 243, WO 97/36 868, WO 98/05638, WO 98/25928, WO 99/16748, WO 99/43649, WO 99/48869, WO 99/55673, WO 01/17972, WO 01/23354, WO 01/74770, WO 03/013 249, WO 04/024 688, WO 04/080 962, WO 04/111 042, WO 05/092897, WO 06/000355, WO 06/029799 und WO 06/089633 bekannt. Auch 3-Aryl-Δ³-dihydrothiophen-on-Derivate sind bekannt (WO 95/26 345, 96/25 395, WO 97/01 535, WO 97/02 243, WO 97/36 868, WO 98/05638, WO 98/25928, WO 99/16748, WO 99/43649, WO 99/48869, WO 99/55673, WO 01/ 17972, WO 01/23354, WO 01/74770, WO 03/013249, WO 04/080 962, WO 04/111 042, WO 05/092897, WO 06/029799).

Bestimmte, im Phenylring unsubstituierte Phenyl-pyron-Derivate sind bereits bekannt geworden (vgl. A.M. Chirazi, T. Kappe und E. Ziegler, Arch. Pharm. 309, 558 (1976) und K.-H. Boltze und K. Heidenbluth, Chem. Ber. 91, 2849), wobei für diese Verbindungen eine mögliche Verwendbarkeit als Schädlingsbekämpfungsmittel nicht angegeben wird. Im Phenylring substituierte Phenyl-pyron-Derivate mit herbiziden, akariziden und insektiziden Eigenschaften sind in EP-A-588 137, WO 96/25 395, WO 96/35 664, WO 97/01 535, WO 97/02 243, WO 97/16 436, WO 97/19 941, WO 97/36 868, WO 98/05638, WO 99/43649, WO 99/48869, WO 99/55673, WO 01/17972, WO 01/74770, WO 03/013249, WO 04/080 962, WO 04/111 042, WO 05/092897, WO 06/029799 beschrieben.

Bestimmte, im Phenylring unsubstituierte 5-Phenyl-1,3-thiazin-Derivate sind bereits bekannt geworden (vgl. E. Ziegler und E. Steiner, Monatsh. 95, 147 (1964), R. Ketcham, T. Kappe und E. Ziegler, J. Heterocycl. Chem. 10, 223 (1973)), wobei für diese Verbindungen eine mögliche Anwendung als Schädlingsbekämpfungsmittel nicht angegeben wird. Im Phenylring substituierte 5-Phenyl-1,3-thiazin-Derivate mit herbizider, akarizider und insektizider Wirkung sind in WO 94/14 785, WO 96/02 539, WO 96/35 664, WO 97/01 535, WO 97/02 243, WO 97/02 243, WO 97/36 868, WO 99/05638, WO 99/43649, WO 99/48869, WO 99/55673, WO 01/17972, WO 01/74770, WO 03/013249, WO 04/080 962, WO 04/111 042, WO 05/092897 und WO 06/029799 beschrieben.

Es ist bekannt, dass bestimmte substituierte 2-Arylcyclopentandione herbizide, insektizide und akarizide Eigenschaften besitzen (vgl. z.B. US-4 283 348; 4 338 122; 4 436 666; 4 526 723; 4 551 547; 4 632 698; WO 96/01 798; WO 96/03 366, WO 97/14 667 sowie WO 98/39281, WO 99/43649, WO 99/48869, WO 99/55673, WO 01/17972, WO 01/74770, WO 03/013249, WO 04/080 962, WO 04/111 042, WO 05/092897 und WO 06/029799). Außerdem sind ähnlich substituierte Verbindungen bekannt; 3-Hydroxy-5,5-dimethyl-2-phenylcyclopent-2-en-1-on aus der Publikation Micklefield et al., Tetrahedron, (1992), 7519-26 sowie der Naturstoff Involutin (-)-cis-5-(3,4-dihydroxyphenyl)-3,4-dihydroxy-2-(4-hydroxyphenyl)-cyclopent-2-en-one aus der Publikation Edwards et al., J. Chem. Soc. S, (1967), 405-9. Eine insektizide oder akarizide Wirkung wird nicht beschrieben. Außerdem ist 2-(2,4,6-Trimethylphenyl)-1,3-indandion aus der Publikation J. Economic Entomology, 66, (1973), 584 und der Offenlegungsschrift DE-A 2 361 084 bekannt, mit Angabe von herbiziden und akariziden Wirkungen.

Es ist bekannt, dass bestimmte substituierte 2-Arylcyclohexandione herbizide, insektizide und akarizide Eigenschaften besitzen (US-4 175 135, 4 209 432, 4 256 657, 4 256 658, 4 256 659, 4 257 858, 4 283 348, 4 303 669, 4 351 666, 4 409 153, 4 436 666, 4 526 723, 4 613 617, 4 659 372, DE-A 2 813 341, sowie Wheeler, T.N., J. Org. Chem. 44, 4906 (1979)), WO 99/43649, WO 99/48869, WO 99/55673, WO 01/17972, WO 01/74770, WO 03/013249, WO 04/080 962, WO 04/111 042, WO 05/092897 und WO 06/029799).

Es ist bekannt, dass bestimmte substituierte 4-Aryl-pyrazolidin-3,5-dione akarizide, insektizide und herbizide Eigenschaften besitzen (vgl. z.B. WO 92/16 510, EP-A-508 126, WO 96/11 574, WO 96/21 652, WO 99/47525, WO 0/17 351, WO 01/17 352, WO 0/17 353, WO 01/17 972, WO 01/17 973, WO 03/028 466, WO 03/062 244, WO 04/080 962, WO 04/111 042, WO 05/005428, WO 05/016873, WO 05/092897 und WO 06/029799).

Es ist bekannt, dass bestimmte Tetrahydropyridone herbizide Eigenschaften besitzen (JP 0832530). Außerdem sind spezielle 4-Hydroxytetrahydropyridone mit akariziden, insektiziden und herbiziden Eigenschaften bekannt (JP 11152273). Weiterhin bekannt wurden 4-Hydroxy-tetrahydropyridone als Schädlingsbekämpfungsmittel und Herbizide in WO 01/79204.

Es ist bekannt, dass bestimmte 5,6-Dihydropyron-Derivate als Proteaseinhibitoren antivirale Eigenschaften haben (WO 95/14012). Weiterhin ist das 4-Phenyl-6-(2-phenethyl)-5,6-dihydropyron aus der Synthese von Kawalakton-Derivaten bekannt (Kappe et al., Arch. Pharm. 309, 558-564 (1976)). Außerdem sind 5,6-Dihydropyron-Derivate als Zwischenprodukte bekannt (White, J.D., Brenner, J.B., Deinsdale, M. J., J. Amer. Chem. Soc. 93, 281 - 282 (1971)). 3-Phenyl-5,6-dihydro-pyron-Derivate mit Anwendungen im Pflanzenschutz sind in WO 01/98288 beschrieben.

Alle in den erfindungsgemäßen Mitteln enthaltenen Wirkstoffe sind bereits bekannt und können nach im Stand der Technik beschriebenen Verfahren (siehe oben genannte Referenzen) hergestellt werden. Ihre Wirkung ist gut, jedoch insbesondere bei niedrigen Aufwandmengen und Konzentrationen nicht immer voll zufriedenstellend. Weiterhin ist die Pflanzenverträglichkeit dieser Verbindungen nicht immer ausreichend. Es besteht deshalb ein Bedarf für eine Wirkungssteigerung der die Verbindungen enthaltenden Pflanzenschutzmittel.

In der Literatur wurde bereits beschrieben, dass sich die Wirkung verschiedener Wirkstoffe durch Zugabe von Ammoniumsalzen steigern lässt. Dabei handelt es sich jedoch um als Detergens wirkende Salze (z.B. WO 95/017817) bzw. Salze mit längeren Alkyl- und / oder Arylsubstituenten, die permeabilisierend wirken oder die Löslichkeit des Wirkstoffs erhöhen (z.B. EP-A 0 453 086, EP-A 0 664 081, FR-A 2 600 494, US 4 844 734, US 5 462 912, US 5 538 937, US-A 03/0224939, US-A 05/0009880, US-A 05/0096386). Weiterhin beschreibt der Stand der Technik die Wirkung nur für bestimmte Wirkstoffe und / oder bestimmte Anwendungen der entsprechenden Mittel. In wieder anderen Fällen handelt es sich um Salze von Sulfonsäuren, bei denen die Säuren selber paralysierend auf Insekten wirken (US 2 842 476). Eine Wirkungssteigerung z.B. durch Ammoniumsulfat ist beispielsweise für die Herbizide Glyphosat und Phosphinothricin beschrieben (US 6 645 914, EP-A2 0 036 106). Eine entsprechende Wirkung bei Insektiziden wird durch diesen Stand der Technik weder offenbart noch nahegelegt.

Auch der Einsatz von Ammoniumsulfat als Formulierhilfsmittel ist für bestimmte Wirkstoffe und Anwendungen beschrieben (WO 92/16108), es dient dort aber zur Stabilisierung der Formulierung, nicht zur Wirkungssteigerung.

Es wurde nun völlig überraschend gefunden, dass sich die Wirkung von Insektiziden und/oder Akariziden aus der Klasse der phenylsubstituierten, cyclischen Ketoenole durch den Zusatz von Ammonium- oder Phosphoniumsalzen zur Anwendungslösung oder durch den Einbau dieser Salze in eine Formulierung enthaltend phenylsubstituierte, cyclische Ketoenole, deutlich steigern lässt. Gegenstand der vorliegenden Erfindung ist also die Verwendung von Kombinationen von Penetrationsförderern gemäß Anspruch 1 und Ammonium- oder Phosphoniumsalzen der Formel (II) zur Wirkungssteigerung von Pflanzenschutzmitteln, die insektizid und / oder akarizid wirksame phenylsubstituierte, cyclische Ketoenole der allgemeinen Formel (I) als Wirkstoff enthalten. Gegenstand der Erfindung sind ebenfalls Mittel, die insektizid und/oder akarizid wirksame phenylsubstituierte, cyclische Ketoenole der allgemeinen Formel (I) und die Wirkung steigernde Kombinationen von Penetrationsförderern gemäß Anspruch 1 und Ammonium- oder Phosphoniumsalze der Formel (II) enthalten und zwar sowohl formulierte Wirkstoffe als auch anwendungsfertige Mittel (Spritzbrühen). Gegenstand der Erfindung ist schließlich weiterhin die Verwendung dieser Mittel zur Bekämpfung von Schadinsekten und/oder Spinnmilben.

Erfindungsgemäße Wirkstoffe aus der Klasse der phenylsubstituierten, cyclischen Ketoenole, deren Wirkung sich durch die Zugabe von Kombinationen von Penetrationsförderern gemäß Anspruch 1 und Ammonium- oder Phosphoniumsalzen der Formel (II) zu den formulierten oder anwendungsfertigen Wirkstoffzubereitungen steigern lässt, werden durch Formel (I) definiert, 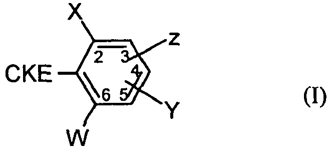 in welcher
- W: für Wasserstoff, Alkyl, Alkenyl, Alkinyl, Halogen, Alkoxy, Halogenalkyl, Halogenalkoxy oder Cyano steht,
- X: für Halogen, Alkyl, Alkenyl, Alkinyl, Alkoxy, Alkoxy-alkoxy, Halogenalkyl, Halogenalkoxy oder Cyano steht,
- Y: für Wasserstoff, Halogen, Alkyl, Alkenyl, Alkinyl, Alkoxy, Cyano, Halogenalkyl, Halogenalkoxy oder für jeweils gegebenenfalls substituiertes Phenyl oder Hetaryl steht,
- Z: für Wasserstoff, Halogen, Alkyl, Halogenalkyl, Cyano, Alkoxy oder Halogenalkoxy steht,
- CKE: für eine der Gruppen 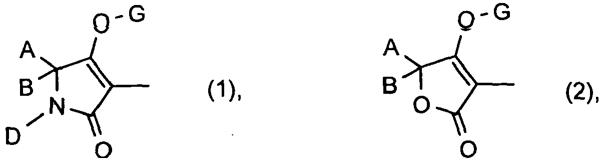 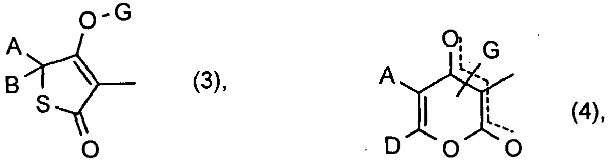 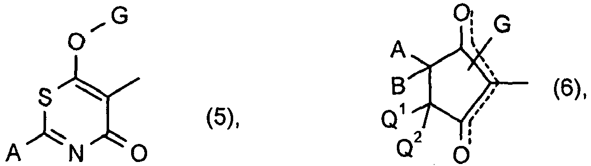 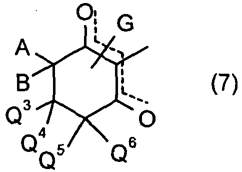 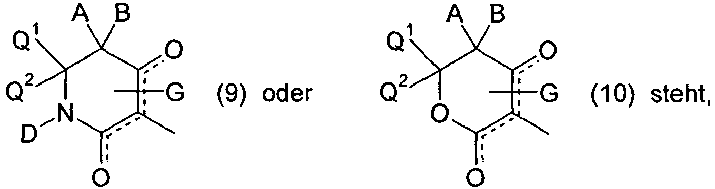
worin
- A: für Wasserstoff, jeweils gegebenenfalls durch Halogen substituiertes Alkyl, Alkenyl, Alkoxyalkyl, Alkylthioalkyl, gesättigtes oder ungesättigtes, gegebenenfalls substituiertes Cycloalkyl, in welchem gegebenenfalls mindestens ein Ringatom durch ein Heteroatom ersetzt ist, oder jeweils gegebenenfalls durch Halogen, Alkyl, Halogenalkyl, Alkoxy, Halogenalkoxy, Cyano oder Nitro substituiertes Aryl, Arylalkyl oder Hetaryl steht,
- B: für Wasserstoff, Alkyl oder Alkoxyalkyl steht, oder
- A und B: gemeinsam mit dem Kohlenstoffatom an das sie gebunden sind für einen gesättigten oder ungesättigten, gegebenenfalls mindestens ein Heteroatom enthaltenden unsubstituierten oder substituierten Cyclus stehen,
- D: für Wasserstoff oder einen gegebenenfalls substituierten Rest aus der Reihe Alkyl, Alkenyl, Alkinyl, Alkoxyalkyl, gesättigtes oder ungesättigtes Cycloalkyl, in welchem gegebenenfalls eines oder mehrere Ringglieder durch Heteroatome ersetzt sind, Arylalkyl, Aryl, Hetarylalkyl oder Hetaryl steht oder
- A und D: gemeinsam mit den Atomen an die sie gebunden sind für einen gesättigten oder ungesättigten und gegebenenfalls mindestens ein Heteroatom enthaltenden, im A,D-Teil unsubstituierten oder substituierten Cyclus stehen, bzw.
- A und Q¹: gemeinsam für gegebenenfalls durch Hydroxy, jeweils gegebenenfalls substituiertes Alkyl, Alkoxy, Alkylthio, Cycloalkyl, Benzyloxy oder Aryl substituiertes Alkandiyl oder Alkendiyl stehen oder
- D und Q¹: gemeinsam mit den Atomen, an die sie gebunden sind, für einen gesättigten oder ungesättigten und gegebenenfalls mindestens ein Heteroatom enthaltenden, im D, Q¹-Teil unsubstituierten oder substituierten Cyclus stehen,
- Q¹: für Wasserstoff, Alkyl, Alkoxyalkyl, gegebenenfalls substituiertes Cycloalkyl (worin gegebenenfalls eine Methylengruppe durch Sauerstoff oder Schwefel ersetzt ist) oder gegebenenfalls substituiertes Phenyl steht,
- Q², Q⁴, Q⁵ und Q⁶: unabhängig voneinander für Wasserstoff oder Alkyl stehen,
- Q³: für Wasserstoff, für gegebenenfalls substituiertes Alkyl, Alkoxyalkyl, Alkylthioalkyl, gegebenenfalls substituiertes Cycloalkyl (worin gegebenenfalls eine Methylengruppe durch Sauerstoff oder Schwefel ersetzt ist) oder gegebenenfalls substituiertes Phenyl steht, oder
- Q¹ und Q²: gemeinsam mit dem Kohlenstoffatom, an das sie gebunden sind, für einen gegebenenfalls ein Heteroatom enthaltenden unsubstituierten oder substituierten Cyclus stehen, oder
- Q³ und Q⁴: gemeinsam mit dem Kohlenstoffatom, an das sie gebunden sind, für einen gesättigten oder ungesättigten, gegebenenfalls ein Heteroatom enthaltenden unsubstituierten oder substituierten Cyclus stehen,
- G: für Wasserstoff (a) oder für eine der Gruppen 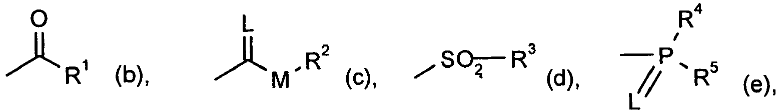 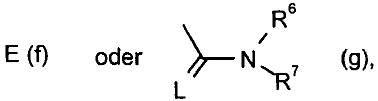
steht,
worin
- E: für ein Metallionäquivalent oder ein Ammoniumion steht,
- L: für Sauerstoff oder Schwefel steht,
- M: für Sauerstoff oder Schwefel steht,
- R¹: für jeweils gegebenenfalls durch Halogen substituiertes Alkyl, Alkenyl, Alkoxyalkyl, Alkylthioalkyl, Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenenfalls substituiertes Phenyl, Phenylalkyl, Hetaryl, Phenoxyalkyl oder Hetaryloxyalkyl steht,
- R²: für jeweils gegebenenfalls durch Halogen substituiertes Alkyl, Alkenyl, Alkoxyalkyl, Polyalkoxyalkyl oder für jeweils gegebenenfalls substituiertes Cycloalkyl, Phenyl oder Benzyl steht,
- R³, R⁴ und R⁵: unabhängig voneinander für jeweils gegebenenfalls durch Halogen substituiertes Alkyl, Alkoxy, Alkylamino, Dialkylamino, Alkylthio, Alkenylthio, Cycloalkylthio oder für jeweils gegebenenfalls substituiertes Phenyl, Benzyl, Phenoxy oder Phenylthio stehen,
- R⁶ und R⁷: unabhängig voneinander für Wasserstoff, jeweils gegebenenfalls durch Halogen substituiertes Alkyl, Cycloalkyl, Alkenyl, Alkoxy, Alkoxyalkyl, für gegebenenfalls substituiertes Phenyl, für gegebenenfalls substituiertes Benzyl stehen, oder gemeinsam mit dem N-Atom, an das sie gebunden sind, für einen gegebenenfalls durch Sauerstoff oder Schwefel unterbrochenen Cyclus stehen.

Die Verbindungen der Formel (I) können, auch in Abhängigkeit von der Art der Substituenten, als geometrische und/oder optische Isomere oder Isomerengemische, in unterschiedlicher Zusammensetzung vorliegen, die gegebenenfalls in üblicher Art und Weise getrennt werden können. Sowohl die reinen Isomeren als auch die Isomerengemische sind in erfindungsgemäßen Mitteln einsetzbar und lassen sich in ihrer Wirkung durch Kombinationen von Penetrationsförderern gemäß Anspruch 1 und Ammonium- oder Phosphoniumsalze der Formel (II) Ammonium- oder Phosphoniumsalze steigern. Im folgenden wird der Einfachheit halber stets von Verbindungen der Fo chen, obwohl sowohl die reinen Verbindungen als gegebenenfalls auch Gemische mit unterschiedlichen Anteilen an isomeren Verbindungen gemeint sind.

Unter Einbeziehung der Bedeutungen (1) bis (10) der Gruppe CKE ergeben sich folgende hauptsächliche Strukturen (I-1) bis (I-10): 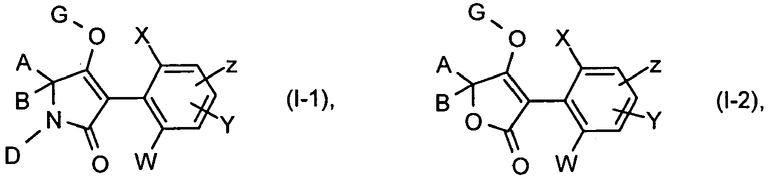 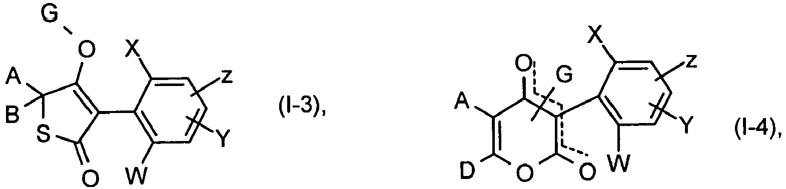 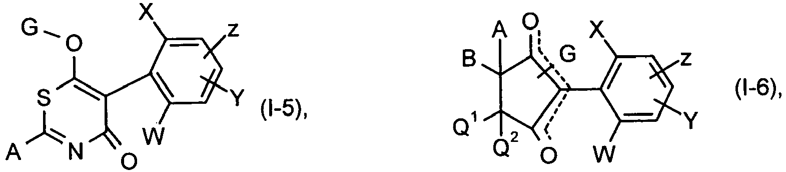 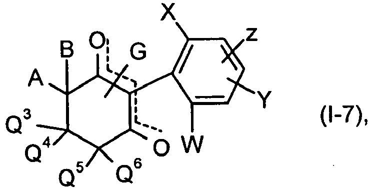 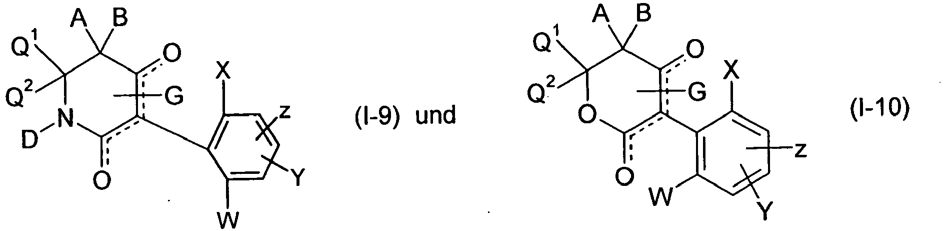 worin
A, B, D, G, Q¹, Q², Q³, Q⁴, Q⁵, Q⁶, W, X, Y und Z die oben angegebene Bedeutung haben.

Unter Einbeziehung der verschiedenen Bedeutungen (a), (b), (c), (d), (e), (f) und (g) der Gruppe G ergeben sich folgende hauptsächliche Strukturen (I-1-a) bis (I-1-g), wenn CKE für die Gruppe (1) steht, 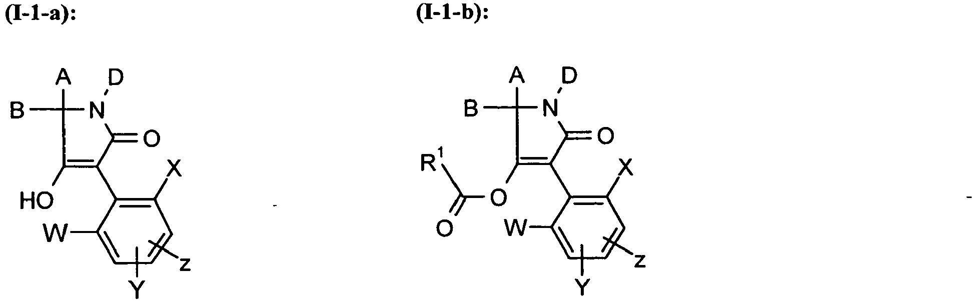 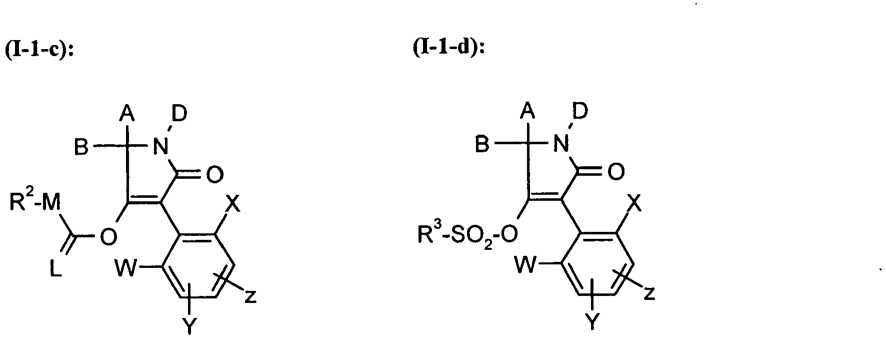 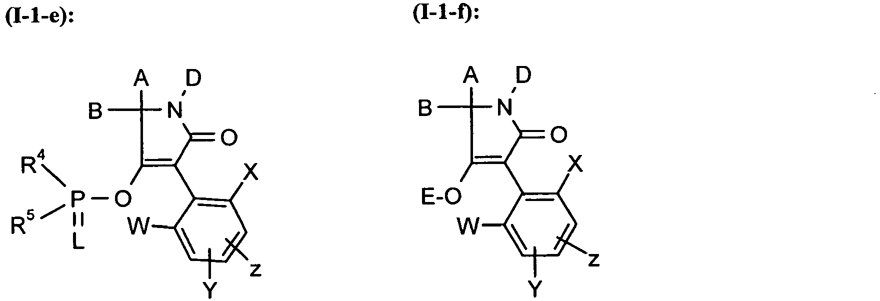 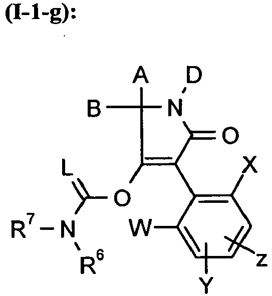 worin
A, B, D, E, L, M, W, X, Y, Z, R¹, R², R³, R⁴, R⁵, R⁶ und R⁷ die oben angegebenen Bedeutungen besitzen.

Unter Einbeziehung der verschiedenen Bedeutungen (a), (b), (c), (d), (e), (f) und (g) der Gruppe G ergeben sich folgende hauptsächliche Strukturen (I-2-a) bis (I-2-g), wenn CKE für die Gruppe (2) steht, 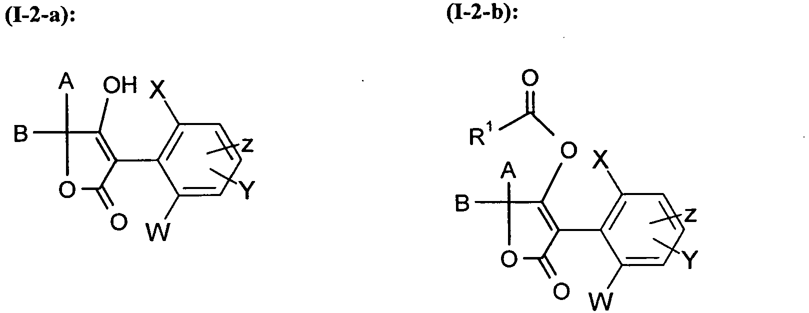 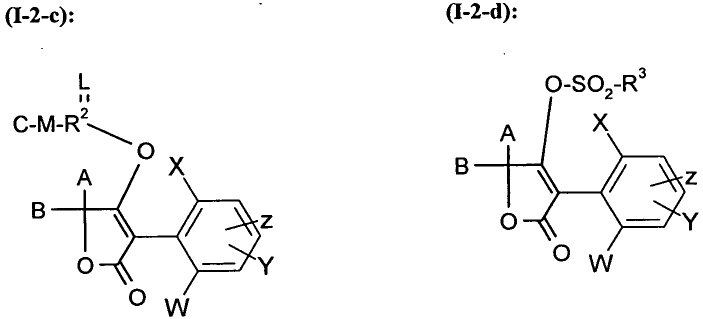 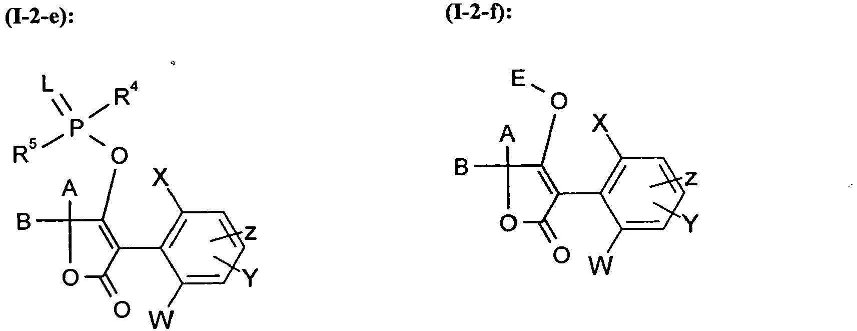 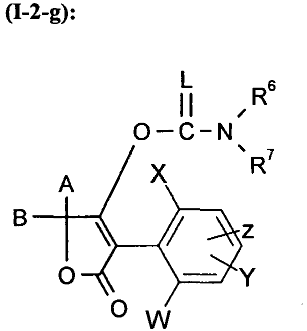 worin
A, B, E, L, M, W, X, Y, Z, R¹, R², R³, R⁴, R⁵, R⁶ und R⁷ die oben angegebene Bedeutung haben.

Unter Einbeziehung der verschiedenen Bedeutungen (a), (b), (c), (d), (e), (f) und (g) der Gruppe G ergeben sich folgende hauptsächliche Strukturen (I-3-a) bis (I-3-g), wenn CKE für die Gruppe (3) steht, 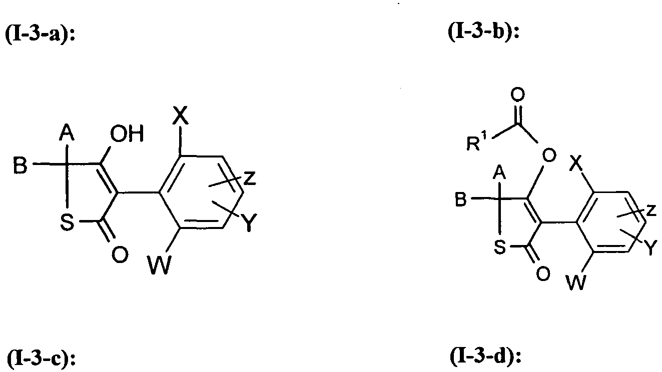 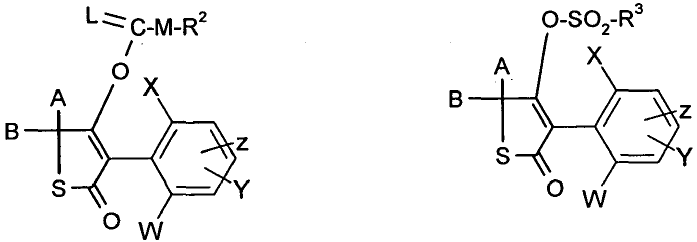 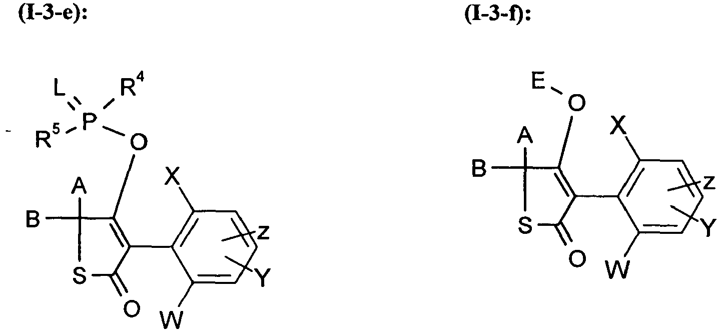 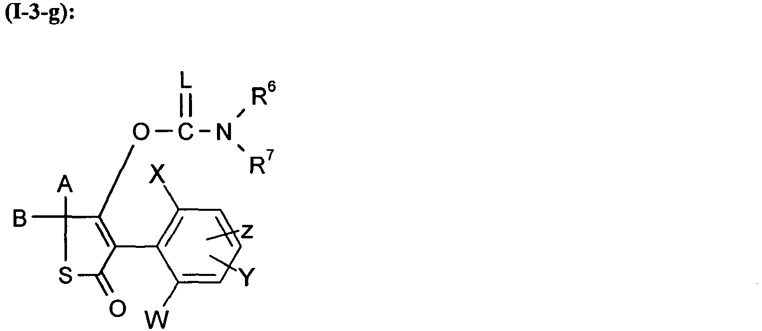 worin
A, B, E, L, M, W, X, Y, Z, R¹, R², R³, R⁴, R⁵, R⁶ und R⁷ die oben angegebenen Bedeutung besitzen.

Die Verbindungen der Formel (I-4) können in Abhängigkeit von der Stellung des Substituenten G in den zwei isomeren Formen der Formeln (I-4-A) und (I-4-B) vorliegen, 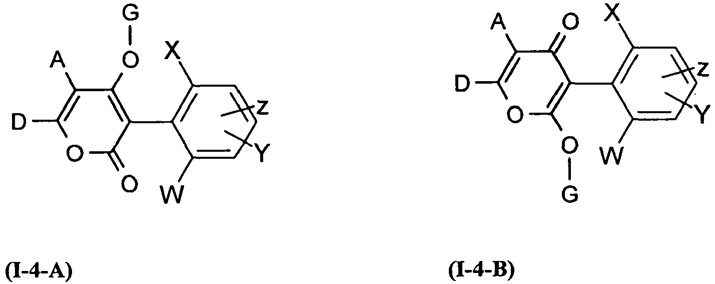 was durch die gestrichelte Linie in der Formel (I-4) zum Ausdruck gebracht werden soll.

Die Verbindungen der Formeln (I-4-A) und (I-4-B) können sowohl als Gemische als auch in Form ihrer reinen Isomeren vorliegen. Gemische der Verbindungen der Formeln (I-4-A) und (I-4-B) lassen sich gegebenenfalls in an sich bekannter Weise durch physikalische Methoden trennen, beispielsweise durch chromatographische Methoden.

Aus Gründen der besseren Übersichtlichkeit wird im folgenden jeweils nur eines der möglichen Isomeren aufgerührt. Das schließt nicht aus, dass die Verbindungen gegebenenfalls in Form der Isomerengemische oder in der jeweils anderen isomeren Form vorliegen können.

Unter Einbeziehung der verschiedenen Bedeutungen (a), (b), (c), (d), (e), (f) und (g) der Gruppe G ergeben sich folgende hauptsächliche Strukturen (I-4-a) bis (I-4-g), wenn CKE für die Gruppe (4) steht, 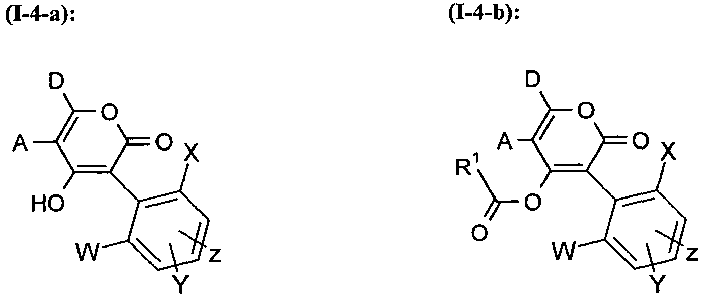 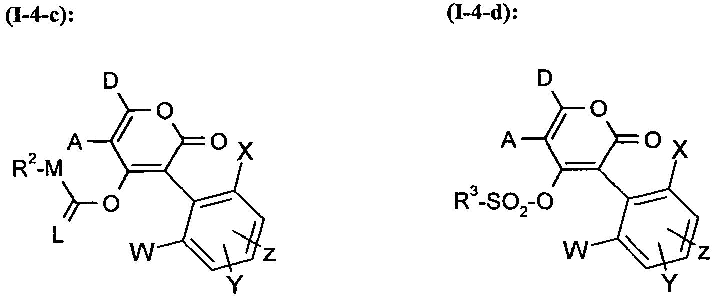 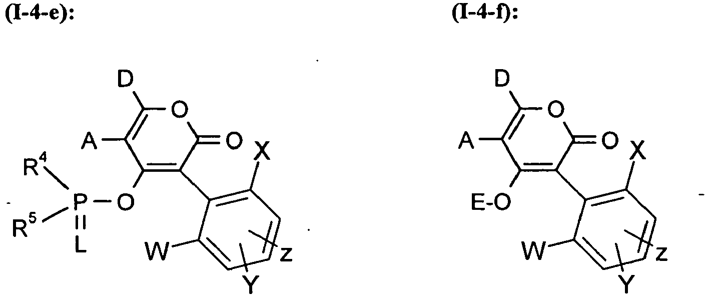 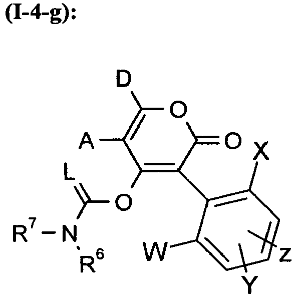 worin
A, D, E, L, M, W, X, Y, Z, R¹, R², R³, R⁴, R⁵, R⁶ und R⁷ die oben angegebenen Bedeutungen besitzen.

Unter Einbeziehung der verschiedenen Bedeutungen (a), (b), (c), (d), (e), (f) und (g) der Gruppe G ergeben sich folgende hauptsächliche Strukturen (I-5-a) bis (I-5-g), wenn CKE für die Gruppe (5) steht, 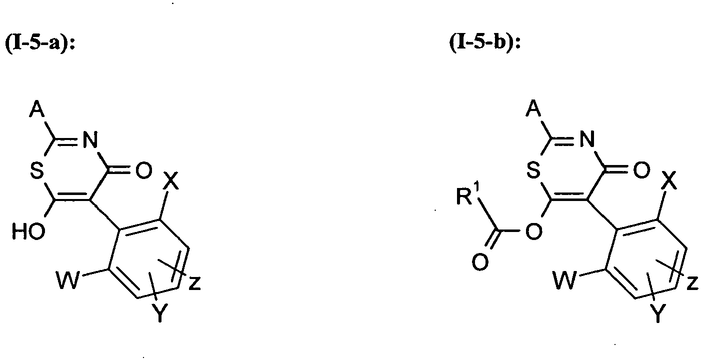 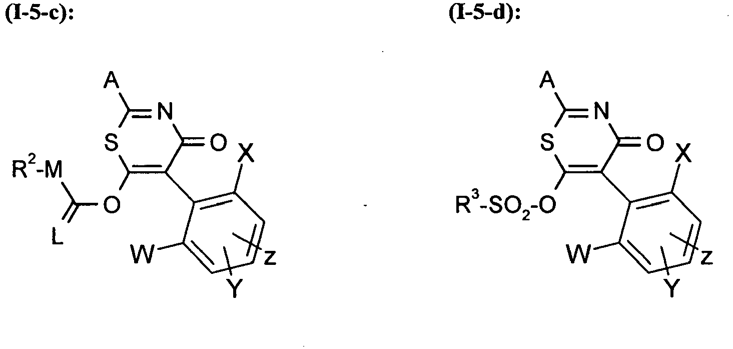 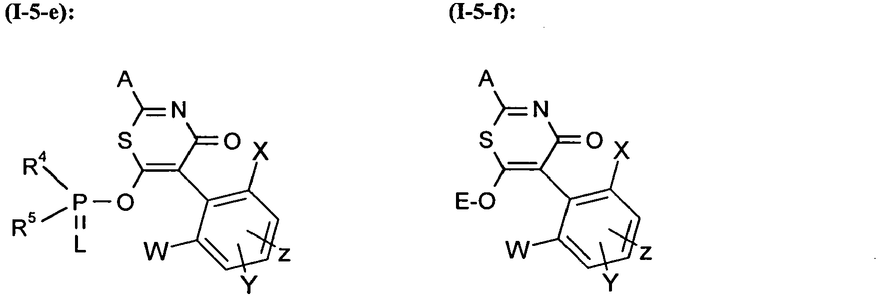 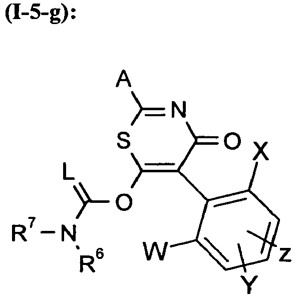 worin
A, E, L, M, W, X, Y, Z, R¹, R², R³, R⁴, R⁵, R⁶ und R⁷ die oben angegebenen Bedeutungen besitzen.

Die Verbindungen der Formel (I-6) können in Abhängigkeit von der Stellung des Substituenten G in den zwei isomeren Formen der Formeln (I-6-A) und (I-6-B) vorliegen, 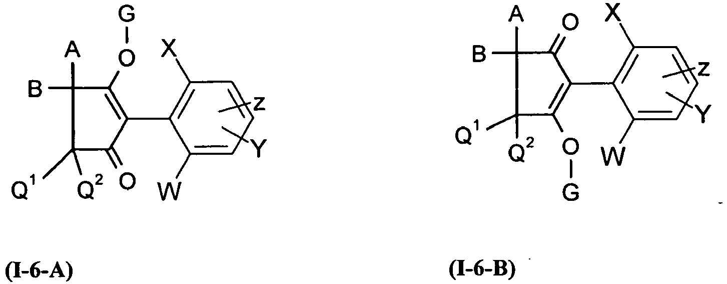 was durch die gestrichelte Linie in der Formel (I) zum Ausdruck gebracht werden soll.

Die Verbindungen der Formeln (I-6-A) und (I-6-B) können sowohl als Gemische als auch in Form ihrer reinen Isomeren vorliegen. Gemische der Verbindungen der Formeln (I-6-A) und (I-6-B) lassen sich gegebenenfalls durch physikalische Methoden trennen, beispielsweise durch chromatographische Methoden.

Aus Gründen der besseren Übersichtlichkeit wird im folgenden jeweils nur eines der möglichen Isomeren aufgeführt. Das schließt nicht aus, dass die Verbindungen gegebenenfalls in Form der Isomerengemische oder in der jeweils anderen isomeren Form vorliegen können.

Unter Einbeziehung der verschiedenen Bedeutungen (a), (b), (c), (d), (e), (f) und (g) der Gruppe G ergeben sich folgende hauptsächlichen Strukturen (I-6-a) bis (I-6-g): 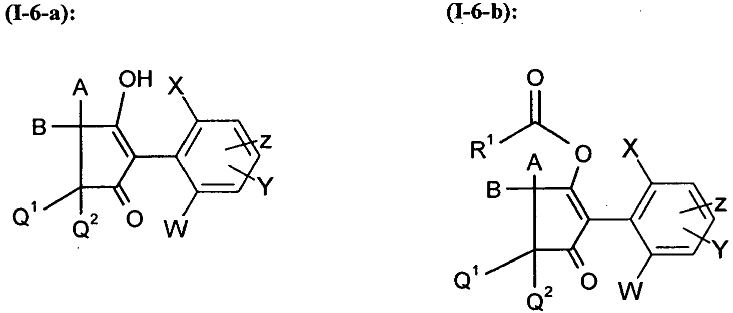 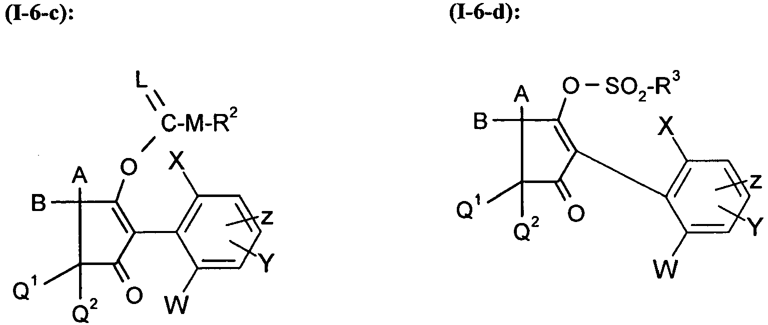 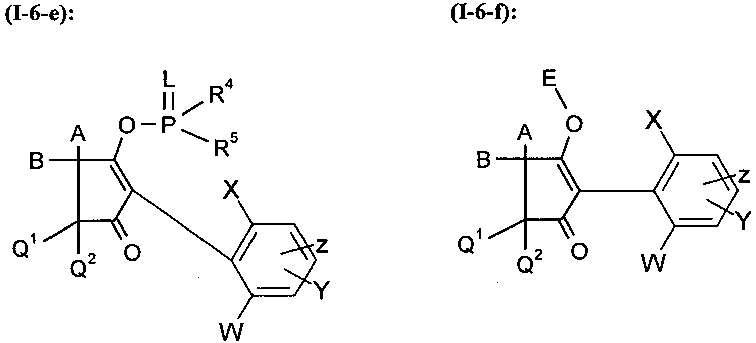 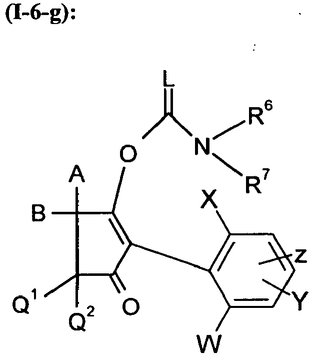 worin
A, B, Q¹, Q², E, L, M, W, X, Y, Z, R¹, R², R³, R⁴, R⁵, R⁶ und R⁷ die oben angegebenen Bedeutungen besitzen.

Die Verbindungen der Formel (I-7) können in Abhängigkeit von der Stellung des Substituenten G in den zwei isomeren Formen der Formeln (I-7-A) bzw. (I-7-B) vorliegen, was durch die gestrichelte Linie in der Formel (I-7) zum Ausdruck gebracht werden soll:

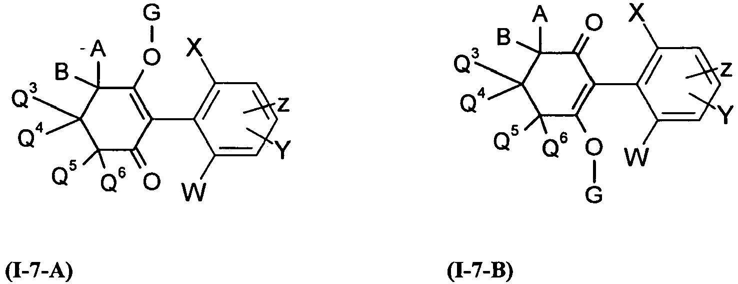

Die Verbindungen der Formeln (I-7-A) bzw. (I-7-B) können sowohl als Gemische als auch in Form ihrer reinen Isomeren vorliegen. Gemische der Verbindungen der Formeln (I-7-A) und (I-7-B) lassen sich gegebenenfalls durch physikalische Methoden trennen, beispielsweise durch chromatographische Methoden.

Aus Gründen der besseren Übersichtlichkeit wird im folgenden jeweils nur eines der möglichen Isomeren aufgerührt. Das schließt ein, dass die betreffende Verbindung gegebenenfalls als Isomerengemisch oder in der jeweils anderen isomeren Form vorliegen kann.

Unter Einbeziehung der verschiedenen Bedeutungen (a), (b), (c), (d), (e), (f) und (g) der Gruppe G ergeben sich folgende hauptsächlichen Strukturen (I-7-a) bis (I-7-g): 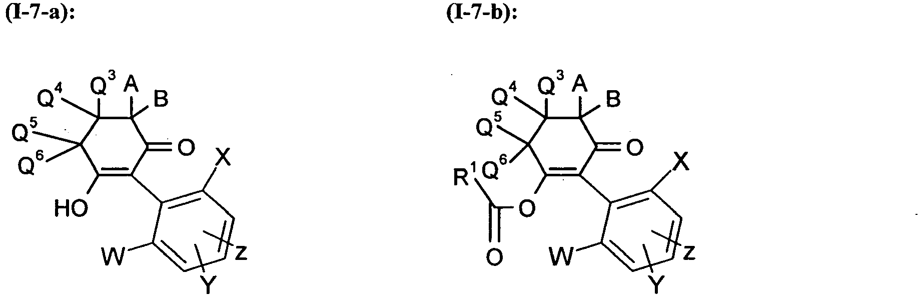 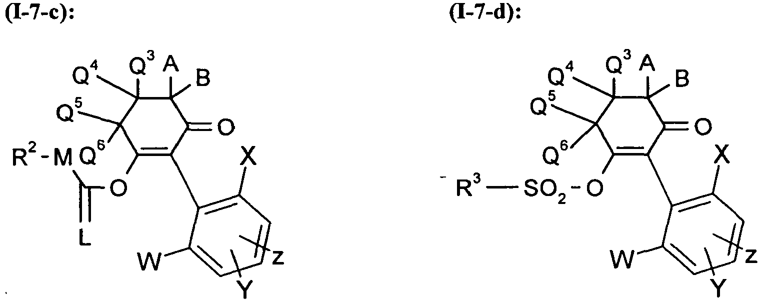 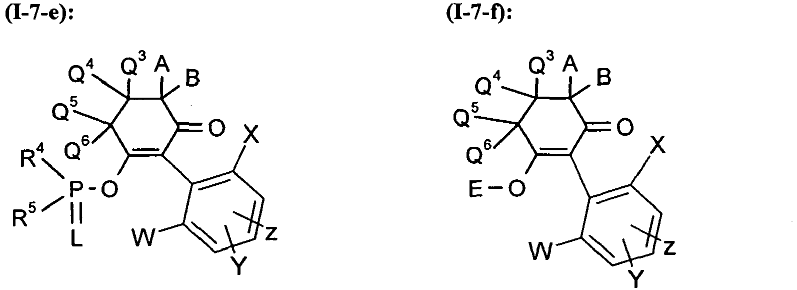 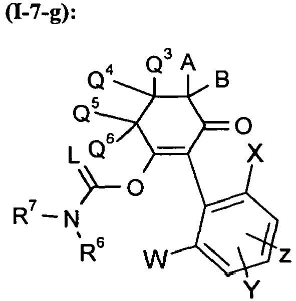 worin
A, B, E, L, M, Q³, Q⁴, Q⁵, Q⁶, W, X, Y, Z, R¹, R², R³, R⁴, R⁵, R⁶ und R⁷ die oben angegebenen Bedeutungen besitzen.

Die Verbindungen der Formel (I-9) können in Abhängigkeit von der Stellung des Substituenten G in den zwei isomeren Formen der Formeln (I-9-A) und (I-9-B) vorliegen, was durch die gestrichelte Linie in der Formel (I-9) zum Ausdruck gebracht werden soll.

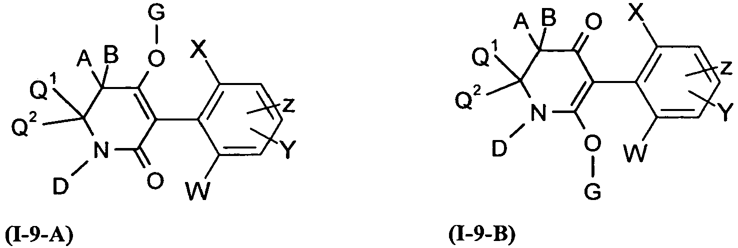

Die Verbindungen der Formeln (I-9-A) und (I-9-B) können sowohl als Gemische als auch in Form ihrer reinen Isomeren vorliegen. Gemische der Verbindungen der Formeln (I-9-A) und (I-9-B) lassen sich gegebenenfalls in an sich bekannter Weise durch physikalische Methoden trennen, beispielsweise durch chromatographische Methoden.

Aus Gründen der besseren Übersichtlichkeit wird im folgenden jeweils nur eines der möglichen Isomeren aufgeführt. Das schließt nicht aus, dass die Verbindungen gegebenenfalls in Form der Isomerengemische oder in der jeweils anderen isomeren Form vorliegen können.

Unter Einbeziehung der verschiedenen Bedeutungen (a), (b), (c), (d), (e), (f) und (g) der Gruppe G ergeben sich folgende hauptsächliche Strukturen (I-9-a) bis (I-9-g), wenn CKE für die Gruppe (9) steht, 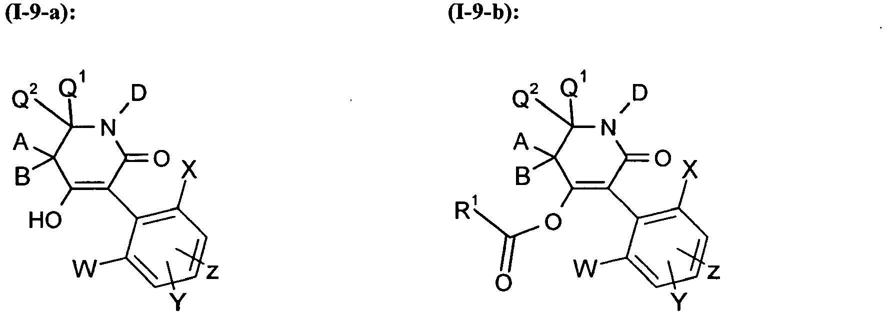 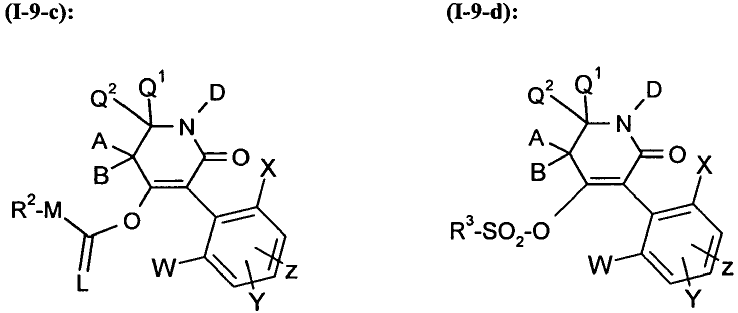 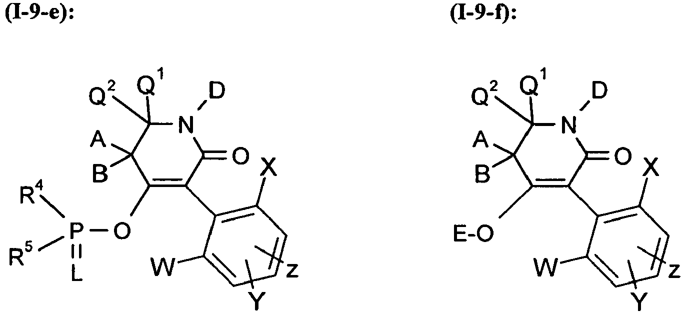 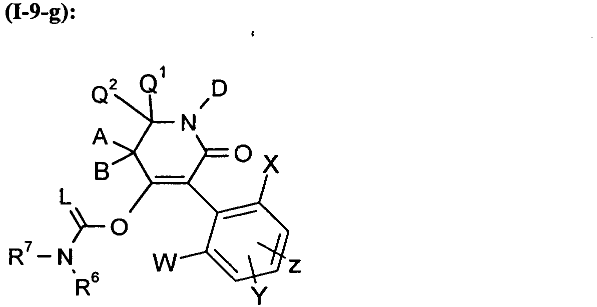 worin
A, B, D, E, L, M, Q¹, Q², W, X, Y, Z, R¹, R², R³, R⁴, R⁵, R⁶ und R⁷ die oben angegebenen Bedeutungen besitzen.

Die Verbindungen der Formel (I-10) können in Abhängigkeit von der Stellung des Substituenten G in den zwei isomeren Formen der Formeln (I-10-A) und (I-10-B) vorliegen, 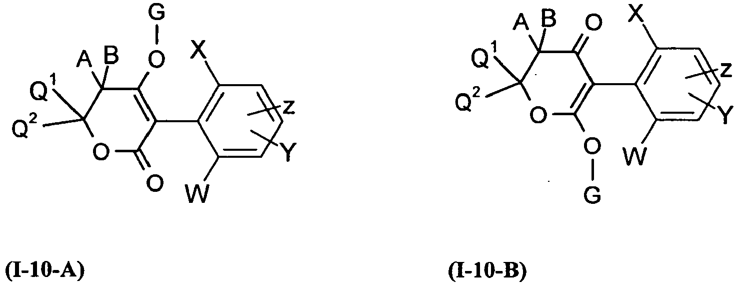 was durch die gestrichelte Linie in der Formel (I-10) zum Ausdruck gebracht werden soll.

Die Verbindungen der Formeln (I-10-A) und (I-10-B) können sowohl als Gemische als auch in Form ihrer reinen Isomeren vorliegen. Gemische der Verbindungen der Formeln (I-10-A) und (I-10-B) lassen sich gegebenenfalls in an sich bekannter Weise durch physikalische Methoden trennen, beispielsweise durch chromatographische Methoden.

Aus Gründen der besseren Übersichtlichkeit wird im folgenden jeweils nur eines der möglichen Isomeren aufgeführt. Das schließt nicht aus, dass die Verbindungen gegebenenfalls in Form der Isomerengemische oder in der jeweils anderen isomeren Form vorliegen können.

Unter Einbeziehung der verschiedenen Bedeutungen (a), (b), (c), (d), (e), (f) und (g) der Gruppe G ergeben sich folgende hauptsächliche Strukturen (I-10-a) bis (I-10-g), wenn CKE für die Gruppe (10) steht, 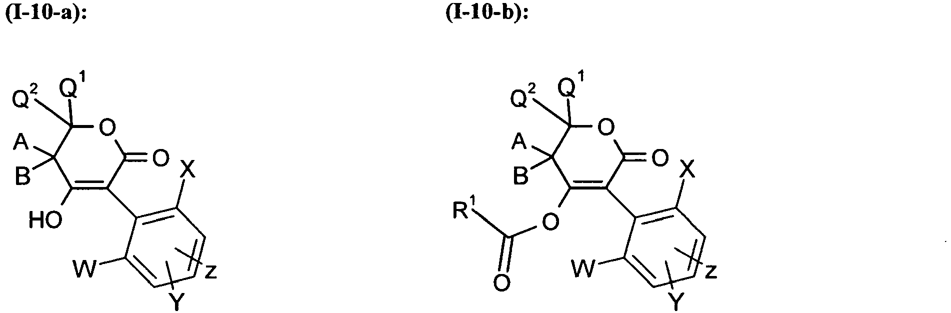 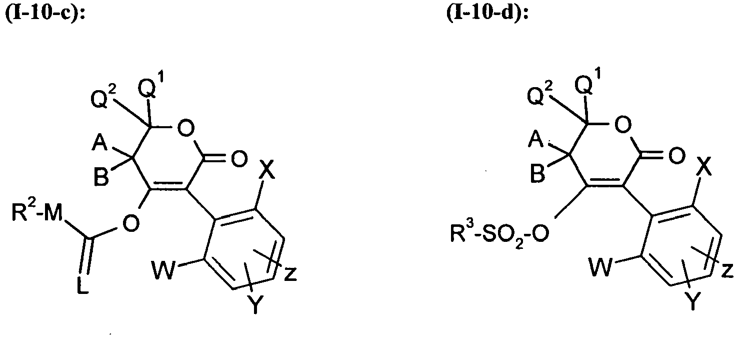 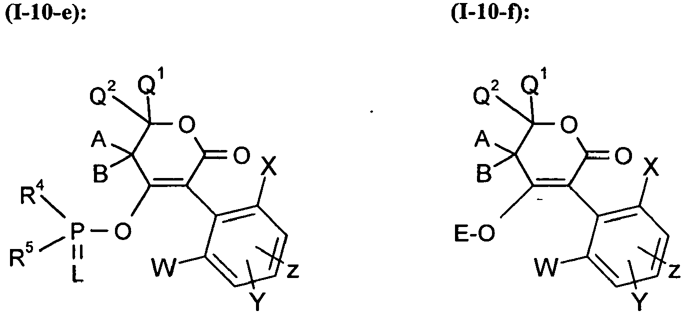 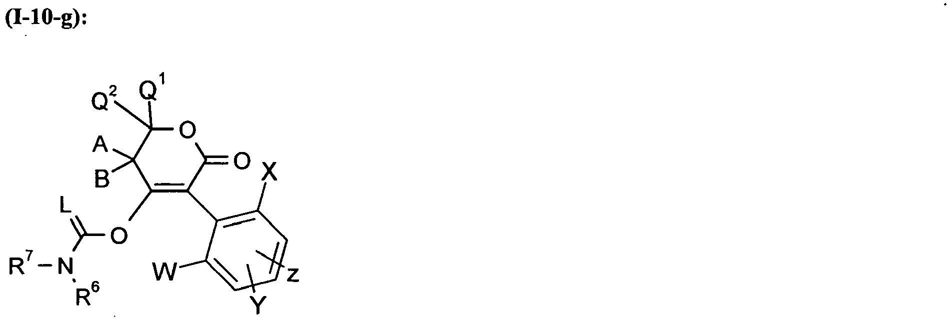 worin
A, B, D, E, L, M, Q¹, Q², W, X, Y, Z, R¹, R², R³, R⁴, R⁵, R⁶ und R⁷ die oben angegebenen Bedeutungen besitzen.

Die erfindungsgemäßen Verbindungen sind durch die Formel (I) allgemein definiert. Bevorzugte Substituenten bzw. Bereiche der in der oben und nachstehend erwähnten Formeln aufgeführten Reste werden ini Folgenden erläutert:
- W: steht bevorzugt für Wasserstoff, C₁-C₆-Alkyl, C₂-C₆-Alkenyl, C₂-C₆-Alkinyl, Halogen, C₁-C₆-Alkoxy, C₁-C₄-Halogenalkyl, C₁-C₄-Halogenalkoxy oder Cyano,
- X: steht bevorzugt für Halogen, C₁-C₆-Alkyl, C₂-C₆-Alkenyl, C₂-C₆-Alkinyl, C₁-C₆-Alkoxy, C₁-C₆-Alkoxy-C₁-C₄-alkoxy, C₁-C₄-Halogenalkyl, C₁-C₄-Halogenalkoxy oder Cyano,
- Y: steht bevorzugt für Wasserstoff, Halogen, C₁-C₆-Alkyl, C₂-C₆-Alkenyl, C₂-C₆-Alkinyl, C₁-C₆-Alkoxy, Cyano, C₁-C₄-Halogenalkyl, Halogenalkoxy, für durch V¹ und V² substituiertes Phenyl oder Pyridyl,
- V¹: steht bevorzugt für Halogen, C₁-C₁₂-Alkyl, C₁-C₆-Alkoxy, C₁-C₄-Halogenalkyl, C₁-C₄-Halogenalkoxy, Cyano oder Nitro.
- V²: steht bevorzugt für Wasserstoff, Halogen, C₁-C₆-Alkyl, C₁-C₆-Alkoxy oder C₁-C₄-Halogenalkyl,
- V und V²: stehen gemeinsam bevorzugt für C₃-C₄-Alkandiyl, welches gegebenenfalls durch Halogen und/oder C₁-C₂-Alkyl substituiert sein kann und welches gegebenenfalls durch ein oder zwei Sauerstoffatome unterbrochen sein kann.
- Z: steht bevorzugt für Wasserstoff, Halogen, C₁-C₆-Alkyl, C₁-C₄-Halogenalkyl, Cyano, C₁-C₆-Alkoxy oder C₁-C₄-Halogenalkoxy.
- CKE: steht bevorzugt für eine der Gruppen 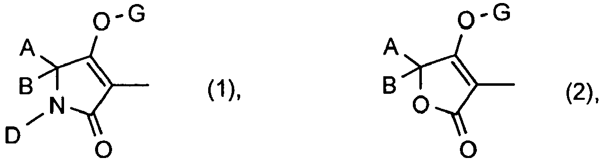 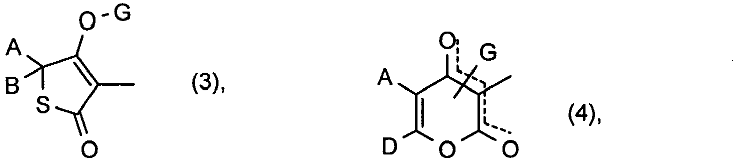 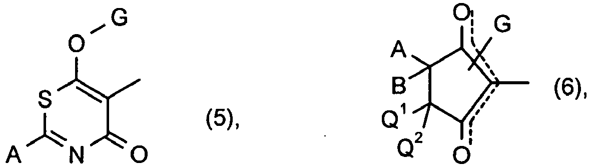 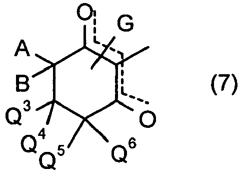 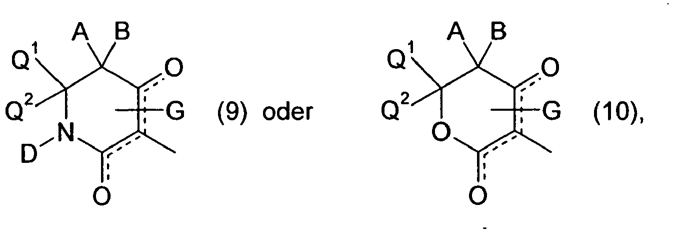
- A: steht bevorzugt für Wasserstoff oder jeweils gegebenenfalls durch Halogen substituiertes C₁-C₁₂-Alkyl, C₃-C₈-Alkenyl, C₁-C₁₀-Alkoxy-C₁-C₈-alkyl, C₁-C₁₀-Alkylthio-C₁-C₆-alkyl, gegebenenfalls durch Halogen, C₁-C₆-Alkyl oder C₁-C₆-Alkoxy substituiertes C₃-C₈-Cycloalkyl, in welchem gegebenenfalls ein oder zwei nicht direkt benachbarte Ringglieder durch Sauerstoff und/oder Schwefel ersetzt sind oder für jeweils gegebenenfalls durch Halogen, C₁-C₆-Alkyl, C₁-C₆-Halogenalkyl, C₁-C₆-Alkoxy, C₁-C₆-Halogenalkoxy, Cyano oder Nitro substituiertes Phenyl, Naphthyl, Hetaryl mit 5 bis 6 Ringatomen (beispielsweise Furanyl, Pyridyl, Imidazolyl, Triazolyl, Pyrazolyl, Pyrimidyl, Thiazolyl oder Thienyl), Phenyl-C₁-C₆-alkyl oder Naphthyl-C₁-C₆-alkyl,
- B: steht bevorzugt für Wasserstoff, C₁-C₁₂-Alkyl oder C₁-C₈-Alkoxy-C₁-C₆-alkyl oder
- A, B: und das Kohlenstoffatom an das sie gebunden sind, stehen bevorzugt für gesättigtes C₃-C₁₀-Cycloalkyl oder ungesättigtes C₅-C₁₀-Cycloalkyl, worin gegebenenfalls ein Ringglied durch Sauerstoff oder Schwefel ersetzt ist und welche gegebenenfalls einfach oder zweifach durch C₁-C₈-Alkyl, C₁-C₆-Alkoxy-C₁-C₆-Alkyl, C₃-C₆-Cycloalkyl-C₁-C₂-alkoxy, C₃-C₁₀-Cycloalkyl, C₁-C₈-Halogenalkyl, C₁-C₈-Alkoxy, C₁-C₆-Alkoxy-C₁-C₄-alkoxy, C₁-C₈-Alkylthio, Halogen oder Phenyl substituiert sind oder
- A, B: und das Kohlenstoffatom, an das sie gebunden sind, stehen bevorzugt für C₃-C₆-Cycloalkyl, welches durch eine gegebenenfalls ein oder zwei nicht direkt benachbarte Sauerstoff- und/oder Schwefelatome enthaltende gegebenenfalls durch C₁-C₄-Alkyl substituierte Alkylendiyl-, oder durch eine Alkylendioxyl- oder durch eine Alkylendithioyl-Gruppe substituiert ist, die mit dem Kohlenstoffatom, an das sie gebunden ist, einen weiteren fünf- bis achtgliedrigen Ring bildet oder
- A, B: und das Kohlenstoffatom, an das sie gebunden sind, stehen bevorzugt für C₃-C₈-Cycloalkyl oder C₅-C₈-Cycloalkenyl, in welchen zwei Substituenten gemeinsam mit den Kohlenstoffatomen, an die sie gebunden sind, für jeweils gegebenenfalls durch C₁-C₆-Alkyl, C₁-C₆-Alkoxy oder Halogen substituiertes C₂-C₆-Alkandiyl, C₂-C₆-Alkendiyl oder C₄-C₆-Alkandiendiyl stehen, worin gegebenenfalls eine Methylengruppe durch Sauerstoff oder Schwefel ersetzt ist,
- D: steht bevorzugt für Wasserstoff, jeweils gegebenenfalls durch Halogen substituiertes C₁-C₁₂-Alkyl, C₃-C₈-Alkenyl, C₃-C₈-Alkinyl, C₁-C₁₀-Alkoxy-C₂-C₈-alkyl, gegebenenfalls durch Halogen, C₁-C₄-Alkyl, C₁-C₄-Alkoxy oder C₁-C₄-Halogenalkyl substituiertes C₃-C₈-Cycloalkyl, in welchem gegebenenfalls ein Ringglied durch Sauerstoff oder Schwefel ersetzt ist oder jeweils gegebenenfalls durch Halogen, C₁-C₆-Alkyl, C₁-C₆-Halogenalkyl, C₁-C₆-Alkoxy, C₁-C₆-Halogenalkoxy, Cyano oder Nitro substituiertes Phenyl, Hetaryl mit 5 oder 6 Ringatomen (beispielsweise Furanyl, Imidazolyl, Pyridyl, Thiazolyl, Pyrazolyl, Pyrimidyl, Pyrrolyl, Thienyl oder Triazolyl), Phenyl-C₁-C₆-alkyl oder Hetaryl-C₁-C₆-alkyl mit 5 oder 6 Ringatomen (beispielsweise Furanyl, Imidazolyl, Pyridyl, Thiazolyl, Pyrazolyl, Pyrimidyl, Pyrrolyl, Thienyl oder Triazolyl) oder
- A und D: stehen gemeinsam bevorzugt für jeweils gegebenenfalls substituiertes C₃-C₆-Alkandiyl oder C₃-C₆-Alkendiyl, worin gegebenenfalls eine Methylengruppe durch eine Carbonylgruppe, Sauerstoff oder Schwefel ersetzt ist und
wobei als Substituenten jeweils in Frage kommen:
Halogen, Hydroxy, Mercapto oder jeweils gegebenenfalls durch Halogen substituiertes C₁-C₁₀-Alkyl, C₁-C₆-Alkoxy, C₁-C₆-Alkylthio, C₃-C₇-Cycloalkyl, Phenyl oder Benzyloxy, oder eine weitere C₃-C₆-Alkandiylgruppierung, C₃-C₆-Alkendiylgruppierung oder eine Butadienylgruppierung, die gegebenenfalls durch C₁-C₆-Alkyl substituiert ist oder in der gegebenenfalls zwei benachbarte Substituenten mit den Kohlenstoffatomen, an die sie gebunden sind, einen weiteren gesättigten oder ungesättigten Cyclus mit 5 oder 6 Ringatomen bilden (im Fall der Verbindung der Formel (I-1) stehen A und D dann gemeinsam mit den Atomen, an die sie gebunden sind beispielsweise für die weiter unten genannten Gruppen AD-1 bis AD-10), der Sauerstoff oder Schwefel enthalten kann, oder worin gegebenenfalls eine der folgenden Gruppen 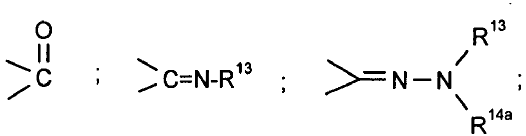 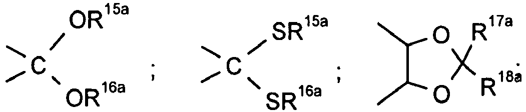 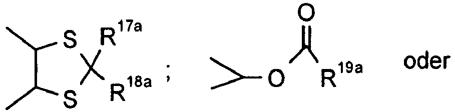 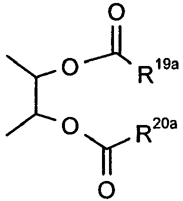 enthalten ist, oder
- A und Q¹: stehen gemeinsam bevorzugt für jeweils gegebenenfalls einfach oder zweifach, gleich oder verschieden durch Halogen, Hydroxy, durch jeweils gegebenenfalls einfach bis dreifach, gleich oder verschieden durch Halogen substituiertes C₁-C₁₀-Alkyl, C₁-C₆-Alkoxy, C₁-C₆-Alkylthio, C₃-C₇-Cycloalkyl oder durch jeweils gegebenenfalls einfach bis dreifach, gleich oder verschieden durch Halogen, C₁-C₆-Alkyl oder C₁-C₆-Alkoxy substituiertes Benzyloxy oder Phenyl substituiertes C₃-C₆-Alkandiyl oder C₄-C₆-Alkendiyl, welches außerdem gegebenenfalls eine der nachstehenden Gruppen 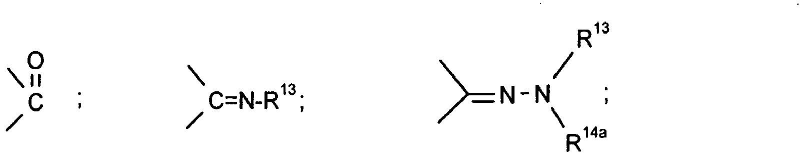 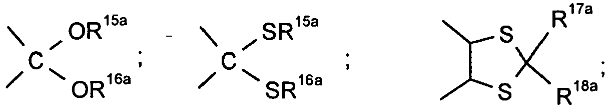 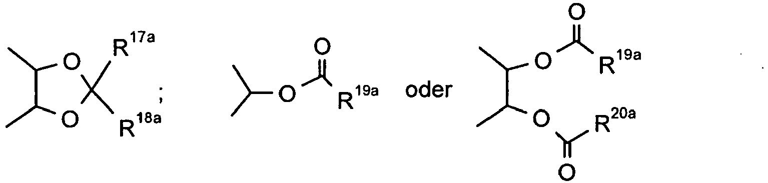 enthält oder durch eine C₁-C₂-Alkandiylgruppe oder durch ein Sauerstoffatom überbrückt ist oder
- D und Q¹: stehen gemeinsam bevorzugt für jeweils gegebenenfalls einfach oder zweifach, gleich oder verschieden durch C₁-C₄-Alkyl, C₁-C₄-Alkoxy substituiertes C₃-C₆-Alkandiyl.
- Q¹: steht bevorzugt für Wasserstoff, C₁-C₆-Alkyl, C₁-C₆-Alkoxy-C₁-C₂-alkyl, gegebenenfalls durch Fluor, Chlor, C₁-C₄-Alkyl, C₁-C₂-Halogenalkyl oder C₁-C₄-Alkoxy substituiertes C₃-C₈-Cycloalkyl, worin gegebenenfalls eine Methylengruppe durch Sauerstoff oder Schwefel ersetzt ist oder gegebenenfalls durch Halogen, C₁-C₄-Alkyl, C₁-C₄-Alkoxy, C₁-C₂-Halogenalkyl, C₁-C₂-Halogenalkoxy, Cyano oder Nitro substituiertes Phenyl oder
- Q², Q⁴, Q⁵ und Q⁶: stehen unabhängig voneinander bevorzugt für Wasserstoff oder C₁-C₄-Alkyl,
- Q³: steht bevorzugt für Wasserstoff, C₁-C₆-Alkyl, C₁-C₆-Alkoxy-C₁-C₂-alkyl, C₁-C₆-Alkylthio-C₁-C₂-alkyl, gegebenenfalls durch C₁-C₄-Alkyl oder C₁-C₄-Alkoxy substituiertes C₃-C₈-Cycloalkyl, worin gegebenenfalls eine Methylengruppe durch Sauerstoff oder Schwefel ersetzt ist oder gegebenenfalls durch Halogen, C₁-C₄-Alkyl, C₁-C₄-Alkoxy, C₁-C₂-Halogenalkyl, C₁-C₂-Halogenalkoxy, Cyano oder Nitro substituiertes Phenyl.
- Q1 und Q2: stehen bevorzugt mit dem Kohlenstoffatom, an das sie gebunden sind, für gegebenenfalls durch C₁-C₆-Alkyl, C₁-C₆-Alkoxy oder C₁-C₂-Halogenalkyl substituierten C₃-C₇-Ring, in welchem gegebenenfalls ein Ringglied durch Sauerstoff oder Schwefel ersetzt ist,
- Q³ und Q⁴: stehen bevorzugt gemeinsam mit dem Kohlenstoffatom, an das sie gebunden sind, für einen gegebenenfalls durch C₁-C₄-Alkyl, C₁-C₄-Alkoxy oder C₁-C₂-Halogenalkyl substituierten C₃-C₇-Ring, in welchem gegebenenfalls ein Ringglied durch Sauerstoff oder Schwefel ersetzt ist,
- G: steht bevorzugt für Wasserstoff (a) oder für eine der Gruppen 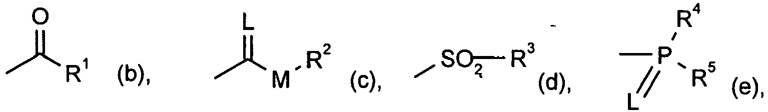 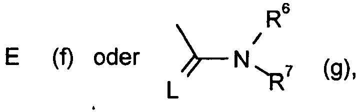 insbesondere für (a), (b), (c) oder (g)
in welchen
E für ein Metallionäquivalent oder ein Ammoniumion steht,
L für Sauerstoff oder Schwefel steht und
M für Sauerstoff oder Schwefel steht.
- R¹: steht bevorzugt für jeweils gegebenenfalls durch Halogen substituiertes C₁-C₂₀-Alkyl, C₂-C₂₀-Alkenyl, C₁-C₈-Alkoxy-C₁-C₈-alkyl, C_{I}-C₈-Alkylthio-C₁-C₈-alkyl, Poly-C₁-C₈-alkoxy-C₁-C₈-alkyl oder gegebenenfalls durch Halogen, C₁-C₆-Alkyl oder C₁-C₆-Alkoxy substituiertes C₃-C₈-Cycloalkyl, in welchem gegebenenfalls ein oder mehrere (bevorzugt nicht mehr als zwei) nicht direkt benachbarte Ringglieder durch Sauerstoff und/oder Schwefel ersetzt sind,
für gegebenenfalls durch Halogen, Cyano, Nitro, C₁-C₆-Alkyl, C₁-C₆-Alkoxy, C₁-C₆-Halogenalkyl, C₁-C₆-Halogenalkoxy, C₁-C₆-Alkylthio oder C₁-C₆-Alkylsulfonyl substituiertes Phenyl,
für gegebenenfalls durch Halogen, Nitro, Cyano, C₁-C₆-Alkyl, C₁-C₆-Alkoxy, C₁-C₆-Halogenalkyl oder C₁-C₆-Halogenalkoxy substituiertes Phenyl-C₁-C₆-alkyl,
für gegebenenfalls durch Halogen oder C₁-C₆-Alkyl substituiertes 5- oder 6-gliedriges Hetaryl (beispielsweise Pyrazolyl, Thiazolyl, Pyridyl, Pyrimidyl, Furanyl oder Thienyl),
für gegebenenfalls durch Halogen oder C₁-C₆-Alkyl substituiertes Phenoxy-C₁-C₆-alkyl oder
für gegebenenfalls durch Halogen, Amino oder C₁-C₆-Alkyl substituiertes 5- oder 6-gliedriges Hetaryloxy-C₁-C₆-alkyl (beispielsweise Pyridyloxy-C₁-C₆-alkyl, Pyrimidyloxy-C₁-C₆-alkyl oder Thiazolyloxy-C₁-C₆-alkyl),
- R²: steht bevorzugt für jeweils gegebenenfalls durch Halogen substituiertes C₁-C₂₀-Alkyl, C₂-C₂₀-Alkenyl, C₁-C₈-Alkoxy-C₂-C₈-alkyl, Poly-C₁-C₈-alkoxy-C₂-C₈-alkyl,
für gegebenenfalls durch Halogen, C₁-C₆-Alkyl oder C₁-C₆-Alkoxy substituiertes C₃-C₈-Cycloalkyl oder
für jeweils gegebenenfalls durch Halogen, Cyano, Nitro, C₁-C₆-Alkyl, C₁-C₆-A(koxy, C₁-C₆-Halogenalkyl oder C₁-C₆-Halogenalkoxy substituiertes Phenyl oder Benzyl,
- R³: steht bevorzugt für gegebenenfalls durch Halogen substituiertes C₁-C₈-Alkyl oder für jeweils gegebenenfalls durch Halogen, C₁-C₆-Alkyl, C₁-C₆-Alkoxy, C₁-C₄-Halogenalkyl, C₁-C₄-Halogenalkoxy, Cyano oder Nitro substituiertes Phenyl oder Benzyl,
- R⁴ und R⁵: stehen bevorzugt unabhängig voneinander für jeweils gegebenenfalls durch Halogen substituiertes C₁-C₈-Alkyl, C₁-C₈-Alkoxy, C₁-C₈-Alkylamino, Di-(C₁-C₈-alkyl)amino, C₁-C₈-Alkylthio, C₂-C₈-Alkenylthio, C₃-C₇-Cycloalkylthio oder für jeweils gegebenenfalls durch Halogen, Nitro, Cyano, C₁-C₈-Alkoxy, C₁-C₄-Halogenalkoxy, C₁-C₄-Alkylthio, C₁-C₄-Halogenalkylthio, C₁-C₄-Alkyl oder C₁-C₄-Halogenalkyl substituiertes Phenyl, Phenoxy oder Phenylthio,
- R⁶ und R⁷: stehen unabhängig voneinander bevorzugt für Wasserstoff, für jeweils gegebenenfalls durch Halogen substituiertes C₁-C₈-Alkyl, C₃-C₈-Cycloalkyl, C₁-C₈-Alkoxy, C₃-C₈-Alkenyl, C₁-C₈-Alkoxy-C₁-C₈-alkyl, für gegebenenfalls durch Halogen, C₁-C₈-Halogenalkyl, C₁-C₈-Alkyl oder C₁-C₈-Alkoxy substituiertes Phenyl, gegebenenfalls durch Halogen, C₁-C₈-Alkyl, C₁-C₈-Halogenalkyl oder C₁-C₈-Alkoxy substituiertes Benzyl oder zusammen für einen gegebenenfalls durch C₁-C₄-Alkyl substituierten C₃-C₆-Alkylenrest, in welchem gegebenenfalls ein Kohlenstoffatom durch Sauerstoff oder Schwefel ersetzt ist,
- R¹³: steht bevorzugt für Wasserstoff, für jeweils gegebenenfalls durch Halogen substituiertes C₁-C₈-Alkyl oder C₁-C₈-Alkoxy, für gegebenenfalls durch Halogen, C₁-C₄-Alkyl oder C₁-C₄-Alkoxy substituiertes C₃-C₈-Cycloalkyl, in welchem gegebenenfalls eine Methylengruppe durch Sauerstoff oder Schwefel ersetzt ist, oder für jeweils gegebenenfalls durch Halogen, C₁-C₆-Alkyl, C₁-C₆-Alkoxy, C₁-C₄-Halogenalkyl, C₁-C₄-Halogenalkoxy, Nitro oder Cyano substituiertes Phenyl, Phenyl-C₁-C₄-alkyl oder Phenyl-C₁-C₄-alkoxy,
- R^{14a}: steht bevorzugt für Wasserstoff oder C₁-C₈-Alkyl oder
- R¹³ und R^{14a}: stehen gemeinsam bevorzugt für C₄-C₆-Alkandiyl,
- R^{15a} und R^{16a}: sind gleich oder verschieden und stehen bevorzugt für C₁-C₆-Alkyl oder
- R^{15a} und R^{16a}: stehen gemeinsam bevorzugt für einen C₂-C₄-Alkandiylrest, der gegebenenfalls durch C₁-C₆-Alkyl, C₁-C₆-Halogenalkyl oder durch gegebenenfalls durch Halogen, C₁-C₆-Alkyl, C₁-C₄-Halogenalkyl, C₁-C₆-Alkoxy, C₁-C₄-Halogenalkoxy, Nitro oder Cyano substituiertes Phenyl substituiert ist,
- R^{17a} und R^{18a}: stehen unabhängig voneinander bevorzugt für Wasserstoff, für gegebenenfalls durch Halogen substituiertes C₁-C₈-Alkyl oder für gegebenenfalls durch Halogen, C₁-C₆-Alkyl, C₁-C₆-Alkoxy, C₁-C₄-Halogenalkyl, C₁-C₄-Halogenalkoxy, Nitro oder Cyano substituiertes Phenyl oder
- R^{17a} und R^{18a}: stehen gemeinsam mit dem Kohlenstoffatom, an das sie gebunden sind, bevorzugt für eine Carbonylgruppe oder für gegebenenfalls durch Halogen, C₁-C₄-Alkyl oder C₁-C₄-Alkoxy substituiertes C₅-C₇-Cycloalkyl, in dem gegebenenfalls eine Methylengruppe durch Sauerstoff oder Schwefel ersetzt ist,
- R^{19a} und R^{20a}: stehen unabhängig voneinander bevorzugt für C₁-C₁₀-Alkyl, C₂-C₁₀-Alkenyl, C₁-C₁₀-Alkoxy, C₁-C₁₀-Alkylamino, C₃-C₁₀-Alkenylamino, Di-(C₁-C₁₀-alkyl)amino oder Di-(C₃-C₁₀-alkenyl)amino.

In den als bevorzugt genannten Restedefinitionen steht Halogen für Fluor, Chlor, Brom und Jod, insbesondere für Fluor, Chlor und Brom.
- W: steht besonders bevorzugt für Wasserstoff, Fluor, Chlor, Brom, C₁-C₄-Alkyl, C₂-C₄-Alkenyl, C₂-C₄-Alkinyl, C₁-C₄-Alkoxy, C₁-C₂-Halogenalkyl oder C₁-C₂-Halogenalkoxy,
- X: steht besonders bevorzugt für Chlor, Brom, Iod, C₁-C₄-Alkyl, C₂-C₄-Alkenyl, C₂-C₄-Alkinyl, C₁-C₄-Alkoxy, C₁-C₄-Alkoxy-C₁-C₃-alkoxy, C₁-C₂-Halogenalkyl, C₁-C₂-Halogenalkoxy oder Cyano,
- Y: steht besonders bevorzugt in der 4-Position für Wasserstoff, C₂-C₄-Alkenyl, C₂-C₄-Alkinyl, Fluor, Chlor, Brom, Iod, Methoxy, Ethoxy, Cyano, Trifluormethyl, Difluormethoxy oder Trifluormethoxy,
- Z: steht besonders bevorzugt für Wasserstoff.
- W: steht auch besonders bevorzugt für Wasserstoff, Fluor, Chlor, Brom oder C₁-C₄-Alkyl,
- X: steht auch besonders bevorzugt für Chlor, Brom, C₁-C₄-Alkyl, C₁-C₄-Alkoxy, C₁-C₂-Halogenalkyl, C₁-C₂-Halogenalkoxy oder Cyano,
- Y: steht auch besonders bevorzugt in der 4-Position für den Rest 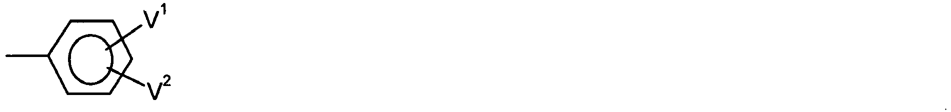
- Z: steht auch besonders bevorzugt für Wasserstoff,
- V¹: steht auch besonders bevorzugt für Fluor, Chlor, C₁-C₄-Alkyl, C₁-C₄-Alkoxy, C₁-C₂-Halogenalkyl oder C₁-C₂-Halogenalkoxy, Cyano oder Nitro,
- V²: steht auch besonders bevorzugt für Wasserstoff, Fluor, Chlor, C₁-C₄-Alkyl, C₁-C₄-Alkoxy oder C₁-C₂-Halogenalkyl,
- V¹ und V²: stehen gemeinsam auch besonders bevorzugt für-O-CH₂-O- und -O-CF₂-O-.
- W: steht ebenfalls besonders bevorzugt für Wasserstoff, Fluor, Chlor, Brom oder C₁-C₄-Alkyl,
- X: steht ebenfalls besonders bevorzugt für Chlor, Brom, C₁-C₄-Alkyl, C₁-C₄-Alkoxy, C₁-C₂-Halogenalkyl, C₁-C₂-Halogenalkoxy oder Cyano,
- Y: steht ebenfalls besonders bevorzugt in der 5-Position für C₂-C₄-Alkenyl, C₂-C₄-Alkinyl oder den Rest 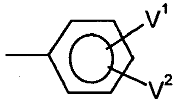
- Z: steht ebenfalls besonders bevorzugt in der 4-Position für Wasserstoff, C₁-C₄-Alkyl oder Chlor,
- V¹: steht ebenfalls besonders bevorzugt für Fluor, Chlor, C₁-C₄-Alkyl, C₁-C₄-Alkoxy, C₁-C₂-Halogenalkyl oder C₁-C₂-Halogenalkoxy, Cyano oder Nitro
- V²: steht ebenfalls besonders bevorzugt für Wasserstoff, Fluor, Chlor, C₁-C₄-Alkyl, C₁-C₄-Alkoxy oder C₁-C₂-Halogenalkyl,
- V¹ und V²: stehen gemeinsam ebenfalls besonders bevorzugt für -O-CH₂-O- und -O-CF₂-O-.
- W: steht außerdem besonders bevorzugt für Wasserstoff, C₁-C₄-Alkyl, C₂-C₄-Alkenyl, C₂-C₄-Alkinyl, C₁-C₄-Alkoxy, Fluor, Chlor, Brom oder Trifluormethyl,
- X: steht außerdem besonders bevorzugt für Fluor, Chlor, Brom, Iod, C₁-C₄-Alkyl, C₂-C₄-Alkenyl, C₂-C₄-Alkinyl_{;} C₁-C₄-Alkoxy, C₁-C₄-Alkoxy-C₁-C₃-alkoxy, C₁-C₂-Halogenalkyl, C₁-C₂-Halogenalkoxy oder Cyano,
- Y: steht außerdem besonders bevorzugt in der 4-Position für C₁-C₄-Alkyl,
- Z: steht außerdem besonders bevorzugt für Wasserstoff.
- W: steht weiterhin besonders bevorzugt für Wasserstoff, Fluor, Chlor, Brom, C₁-C₄-Alkyl oder C₁-C₄-Alkoxy,
- X: steht weiterhin besonders bevorzugt für Chlor, Brom, Iod, C₁-C₄-Alkyl, C₁-C₄-Alkoxy, C₁-C₂-Halogenalkyl, C₁-C₂-Halogenalkoxy oder Cyano,
- Y: steht weiterhin besonders bevorzugt in der 4-Position für Wasserstoff, Chlor, Brom, Iod, C₁-C₄-Alkyl, C₁-C₂-Halogenalkyl oder C₁-C₂-Halogenalkoxy,
- Z: steht weiterhin besonders bevorzugt in der 3- oder 5-Position für Fluor, Chlor, Brom, Iod, C₁-C₄-Alkyl, C₁-C₂-Halogenalkyl, C₁-C₄-Alkoxy oder C₁-C₂-Halogenalkoxy.
- CKE: steht besonders bevorzugt für eine der Gruppen 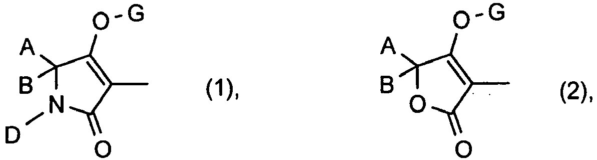 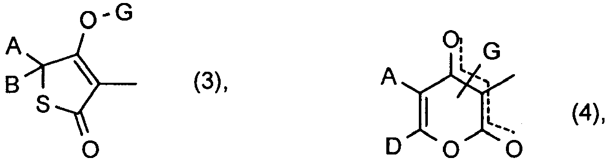 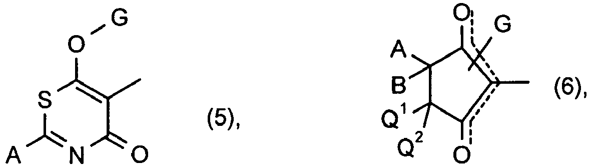 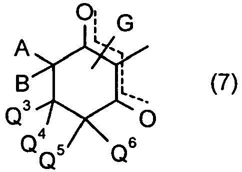 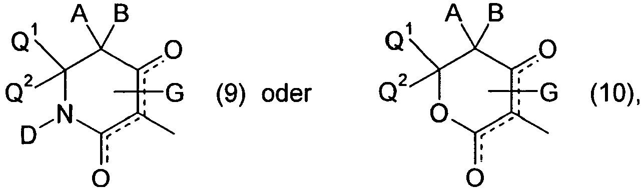
- A: steht besonders bevorzugt für Wasserstoff, jeweils gegebenenfalls einfach bis dreifach durch Fluor oder Chlor substituiertes C₁-C₆-Alkyl, C₁-C₄-Alkoxy-C₁-C₂-alkyl, gegebenenfalls einfach bis zweifach durch C₁-C₂-Alkyl oder C₁-C₂-Alkoxy substituiertes C₃-C₆-Cycloalkyl oder (jedoch nicht im Fall der Verbindungen der Formeln (I-3), (I-4), (I-6) und (I-7)) jeweils gegebenenfalls einfach bis zweifach durch Fluor, Chlor, Brom, C₁-C₄-Alkyl, C₁-C₂-Halogenalkyl, C₁-C₄-Alkoxy, C₁-C₂-Halogenalkoxy, Cyano oder Nitro substituiertes Phenyl oder Benzyl,
- B: steht besonders bevorzugt für Wasserstoff, C₁-C₄-Alkyl oder C₁-C₂-Alkoxy-C₁-C₂-alkyl oder
- A, B: und das Kohlenstoffatom an das sie gebunden sind, stehen besonders bevorzugt für gesättigtes oder ungesättigtes C₃-C₇-Cycloalkyl, worin gegebenenfalls ein Ringglied durch Sauerstoff oder Schwefel ersetzt ist und welches gegebenenfalls einfach bis zweifach durch C₁-C₆-Alkyl, C₁-C₄-Alkoxy-C₁-C₂-Alkyl, Trifluormethyl, C₁-C₆-Alkoxy, C₁-C₃-Alkoxy-C₁-C₃-alkoxy oder C₃-C₆-Cycloalkylmethoxy substituiert ist mit der Maßgabe, dass dann Q³ besonders bevorzugt für Wasserstoff oder Methyl steht oder
- A, B: und das Kohlenstoffatom, an das sie gebunden sind, stehen besonders bevorzugt für C₅-C₆-Cycloalkyl, welches durch eine gegebenenfalls ein oder zwei nicht direkt benachbarte Sauerstoff- oder Schwefelatome enthaltende gegebenenfalls durch Methyl oder Ethyl substituierte Alkylendiyl- oder durch eine Alkylendioxyl- oder durch eine Alkylendithiol-Gruppe substituiert ist, die mit dem Kohlenstoffatom, an das sie gebunden ist, einen weiteren fünf- oder sechsgliedrigen Ring bildet mit der Maßgabe, dass dann Q³ besonders bevorzugt für Wasserstoff oder Methyl steht, oder
- A, B: und das Kohlenstoffatom, an das sie gebunden sind, stehen besonders bevorzugt für C₃-C₆-Cycloalkyl oder C₅-C₆-Cycloalkenyl, in welchen zwei Substituenten gemeinsam mit den Kohlenstoffatomen, an die sie gebunden sind, für jeweils gegebenenfalls durch C₁-C₂-Alkyl oder C₁-C₂-Alkoxy substituiertes C₂-C₄-Alkandiyl, C₂-C₄-Alkendiyl oder Butadiendiyl stehen, mit der Maßgabe, dass dann Q³ besonders bevorzugt für Wasserstoff oder Methyl steht,
- D: steht besonders bevorzugt für Wasserstoff, für jeweils gegebenenfalls einfach bis dreifach durch Fluor substituiertes C₁-C₆-Alkyl, C₃-C₆-Alkenyl, C₁-C₄-Alkoxy-C₂-C₃-alkyl, für gegebenenfalls einfach bis zweifach durch C₁-C₄-Alkyl, C₁-C₄-Alkoxy oder C₁-C₂-Halogenalkyl substituiertes C₃-C₆-Cycloalkyl, in welchem gegebenenfalls eine Methylengruppe durch Sauerstoff ersetzt ist oder (jedoch nicht im Fall der Verbindungen der Formeln (I-1)) für jeweils gegebenenfalls einfach bis zweifach durch Fluor, Chlor, Brom, C₁-C₄-Alkyl, C₁-C₄-Halogenalkyl, C₁-C₄-Alkoxy oder C₁-C₄-Halogenalkoxy substituiertes Phenyl oder Pyridyl, oder
- A und D: stehen gemeinsam besonders bevorzugt für gegebenenfalls einfach bis zweifach substituiertes C₃-C₅-Alkandiyl, in welchem eine Methylengruppe durch eine Carbonylgruppe (nicht jedoch im Fall der Verbindungen der Formel (I-1)), Sauerstoff oder Schwefel ersetzt sein kann, wobei als Substituenten C₁-C₂-Alkyl oder C₁-C₂-Alkoxy in Frage kommen oder
- A und D: stehen (im Fall der Verbindungen der Formel (I-1)) gemeinsam mit den Atomen, an die sie gebunden sind, für eine der Gruppen AD-1 bis AD-10: 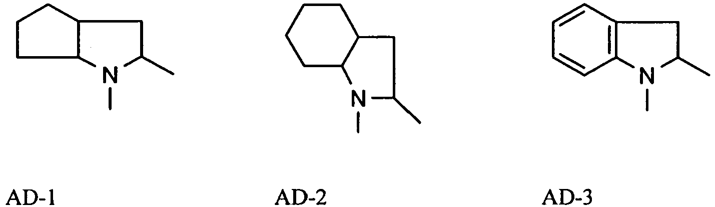 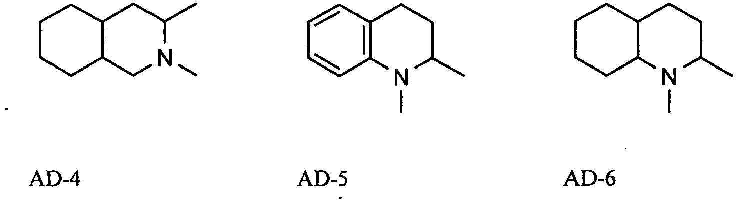 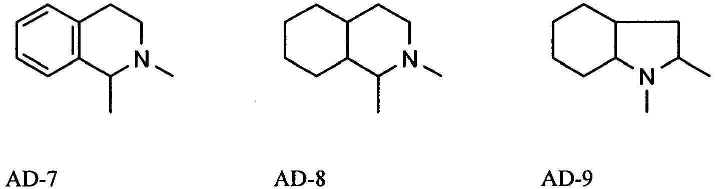 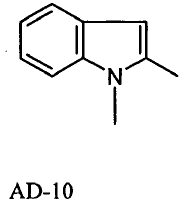 oder
- A und Q¹: stehen gemeinsam besonders bevorzugt für jeweils gegebenenfalls einfach oder zweifach, gleich oder verschieden durch C₁-C₂-Alkyl oder C₁-C₂-Alkoxy substituiertes C₃-C₄-Alkandiyl oder
- D und Q¹: stehen gemeinsam besonders bevorzugt für C₃-C₄-Alkandiyl, oder
- Q¹: steht besonders bevorzugt für Wasserstoff, C₁-C₄-Alkyl, C₁-C₄-Alkoxy-C₁-C₂-alkyl, oder gegebenenfalls durch Methyl oder Methoxy substituiertes C₃-C₆-Cycloalkyl, worin gegebenenfalls eine Methylengruppe durch Sauerstoff ersetzt ist,
- Q²: steht besonders bevorzugt für Wasserstoff, Methyl oder Ethyl,
- Q⁴, Q⁵ und Q⁶: stehen besonders bevorzugt unabhängig voneinander für Wasserstoff oder C₁-C₃-Alkyl,
- Q³: steht besonders bevorzugt für Wasserstoff, C₁-C₄-Alkyl, oder gegebenenfalls einfach bis zweifach durch Methyl oder Methoxy substituiertes C₃-C₆-Cycloalkyl, oder
- Q¹ und Q²: steht besonders bevorzugt für Wasserstoff, C₁-C₄-Alkyl, C₁-C₄-Alkoxy-C₁-C₂-alkyl, oder gegebenenfalls durch Methyl oder Methoxy substituiertes C₃-C₆-Cycloalkyl, worin gegebenenfalls eine Methylengruppe durch Sauerstoff ersetzt ist, oder
- Q³ und Q⁴: stehen besonders bevorzugt gemeinsam mit dem Kohlenstoff, an das sie gebunden sind, für einen gegebenenfalls durch C₁-C₂-Alkyl oder C₁-C₂-Alkoxy substituierten gesättigten C₅-C₆-Ring, in welchem gegebenenfalls ein Ringglied durch Sauerstoff oder Schwefel ersetzt ist, mit der Maßgabe, dass dann A besonders bevorzugt für Wasserstoff oder Methyl steht,
- G: steht besonders bevorzugt für Wasserstoff (a) oder für eine der Gruppen 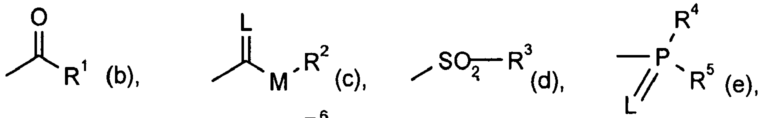 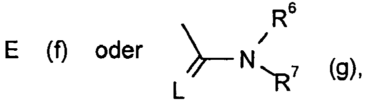 insbesondere für (a), (b) oder (c),
in welchen
E für ein Metallionäquivalent oder ein Ammoniumion steht,
L für Sauerstoff oder Schwefel steht und
M für Sauerstoff oder Schwefel steht,
- R¹: steht besonders bevorzugt für jeweils gegebenenfalls einfach bis dreifach durch Fluor oder Chlor substituiertes C₁-C₈-Alkyl, C₂-C₁₈-Alkenyl, C₁-C₄-Alkoxy-C₁-C₂-alkyl, C₁-C₄-Alkylthio-C₁-C₂-alkyl oder gegebenenfalls einfach bis zweifach durch Fluor, Chlor, C₁-C₂-Alkyl oder C₁-C₂-Alkoxy substituiertes C₃-C₆-Cycloalkyl, in welchem gegebenenfalls ein oder zwei nicht direkt benachbarte Ringglieder durch Sauerstoff ersetzt sind,
für gegebenenfalls einfach bis zweifach durch Fluor, Chlor, Brom, Cyano, Nitro, C₁-C₄-Alkyl, C₁-C₄-Alkoxy, C₁-C₂-Halogenalkyl oder C₁-C₂-Halogenalkoxy substituiertes Phenyl,
- R²: steht besonders bevorzugt für jeweils gegebenenfalls einfach bis dreifach durch Fluor substituiertes C₁-C₈-Alkyl, C₂-C₈-Alkenyl oder C₁-C₄-Alkoxy-C₂-C₄-alkyl,
für gegebenenfalls einfach durch C₁-C₂-Alkyl oder C₁-C₂-Alkoxy substituiertes C₃-C₆-Cycloalkyl oder
für jeweils gegebenenfalls einfach bis zweifach durch Fluor, Chlor, Brom, Cyano, Nitro, C₁-C₄-Alkyl, C₁-C₃-Alkoxy, Trifluormethyl oder Trifluormethoxy substituiertes Phenyl oder Benzyl,
- R³: steht besonders bevorzugt für gegebenenfalls einfach bis dreifach durch Fluor substituiertes C₁-C₆-Alkyl oder für gegebenenfalls einfach durch Fluor, Chlor, Brom, C₁-C₄-Alkyl, C₁-C₄-Alkoxy, Trifluormethyl, Trifluormethoxy, Cyano oder Nitro substituiertes Phenyl,
- R⁴: steht besonders bevorzugt für C₁-C₆-Alkyl, C₁-C₆-Alkoxy, C₁-C₆-Alkylamino, Di-(C₁-C₆-alkyl)amino, C₁-C₆-Alkylthio, C₃-C₄-Alkenylthio, C₃-C₆-Cycloalkylthio oder für jeweils gegebenenfalls einfach durch Fluor, Chlor, Brom, Nitro, Cyano, C_{I}-C₃-Alkoxy, C₁-C₃-Halogenalkoxy, C₁-C₃-Alkylthio, C₁-C₃-Halogenalkylthio, C₁-C₃-Alkyl oder Trifluormethyl substituiertes Phenyl, Phenoxy oder Phenylthio,
- R⁵: steht besonders bevorzugt für C₁-C₆-Alkoxy oder C₁-C₆-Alkylthio,
- R⁶: steht besonders bevorzugt für Wasserstoff, C₁-C₆-Alkyl, C₃-C₆-Cycloalkyl, C₁-C₆-Alkoxy, C₃-C₆-Alkenyl, C₁-C₆-Alkoxy-C₁-C₄-alkyl, für gegebenenfalls einfach durch Fluor, Chlor, Brom, Trifluormethyl, C₁-C₄-Alkyl oder C₁-C₄-Alkoxy substituiertes Phenyl, für gegebenenfalls einfach durch Fluor, Chlor, Brom, C₁-C₄-Alkyl, Trifluormethyl oder C₁-C₄-Alkoxy substituiertes Benzyl,
- R⁷: steht besonders bevorzugt für C₁-C₆-Alkyl, C₃-C₆-Alkenyl oder C₁-C₆-Alkoxy-C₁-C₄-alkyl,
- R⁶ und R⁷: stehen besonders bevorzugt zusammen für einen gegebenenfalls durch Methyl oder Ethyl substituierten C₄-C₅-Alkylenrest, in welchem gegebenenfalls eine Methylengruppe durch Sauerstoff oder Schwefel ersetzt ist.

In den als besonders bevorzugt genannten Restedefinitionen steht Halogen für Fluor, Chlor und Brom, insbesondere für Fluor und Chlor.
- W: steht ganz besonders bevorzugt für Wasserstoff, Methyl, Chlor, Brom, Ethyl, Methoxy, Ethoxy oder Trifluormethyl,
- X: steht ganz besonders bevorzugt für Chlor, Brom, Iod, Methyl, Ethyl, Propyl, Methoxy, Ethoxy, Propoxy, Methoxy-ethoxy, Ethoxy-ethoxy, Trifluormethyl, Difluormethoxy, Trifluormethoxy oder Cyano,
- Y: steht ganz besonders bevorzugt in der 4-Position für Wasserstoff, Chlor, Brom, Iod, Trifluormethyl oder Trifluormethoxy,
- Z: steht ganz besonders bevorzugt für Wasserstoff.
- W: steht auch ganz besonders bevorzugt für Wasserstoff, Chlor, Brom, Methyl oder Ethyl,
- X: steht auch ganz besonders bevorzugt für Chlor, Brom, Methyl, Ethyl, Propyl, Methoxy, Trifluormethyl, Difluormethoxy, Trifluormethoxy oder Cyano,
- Y: steht auch ganz besonders bevorzugt in der 4-Position für den Rest 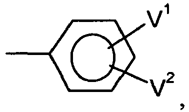
- Z: steht auch ganz besonders bevorzugt für Wasserstoff,
- V¹: steht auch ganz besonders bevorzugt für Fluor, Chlor, Methyl, Methoxy, Trifluormethyl, Trifluormethoxy oder Cyano,
- V²: steht auch ganz besonders bevorzugt für Wasserstoff, Fluor, Chlor, Methyl, Methoxy oder Trifluormethyl.
- W: steht ebenfalls ganz besonders bevorzugt für Wasserstoff, Chlor oder Methyl,
- X: steht ebenfalls ganz besonders bevorzugt für Chlor, Methyl, Trifluormethyl, Methoxy, Difluormethoxy, Trifluormethoxy oder Cyano,
- Y: steht ebenfalls ganz besonders bevorzugt in der 5-Position für den Rest 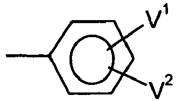
- Z: steht ebenfalls ganz besonders bevorzugt in der 4-Position für Wasserstoff oder Methyl,
- V¹: steht ebenfalls ganz besonders bevorzugt für Fluor, Chlor, Methyl, Methoxy, Trifluormethyl, Trifluormethoxy oder Cyano,
- V²: steht ebenfalls ganz besonders bevorzugt für Wasserstoff, Fluor, Chlor, Methyl, Methoxy oder Trifluormethyl.
- W: steht außerdem ganz besonders bevorzugt für Wasserstoff, Methyl, Ethyl, Methoxy, Ethoxy, Chlor oder Brom,
- X: steht außerdem ganz besonders bevorzugt für Chlor, Brom, Iod, Methyl, Ethyl, Propyl, Methoxy, Ethoxy, Propoxy, Methoxy-ethoxy, Ethoxy-ethoxy, Trifluormethyl, Difluormethoxy, Trifluormethoxy oder Cyano,
- Y: steht außerdem ganz besonders bevorzugt in der 4-Position für Methyl oder Ethyl,
- Z: steht außerdem ganz besonders bevorzugt für Wasserstoff.
- W: steht weiterhin ganz besonders bevorzugt für Wasserstoff, Chlor, Brom, Methyl oder Ethyl,
- X: steht weiterhin ganz besonders bevorzugt für Chlor, Brom, Iod, Methyl, Ethyl, Methoxy, Trifluormethyl, Difluormethoxy oder Trifluormethoxy,
- Y: steht weiterhin ganz besonders bevorzugt in der 4-Position für Wasserstoff, Chlor, Brom, Methyl oder Ethyl,
- Z: steht weiterhin ganz besonders bevorzugt in der 3- oder 5-Position für Fluor, Chlor, Brom, Iod, Methyl, Ethyl, Trifluormethyl oder Trifluormethoxy.
- CKE: steht ganz besonders bevorzugt für eine der Gruppen 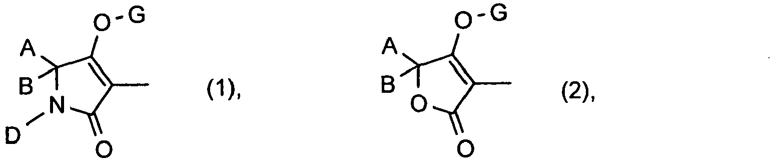 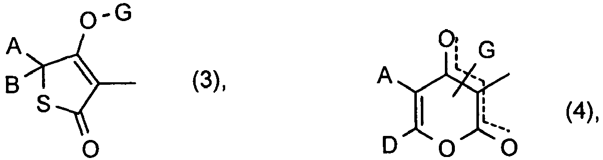 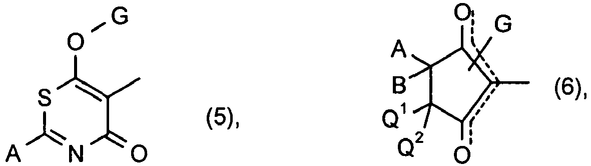 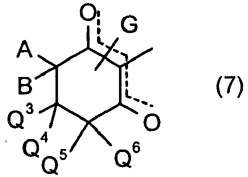 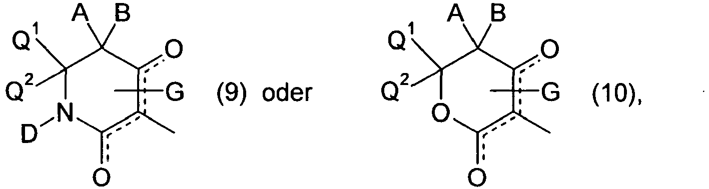
- A: steht ganz besonders bevorzugt für Wasserstoff, jeweils gegebenenfalls einfach bis dreifach durch Fluor substituiertes C₁-C₄-Alkyl oder C₁-C₂-Alkoxy-C₁-C₂-alkyl, für Cyclopropyl, Cyclopentyl oder Cyclohexyl und nur im Fall der Verbindungen der Formel (I-5) für gegebenenfalls einfach bis zweifach durch Fluor, Chlor, Brom, Methyl, Ethyl, n-Propyl, iso-Propyl, Methoxy, Ethoxy, Trifluormethyl, Trifluormethoxy, Cyano oder Nitro substituiertes Phenyl,
- B: steht ganz besonders bevorzugt für Wasserstoff, Methyl oder Ethyl oder
- A, B: und das Kohlenstoffatom an das sie gebunden sind, stehen ganz besonders bevorzugt für gesättigtes C₅-C₆-Cycloalkyl, in welchem gegebenenfalls ein Ringglied durch Sauerstoff oder Schwefel ersetzt ist und welches gegebenenfalls einfach durch Methyl, Ethyl, Propyl, Isopropyl, Methoxymethyl, Ethoxymethyl, Propoxymethyl, Methoxyethyl, Ethoxyethyl, Trifluormethyl, Methoxy, Ethoxy, Propoxy, Methoxyethoxy, Butoxy, Ethoxyethoxy oder Cyclopropylmethoxy substituiert ist, mit der Maßgabe, dass dann Q³ ganz besonders bevorzugt für Wasserstoff steht oder
- A, B: und das Kohlenstoffatom, an das sie gebunden sind, stehen ganz besonders bevorzugt für C₆-Cycloalkyl, welches gegebenenfalls durch zwei nicht direkt benachbarten Sauerstoffatomen enthaltende Alkylendioxyl-Gruppe substituiert ist, mit der Maßgabe, dass dann Q³ ganz besonders bevorzugt für Wasserstoff steht oder
- A, B: und das Kohlenstoffatom, an das sie gebunden sind, stehen ganz besonders bevorzugt für C₅-C₆-Cycloalkyl oder C₅-C₆-Cycloalkenyl, worin zwei Substituenten gemeinsam mit den Kohlenstoffatomen, an die sie gebunden sind, für C₂-C₄-Alkandiyl oder C₂-C₄-Alkendiyl oder Butadiendiyl stehen, mit der Maßgabe, dass dann Q³ ganz besonders bevorzugt für Wasserstoff steht,
- D: steht ganz besonders bevorzugt für Wasserstoff, für jeweils gegebenenfalls einfach bis dreifach durch Fluor substituiertes C₁-C₄-Alkyl, C₃-C₄-Alkenyl, C₁-C₄-Alkoxy-C₂-C₃-alkyl, für Cyclopropyl, Cyclopentyl oder Cyclohexyl oder (jedoch nicht im Fall der Ver-bindungen der Formeln (I-1)) für jeweils gegebenenfalls einfach durch Fluor, Chlor, Methyl, Ethyl, n-Propyl, iso-Propyl, Methoxy, Ethoxy oder Trifluormethyl substituiertes Phenyl oder Pyridyl,
oder
- A und D: stehen gemeinsam ganz besonders bevorzugt für gegebenenfalls einfach durch Methyl oder Methoxy substituiertes C₃-C₅-Alkandiyl, worin gegebenenfalls ein Kohlenstoffatom durch Sauerstoff oder Schwefel ersetzt ist oder für die Gruppe AD-1 steht, oder
- A und Q¹: stehen gemeinsam ganz besonders bevorzugt für gegebenenfalls einfach oder zweifach durch Methyl oder Methoxy substituiertes C₃-C₄-Alkandiyl oder
- D und Q¹: stehen gemeinsam ganz besonders bevorzugt für C₃-C₄-Alkandiyl oder
- Q¹: steht ganz besonders bevorzugt für Wasserstoff, Methyl, Ethyl, Propyl, iso-Propyl, Cyclopropyl, Cyclopentyl oder Cyclohexyl,
- Q²: steht ganz besonders bevorzugt für Wasserstoff, Methyl oder Ethyl,
- Q⁴, Q⁵ und Q⁶: stehen ganz besonders bevorzugt unabhängig voneinander für Wasserstoff oder Methyl,
- Q³: steht ganz besonders bevorzugt für Wasserstoff, Methyl, Ethyl oder Propyl, oder
- Q³ und Q⁴: stehen ganz besonders bevorzugt gemeinsam mit dem Kohlenstoff, an den sie gebunden sind, für einen gegebenenfalls einfach durch Methyl oder Methoxy substituierten gesättigten C₅-C₆-Ring, mit der Maßgabe, dass dann A ganz besonders bevorzugt für Wasserstoff steht,
- G: steht ganz besonders bevorzugt für Wasserstoff (a) oder für eine der Gruppen 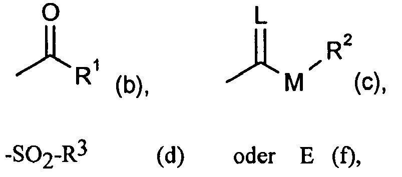 in welchen
L für Sauerstoff oder Schwefel steht,
M für Sauerstoff oder Schwefel steht und
E für ein Ammoniumion steht,
- R¹: steht ganz besonders bevorzugt für jeweils gegebenenfalls einfach durch Chlor substituiertes C₁-C₆-Alkyl, C₂-C₁₇-Alkenyl, C₁-C₂-Alkoxy-C₁-alkyl, C₁-C₂-Alkylthio-C₁-alkyl oder jeweils gegebenenfalls einfach durch Fluor, Chlor, Methyl oder Methoxy substituiertes Cyclopropyl oder Cyclohexyl,
für gegebenenfalls einfach durch Fluor, Chlor, Brom, Cyano, Nitro, Methyl, Methoxy, Trifluormethyl oder Trifluormethoxy substituiertes Phenyl,
- R²: steht ganz besonders bevorzugt für jeweils gegebenenfalls einfach durch Fluor substituiertes C₁-C₈-Alkyl, C₂-C₆-Alkenyl oder C₁-C₄-Alkoxy-C₂-C₃-alkyl, Phenyl oder Benzyl,
- R³: steht ganz besonders bevorzugt für C₁-C₈-Alkyl.

Im einzelnen seien außer den bei den Beispielen genannten Verbindungen die folgenden Verbindungen genannt:

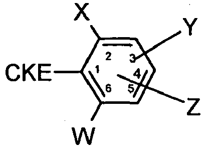

**Tabelle 1**

| **X** | **W** | **Y** | **Z** |
|---|---|---|---|
| CH₃ | H | H | H |
| Br | H | H | H |
| Cl | H | H | H |
| CF₃ | H | H | H |
| OCH₃ | H | H | H |
| Br | H | 4-Cl | H |
| Cl | H | 4-Br | H |
| Cl | H | 4-Cl | H |
| Cl | H | 4-CH₃ | H |
| CH₃ | H | 4-Cl | H |
| CH₃ | H | 4-CH₃ | H |
| Cl | Cl | H | H |
| Cl | OCH₃ | H | H |
| Cl | CH₃ | H | H |
| Cl | OC₂H₅ | H | H |
| OCH₃ | OCH₃ | H | H |
| CH₃ | CH₃ | H | H |
| Br | CH₃ | 4-Br | H |
| Cl | Cl | 4-CH₃ | H |
| CH₃ | Br | 4-CH₃ | H |
| CH₃ | Cl | 4-CH₃ | H |
| OCH₃ | CH₃ | 4-CH₃ | H |
| OC₂H₅ | CH₃ | 4-CH₃ | H |
| OC₃H₇ | CH₃ | 4-CH₃ | H |
| CH₃ | CH₃ | 4-CH₃ | H |
| Br | Br | 4-CH₃ | H |
| CH₃ | CH₃ | 4-Br | H |
| C₂H₅ | CH₃ | H | H |
| C₂H₅ | C₂H₅ | H | H |
| OCH₃ | C₂H₅ | 4-CH₃ | H |
| CH₃ | CH₃ | 4-OCH₃ | H |
| Br | Cl | 4-CH₃ | H |
| Br | CH₃ | 4-Cl | H |
| Cl | CH₃ | 4-Br | H |
| CH₃ | CH₃ | 4-Cl | H |
| C₂H₅ | CH₃ | 4-CH₃ | H |
| C₂H₅ | CH₃ | 4-C₂H₅ | H |
| C₂H₅ | C₂H₅ | 4-CH₃ | H |
| C₂H₅ | C₂H₅ | 4-C₂H₅ | H |
| C₂H₅ | CH₃ | 4-Cl | H |
| C₂H₅ | C₂H₅ | 4-Cl | H |
| C₂H₅ | CH₃ | 4-Br | H |
| C₂H₅ | C₂H₅ | 4-Br | H |
| C₂H₅ | Cl | 4-CH₃ | H |
| C₂H₅ | Br | 4-CH₃ | H |
| C₂H₅ | Cl | 4-Cl | H |
| C₂H₅ | Br | 4-Br | H |
| C₂H₅ | Cl | 4-Br | H |
| C₂H₅ | Br | 4-Cl | H |
| OCH₃ | CH₃ | 4-Cl | H |
| OCH₃ | C₂H₅ | 4-Cl | H |
| OC₂H₅ | CH₃ | 4-Cl | H |
| OC₂H₅ | C₂H₅ | 4-Cl | H |
| Cl | OCH₃ | 4-CH₃ | H |
| Cl | OC₂H₅ | 4-CH₃ | H |
| Cl | Cl | 4-Cl | H |
| Cl | H | 4-Cl | 5-Cl |
| CH₃ | H | 4-CH₃ | 5-CH₃ |
| CH₃ | H | 4-Cl | 5-CH₃ |
| Br | H | 4-Cl | 5-CH₃ |
| Br | H | 4-CH₃ | 5-CH₃ |
| Cl | H | 4-Br | 5-CH₃ |
| Cl | H | 4-Cl | 5-CH₃ |
| CH₃ | H | 4-Br | 5-CH₃ |
| Cl | H | 4-CH₃ | 5-Cl |
| CH₃ | H | H | 5-CH₃ |
| Cl | H | H | 5-CH₃ |
| Br | H | H | 5-CH₃ |
| CH₃ | H | H | 5-Cl |
| CH₃ | H | H | 5-Br |
| CH₃ | CH₃ | 4-CH₃ | 5-CH₃ |
| CH₃ | CH₃ | 4-CH₃ | 5-Cl |
| CH₃ | CH₃ | 4-CH₃ | 5-Br |
| CH₃ | CH₃ | H | 3-Cl |
| CH₃ | CH₃ | H | 3-Br |
| Cl | Cl | H | 3-Br |
| CH₃ | CH₃ | 4-(4-Cl-C₆H₄) | H |
| C₂H₅ | CH₃ | 4-(4-Cl-C₆H₄) | H |
| C₂H₅ | C₂H₅ | 4-(4-Cl-C₆H₄) | H |
| Cl | CH₃ | 4-(4-Cl-C₆H₄) | H |
| Cl | C₂H₅ | 4-(4-Cl-C₆H₄) | H |
| CH₃ | H | 5-(4-Cl-C₆H₄) | H |
| CH₃ | CH₃ | 5-(4-Cl-C₆H₄) | H |
| CH₃ | H | 5-(4-Cl-C₆H₄) | 4-CH₃ |
| CH₃ | CH₃ | 5-(4-Cl-C₆H₄) | 4-CH₃ |
| Cl | H | 5-(4-Cl-C₆H₄) | H |
| J | H | H | H |
| J | H | 4-CH₃ | H |
| J | CH₃ | H | H |
| J | C₂H₅ | H | H |
| CH₃ | H | H | 5-J |
| CH₃ | H | 4-CH₃ | 5-J |
| J | CH₃ | 4-CH₃ | H |
| J | C₂H₅ | 4-CH₃ | H |
| J | CH₃ | 4-Cl | H |
| J | C₂H₅ | 4-Cl | H |
| J | Cl | 4-CH₃ | H |
| J | H | 4-CH₃ | 5- CH₃ |
| CH₃ | H | 4-J | H |
| C₂H₅ | H | 4-J | H |
| CH₃ | CH₃ | 4-J | H |
| C₂H₅ | CH₃ | 4-J | H |
| C₂H₅ | C₂H₅ | 4-J | H |
| Cl | CH₃ | 4-J | H |
| Cl | C₂H₅ | 4-J | H |
| CH₃ | H | 4-J | 5-CH₃ |
| CH₃ | CH₃ | H | 3-J |
| J | H | H | 5-CH₃ |

Als erfindungsgemäße Wirkstoffe kommen insbesondere bevorzugt Verbindungen aus mit den in Tabelle 1 genannten Restekombinationen für W, X, Y und Z mit den in Tabellen 2a und 2b genannten Restekombinationen für A, B und D in Frage.

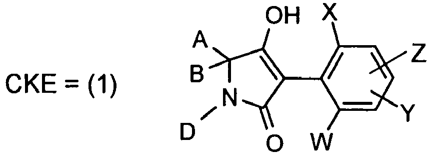

**Tabelle 2a**

| **A** | **B** | **D** |
|---|---|---|
| CH₃ | H | H |
| C₂H₅ | H | H |
| C₃H₇ | H | H |
| i-C₃H₇ | H | H |
| C₄H₉ | H | H |
| i-C₄H₉ | H | H |
| s-C₄H₉ | H | H |
| t-C₄H₉ | H | H |
| CH₃ | CH₃ | H |
| C₂H₅ | CH₃ | H |
| C₃H₇ | CH₃ | H |
| i-C₃H₇ | CH₃ | H |
| C₄H₉ | CH₃ | H |
| i-C₄H₉ | CH₃ | H |
| s-C₄H₉ | CH₃ | H |
| t-C₄H₉ | CH₃ | H |
| C₂H₅ | C₂H₅ | H |
| C₃H₇ | C₃H₇ | H |
| 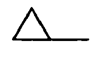 | CH₃ | H |
| 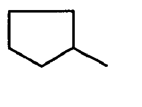 | CH₃ | H |
| 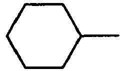 | CH₃ | H |
| -(CH₂)₂- | | H |
| -(CH₂)₄- | | H |
| -(CH₂)₅- | | H |
| -(CH₂)₆- | | H |
| -(CH₂)₇- | | H |
| -(CH₂)₂-O-(CH₂)₂- | | H |
| -CH₂-O-(CH₂)₃- | | H |
| -(CH₂)₂-S-(CH₂)₂- | | H |
| -CH₂-CHCH₃-(CH₂)₃- | | H |
| -CH₂-CHOCH₃-(CH₂)₂- | | H |
| -CH₂-CHOC₂H₅-(CH₂)₂- | | H |
| -CH₂-CHOC₃H₇-(CH₂)₂- | | H |
| -CH₂-CHOC₄H₉-(CH₂)₂- | | H |
| -CH₂-CHO(CH₂)₂OCH₃-(CH₂)₂- | | H |
| 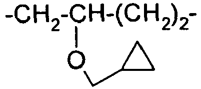 | | H |
| -CH₂-CHOCH₃-(CH₂)₃- | | H |
| -CH₂-CHOC₂H₅-(CH₂)₃- | | H |
| -CH₂-CHOC₃H₇-(CH₂)₃- | | H |
| -CH₂-CHOC₄H₉-(CH₂)₃- | | H |
| -CH₂-CHO(CH₂)₂OCH₃-(CH₂)₃- | | H |
| 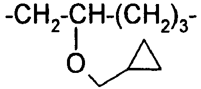 | | H |
| -(CH₂)₂-CHCH₃-(CH₂)₂- | | H |
| -(CH₂)₂-CHC₂H₅-(CH₂)₂- | | H |
| -(CH₂)₂-CHC₃H₇-(CH₂)₂- | | H |
| -(CH₂)₂-CHi-C₃H₇-(CH₂)₂- | | H |
| -(CH₂)₂-CHOCH₃-(CH₂)₂- | | H |
| -(CH₂)₂-CHOC₂H₅-(CH₂)₂- | | H |
| -(CH₂)₂-CHOC₃H₇-(CH₂)₂- | | H |
| -(CH₂)₂-CHO-i-C₃H₇-(CH₂)₂- | | H |
| -(CH₂)₂-C(CH₃)₂-(CH₂)₂- | | H |
| -CH₂-(CHCH₃)₂-(CH₂)₂- | | H |
| 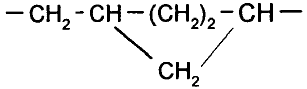 | | H |
| 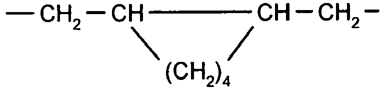 | | H |
| 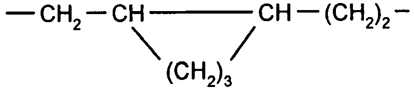 | | H |
| 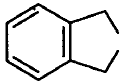 | | H |
| 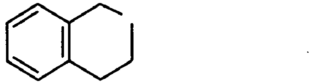 | | H |
| 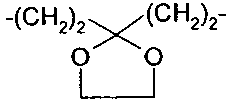 | | H |
| 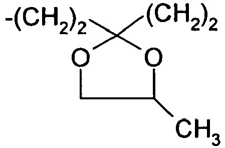 | | H |
| 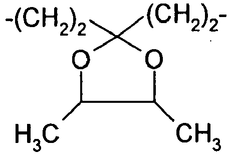 | | H |
| 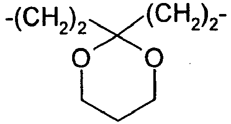 | | H |
| 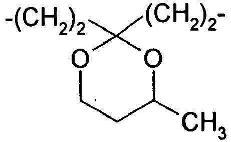 | | H |
| 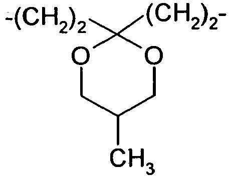 | | H |
| 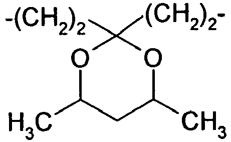 | | H |
| 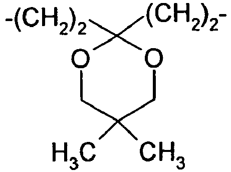 | | H |
| 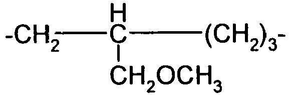 | | H |
| 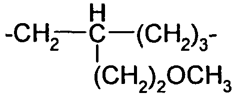 | | H |
| 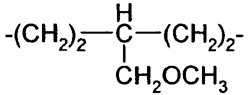 | | H |
| 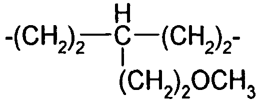 | | H |
| 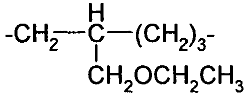 | | H |
| 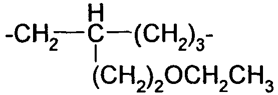 | | H |
| 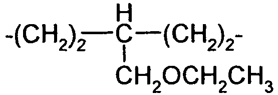 | | H |
| 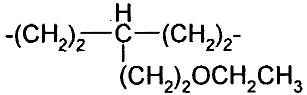 | | H |

**Tabelle 2b**

| **A** | **D** | **B** |
|---|---|---|
| -(CH₂)₃- | | H |
| -(CH₂)₄- | | H |
| -CH₂-CHCH₃-CH₂- | | H |
| -CH₂-CH₂-CHCH₃- | | H |
| -CH₂-CHCH₃-CHCH₃- | | H |
| -CH₂-CH(OCH₃)-CH₂- | | H |
| -CH₂-CH=CH-CH₂- | | H |
| 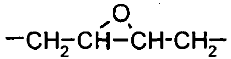 | | H |
| -CH₂-S-CH₂- | | H |
| -CH₂-S-(CH₂)₂- | | H |
| -(CH₂)₂-S-CH₂- | | H |
| 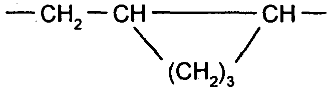 | | H |
| H | CH₃ | H |
| H | C₂H₅ | H |
| H | C₃H₇ | H |
| H | i-C₃H₇ | H |
| H | 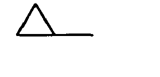 | H |
| H | 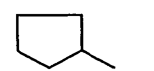 | H |
| H | 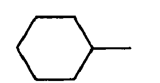 | H |
| CH₃ | CH₃ | H |
| CH₃ | C₂H₅ | H |
| CH₃ | C₃H₇ | H |
| CH₃ | i-C₃H₇ | H |
| CH₃ | 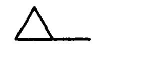 | H |
| CH₃ | 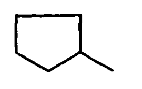 | H |
| CH₃ | 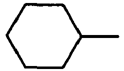 | H |
| C₂H₅ | CH₃ | H |
| C₂H₅ | C₂H₅ | H |

Als erfindungsgemäße Wirkstoffe kommen insbesondere bevorzugt Verbindungen aus mit den in Tabelle 1 genannten Restekombinationen für W, X, Y und Z mit den in Tabelle 3 genannten Restekombinationen für A und B in Frage.

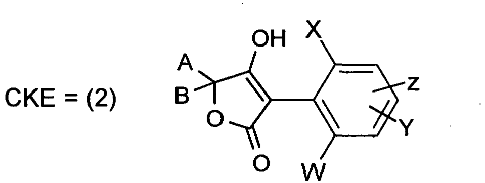

**Tabelle 3**

| **A** | **B** |
|---|---|
| CH₃ | H |
| C₂H₅ | H |
| C₃H₇ | H |
| i-C₃H₇ | H |
| C₄H₉ | H |
| i-C₄H₉ | H |
| s-C₄H₉ | H |
| t-C₄H₉ | H |
| CH₃ | CH₃ |
| C₂H₅ | CH₃ |
| C₃H₇ | CH₃ |
| i-C₃H₇ | CH₃ |
| C₄H₉ | CH₃ |
| i-C₄H₉ | CH₃ |
| s-C₄H₉ | CH₃ |
| t-C₄H₉ | CH₃ |
| C₂H₅ | C₂H₅ |
| C₃H₇ | C₃H₇ |
| 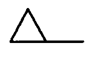 | CH₃ |
| 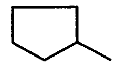 | CH₃ |
| 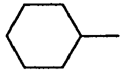 | CH₃ |
| -(CH₂)₂- | |
| -(CH₂)₄- | |
| -(CH₂)₅- | |
| -(CH₂)₆- | |
| -(CH₂)₇- | |
| -(CH₂)₂-O-(CH₂)₂- | |
| -CH₂-O-(CH₂)₃- | |
| -(CH₂)₂-S-(CH₂)₂- | |
| -CH₂-CHCH₃-(CH₂)₃- | |
| -CH₂-CHOCH₃-(CH₂)₃- | |
| -CH₂-CHOC₂H₅-(CH₂)₃- | |
| -CH₂-CHOC₃H₇-(CH₂)₃- | |
| -CH₂-CHOC₄H₉-(CH₂)₃- | |
| -CH₂-CHO(CH₂)₂OCH₃-(CH₂)₃- | |
| -(CH₂)₂-CHCH₃-(CH₂)₂- | |
| -(CH₂)₂-CHC₂H₅-(CH₂)₂- | |
| -(CH₂)₂-CHC₃H₇-(CH₂)₂- | |
| -(CH₂)₂-CHi-C₃H₇-(CH₂)₂- | |
| -(CH₂)₂-CHOCH₃-(CH₂)₂- | |
| -(CH₂)₂-CHOC₂H₅-(CH₂)₂- | |
| -(CH₂)₂-CHOC₃H₇-(CH₂)₂- | |
| -(CH₂)₂-CHO-i-C₃H₇-(CH₂)₂- | |
| -(CH₂)₂-C(CH₃)₂-(CH₂)₂- | |
| -CH₂-(CHCH₃)₂-(CH₂)₂- | |
| 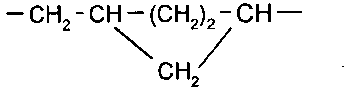 | |
| 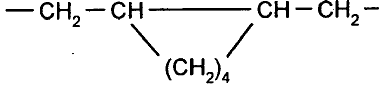 | |
| 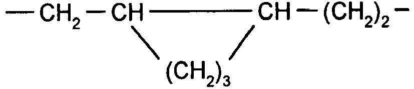 | |
| 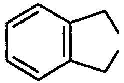 | |
| 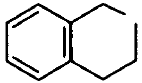 | |
| 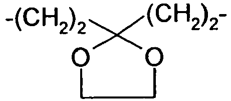 | |
| 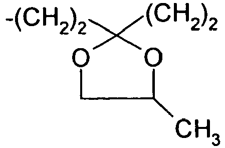 | |
| 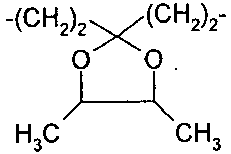 | |
| 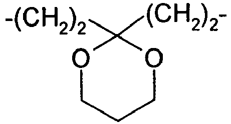 | |
| 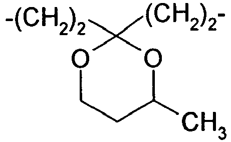 | |
| 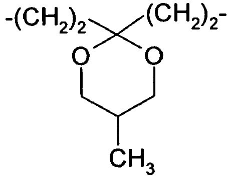 | |
| 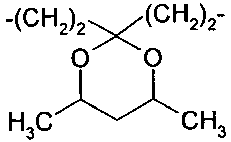 | |
| 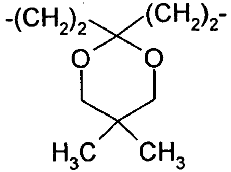 | |
| 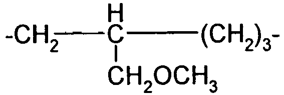 | |
| 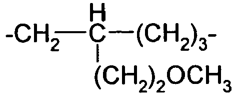 | |
| 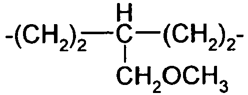 | |
| 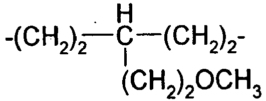 | |
| 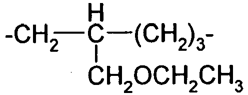 | |
| 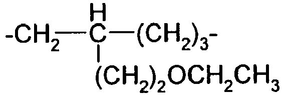 | |
| 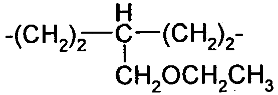 | |
| 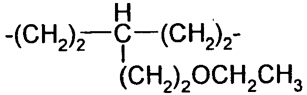 | |

Besonders hervorzuheben sind die folgenden Verbindungen:

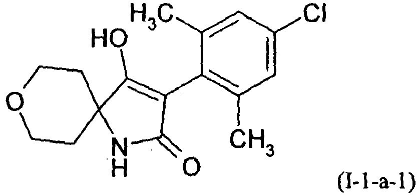

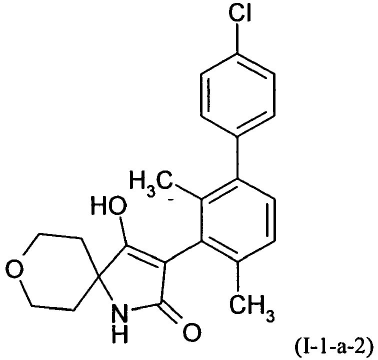

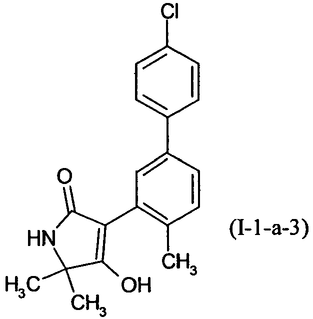

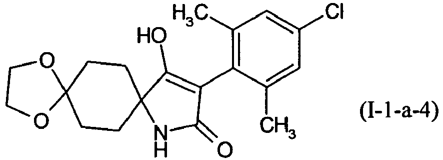

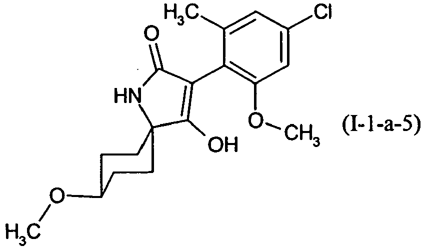

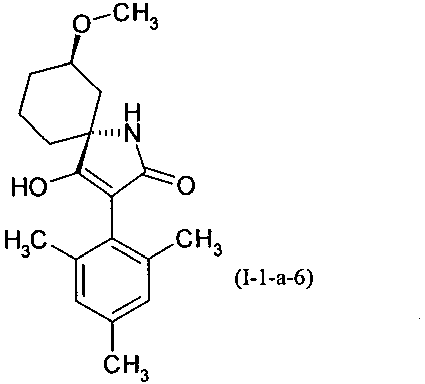

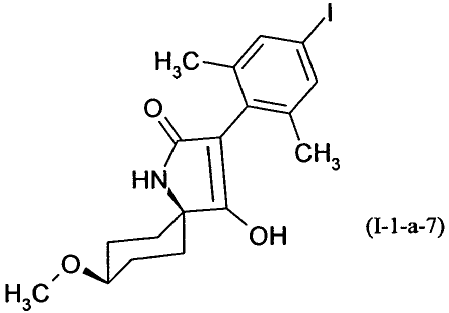

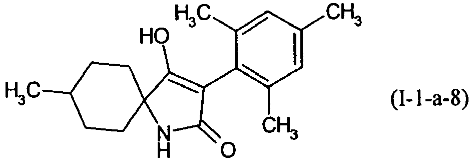

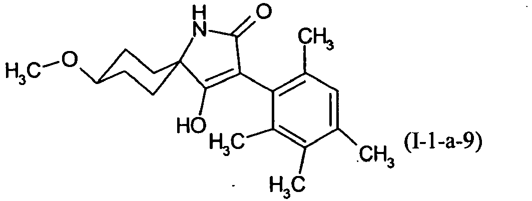

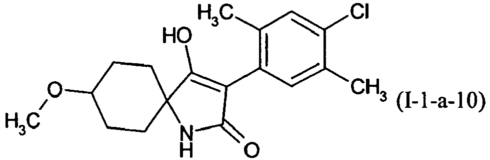

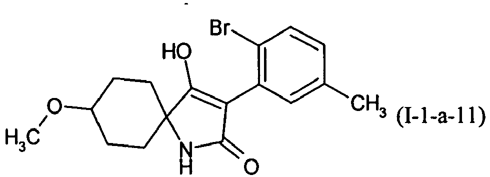

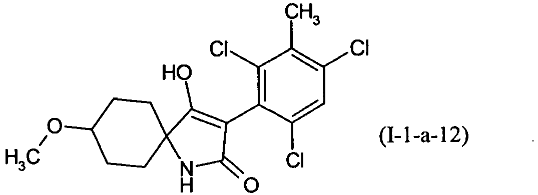

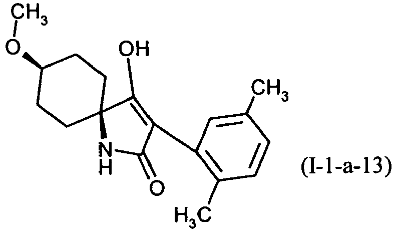

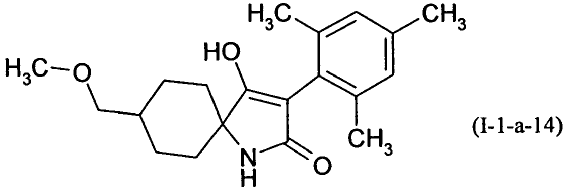

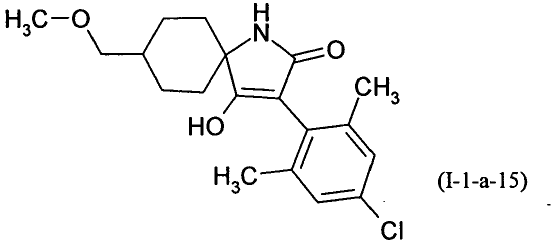

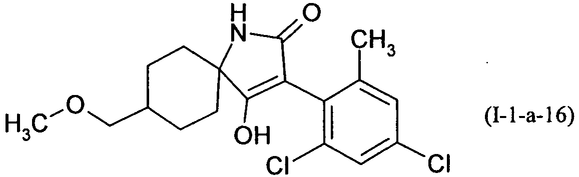

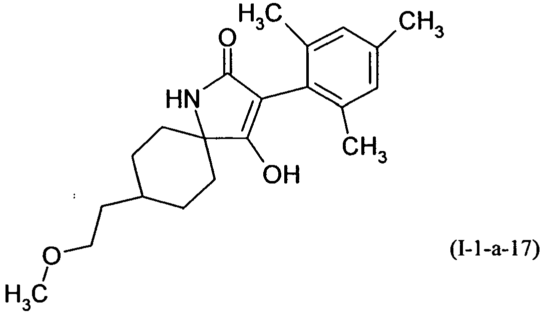

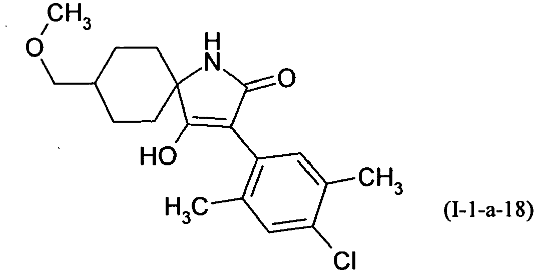

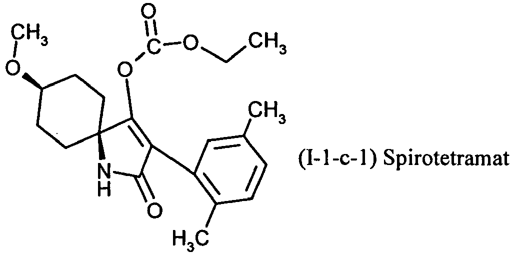

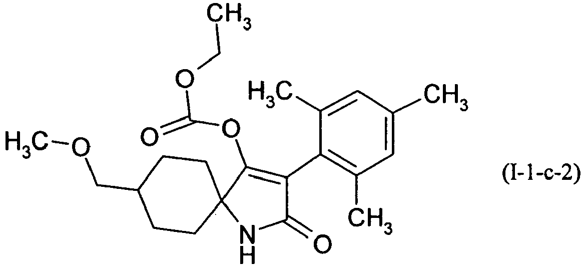

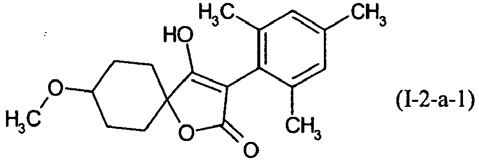

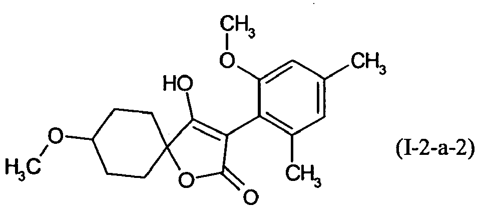

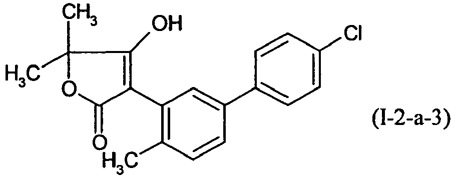

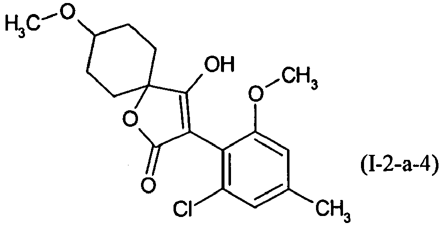

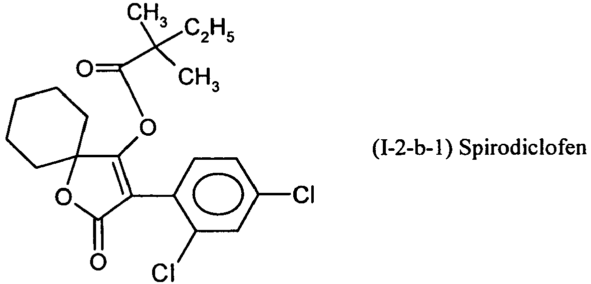

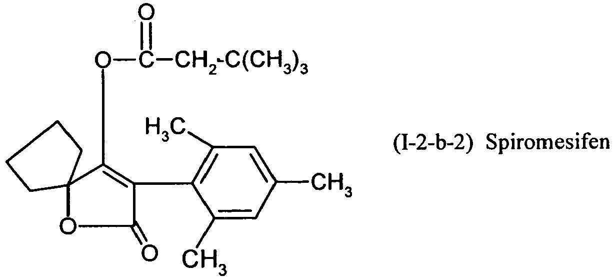

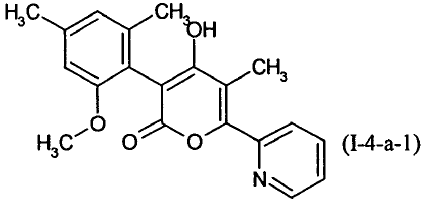

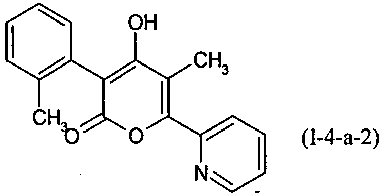

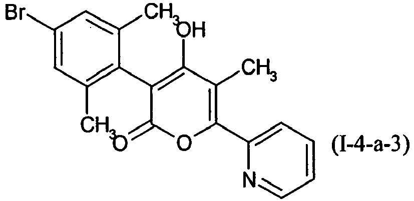

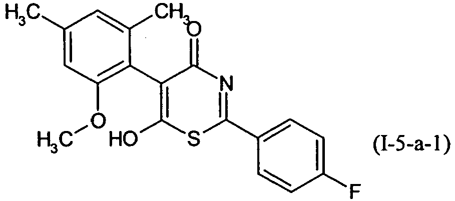

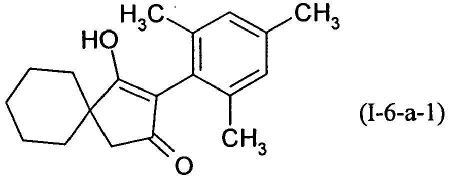

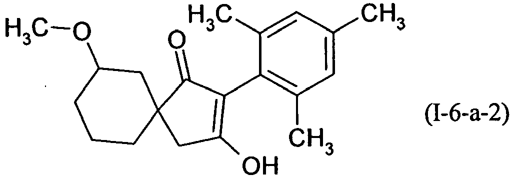

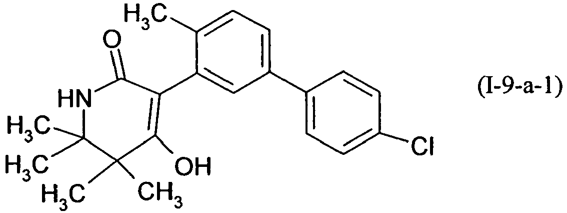

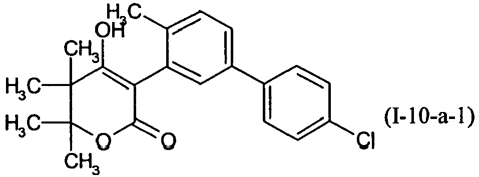

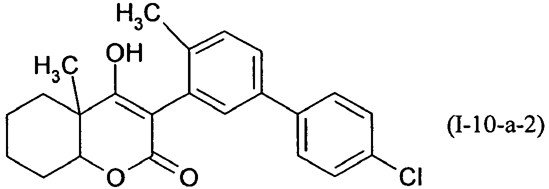

Die Verbindungen der Formel (I) besitzen eine breite insektizide und/oder akarizide Wirkung, die Wirkung und / oder Pflanzenverträglichkeit lässt im Einzelnen aber zu wünschen übrig.

Die Wirkstoffe können in den erfindungsgemäßen Zusammensetzungen in einem breiten Konzentrationsbereich eingesetzt werden. Die Konzentration der Wirkstoffe in der Formulierung beträgt dabei üblicherweise 0,1 - 50 Gew.-%.

Ammonium- und Phosphoniumsalze, die erfindungsgemäß in Kombination mit Penetrationsförderern gemäß Anspruch 1 die Wirkung von Pflanzenschutzmitteln enthaltend Fettsäure-Biosynthese-Inhibitoren steigern, werden durch Formel (II) definiert 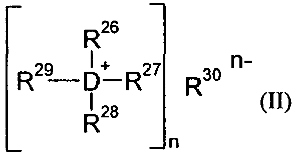 in welcher
- D: für Stickstoff oder Phosphor steht,
- D: bevorzugt für Stickstoff steht,
- R²⁶, R²⁷, R²⁸ und R²⁹: unabhängig voneinander für Wasserstoff oder jeweils gegebenenfalls substituiertes C₁-C₈-Alkyl oder einfach oder mehrfach ungesättigtes, gegebenenfalls substituiertes C₁-C₈-Alkylen stehen, wobei die Substituenten aus Halogen, Nitro und Cyano ausgewählt sein können,
- R²⁶, R²⁷, R²⁸ und R²⁹: bevorzugt unabhängig voneinander für Wasserstoff oder jeweils gegebenenfalls substituiertes C₁-C₄-Alkyl stehen, wobei die Substituenten aus Halogen, Nitro und Cyano ausgewählt sein können,
- R²⁶, R²⁷, R²⁸ und R²⁹: besonders bevorzugt unabhängig voneinander für Wasserstoff, Methyl, Ethyl, n-Propyl, i-Propyl, n-Butyl, i-Butyl, s-Butyl oder t-Butyl stehen,
- R²⁶, R²⁷, R²⁸ und R²⁹: ganz besonders bevorzugt für Wasserstoff stehen,
- R²⁶, R²⁷, R²⁸ und R²⁹: weiterhin ganz besonders bevorzugt gleichzeitig für Methyl oder gleichzeitig für Ethyl stehen,
- n: für 1, 2, 3 oder 4 steht,
- n: bevorzugt für 1 oder 2 steht,
- R³⁰: für ein anorganisches oder organisches Anion steht,
- R³⁰: bevorzugt für Hydrogencarbonat, Tetraborat, Fluorid, Bromid, Jodid, Chlorid, Monohydrogenphosphat, Dihydrogenphosphat, Hydrogensulfat, Tartrat, Sulfat, Nitrat, Thiosulfat, Thiocyanat, Formiat, Laktat, Acetat, Propionat, Butyrat, Pentanoat, Citrat oder Oxalat steht,
- R³⁰: weiterhin bevorzugt für Carbonat, Pentaborat, Sulfit, Benzoat, Hydrogenoxalat, Hydrogencitrat, Methylsulfat oder Tetrafluoroborat steht,
- R³⁰: besonders bevorzugt für Laktat, Sulfat, Nitrat, Thiosulfat, Thiocyanat, Citrat, Oxalat, Acetat oder Formiat steht,
- R³⁰: außerdem besonders bevorzugt für Monohydrogenphosphat oder Dihydrogenphosphat steht und
- R³⁰: ganz besonders bevorzugt für Thiocyanat, Dihydrogenphosphat, Monohydrogenphosphat oder Sulfat steht.

Die Ammonium- und Phosphoniumsalze der Formel (II) können in einem breiten Konzentrationsbereich zur Steigerung der Wirkung von Pflanzenschutzmitteln enthaltend Ketoenole eingesetzt werden. Im Allgemeinen werden die Ammonium- oder Phosphoniumsalze im anwendungsfertigen Pflanzenschutzmittel in einer Konzentration von 0,5 bis 80 mmol/l, bevorzugt 0,75 bis 37,5 mmol/l, besonders bevorzugt 1,5 bis 25 mmol/l eingesetzt. Im Fall eines formulierten Produktes wird die Ammonium- und/oder Phosphoniumsalzkonzentration in der Formulierung so gewählt, dass sie nach Verdünnung der Formulierung auf die gewünschte Wirkstoffkonzentration in diesen angegebenen allgemeinen, bevorzugten oder besonders bevorzugten Bereichen liegt. Die Konzentration des Salzes in der Formulierung beträgt dabei üblicherweise 1 - 50 Gew.-%.

In der Erfindung wird den Pflanzenschutzmitteln zur Wirkungssteigerung nicht nur ein Ammonium- und/oder Phosphoniumsalz der Formel (II), sondern zusätzlich ein Penetrationsförderer gemäß Anspruch 1 zugegeben. Es ist als völlig überraschend zu bezeichnen, dass selbst in diesen Fällen eine noch weiter gehende Wirkungssteigerung zu beobachten ist. Gegenstand der vorliegenden Erfindung ist also die Verwendung einer Kombination von Penetrationsförderer gemäß Anspruch 1 und Ammonium- und/oder Phosphoniumsalzen der Formel (II) zur Wirkungssteigerung von Pflanzenschutzmitteln, die insektizid wirksame, phenylsubstituierte cyclische Ketoenole der Formel (I) als Wirkstoff enthalten. Gegenstand der Erfindung sind ebenfalls Mittel, die diese insektizid wirksame phenylsubstituierte cyclische Ketoenole, Penetrationsförderer und Ammonium- und/oder Phosphoniumsalze enthalten und zwar sowohl formulierte Wirkstoffe als auch anwendungsfertige Mittel (Spritzbrühen). Gegenstand der Erfindung ist schließlich weiterhin die Verwendung dieser Mittel zur Bekämpfung von Schadinsekten.

Penetrationsförderer werden in diesem Zusammenhang dadurch definiert, dass sie aus der wässerigen Spritzbrühe und/oder aus dem Spritzbelag in die Kutikula der Pflanze eindringen und dadurch die Stoffbeweglichkeit (Mobilität) von Wirkstoffen in der Kutikula erhöhen können. Die in der Literatur (Baur et al., 1997, Pesticide Science 51, 131-152) beschriebene Methode kann zur Bestimmung dieser Eigenschaft eingesetzt werden.

Erfindungsgemäße Penetrationsförderer sind Alkanol-alkoxylate der Formel

R-O-(-AO)ᵥ-R' (III)

in welcher
- R: für geradkettiges oder verzweigtes Alkyl mit 4 bis 20 Kohlenstoffatomen steht,
- R': für Wasserstoff, Methyl, Ethyl, n-Propyl, i-Propyl, n-Butyl, i-Butyl, t-Butyl, n-Pentyl oder n-Hexyl steht,
- AO: für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
- v: für Zahlen von 2 bis 30 steht.

Eine bevorzugte Gruppe von Penetrationsförderern sind Alkanolalkoxylate der Formel

R-O-(-EO-)ₙ-R' (III-a)

in welcher
- R: die oben angegebene Bedeutung hat,
- R': die oben angegebene Bedeutung hat,
- EO: für -CH₂-CH₂-O- steht und
- n: für Zahlen von 2 bis 20 steht.

Eine weitere bevorzugte Gruppe von Penetrationsförderern sind Alkanol-alkoxylate der Formel

R-O-(-EO-)ₚ-(-PO-)_{q}-R' (III-b)

in welcher
- R: die oben angegebene Bedeutung hat,
- R': die oben angegebene Bedeutung hat,
- EO: für -CH₂-CH₂-O- steht,
- PO: für 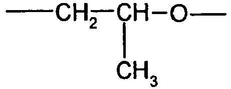 steht,
- p: für Zahlen von 1 bis 10 steht und
- q: für Zahlen von 1 bis 10 steht.

Eine weitere bevorzugte Gruppe von Penetrationsförderern sind Alkanol-Alkoxylate der Formel

R-O-(-PO-)ᵣ-(EO-)ₛ-R' (III-c)

in welcher
- R: die oben angegebene Bedeutung hat,
- R': die oben angegebene Bedeutung hat,
- EO: für -CH₂-CH₂-O- steht,
- PO: für 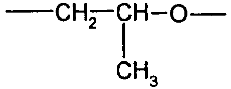 steht,
- r: für Zahlen von 1 bis 10 steht und
- s: für Zahlen von 1 bis 10 steht.

Eine weitere bevorzugte Gruppe von Penetrationsförderern sind Alkanol-alkoxylate der Formel

R-O-(-EO-)ₚ-(-BO-)_{q}-R' (III-d)

in welcher
- R und R: die oben angegebenen Bedeutungen haben,
- EO: für CH₂-CH₂-O- steht,
- BO: für 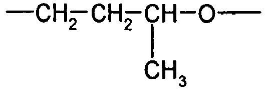 steht,
- p: für Zahlen von 1 bis 10 steht und
- q: für Zahlen von 1 bis 10 steht.

Eine weitere bevorzugte Gruppe von Penetrationsförderern sind Alkanol-alkoxylate der Formel

R-O-(-BO-)ᵣ-(-EO-)ₛ-R' (III-e)

in welcher
- R und: R' die oben angegebenen Bedeutungen haben,
- BO: für 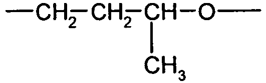 steht,
- EO: für CH₂-CH₂-O- steht,
- r: für Zahlen von 1 bis 10 steht und
- s: für Zahlen von 1 bis 10 steht.

Eine weitere bevorzugte Gruppe von Penetrationsförderern sind Alkanol-Alkoxylate der Formel

CH₃-(CH₂)ₜ-CH₂-O-(-CH₂-CH₂-O-)ᵤ-R' (III-f)

in welcher
- R': die oben angegebene Bedeutung hat,
- t: für Zahlen von 8 bis 13 steht
- u: für Zahlen von 6 bis 17 steht.

In den zuvor angegebenen Formeln steht
- R: vorzugsweise für Butyl, i-Butyl, n-Pentyl, i-Pentyl, Neopentyl, n-Hexyl, i-Hexyl, n-Octyl, i-Octyl, 2-Ethyl-hexyl, Nonyl, i-Nonyl, Decyl, n-Dodecyl, i-Dodecyl, Lauryl, Myristyl, i-Tridecyl, Trimethyl-nonyl, Palmityl, Stearyl oder Eicosyl.

Als Beispiel für ein Alkanol-Alkoxylat der Formel (III-c) sei 2-Ethyl-hexyl-alkoxylat der Formel 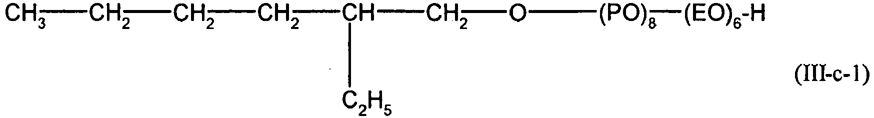 in welcher
- EO: für -CH₂-CH₂-O- steht,
- PO: für 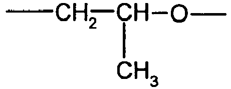 steht und
die Zahlen 8 und 6 Durchschnittswerte darstellen, genannt.

Als Beispiel für ein Alkanol-Alkoxylat der Formel (III-d) sei die Formel

CH₃-(CH₂)₁₀-O-(-EO-)₆-(-BO-)₂-CH₃ (III-d-1)

in welcher
- EO: für CH₂-CH₂-O- steht,
- BO: für 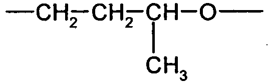 steht und
die Zahlen 10, 6 und 2 Durchschnittswerte darstellen, genannt.

Besonders bevorzugte Alkanol-Alkoxylate der Formel (III-f) sind Verbindungen dieser Formel, in denen
- t: für Zahlen von 9 bis 12 und
- u: für Zahlen von 7 bis 9
steht.

Ganz besonders bevorzugt genannt sei Alkanol-Alkoxylat der Formel (III-f-1)

CH₃-(CH₂)ₜ-CH₂-O-(-CH₂-CH₂-O-)ᵤ-H (III-f-1)

in welcher
- t: für den Durchschnittswert 10,5 steht und
- u: für den Durchschnittswert 8,4 steht.

Die Alkanol-Alkoxylate sind durch die obigen Formeln allgemein definiert. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

Die Alkanol-Alkoxylate der angegebenen Formeln sind bekannt und sind teilweise kommerziell erhältlich oder lassen sich nach bekannten Methoden herstellen (vgl. WO 98/35 553, WO 00/35 278 und EP-A 0 681 865).

Als Penetrationsförderer kommen auch mineralische oder vegetabile Öle oder deren Ester in Betracht, die die Verfügbarkeit der Verbindungen der Formel (I) im Spritzbelag fördern. Als Öle kommen alle üblicherweise in agrochemischen Mitteln einsetzbaren mineralischen oder vegetabilen - gegebenenfalls modifizierte - Öle in Frage. Beispielhaft genannt seien Sonnenblumenöl, Rapsöl, Olivenöl, Rizinusöl, Rüböl, Maiskernöl, Baumwollsaatöl und Sojabohnenöl oder die Ester der genannten Öle. Bevorzugt sind Rapsöl, Sonnenblumenöl und deren Methyl- oder Ethylester.

Die Konzentration an Penetrationsförderer kann in den erfindungsgemäßen Mitteln in einem weiten Bereich variiert werden. Bei einem formulierten Pflanzenschutzmittel liegt sie im allgemeinen bei 1 bis 95 Gew.-%, bevorzugt bei 1 bis 55 Gew.-%, besonders bevorzugt bei 15 - 40 Gew.-%. In den anwendungsfertigen Mitteln (Spritzbrühen) liegen die Konzentration im allgemeinen zwischen 0,1 und 10 g/l, bevorzugt zwischen 0,5 und 5 g/l.

Erfindungsgemäß hervorgehobene Kombinationen von Wirkstoff, Salz und Penetrationsförderer sind in folgender Tabelle aufgeführt. "Gemäß Test" bedeutet dabei, dass jede Verbindung geeignet ist, die in dem Test für die Kutikelpenetration (Baur et al., 1997, Pesticide Science 51, 131-152) als Penetrationsförderer wirkt.

| # | Wirkstoff | Salz | Penetrationsförderer |
|---|---|---|---|
| 1 | (I-1-a-1) | Ammoniumsulfat | Gemäß Test |
| 2 | (I-1-a-1) | Ammoniumlaktat | Gemäß Test |
| 3 | (I-1-a-1) | Ammoniumnitrat | Gemäß Test |
| 4 | (I-1-a-1) | Ammoniumthiosulfat | Gemäß Test |
| 5 | (I-1-a-1) | Ammoniumthiocyanat | Gemäß Test |
| 6 | (I-1-a-1) | Ammoniumcitrat | Gemäß Test |
| 7 | (I-1-a-1) | Ammoniumoxalat | Gemäß Test |
| 8 | (I-1-a-1) | Ammoniumformiat | Gemäß Test |
| 9 | (I-1-a-1) | Ammoniumhydrogenphosphat | Gemäß Test |
| 10 | (I-1-a-1) | Ammoniumdihydrogenphosphat | Gemäß Test |
| 11 | (I-1-a-1) | Ammoniumcarbonat | Gemäß Test |
| 12 | (I-1-a-1) | Ammoniumbenzoat | Gemäß Test |
| 13 | (I-1-a-1) | Ammoniumsulfit | Gemäß Test |
| 14 | (I-1-a-1) | Ammoniumbenzoat | Gemäß Test |
| 15 | (I-1-a-1) | Ammoniumhydrogenoxalat | Gemäß Test |
| 16 | (I-1-a-1) | Ammoniumhydrogencitrat | Gemäß Test |
| 17 | (I-1-a-1) | Ammoniumacetat | Gemäß Test |
| 18 | (I-1-a-1) | Tetramethylammoniumsulfat | Gemäß Test |
| 19 | (I-1-a-1) | Tetramethylammoniumlaktat | Gemäß Test |
| 20 | (I-1-a-1) | Tetramethylammoniumnitrat | Gemäß Test |
| 21 | (I-1-a-1) | Tetramethylammoniumthiosulfat | Gemäß Test |
| 22 | (I-1-a-1) | Tetramethylammoniumthiocyanat | Gemäß Test |
| 23 | (I-1-a-1) | Tetramethylammoniumcitrat | Gemäß Test |
| 24 | (I-1-a-1) | Tetramethylammoniumoxalat | Gemäß Test |
| 25 | (I-1-a-1) | Tetramethylammoniumformiat | Gemäß Test |
| 26 | (I-1-a-1) | Tetramethylammoniumhydrogenphosphat | Gemäß Test |
| 27 | (I-1-a-1) | Tetramethylammoniumdihydrogenphosphat | Gemäß Test |
| 28 | (I-1-a-1) | Tetraethylammoniumsulfat | Gemäß Test |
| 29 | (I-1-a-1) | Tetraethylammoniumlaktat | Gemäß Test |
| 30 | (I-1-a-1) | Tetraethylammoniumnitrat | Gemäß Test |
| 31 | (I-1-a-1) | Tetraethylammoniumthiosulfat | Gemäß Test |
| 32 | (I-1-a-1) | Tetraethylammoniumthiocyanat | Gemäß Test |
| 33 | (I-1-a-1) | Tetraethylammoniumcitrat | Gemäß Test |
| 34 | (I-1-a-1) | Tetraethylammoniumoxalat | Gemäß Test |
| 35 | (I-1-a-1) | Tetraethylammoniumformiat | Gemäß Test |
| 36 | (I-1-a-1) | Tetraethylammoniumhydrogenphosphat | Gemäß Test |
| 37 | (I-1-a-1) | Tetraethylammoniumdihydrogenphosphat | Gemäß Test |
| 38 | (I-1-a-2) | Ammoniumsulfat | Gemäß Test |
| 39 | (I-1-a-2) | Ammoniumlaktat | Gemäß Test |
| 40 | (I-1-a-2) | Ammoniumnitrat | Gemäß Test |
| 41 | (I-1-a-2) | Ammoniumthiosulfat | Gemäß Test |
| 42 | (I-1-a-2) | Ammoniumthiocyanat | Gemäß Test |
| 43 | (I-1-a-2) | Ammoniumcitrat | Gemäß Test |
| 44 | (I-1-a-2) | Ammoniumoxalat | Gemäß Test |
| 45 | (I-1-a-2) | Ammoniumformiat | Gemäß Test |
| 46 | (I-1-a-2) | Ammoniumhydrogenphosphat | Gemäß Test |
| 47 | (I-1-a-2) | Ammoniumdihydrogenphosphat | Gemäß Test |
| 48 | (I-1-a-2) | Ammoniumcarbonat | Gemäß Test |
| 49 | (I-1-a-2) | Ammoniumbenzoat | Gemäß Test |
| 50 | (I-1-a-2) | Ammoniumsulfit | Gemäß Test |
| 51 | (I-1-a-2) | Ammoniumbenzoat | Gemäß Test |
| 52 | (I-1-a-2) | Ammoniumhydrogenoxalat | Gemäß Test |
| 53 | (I-1-a-2) | Ammoniumhydrogencitrat | Gemäß Test |
| 54 | (I-1-a-2) | Ammoniumacetat | Gemäß Test |
| 55 | (I-1-a-2) | Tetramethylammoniumsulfat | Gemäß Test |
| 56 | (I-1-a-2) | Tetramethylammoniumlaktat | Gemäß Test |
| 57 | (I-1-a-2) | Tetramethylammoniumnitrat | Gemäß Test |
| 58 | (I-1-a-2) | Tetramethylammoniumthiosulfat | Gemäß Test |
| 59 | (I-1-a-2) | Tetramethylammoniumthiocyanat | Gemäß Test |
| 60 | (I-1-a-2) | Tetramethylammoniumcitrat | Gemäß Test |
| 61 | (I-1-a-2) | Tetramethylammoniumoxalat | Gemäß Test |
| 62 | (I-1-a-2) | Tetramethylammoniumformiat | Gemäß Test |
| 63 | (I-1-a-2) | Tetramethylammoniumhydrogenphosphat | Gemäß Test |
| 64 | (I-1-a-2) | Tetramethylammoniumdihydrogenphosphat | Gemäß Test |
| 65 | (I-1-a-2) | Tetraethylammoniumsulfat | Gemäß Test |
| 66 | (I-1-a-2) | Tetraethylammoniumlaktat | Gemäß Test |
| 67 | (I-1-a-2) | Tetraethylammoniumnitrat | Gemäß Test |
| 68 | (I-1-a-2) | Tetraethylammoniumthiosulfat | Gemäß Test |
| 69 | (I-1-a-2) | Tetraethylammoniumthiocyanat | Gemäß Test |
| 70 | (I-1-a-2) | Tetraethylammoniumcitrat | Gemäß Test |
| 71 | (I-1-a-2) | Tetraethylammoniumoxalat | Gemäß Test |
| 72 | (I-1-a-2) | Tetraethylammoniumformiat | Gemäß Test |
| 73 | (I-1-a-2) | Tetraethylammoniumhydrogenphosphat | Gemäß Test |
| 74 | (I-1-a-2) | Tetraethylammoniumdihydrogenphosphat | Gemäß Test |
| 75 | (I-1-a-3) | Ammoniumsulfat | Gemäß Test |
| 76 | (I-1-a-3) | Ammoniumlaktat | Gemäß Test |
| 77 | (I-1-a-3) | Ammoniumnitrat | Gemäß Test |
| 78 | (I-1-a-3) | Ammoniumthiosulfat | Gemäß Test |
| 79 | (I-1-a-3) | Ammoniumthiocyanat | Gemäß Test |
| 80 | (I-1-a-3) | Ammoniumcitrat | Gemäß Test |
| 81 | (I-1-a-3) | Ammoniumoxalat | Gemäß Test |
| 82 | (I-1-a-3) | Ammoniumformiat | Gemäß Test |
| 83 | (I-1-a-3) | Ammoniumhydrogenphosphat | Gemäß Test |
| 84 | (I-1-a-3) | Ammoniumdihydrogenphosphat | Gemäß Test |
| 85 | (I-1-a-3) | Ammoniumcarbonat | Gemäß Test |
| 86 | (I-1-a-3) | Ammoniumbenzoat | Gemäß Test |
| 87 | (I-1-a-3) | Ammoniumsulfit | Gemäß Test |
| 88 | (I-1-a-3) | Ammoniumbenzoat | Gemäß Test |
| 89 | (I-1-a-3) | Ammoniumhydrogenoxalat | Gemäß Test |
| 90 | (I-1-a-3) | Ammoniumhydrogencitrat | Gemäß Test |
| 91 | (I-1-a-3) | Ammoniumacetat | Gemäß Test |
| 92 | (I-1-a-3) | Tetramethylammoniumsulfat | Gemäß Test |
| 93 | (I-1-a-3) | Tetramethylammoniumlaktat | Gemäß Test |
| 94 | (I-1-a-3) | Tetramethylammoniumnitrat | Gemäß Test |
| 95 | (I-1-a-3) | Tetramethylammoniumthiosulfat | Gemäß Test |
| 96 | (I-1-a-3) | Tetramethylammoniumthiocyanat | Gemäß Test |
| 97 | (I-1-a-3) | Tetramethylammoniumcitrat | Gemäß Test |
| 98 | (I-1-a-3) | Tetramethylammoniumoxalat | Gemäß Test |
| 99 | (I-1-a-3) | Tetramethylammoniumformiat | Gemäß Test |
| 100 | (I-1-a-3) | Tetramethylammoniumhydrogenphosphat | Gemäß Test |
| 101 | (I-1-a-3) | Tetramethylammoniumdihydrogenphosphat | Gemäß Test |
| 102 | (I-1-a-3) | Tetraethylammoniumsulfat | Gemäß Test |
| 103 | (I-1-a-3) | Tetraethylammoniumlaktat | Gemäß Test |
| 104 | (I-1-a-3) | Tetraethylammoniumnitrat | Gemäß Test |
| 105 | (I-1-a-3) | Tetraethylammoniumthiosulfat | Gemäß Test |
| 106 | (I-1-a-3) | Tetraethylammoniumthiocyanat | Gemäß Test |
| 107 | (I-1-a-3) | Tetraethylammoniumcitrat | Gemäß Test |
| 108 | (I-1-a-3) | Tetraethylammoniumoxalat | Gemäß Test |
| 109 | (I-1-a-3) | Tetraethylammoniumformiat | Gemäß Test |
| 110 | (I-1-a-3) | Tetraethylammoniumhydrogenphosphat | Gemäß Test |
| 111 | (I-1-a-3) | Tetraethylammoniumdihydrogenphosphat | Gemäß Test |
| 112 | (I-1-a-4) | Ammoniumsulfat | Gemäß Test |
| 113 | (I-1-a-4) | Ammoniumlaktat | Gemäß Test |
| 114 | (I-1-a-4) | Ammoniumnitrat | Gemäß Test |
| 115 | (I-1-a-4) | Ammoniumthiosulfat | Gemäß Test |
| 116 | (I-1-a-4) | Ammoniumthiocyanat | Gemäß Test |
| 117 | (I-1-a-4) | Ammoniumcitrat | Gemäß Test |
| 118 | (I-1-a-4) | Ammoniumoxalat | Gemäß Test |
| 119 | (I-1-a-4) | Ammoniumformiat | Gemäß Test |
| 120 | (I-1-a-4) | Ammoniumhydrogenphosphat | Gemäß Test |
| 121 | (I-1-a-4) | Ammoniumdihydrogenphosphat | Gemäß Test |
| 122 | (I-1-a-4) | Ammoniumcarbonat | Gemäß Test |
| 123 | (I-1-a-4) | Ammoniumbenzoat | Gemäß Test |
| 124 | (I-1-a-4) | Ammoniumsulfit | Gemäß Test |
| 125 | (I-1-a-4) | Ammoniumbenzoat | Gemäß Test |
| 126 | (I-1-a-4) | Ammoniumhydrogenoxalat | Gemäß Test |
| 127 | (I-1-a-4) | Ammoniumhydrogencitrat | Gemäß Test |
| 128 | (I-1-a-4) | Ammoniumacetat | Gemäß Test |
| 129 | (I-1-a-4) | Tetramethylammoniumsulfat | Gemäß Test |
| 130 | (I-1-a-4) | Tetramethylammoniumlaktat | Gemäß Test |
| 131 | (I-1-a-4) | Tetramethylammoniumnitrat | Gemäß Test |
| 132 | (I-1-a-4) | Tetramethylammoniumthiosulfat | Gemäß Test |
| 133 | (I-1-a-4) | Tetramethylammoniumthiocyanat | Gemäß Test |
| 134 | (I-1-a-4) | Tetramethylammoniumcitrat | Gemäß Test |
| 135 | (I-1-a-4) | Tetramethylammoniumoxalat | Gemäß Test |
| 136 | (I-1-a-4) | Tetramethylammoniumformiat | Gemäß Test |
| 137 | (I-1-a-4) | Tetramethylammoniumhydrogenphosphat | Gemäß Test |
| 138 | (I-1-a-4) | Tetramethylammoniumdihydrogenphosphat | Gemäß Test |
| 139 | (I-1-a-4) | Tetraethylammoniumsulfat | Gemäß Test |
| 140 | (I-1-a-4) | Tetraethylammoniumlaktat | Gemäß Test |
| 141 | (I-1-a-4) | Tetraethylammoniumnitrat | Gemäß Test |
| 142 | (I-1-a-4) | Tetraethylammoniumthiosulfat | Gemäß Test |
| 143 | (I-1-a-4) | Tetraethylammoniumthiocyanat | Gemäß Test |
| 144 | (I-1-a-4) | Tetraethylammoniumcitrat | Gemäß Test |
| 145 | (I-1-a-4) | Tetraethylammoniumoxalat | Gemäß Test |
| 146 | (I-1-a-4) | Tetraethylammoniumformiat | Gemäß Test |
| 147 | (I-1-a-4) | Tetraethylammoniumhydrogenphosphat | Gemäß Test |
| 148 | (I-1-a-4) | Tetraethylammoniumdihydrogenphosphat | Gemäß Test |
| 149 | (I-1-a-5) | Ammoniumsulfat | Gemäß Test |
| 150 | (I-1-a-5) | Ammoniumlaktat | Gemäß Test |
| 151 | (I-1-a-5) | Ammoniumnitrat | Gemäß Test |
| 152 | (I-1-a-5) | Ammoniumthiosulfat | Gemäß Test |
| 153 | (I-1-a-5) | Ammoniumthiocyanat | Gemäß Test |
| 154 | (I-1-a-5) | Ammoniumcitrat | Gemäß Test |
| 155 | (I-1-a-5) | Ammoniumoxalat | Gemäß Test |
| 156 | (I-1-a-5) | Ammoniumformiat | Gemäß Test |
| 157 | (I-1-a-5) | Ammoniumhydrogenphosphat | Gemäß Test |
| 158 | (I-1-a-5) | Ammoniumdihydrogenphosphat | Gemäß Test |
| 159 | (I-1-a-5) | Ammoniumcarbonat | Gemäß Test |
| 160 | (I-1-a-5) | Ammoniumbenzoat | Gemäß Test |
| 161 | (I-1-a-5) | Ammoniumsulfit | Gemäß Test |
| 162 | (I-1-a-5) | Ammoniumbenzoat | Gemäß Test |
| 163 | (I-1-a-5) | Ammoniumhydrogenoxalat | Gemäß Test |
| 164 | (I-1-a-5) | Ammoniumhydrogencitrat | Gemäß Test |
| 165 | (I-1-a-5) | Ammoniumacetat | Gemäß Test |
| 166 | (I-1-a-5) | Tetramethylammoniumsulfat | Gemäß Test |
| 167 | (I-1-a-5) | Tetramethylammoniumlaktat | Gemäß Test |
| 168 | (I-1-a-5) | Tetramethylammoniumnitrat | Gemäß Test |
| 169 | (I-1-a-5) | Tetramethylammoniumthiosulfat | Gemäß Test |
| 170 | (I-1-a-5) | Tetramethylammoniumthiocyanat | Gemäß Test |
| 171 | (I-1-a-5) | Tetramethylammoniumcitrat | Gemäß Test |
| 172 | (I-1-a-5) | Tetramethylammoniumoxalat | Gemäß Test |
| 173 | (I-1-a-5) | Tetramethylammoniumformiat | Gemäß Test |
| 174 | (I-1-a-5) | Tetramethylammoniumhydrogenphosphat | Gemäß Test |
| 175 | (I-1-a-5) | Tetramethylammoniumdihydrogenphosphat | Gemäß Test |
| 176 | (I-1-a-5) | Tetraethylammoniumsulfat | Gemäß Test |
| 177 | (I-1-a-5) | Tetraethylammoniumlaktat | Gemäß Test |
| 178 | (I-1-a-5) | Tetraethylammoniumnitrat | Gemäß Test |
| 179 | (I-1-a-5) | Tetraethylammoniumthiosulfat | Gemäß Test |
| 180 | (I-1-a-5) | Tetraethylammoniumthiocyanat | Gemäß Test |
| 181 | (I-1-a-5) | Tetraethylammoniumcitrat | Gemäß Test |
| 182 | (I-1-a-5) | Tetraethylammoniumoxalat | Gemäß Test |
| 183 | (I-1-a-5) | Tetraethylammoniumformiat | Gemäß Test |
| 184 | (I-1-a-5) | Tetraethylammoniumhydrogenphosphat | Gemäß Test |
| 185 | (I-1-a-5) | Tetraethylammoniumdihydrogenphosphat | Gemäß Test |
| 186 | (I-1-a-6) | Ammoniumsulfat | Gemäß Test |
| 187 | (I-1-a-6) | Ammoniumlaktat | Gemäß Test |
| 188 | (I-1-a-6) | Ammoniumnitrat | Gemäß Test |
| 189 | (I-1-a-6) | Ammoniumthiosulfat | Gemäß Test |
| 190 | (I-1-a-6) | Ammoniumthiocyanat | Gemäß Test |
| 191 | (I-1-a-6) | Ammoniumcitrat | Gemäß Test |
| 192 | (I-1-a-6) | Ammoniumoxalat | Gemäß Test |
| 193 | (I-1-a-6) | Ammoniumformiat | Gemäß Test |
| 194 | (I-1-a-6) | Ammoniumhydrogenphosphat | Gemäß Test |
| 195 | (I-1-a-6) | Ammoniumdihydrogenphosphat | Gemäß Test |
| 196 | (I-1-a-6) | Ammoniumcarbonat | Gemäß Test |
| 197 | (I-1-a-6) | Ammoniumbenzoat | Gemäß Test |
| 198 | (I-1-a-6) | Ammoniumsulfit | Gemäß Test |
| 199 | (I-1-a-6) | Ammoniumbenzoat | Gemäß Test |
| 200 | (I-1-a-6) | Ammoniumhydrogenoxalat | Gemäß Test |
| 201 | (I-1-a-6) | Ammoniumhydrogencitrat | Gemäß Test |
| 202 | (I-1-a-6) | Ammoniumacetat | Gemäß Test |
| 203 | (I-1-a-6) | Tetramethylammoniumsulfat | Gemäß Test |
| 204 | (I-1-a-6) | Tetramethylammoniumlaktat | Gemäß Test |
| 205 | (I-1-a-6) | Tetramethylammoniumnitrat | Gemäß Test |
| 206 | (I-1-a-6) | Tetramethylammoniumthiosulfat | Gemäß Test |
| 207 | (I-1-a-6) | Tetramethylammoniumthiocyanat | Gemäß Test |
| 208 | (I-1-a-6) | Tetramethylammoniumcitrat | Gemäß Test |
| 209 | (I-1-a-6) | Tetramethylammoniumoxalat | Gemäß Test |
| 210 | (I-1-a-6) | Tetramethylammoniumformiat | Gemäß Test |
| 211 | (I-1-a-6) | Tetramethylammoniumhydrogenphosphat | Gemäß Test |
| 212 | (I-1-a-6) | Tetramethylammoniumdihydrogenphosphat | Gemäß Test |
| 213 | (I-1-a-6) | Tetraethylammoniumsulfat | Gemäß Test |
| 214 | (I-1-a-6) | Tetraethylammoniumlaktat | Gemäß Test |
| 215 | (I-1-a-6) | Tetraethylammoniumnitrat | Gemäß Test |
| 216 | (I-1-a-6) | Tetraethylammoniumthiosulfat | Gemäß Test |
| 217 | (I-1-a-6) | Tetraethylammoniumthiocyanat | Gemäß Test |
| 218 | (I-1-a-6) | Tetraethylammoniumcitrat | Gemäß Test |
| 219 | (I-1-a-6) | Tetraethylammoniumoxalat | Gemäß Test |
| 220 | (I-1-a-6) | Tetraethylammoniumformiat | Gemäß Test |
| 221 | (I-1-a-6) | Tetraethylammoniumhydrogenphosphat | Gemäß Test |
| 222 | (I-1-a-6) | Tetraethylammoniumdihydrogenphosphat | Gemäß Test |
| 223 | (I-1-a-7) | Ammoniumsulfat | Gemäß Test |
| 224 | (I-1-a-7) | Ammoniumlaktat | Gemäß Test |
| 225 | (I-1-a-7) | Ammoniumnitrat | Gemäß Test |
| 226 | (I-1-a-7) | Ammoniumthiosulfat | Gemäß Test |
| 227 | (I-1-a-7) | Ammoniumthiocyanat | Gemäß Test |
| 228 | (I-1-a-7) | Ammoniumcitrat | Gemäß Test |
| 229 | (I-1-a-7) | Ammoniumoxalat | Gemäß Test |
| 230 | (I-1-a-7) | Ammoniumformiat | Gemäß Test |
| 231 | (I-1-a-7) | Ammoniumhydrogenphosphat | Gemäß Test |
| 232 | (I-1-a-7) | Ammoniumdihydrogenphosphat | Gemäß Test |
| 233 | (I-1-a-7) | Ammoniumcarbonat | Gemäß Test |
| 234 | (I-1-a-7) | Ammoniumbenzoat | Gemäß Test |
| 235 | (I-1-a-7) | Ammoniumsulfit | Gemäß Test |
| 236 | (I-1-a-7) | Ammoniumbenzoat | Gemäß Test |
| 237 | (I-1-a-7) | Ammoniumhydrogenoxalat | Gemäß Test |
| 238 | (I-1-a-7) | Ammoniumhydrogencitrat | Gemäß Test |
| 239 | (I-1-a-7) | Ammoniumacetat | Gemäß Test |
| 240 | (I-1-a-7) | Tetramethylammoniumsulfat | Gemäß Test |
| 241 | (I-1-a-7) | Tetramethylammoniumlaktat | Gemäß Test |
| 242 | (I-1-a-7) | Tetramethylammoniumnitrat | Gemäß Test |
| 243 | (I-1-a-7) | Tetramethylammoniumthiosulfat | Gemäß Test |
| 244 | (I-1-a-7) | Tetramethylammoniumthiocyanat | Gemäß Test |
| 245 | (I-1-a-7) | Tetramethylammoniumcitrat | Gemäß Test |
| 246 | (I-1-a-7) | Tetramethylammoniumoxalat | Gemäß Test |
| 247 | (I-1-a-7) | Tetramethylammoniumformiat | Gemäß Test |
| 248 | (I-1-a-7) | Tetramethylammoniumhydrogenphosphat | Gemäß Test |
| 249 | (I-1-a-7) | Tetramethylammoniumdihydrogenphosphat | Gemäß Test |
| 250 | (I-1-a-7) | Tetraethylammoniumsulfat | Gemäß Test |
| 251 | (I-1-a-7) | Tetraethylammoniumlaktat | Gemäß Test |
| 252 | (I-1-a-7) | Tetraethylammoniumnitrat | Gemäß Test |
| 253 | (I-1-a-7) | Tetraethylammoniumthiosulfat | Gemäß Test |
| 254 | (I-1-a-7) | Tetraethylammoniumthiocyanat | Gemäß Test |
| 255 | (I-1-a-7) | Tetraethylammoniumcitrat | Gemäß Test |
| 256 | (I-1-a-7) | Tetraethylammoniumoxalat | Gemäß Test |
| 257 | (I-1-a-7) | Tetraethylammoniumformiat | Gemäß Test |
| 258 | (I-1-a-7) | Tetraethylammoniumhydrogenphosphat | Gemäß Test |
| 259 | (I-1-a-7) | Tetraethylammoniumdihydrogenphosphat | Gemäß Test |
| 260 | (I-1-a-8) | Ammoniumsulfat | Gemäß Test |
| 261 | (I-1-a-8) | Ammoniumlaktat | Gemäß Test |
| 262 | (I-1-a-8) | Ammoniumnitrat | Gemäß Test |
| 263 | (I-1-a-8) | Ammoniumthiosulfat | Gemäß Test |
| 264 | (I-1-a-8) | Ammoniumthiocyanat | Gemäß Test |
| 265 | (I-1-a-8) | Ammoniumcitrat | Gemäß Test |
| 266 | (I-1-a-8) | Ammoniumoxalat | Gemäß Test |
| 267 | (I-1-a-8) | Ammoniumformiat | Gemäß Test |
| 268 | (I-1-a-8) | Ammoniumhydrogenphosphat | Gemäß Test |
| 269 | (I-1-a-8) | Ammoniumdihydrogenphosphat | Gemäß Test |
| 270 | (I-1-a-8) | Ammoniumcarbonat | Gemäß Test |
| 271 | (I-1-a-8) | Ammoniumbenzoat | Gemäß Test |
| 272 | (I-1-a-8) | Ammoniumsulfit | Gemäß Test |
| 273 | (I-1-a-8) | Ammoniumbenzoat | Gemäß Test |
| 274 | (I-1-a-8) | Ammoniumhydrogenoxalat | Gemäß Test |
| 275 | (I-1-a-8) | Ammoniumhydrogencitrat | Gemäß Test |
| 276 | (I-1-a-8) | Ammoniumacetat | Gemäß Test |
| 277 | (I-1-a-8) | Tetramethylammoniumsulfat | Gemäß Test |
| 278 | (I-1-a-8) | Tetramethylammoniumlaktat | Gemäß Test |
| 279 | (I-1-a-8) | Tetramethylammoniumnitrat | Gemäß Test |
| 280 | (I-1-a-8) | Tetramethylammoniumthiosulfat | Gemäß Test |
| 281 | (I-1-a-8) | Tetramethylammoniumthiocyanat | Gemäß Test |
| 282 | (I-1-a-8) | Tetramethylammoniumcitrat | Gemäß Test |
| 283 | (I-1-a-8) | Tetramethylammoniumoxalat | Gemäß Test |
| 284 | (I-1-a-8) | Tetramethylammoniumformiat | Gemäß Test |
| 285 | (I-1-a-8) | Tetramethylammoniumhydrogenphosphat | Gemäß Test |
| 286 | (I-1-a-8) | Tetramethylammoniumdihydrogenphosphat | Gemäß Test |
| 287 | (I-1-a-8) | Tetraethylammoniumsulfat | Gemäß Test |
| 288 | (I-1-a-8) | Tetraethylammoniumlaktat | Gemäß Test |
| 289 | (I-1-a-8) | Tetraethylammoniumnitrat | Gemäß Test |
| 290 | (I-1-a-8) | Tetraethylammoniumthiosulfat | Gemäß Test |
| 291 | (I-1-a-8) | Tetraethylammoniumthiocyanat | Gemäß Test |
| 292 | (I-1-a-8) | Tetraethylammoniumcitrat | Gemäß Test |
| 293 | (I-1-a-8) | Tetraethylammoniumoxalat | Gemäß Test |
| 294 | (I-1-a-8) | Tetraethylammoniumformiat | Gemäß Test |
| 295 | (I-1-a-8) | Tetraethylammoniumhydrogenphosphat | Gemäß Test |
| 296 | (I-1-a-8) | Tetraethylammoniumdihydrogenphosphat | Gemäß Test |
| 297 | (I-1-a-9) | Ammoniumsulfat | Gemäß Test |
| 298 | (I-1-a-9) | Ammoniumlaktat | Gemäß Test |
| 299 | (I-1-a-9) | Ammoniumnitrat | Gemäß Test |
| 300 | (I-1-a-9) | Ammoniumthiosulfat | Gemäß Test |
| 301 | (I-1-a-9) | Ammoniumthiocyanat | Gemäß Test |
| 302 | (I-1-a-9) | Ammoniumcitrat | Gemäß Test |
| 303 | (I-1-a-9) | Ammoniumoxalat | Gemäß Test |
| 304 | (I-1-a-9) | Ammoniumformiat | Gemäß Test |
| 305 | (I-1-a-9) | Ammoniumhydrogenphosphat | Gemäß Test |
| 306 | (I-1-a-9) | Ammoniumdihydrogenphosphat | Gemäß Test |
| 307 | (I-1-a-9) | Ammoniumcarbonat | Gemäß Test |
| 308 | (I-1-a-9) | Ammoniumbenzoat | Gemäß Test |
| 309 | (I-1-a-9) | Ammoniumsulfit | Gemäß Test |
| 310 | (I-1-a-9) | Ammoniumbenzoat | Gemäß Test |
| 311 | (I-1-a-9) | Ammoniumhydrogenoxalat | Gemäß Test |
| 312 | (I-1-a-9) | Ammoniumhydrogencitrat | Gemäß Test |
| 313 | (I-1-a-9) | Ammoniumacetat | Gemäß Test |
| 314 | (I-1-a-9) | Tetramethylammoniumsulfat | Gemäß Test |
| 315 | (I-1-a-9) | Tetramethylammoniumlaktat | Gemäß Test |
| 316 | (I-1-a-9) | Tetramethylammoniumnitrat | Gemäß Test |
| 317 | (I-1-a-9) | Tetramethylammoniumthiosulfat | Gemäß Test |
| 318 | (I-1-a-9) | Tetramethylammoniumthiocyanat | Gemäß Test |
| 319 | (I-1-a-9) | Tetramethylammoniumcitrat | Gemäß Test |
| 320 | (I-1-a-9) | Tetramethylammoniumoxalat | Gemäß Test |
| 321 | (I-1-a-9) | Tetramethylammoniumformiat | Gemäß Test |
| 322 | (I-1-a-9) | Tetramethylammoniumhydrogenphosphat | Gemäß Test |
| 323 | (I-1-a-9) | Tetramethylammoniumdihydrogenphosphat | Gemäß Test |
| 324 | (I-1-a-9) | Tetraethylammoniumsulfat | Gemäß Test |
| 325 | (I-1-a-9) | Tetraethylammoniumlaktat | Gemäß Test |
| 326 | (I-1-a-9) | Tetraethylammoniumnitrat | Gemäß Test |
| 327 | (I-1-a-9) | Tetraethylammoniumthiosulfat | Gemäß Test |
| 328 | (I-1-a-9) | Tetraethylammoniumthiocyanat | Gemäß Test |
| 329 | (I-1-a-9) | Tetraethylammoniumcitrat | Gemäß Test |
| 330 | (I-1-a-9) | Tetraethylammoniumoxalat | Gemäß Test |
| 331 | (I-1-a-9) | Tetraethylammoniumformiat | Gemäß Test |
| 332 | (I-1-a-9) | Tetraethylammoniumhydrogenphosphat | Gemäß Test |
| 333 | (I-1-a-9) | Tetraethylammoniumdihydrogenphosphat | Gemäß Test |
| 334 | (I-1-a-10) | Ammoniumsulfat | Gemäß Test |
| 335 | (I-1-a-10) | Ammoniumlaktat | Gemäß Test |
| 336 | (I-1-a-10) | Ammoniumnitrat | Gemäß Test |
| 337 | (I-1-a-10) | Ammoniumthiosulfat | Gemäß Test |
| 338 | (I-1-a-10) | Ammoniumthiocyanat | Gemäß Test |
| 339 | (I-1-a-10) | Ammoniumcitrat | Gemäß Test |
| 340 | (I-1-a-10) | Ammoniumoxalat | Gemäß Test |
| 341 | (I-1-a-10) | Ammoniumformiat | Gemäß Test |
| 342 | (I-1-a-10) | Ammoniumhydrogenphosphat | Gemäß Test |
| 343 | (I-1-a-10) | Ammoniumdihydrogenphosphat | Gemäß Test |
| 344 | (I-1-a-10) | Ammoniumcarbonat | Gemäß Test |
| 345 | (I-1-a-10) | Ammoniumbenzoat | Gemäß Test |
| 346 | (I-1-a-10) | Ammoniumsulfit | Gemäß Test |
| 347 | (I-1-a-10) | Ammoniumbenzoat | Gemäß Test |
| 348 | (I-1-a-10) | Ammoniumhydrogenoxalat | Gemäß Test |
| 349 | (I-1-a-10) | Ammoniumhydrogencitrat | Gemäß Test |
| 350 | (I-1-a-10) | Ammoniumacetat | Gemäß Test |
| 351 | (I-1-a-10) | Tetramethylammoniumsulfat | Gemäß Test |
| 352 | (I-1-a-10) | Tetramethylammoniumlaktat | Gemäß Test |
| 353 | (I-1-a-10) | Tetramethylammoniumnitrat | Gemäß Test |
| 354 | (I-1-a-10) | Tetramethylammoniumthiosulfat | Gemäß Test |
| 355 | (I-1-a-10) | Tetramethylammoniumthiocyanat | Gemäß Test |
| 356 | (I-1-a-10) | Tetramethylammoniumcitrat | Gemäß Test |
| 357 | (I-1-a-10) | Tetramethylammoniumoxalat | Gemäß Test |
| 358 | (I-1-a-10) | Tetramethylammoniumformiat | Gemäß Test |
| 359 | (I-1-a-10) | Tetramethylammoniumhydrogenphosphat | Gemäß Test |
| 360 | (I-1-a-10) | Tetramethylammoniumdihydrogenphosphat | Gemäß Test |
| 361 | (I-1-a-10) | Tetraethylammoniumsulfat | Gemäß Test |
| 362 | (I-1-a-10) | Tetraethylammoniumlaktat | Gemäß Test |
| 363 | (I-1-a-10) | Tetraethylammoniumnitrat | Gemäß Test |
| 364 | (I-1-a-10) | Tetraethylammoniumthiosulfat | Gemäß Test |
| 365 | (I-1-a-10) | Tetraethylammoniumthiocyanat | Gemäß Test |
| 366 | (I-1-a-10) | Tetraethylammoniumcitrat | Gemäß Test |
| 367 | (I-1-a-10) | Tetraethylammoniumoxalat | Gemäß Test |
| 368 | (I-1-a-10) | Tetraethylammoniumformiat | Gemäß Test |
| 369 | (I-1-a-10) | Tetraethylammoniumhydrogenphosphat | Gemäß Test |
| 370 | (I-1-a-10) | Tetraethylammoniumdihydrogenphosphat | Gemäß Test |
| 371 | (I-1-a-11) | Ammoniumsulfat | Gemäß Test |
| 372 | (I-1-a-11) | Ammoniumlaktat | Gemäß Test |
| 373 | (I-1-a-11) | Ammoniumnitrat | Gemäß Test |
| 374 | (I-1-a-11) | Ammoniumthiosulfat | Gemäß Test |
| 375 | (I-1-a-11) | Ammoniumthiocyanat | Gemäß Test |
| 376 | (I-1-a-11) | Ammoniumcitrat | Gemäß Test |
| 377 | (I-1-a-11) | Ammoniumoxalat | Gemäß Test |
| 378 | (I-1-a-11) | Ammoniumformiat | Gemäß Test |
| 379 | (I-1-a-11) | Ammoniumhydrogenphosphat | Gemäß Test |
| 380 | (I-1-a-11) | Ammoniumdihydrogenphosphat | Gemäß Test |
| 381 | (I-1-a-11) | Ammoniumcarbonat | Gemäß Test |
| 382 | (I-1-a-11) | Ammoniumbenzoat | Gemäß Test |
| 383 | (I-1-a-11) | Ammoniumsulfit | Gemäß Test |
| 384 | (I-1-a-11) | Ammoniumbenzoat | Gemäß Test |
| 385 | (I-1-a-11) | Ammoniumhydrogenoxalat | Gemäß Test |
| 386 | (I-1-a-11) | Ammoniumhydrogencitrat | Gemäß Test |
| 387 | (I-1-a-11) | Ammoniumacetat | Gemäß Test |
| 388 | (1-1-a-11) | Tetramethylammoniumsulfat | Gemäß Test |
| 389 | (I-1-a-11) | Tetramethylammoniumlaktat | Gemäß Test |
| 390 | (I-1-a-11) | Tetramethylammoniumnitrat | Gemäß Test |
| 391 | (I-1-a-11) | Tetramethylammoniumthiosulfat | Gemäß Test |
| 392 | (I-1-a-11) | Tetramethylammoniumthiocyanat | Gemäß Test |
| 393 | (I-1-a-11) | Tetramethylammoniumcitrat | Gemäß Test |
| 394 | (I-1-a-11) | Tetramethylammoniumoxalat | Gemäß Test |
| 395 | (I-1-a-11) | Tetramethylammoniumformiat | Gemäß Test |
| 396 | (I-1-a-11) | Tetramethylammoniumhydrogenphosphat | Gemäß Test |
| 397 | (I-1-a-11) | Tetramethylammoniumdihydrogenphosphat | Gemäß Test |
| 398 | (I-1-a-11) | Tetraethylammoniumsulfat | Gemäß Test |
| 399 | (I-1-a-11) | Tetraethylammoniumlaktat | Gemäß Test |
| 400 | (I-1-a-11) | Tetraethylammoniumnitrat | Gemäß Test |
| 401 | (I-1-a-11) | Tetraethylammoniumthiosulfat | Gemäß Test |
| 402 | (I-1-a-11) | Tetraethylammoniumthiocyanat | Gemäß Test |
| 403 | (I-1-a-11) | Tetraethylammoniumcitrat | Gemäß Test |
| 404 | (I-1-a-11) | Tetraethylammoniumoxalat | Gemäß Test |
| 405 | (I-1-a-11) | Tetraethylammoniumformiat | Gemäß Test |
| 406 | (I-1-a-11) | Tetraethylammoniumhydrogenphosphat | Gemäß Test |
| 407 | (I-1-a-11) | Tetraethylammoniumdihydrogenphosphat | Gemäß Test |
| 408 | (I-1-a-12) | Ammoniumsulfat | Gemäß Test |
| 409 | (I-1-a-12) | Ammoniumlaktat | Gemäß Test |
| 410 | (I-1-a-12) | Ammoniumnitrat | Gemäß Test |
| 411 | (I-1-a-12) | Ammoniumthiosulfat | Gemäß Test |
| 412 | (I-1-a-12) | Ammoniumthiocyanat | Gemäß Test |
| 413 | (I-1-a-12) | Ammoniumcitrat | Gemäß Test |
| 414 | (I-1-a-12) | Ammoniumoxalat | Gemäß Test |
| 415 | (I-1-a-12) | Ammoniumformiat | Gemäß Test |
| 416 | (I-1-a-12) | Ammoniumhydrogenphosphat | Gemäß Test |
| 417 | (I-1-a-12) | Ammoniumdihydrogenphosphat | Gemäß Test |
| 418 | (I-1-a-12) | Ammoniumcarbonat | Gemäß Test |
| 419 | (I-1-a-12) | Ammoniumbenzoat | Gemäß Test |
| 420 | (I-1-a-12) | Ammoniumsulfit | Gemäß Test |
| 421 | (I-1-a-12) | Ammoniumbenzoat | Gemäß Test |
| 422 | (I-1-a-12) | Ammoniumhydrogenoxalat | Gemäß Test |
| 423 | (I-1-a-12) | Ammoniumhydrogencitrat | Gemäß Test |
| 424 | (I-1-a-12) | Ammoniumacetat | Gemäß Test |
| 425 | (I-1-a-12) | Tetramethylammoniumsulfat | Gemäß Test |
| 426 | (I-1-a-12) | Tetramethylammoniumlaktat | Gemäß Test |
| 427 | (I-1-a-12) | Tetramethylammoniumnitrat | Gemäß Test |
| 428 | (I-1-a-12) | Tetramethylammoniumthiosulfat | Gemäß Test |
| 429 | (I-1-a-12) | Tetramethylammoniumthiocyanat | Gemäß Test |
| 430 | (I-1-a-12) | Tetramethylammoniumcitrat | Gemäß Test |
| 431 | (I-1-a-12) | Tetramethylammoniumoxalat | Gemäß Test |
| 432 | (I-1-a-12) | Tetramethylammoniumformiat | Gemäß Test |
| 433 | (I-1-a-12) | Tetramethylammoniumhydrogenphosphat | Gemäß Test |
| 434 | (I-1-a-12) | Tetramethylammoniumdihydrogenphosphat | Gemäß Test |
| 435 | (I-1-a-12) | Tetraethylammoniumsulfat | Gemäß Test |
| 436 | (I-1-a-12) | Tetraethylammoniumlaktat | Gemäß Test |
| 437 | (I-1-a-12) | Tetraethylammoniumnitrat | Gemäß Test |
| 438 | (I-1-a-12) | Tetraethylammoniumthiosulfat | Gemäß Test |
| 439 | (I-1-a-12) | Tetraethylammoniumthiocyanat | Gemäß Test |
| 440 | (I-1-a-12) | Tetraethylammoniumcitrat | Gemäß Test |
| 441 | (I-1-a-12) | Tetraethylammoniumoxalat | Gemäß Test |
| 442 | (I-1-a-12) | Tetraethylammoniumformiat | Gemäß Test |
| 443 | (I-1-a-12) | Tetraethylammoniumhydrogenphosphat | Gemäß Test |
| 444 | (I-1-a-12) | Tetraethylammoniumdihydrogenphosphat | Gemäß Test |
| 445 | (I-1-a-13) | Ammoniumsulfat | Gemäß Test |
| 446 | (I-1-a-13) | Ammoniumlaktat | Gemäß Test |
| 447 | (I-1-a-13) | Ammoniumnitrat | Gemäß Test |
| 448 | (I-1-a-13) | Ammoniumthiosulfat | Gemäß Test |
| 449 | (I-1-a-13) | Ammoniumthiocyanat | Gemäß Test |
| 450 | (I-1-a-13) | Ammoniumcitrat | Gemäß Test |
| 451 | (I-1-a-13) | Ammoniumoxalat | Gemäß Test |
| 452 | (I-1-a-13) | Ammoniumformiat | Gemäß Test |
| 453 | (I-1-a-13) | Ammoniumhydrogenphosphat | Gemäß Test |
| 454 | (I-1-a-13) | Ammoniumdihydrogenphosphat | Gemäß Test |
| 455 | (I-1-a-13) | Ammoniumcarbonat | Gemäß Test |
| 456 | (I-1-a-13) | Ammoniumbenzoat | Gemäß Test |
| 457 | (I-1-a-13) | Ammoniumsulfit | Gemäß Test |
| 458 | (I-1-a-13) | Ammoniumbenzoat | Gemäß Test |
| 459 | (I-1-a-13) | Ammoniumhydrogenoxalat | Gemäß Test |
| 460 | (I-1-a-13) | Ammoniumhydrogencitrat | Gemäß Test |
| 461 | (I-1-a-13) | Ammoniumacetat | Gemäß Test |
| 462 | (I-1-a-13) | Tetramethylammoniumsulfat | Gemäß Test |
| 463 | (I-1-a-13) | Tetramethylammoniumlaktat | Gemäß Test |
| 464 | (I-1-a-13) | Tetramethylammoniumnitrat | Gemäß Test |
| 465 | (I-1-a-13) | Tetramethylammoniumthiosulfat | Gemäß Test |
| 466 | (I-1-a-13) | Tetramethylammoniumthiocyanat | Gemäß Test |
| 467 | (I-1-a-13) | Tetramethylammoniumcitrat | Gemäß Test |
| 468 | (I-1-a-13) | Tetramethylammoniumoxalat | Gemäß Test |
| 469 | (I-1-a-13) | Tetramethylammoniumformiat | Gemäß Test |
| 470 | (I-1-a-13) | Tetramethylammoniumhydrogenphosphat | Gemäß Test |
| 471 | (I-1-a-13) | Tetramethylammoniumdihydrogenphosphat | Gemäß Test |
| 472 | (I-1-a-13) | Tetraethylammoniumsulfat | Gemäß Test |
| 473 | (I-1-a-13) | Tetraethylammoniumlaktat | Gemäß Test |
| 474 | (I-1-a-13) | Tetraethylammoniumnitrat | Gemäß Test |
| 475 | (I-1-a-13) | Tetraethylammoniumthiosulfat | Gemäß Test |
| 476 | (I-1-a-13) | Tetraethylammoniumthiocyanat | Gemäß Test |
| 477 | (I-1-a-13) | Tetraethylammoniumcitrat | Gemäß Test |
| 478 | (I-1-a-13) | Tetraethylammoniumoxalat | Gemäß Test |
| 479 | (I-1-a-13) | Tetraethylammoniumformiat | Gemäß Test |
| 480 | (I-1-a-13) | Tetraethylammoniumhydrogenphosphat | Gemäß Test |
| 481 | (I-1-a-13) | Tetraethylammoniumdihydrogenphosphat | Gemäß Test |
| 482 | (I-1-a-14) | Ammoniumsulfat | Gemäß Test |
| 483 | (I-1-a-14) | Ammoniumlaktat | Gemäß Test |
| 484 | (I-1-a-14) | Ammoniumnitrat | Gemäß Test |
| 485 | (I-1-a-14) | Ammoniumthiosulfat | Gemäß Test |
| 486 | (I-1-a-14) | Ammoniumthiocyanat | Gemäß Test |
| 487 | (I-1-a-14) | Ammoniumcitrat | Gemäß Test |
| 488 | (I-1-a-14) | Ammoniumoxalat | Gemäß Test |
| 489 | (I-1-a-14) | Ammoniumformiat | Gemäß Test |
| 490 | (I-1-a-14) | Ammoniumhydrogenphosphat | Gemäß Test |
| 491 | (I-1-a-14) | Ammoniumdihydrogenphosphat | Gemäß Test |
| 492 | (I-1-a-14) | Ammoniumcarbonat | Gemäß Test |
| 493 | (I-1-a-14) | Ammoniumbenzoat | Gemäß Test |
| 494 | (I-1-a-14) | Ammoniumsulfit | Gemäß Test |
| 495 | (I-1-a-14) | Ammoniumbenzoat | Gemäß Test |
| 496 | (I-1-a-14) | Ammoniumhydrogenoxalat | Gemäß Test |
| 497 | (I-1-a-14) | Ammoniumhydrogencitrat | Gemäß Test |
| 498 | (I-1-a-14) | Ammoniumacetat | Gemäß Test |
| 499 | (I-1-a-14) | Tetramethylammoniumsulfat | Gemäß Test |
| 500 | (I-1-a-14) | Tetramethylammoniumlaktat | Gemäß Test |
| 501 | (I-1-a-14) | Tetramethylammoniumnitrat | Gemäß Test |
| 502 | (I-1-a-14) | Tetramethylammoniumthiosulfat | Gemäß Test |
| 503 | (I-1-a-14) | Tetramethylammoniumthiocyanat | Gemäß Test |
| 504 | (I-1-a-14) | Tetramethylammoniumcitrat | Gemäß Test |
| 505 | (I-1-a-14) | Tetramethylammoniumoxalat | Gemäß Test |
| 506 | (I-1-a-14) | Tetramethylammoniumformiat | Gemäß Test |
| 507 | (I-1-a-14) | Tetramethylammoniumhydrogenphosphat | Gemäß Test |
| 508 | (I-1-a-14) | Tetramethylammoniumdihydrogenphosphat | Gemäß Test |
| 509 | (I-1-a-14) | Tetraethylammoniumsulfat | Gemäß Test |
| 510 | (I-1-a-14) | Tetraethylammoniumlaktat | Gemäß Test |
| 511 | (I-1-a-14) | Tetraethylammoniumnitrat | Gemäß Test |
| 512 | (I-1-a-14) | Tetraethylammoniumthiosulfat | Gemäß Test |
| 513 | (I-1-a-14) | Tetraethylammoniumthiocyanat | Gemäß Test |
| 514 | (I-1-a-14) | Tetraethylammoniumcitrat | Gemäß Test |
| 515 | (I-1-a-14) | Tetraethylammoniumoxalat | Gemäß Test |
| 516 | (I-1-a-14) | Tetraethylammoniumformiat | Gemäß Test |
| 517 | (I-1-a-14) | Tetraethylammoniumhydrogenphosphat | Gemäß Test |
| 518 | (I-1-a-14) | Tetraethylammoniumdihydrogenphosphat | Gemäß Test |
| 519 | (I-1-a-15) | Ammoniumsulfat | Gemäß Test |
| 520 | (I-1-a-15) | Ammoniumlaktat | Gemäß Test |
| 521 | (I-1-a-15) | Ammoniumnitrat | Gemäß Test |
| 522 | (I-1-a-15) | Ammoniumthiosulfat | Gemäß Test |
| 523 | (I-1-a-15) | Ammoniumthiocyanat | Gemäß Test |
| 524 | (I-1-a-15) | Ammoniumcitrat | Gemäß Test |
| 525 | (I-1-a-15) | Ammoniumoxalat | Gemäß Test |
| 526 | (I-1-a-15) | Ammoniumformiat | Gemäß Test |
| 527 | (I-1-a-15) | Ammoniumhydrogenphosphat | Gemäß Test |
| 528 | (I-1-a-15) | Ammoniumdihydrogenphosphat | Gemäß Test |
| 529 | (I-1-a-15) | Ammoniumcarbonat | Gemäß Test |
| 530 | (I-1-a-15) | Ammoniumbenzoat | Gemäß Test |
| 531 | (I-1-a-15) | Ammoniumsulfit | Gemäß Test |
| 532 | (I-1-a-15) | Ammoniumbenzoat | Gemäß Test |
| 533 | (I-1-a-15) | Ammoniumhydrogenoxalat | Gemäß Test |
| 534 | (I-1-a-15) | Ammoniumhydrogencitrat | Gemäß Test |
| 535 | (I-1-a-15) | Ammoniumacetat | Gemäß Test |
| 536 | (I-1-a-15) | Tetramethylammoniumsulfat | Gemäß Test |
| 537 | (I-1-a-15) | Tetramethylammoniumlaktat | Gemäß Test |
| 538 | (I-1-a-15) | Tetramethylammoniumnitrat | Gemäß Test |
| 539 | (I-1-a-15) | Tetramethylammoniumthiosulfat | Gemäß Test |
| 540 | (I-1-a-15) | Tetramethylammoniumthiocyanat | Gemäß Test |
| 541 | (I-1-a-15) | Tetramethylammoniumcitrat | Gemäß Test |
| 542 | (I-1-a-15) | Tetramethylammoniumoxalat | Gemäß Test |
| 543 | (I-1-a-15) | Tetramethylammoniumformiat | Gemäß Test |
| 544 | (I-1-a-15) | Tetramethylammoniumhydrogenphosphat | Gemäß Test |
| 545 | (I-1-a-15) | Tetramethylammoniumdihydrogenphosphat | Gemäß Test |
| 546 | (I-1-a-15) | Tetraethylammoniumsulfat | Gemäß Test |
| 547 | (I-1-a-15) | Tetraethylammoniumlaktat | Gemäß Test |
| 548 | (I-1-a-15) | Tetraethylammoniumnitrat | Gemäß Test |
| 549 | (I-1-a-15) | Tetraethylammoniumthiosulfat | Gemäß Test |
| 550 | (I-1-a-15) | Tetraethylammoniumthiocyanat | Gemäß Test |
| 551 | (I-1-a-15) | Tetraethylammoniumcitrat | Gemäß Test |
| 552 | (I-1-a-15) | Tetraethylammoniumoxalat | Gemäß Test |
| 553 | (I-1-a-15) | Tetraethylammoniumformiat | Gemäß Test |
| 554 | (I-1-a-15) | Tetraethylammoniumhydrogenphosphat | Gemäß Test |
| 555 | (I-1-a-15) | Tetraethylammoniumdihydrogenphosphat | Gemäß Test |
| 556 | (I-1-a-16) | Ammoniumsulfat | Gemäß Test |
| 557 | (I-1-a-16) | Ammoniumlaktat | Gemäß Test |
| 558 | (I-1-a-16) | Ammoniumnitrat | Gemäß Test |
| 559 | (I-1-a-16) | Ammoniumthiosulfat | Gemäß Test |
| 560 | (I-1-a-16) | Ammoniumthiocyanat | Gemäß Test |
| 561 | (I-1-a-16) | Ammoniumcitrat | Gemäß Test |
| 562 | (I-1-a-16) | Ammoniumoxalat | Gemäß Test |
| 563 | (I-1-a-16) | Ammoniumformiat | Gemäß Test |
| 564 | (I-1-a-16) | Ammoniumhydrogenphosphat | Gemäß Test |
| 565 | (I-1-a-16) | Ammoniumdihydrogenphosphat | Gemäß Test |
| 566 | (I-1-a-16) | Ammoniumcarbonat | Gemäß Test |
| 567 | (I-1-a-16) | Ammoniumbenzoat | Gemäß Test |
| 568 | (I-1-a-16) | Ammoniumsulfit | Gemäß Test |
| 569 | (I-1-a-16) | Ammoniumbenzoat | Gemäß Test |
| 570 | (I-1-a-16) | Ammoniumhydrogenoxalat | Gemäß Test |
| 571 | (I-1-a-16) | Ammoniumhydrogencitrat | Gemäß Test |
| 572 | (I-1-a-16) | Ammoniumacetat | Gemäß Test |
| 573 | (I-1-a-16) | Tetramethylammoniumsulfat | Gemäß Test |
| 574 | (I-1-a-16) | Tetramethylammoniumlaktat | Gemäß Test |
| 575 | (I-1-a-16) | Tetramethylammoniumnitrat | Gemäß Test |
| 576 | (I-1-a-16) | Tetramethylammoniumthiosulfat | Gemäß Test |
| 577 | (I-1-a-16) | Tetramethylammoniumthiocyanat | Gemäß Test |
| 578 | (I-1-a-16) | Tetramethylammoniumcitrat | Gemäß Test |
| 579 | (I-1-a-16) | Tetramethylammoniumoxalat | Gemäß Test |
| 580 | (I-1-a-16) | Tetramethylammoniumformiat | Gemäß Test |
| 581 | (I-1-a-16) | Tetramethylammoniumhydrogenphosphat | Gemäß Test |
| 582 | (I-1-a-16) | Tetramethylammoniumdihydrogenphosphat | Gemäß Test |
| 583 | (I-1-a-16) | Tetraethylammoniumsulfat | Gemäß Test |
| 584 | (I-1-a-16) | Tetraethylammoniumlaktat | Gemäß Test |
| 585 | (I-1-a-16) | Tetraethylammoniumnitrat | Gemäß Test |
| 586 | (I-1-a-16) | Tetraethylammoniumthiosulfat | Gemäß Test |
| 587 | (I-1-a-16) | Tetraethylammoniumthiocyanat | Gemäß Test |
| 588 | (I-1-a-16) | Tetraethylammoniumcitrat | Gemäß Test |
| 589 | (I-1-a-16) | Tetraethylammoniumoxalat | Gemäß Test |
| 590 | (I-1-a-16) | Tetraethylammoniumformiat | Gemäß Test |
| 591 | (I-1-a-16) | Tetraethylammoniumhydrogenphosphat | Gemäß Test |
| 592 | (I-1-a-16) | Tetraethylammoniumdihydrogenphosphat | Gemäß Test |
| 593 | (I-1-a-17) | Ammoniumsulfat | Gemäß Test |
| 594 | (I-1-a-17) | Ammoniumlaktat | Gemäß Test |
| 595 | (I-1-a-17) | Ammoniumnitrat | Gemäß Test |
| 596 | (I-1-a-17) | Ammoniumthiosulfat | Gemäß Test |
| 597 | (I-1-a-17) | Ammoniumthiocyanat | Gemäß Test |
| 598 | (I-1-a-17) | Ammoniumcitrat | Gemäß Test |
| 599 | (I-1-a-17) | Ammoniumoxalat | Gemäß Test |
| 600 | (I-1-a-17) | Ammoniumformiat | Gemäß Test |
| 601 | (I-1-a-17) | Ammoniumhydrogenphosphat | Gemäß Test |
| 602 | (I-1-a-17) | Ammoniumdihydrogenphosphat | Gemäß Test |
| 603 | (I-1-a-17) | Ammoniumcarbonat | Gemäß Test |
| 604 | (I-1-a-17) | Ammoniumbenzoat | Gemäß Test |
| 605 | (I-1-a-17) | Ammoniumsulfit | Gemäß Test |
| 606 | (I-1-a-17) | Ammoniumbenzoat | Gemäß Test |
| 607 | (I-1-a-17) | Ammoniumhydrogenoxalat | Gemäß Test |
| 608 | (I-1-a-17) | Ammoniumhydrogencitrat | Gemäß Test |
| 609 | (I-1-a-17) | Ammoniumacetat | Gemäß Test |
| 610 | (I-1-a-17) | Tetramethylammoniumsulfat | Gemäß Test |
| 611 | (I-1-a-17) | Tetramethylammoniumlaktat | Gemäß Test |
| 612 | (I-1-a-17) | Tetramethylammoniumnitrat | Gemäß Test |
| 613 | (I-1-a-17) | Tetramethylammoniumthiosulfat | Gemäß Test |
| 614 | (I-1-a-17) | Tetramethylammoniumthiocyanat | Gemäß Test |
| 615 | (I-1-a-17) | Tetramethylammoniumcitrat | Gemäß Test |
| 616 | (I-1-a-17) | Tetramethylammoniumoxalat | Gemäß Test |
| 617 | (I-1-a-17) | Tetramethylammoniumformiat | Gemäß Test |
| 618 | (I-1-a-17) | Tetramethylammoniumhydrogenphosphat | Gemäß Test |
| 619 | (I-1-a-17) | Tetramethylammoniumdihydrogenphosphat | Gemäß Test |
| 620 | (I-1-a-17) | Tetraethylammoniumsulfat | Gemäß Test |
| 621 | (I-1-a-17) | Tetraethylammoniumlaktat | Gemäß Test |
| 622 | (I-1-a-17) | Tetraethylammoniumnitrat | Gemäß Test |
| 623 | (I-1-a-17) | Tetraethylammoniumthiosulfat | Gemäß Test |
| 624 | (I-1-a-17) | Tetraethylammoniumthiocyanat | Gemäß Test |
| 625 | (I-1-a-17) | Tetraethylammoniumcitrat | Gemäß Test |
| 626 | (I-1-a-17) | Tetraethylammoniumoxalat | Gemäß Test |
| 627 | (I-1-a-17) | Tetraethylammoniumformiat | Gemäß Test |
| 628 | (I-1-a-17) | Tetraethylammoniumhydrogenphosphat | Gemäß Test |
| 629 | (I-1-a-17) | Tetraethylammoniumdihydrogenphosphat | Gemäß Test |
| 630 | (I-1-a-18) | Ammoniumsulfat | Gemäß Test |
| 631 | (I-1-a-18) | Ammoniumlaktat | Gemäß Test |
| 632 | (I-1-a-18) | Ammoniumnitrat | Gemäß Test |
| 633 | (I-1-a-18) | Ammoniumthiosulfat | Gemäß Test |
| 634 | (I-1-a-18) | Ammoniumthiocyanat | Gemäß Test |
| 635 | (I-1-a-18) | Ammoniumcitrat | Gemäß Test |
| 636 | (I-1-a-18) | Ammoniumoxalat | Gemäß Test |
| 637 | (I-1-a-18) | Ammoniumformiat | Gemäß Test |
| 638 | (I-1-a-18) | Ammoniumhydrogenphosphat | Gemäß Test |
| 639 | (I-1-a-18) | Ammoniumdihydrogenphosphat | Gemäß Test |
| 640 | (I-1-a-18) | Ammoniumcarbonat | Gemäß Test |
| 641 | (I-1-a-18) | Ammoniumbenzoat | Gemäß Test |
| 642 | (I-1-a-18) | Ammoniumsulfit | Gemäß Test |
| 643 | (I-1-a-18) | Ammoniumbenzoat | Gemäß Test |
| 644 | (I-1-a-18) | Ammoniumhydrogenoxalat | Gemäß Test |
| 645 | (I-1-a-18) | Ammoniumhydrogencitrat | Gemäß Test |
| 646 | (I-1-a-18) | Ammoniumacetat | Gemäß Test |
| 647 | (I-1-a-18) | Tetramethylammoniumsulfat | Gemäß Test |
| 648 | (I-1-a-18) | Tetramethylammoniumlaktat | Gemäß Test |
| 649 | (I-1-a-18) | Tetramethylammoniumnitrat | Gemäß Test |
| 650 | (I-1-a-18) | Tetramethylammoniumthiosulfat | Gemäß Test |
| 651 | (I-1-a-18) | Tetramethylammoniumthiocyanat | Gemäß Test |
| 652 | (I-1-a-18) | Tetramethylammoniumcitrat | Gemäß Test |
| 653 | (I-1-a-18) | Tetramethylammoniumoxalat | Gemäß Test |
| 654 | (I-1-a-18) | Tetramethylammoniumformiat | Gemäß Test |
| 655 | (I-1-a-18) | Tetramethylammoniumhydrogenphosphat | Gemäß Test |
| 656 | (I-1-a-18) | Tetramethylammoniumdihydrogenphosphat | Gemäß Test |
| 657 | (I-1-a-18) | Tetraethylammoniumsulfat | Gemäß Test |
| 658 | (I-1-a-18) | Tetraethylammoniumlaktat | Gemäß Test |
| 659 | (I-1-a-18) | Tetraethylammoniumnitrat | Gemäß Test |
| 660 | (I-1-a-18) | Tetraethylammoniumthiosulfat | Gemäß Test |
| 661 | (I-1-a-18) | Tetraethylammoniumthiocyanat | Gemäß Test |
| 662 | (I-1-a-18) | Tetraethylammoniumcitrat | Gemäß Test |
| 663 | (I-1-a-18) | Tetraethylammoniumoxalat | Gemäß Test |
| 664 | (I-1-a-18) | Tetraethylammoniumformiat | Gemäß Test |
| 665 | (I-1-a-18) | Tetraethylammoniumhydrogenphosphat | Gemäß Test |
| 666 | (I-1-a-18) | Tetraethylammoniumdihydrogenphosphat | Gemäß Test |
| 667 | (I-1-c-1) | Ammoniumsulfat | Gemäß Test |
| 668 | (I-1-c-1) | Ammoniumlaktat | Gemäß Test |
| 669 | (I-1-c-1) | Ammoniumnitrat | Gemäß Test |
| 670 | (I-1-c-1) | Ammoniumthiosulfat | Gemäß Test |
| 671 | (I-1-c-1) | Ammoniumthiocyanat | Gemäß Test |
| 672 | (I-1-c-1) | Ammoniumcitrat | Gemäß Test |
| 673 | (I-1-c-1) | Ammoniumoxalat | Gemäß Test |
| 674 | (I-1-c-1) | Ammoniumformiat | Gemäß Test |
| 675 | (I-1-c-1) | Ammoniumhydrogenphosphat | Gemäß Test |
| 676 | (I-1-c-1) | Ammoniumdihydrogenphosphat | Gemäß Test |
| 677 | (I-1-c-1) | Ammoniumcarbonat | Gemäß Test |
| 678 | (I-1-c-1) | Ammoniumbenzoat | Gemäß Test |
| 679 | (I-1-c-1) | Ammoniumsulfit | Gemäß Test |
| 680 | (I-1-c-1) | Ammoniumbenzoat | Gemäß Test |
| 681 | (I-1-c-1) | Ammoniumhydrogenoxalat | Gemäß Test |
| 682 | (I-1-c-1) | Ammoniumhydrogencitrat | Gemäß Test |
| 683 | (I-1-c-1) | Ammoniumacetat | Gemäß Test |
| 684 | (I-1-c-1) | Tetramethylammoniumsulfat | Gemäß Test |
| 685 | (I-1-c-1) | Tetramethylammoniumlaktat | Gemäß Test |
| 686 | (I-1-c-1) | Tetramethylammoniumnitrat | Gemäß Test |
| 687 | (I-1-c-1) | Tetramethylammoniumthiosulfat | Gemäß Test |
| 688 | (I-1-c-1) | Tetramethylammoniumthiocyanat | Gemäß Test |
| 689 | (I-1-c-1) | Tetramethylammoniumcitrat | Gemäß Test |
| 690 | (I-1-c-1) | Tetramethylammoniumoxalat | Gemäß Test |
| 691 | (I-1-c-1) | Tetramethylammoniumformiat | Gemäß Test |
| 692 | (I-1-c-1) | Tetramethylammoniumhydrogenphosphat | Gemäß Test |
| 693 | (I-1-c-1) | Tetramethylammoniumdihydrogenphosphat | Gemäß Test |
| 694 | (I-1-c-1) | Tetraethylammoniumsulfat | Gemäß Test |
| 695 | (I-1-c-1) | Tetraethylammoniumlaktat | Gemäß Test |
| 696 | (I-1-c-1) | Tetraethylammoniumnitrat | Gemäß Test |
| 697 | (I-1-c-1) | Tetraethylammoniumthiosulfat | Gemäß Test |
| 698 | (I-1-c-1) | Tetraethylammoniumthiocyanat | Gemäß Test |
| 699 | (I-1-c-1) | Tetraethylammoniumcitrat | Gemäß Test |
| 700 | (I-1-c-1) | Tetraethylammoniumoxalat | Gemäß Test |
| 701 | (I-1-c-1) | Tetraethylammoniumformiat | Gemäß Test |
| 702 | (I-1-c-1) | Tetraethylammoniumhydrogenphosphat | Gemäß Test |
| 703 | (I-1-c-1) | Tetraethylammoniumdihydrogenphosphat | Gemäß Test |
| 704 | (I-1-c-2) | Ammoniumsulfat | Gemäß Test |
| 705 | (I-1-c-2) | Ammoniumlaktat | Gemäß Test |
| 706 | (I-1-c-2) | Ammoniumnitrat | Gemäß Test |
| 707 | (I-1-c-2) | Ammoniumthiosulfat | Gemäß Test |
| 708 | (I-1-c-2) | Ammoniumthiocyanat | Gemäß Test |
| 709 | (I-1-c-2) | Ammoniumcitrat | Gemäß Test |
| 710 | (I-1-c-2) | Ammoniumoxalat | Gemäß Test |
| 711 | (I-1-c-2) | Ammoniumformiat | Gemäß Test |
| 712 | (I-1-c-2) | Ammoniumhydrogenphosphat | Gemäß Test |
| 713 | (I-1-c-2) | Ammoniumdihydrogenphosphat | Gemäß Test |
| 714 | (I-1-c-2) | Ammoniumcarbonat | Gemäß Test |
| 715 | (I-1-c-2) | Ammoniumbenzoat | Gemäß Test |
| 716 | (I-1-c-2) | Ammoniumsulfit | Gemäß Test |
| 717 | (I-1-c-2) | Ammoniumbenzoat | Gemäß Test |
| 718 | (I-1-c-2) | Ammoniumhydrogenoxalat | Gemäß Test |
| 719 | (I-1-c-2) | Ammoniumhydrogencitrat | Gemäß Test |
| 720 | (I-1-c-2) | Ammoniumacetat | Gemäß Test |
| 721 | (I-1-c-2) | Tetramethylammoniumsulfat | Gemäß Test |
| 722 | (I-1-c-2) | Tetramethylammoniumlaktat | Gemäß Test |
| 723 | (I-1-c-2) | Tetramethylammoniumnitrat | Gemäß Test |
| 724 | (I-1-c-2) | Tetramethylammoniumthiosulfat | Gemäß Test |
| 725 | (I-1-c-2) | Tetramethylammoniumthiocyanat | Gemäß Test |
| 726 | (I-1-c-2) | Tetramethylammoniumcitrat | Gemäß Test |
| 727 | (I-1-c-2) | Tetramethylammoniumoxalat | Gemäß Test |
| 728 | (I-1-c-2) | Tetramethylammoniumformiat | Gemäß Test |
| 729 | (I-1-c-2) | Tetramethylammoniumhydrogenphosphat | Gemäß Test |
| 730 | (I-1-c-2) | Tetramethylammoniumdihydrogenphosphat | Gemäß Test |
| 731 | (I-1-c-2) | Tetraethylammoniumsulfat | Gemäß Test |
| 732 | (I-1-c-2) | Tetraethylammoniumlaktat | Gemäß Test |
| 733 | (I-1-c-2) | Tetraethylammoniumnitrat | Gemäß Test |
| 734 | (I-1-c-2) | Tetraethylammoniumthiosulfat | Gemäß Test |
| 735 | (I-1-c-2) | Tetraethylammoniumthiocyanat | Gemäß Test |
| 736 | (I-1-c-2) | Tetraethylammoniumcitrat | Gemäß Test |
| 737 | (I-1-c-2) | Tetraethylammoniumoxalat | Gemäß Test |
| 738 | (I-1-c-2) | Tetraethylammoniumformiat | Gemäß Test |
| 739 | (I-1-c-2) | Tetraethylammoniumhydrogenphosphat | Gemäß Test |
| 740 | (I-1-c-2) | Tetraethylammoniumdihydrogenphosphat | Gemäß Test |
| 741 | (I-2-a-1) | Ammoniumsulfat | Gemäß Test |
| 742 | (I-2-a-1) | Ammoniumlaktat | Gemäß Test |
| 743 | (I-2-a-1) | Ammoniumnitrat | Gemäß Test |
| 744 | (I-2-a-1) | Ammoniumthiosulfat | Gemäß Test |
| 745 | (I-2-a-1) | Ammoniumthiocyanat | Gemäß Test |
| 746 | (I-2-a-1) | Ammoniumcitrat | Gemäß Test |
| 747 | (I-2-a-1) | Ammoniumoxalat | Gemäß Test |
| 748 | (I-2-a-1) | Ammoniumformiat | Gemäß Test |
| 749 | (I-2-a-1) | Ammoniumhydrogenphosphat | Gemäß Test |
| 750 | (I-2-a-1) | Ammoniumdihydrogenphosphat | Gemäß Test |
| 751 | (I-2-a-1) | Ammoniumcarbonat | Gemäß Test |
| 752 | (I-2-a-1) | Ammoniumbenzoat | Gemäß Test |
| 753 | (I-2-a-1) | Ammoniumsulfit | Gemäß Test |
| 754 | (I-2-a-1) | Ammoniumbenzoat | Gemäß Test |
| 755 | (I-2-a-1) | Ammoniumhydrogenoxalat | Gemäß Test |
| 756 | (I-2-a-1) | Ammoniumhydrogencitrat | Gemäß Test |
| 757 | (I-2-a-1) | Ammoniumacetat | Gemäß Test |
| 758 | (I-2-a-1) | Tetramethylammoniumsulfat | Gemäß Test |
| 759 | (I-2-a-1) | Tetramethylammoniumlaktat | Gemäß Test |
| 760 | (I-2-a-1) | Tetramethylammoniumnitrat | Gemäß Test |
| 761 | (I-2-a-1) | Tetramethylammoniumthiosulfat | Gemäß Test |
| 762 | (I-2-a-1) | Tetramethylammoniumthiocyanat | Gemäß Test |
| 763 | (I-2-a-1) | Tetramethylammoniumcitrat | Gemäß Test |
| 764 | (I-2-a-1) | Tetramethylammoniumoxalat | Gemäß Test |
| 765 | (I-2-a-1) | Tetramethylammoniumformiat | Gemäß Test |
| 766 | (I-2-a-1) | Tetramethylammoniumhydrogenphosphat | Gemäß Test |
| 767 | (I-2-a-1) | Tetramethylammoniumdihydrogenphosphat | Gemäß Test |
| 768 | (I-2-a-1) | Tetraethylammoniumsulfat | Gemäß Test |
| 769 | (I-2-a-1) | Tetraethylammoniumlaktat | Gemäß Test |
| 770 | (I-2-a-1) | Tetraethylammoniumnitrat | Gemäß Test |
| 771 | (I-2-a-1) | Tetraethylammoniumthiosulfat | Gemäß Test |
| 772 | (I-2-a-1) | Tetraethylammoniumthiocyanat | Gemäß Test |
| 773 | (I-2-a-1) | Tetraethylammoniumcitrat | Gemäß Test |
| 774 | (I-2-a-1) | Tetraethylammoniumoxalat | Gemäß Test |
| 775 | (I-2-a-1) | Tetraethylammoniumformiat | Gemäß Test |
| 776 | (I-2-a-1) | Tetraethylammoniumhydrogenphosphat | Gemäß Test |
| 777 | (I-2-a-1) | Tetraethylammoniumdihydrogenphosphat | Gemäß Test |
| 778 | (I-2-a-2) | Ammoniumsulfat | Gemäß Test |
| 779 | (I-2-a-2) | Ammoniumlaktat | Gemäß Test |
| 780 | (I-2-a-2) | Ammoniumnitrat | Gemäß Test |
| 781 | (I-2-a-2) | Ammoniumthiosulfat | Gemäß Test |
| 782 | (I-2-a-2) | Ammoniumthiocyanat | Gemäß Test |
| 783 | (I-2-a-2) | Ammoniumcitrat | Gemäß Test |
| 784 | (I-2-a-2) | Ammoniumoxalat | Gemäß Test |
| 785 | (I-2-a-2) | Ammoniumformiat | Gemäß Test |
| 786 | (I-2-a-2) | Ammoniumhydrogenphosphat | Gemäß Test |
| 787 | (I-2-a-2) | Ammoniumdihydrogenphosphat | Gemäß Test |
| 788 | (I-2-a-2) | Ammoniumcarbonat | Gemäß Test |
| 789 | (I-2-a-2) | Ammoniumbenzoat | Gemäß Test |
| 790 | (I-2-a-2) | Ammoniumsulfit | Gemäß Test |
| 791 | (I-2-a-2) | Ammoniumbenzoat | Gemäß Test |
| 792 | (I-2-a-2) | Ammoniumhydrogenoxalat | Gemäß Test |
| 793 | (I-2-a-2) | Ammoniumhydrogencitrat | Gemäß Test |
| 794 | (I-2-a-2) | Ammoniumacetat | Gemäß Test |
| 795 | (I-2-a-2) | Tetramethylammoniumsulfat | Gemäß Test |
| 796 | (I-2-a-2) | Tetramethylammoniumlaktat | Gemäß Test |
| 797 | (I-2-a-2) | Tetramethylammoniumnitrat | Gemäß Test |
| 798 | (I-2-a-2) | Tetramethylammoniumthiosulfat | Gemäß Test |
| 799 | (I-2-a-2) | Tetramethylammoniumthiocyanat | Gemäß Test |
| 800 | (I-2-a-2) | Tetramethylammoniumcitrat | Gemäß Test |
| 801 | (I-2-a-2) | Tetramethylammoniumoxalat | Gemäß Test |
| 802 | (I-2-a-2) | Tetramethylammoniumformiat | Gemäß Test |
| 803 | (I-2-a-2) | Tetramethylammoniumhydrogenphosphat | Gemäß Test |
| 804 | (I-2-a-2) | Tetramethylammoniumdihydrogenphosphat | Gemäß Test |
| 805 | (I-2-a-2) | Tetraethylammoniumsulfat | Gemäß Test |
| 806 | (I-2-a-2) | Tetraethylammoniumlaktat | Gemäß Test |
| 807 | (I-2-a-2) | Tetraethylammoniumnitrat | Gemäß Test |
| 808 | (I-2-a-2) | Tetraethylammoniumthiosulfat | Gemäß Test |
| 809 | (I-2-a-2) | Tetraethylammoniumthiocyanat | Gemäß Test |
| 810 | (I-2-a-2) | Tetraethylammoniumcitrat | Gemäß Test |
| 811 | (I-2-a-2) | Tetraethylammoniumoxalat | Gemäß Test |
| 812 | (I-2-a-2) | Tetraethylammoniumformiat | Gemäß Test |
| 813 | (I-2-a-2) | Tetraethylammoniumhydrogenphosphat | Gemäß Test |
| 814 | (I-2-a-2) | Tetraethylammoniumdihydrogenphosphat | Gemäß Test |
| 815 | (I-2-a-3) | Ammoniumsulfat | Gemäß Test |
| 816 | (I-2-a-3) | Ammoniumlaktat | Gemäß Test |
| 817 | (I-2-a-3) | Ammoniumnitrat | Gemäß Test |
| 818 | (I-2-a-3) | Ammoniumthiosulfat | Gemäß Test |
| 819 | (I-2-a-3) | Ammoniumthiocyanat | Gemäß Test |
| 820 | (I-2-a-3) | Ammoniumcitrat | Gemäß Test |
| 821 | (I-2-a-3) | Ammoniumoxalat | Gemäß Test |
| 822 | (I-2-a-3) | Ammoniumformiat | Gemäß Test |
| 823 | (I-2-a-3) | Ammoniumhydrogenphosphat | Gemäß Test |
| 824 | (I-2-a-3) | Ammoniumdihydrogenphosphat | Gemäß Test |
| 825 | (I-2-a-3) | Ammoniumcarbonat | Gemäß Test |
| 826 | (I-2-a-3) | Ammoniumbenzoat | Gemäß Test |
| 827 | (I-2-a-3) | Ammoniumsulfit | Gemäß Test |
| 828 | (I-2-a-3) | Ammoniumbenzoat | Gemäß Test |
| 829 | (I-2-a-3) | Ammoniumhydrogenoxalat | Gemäß Test |
| 830 | (I-2-a-3) | Ammoniumhydrogencitrat | Gemäß Test |
| 831 | (I-2-a-3) | Ammoniumacetat | Gemäß Test |
| 832 | (I-2-a-3) | Tetramethylammoniumsulfat | Gemäß Test |
| 833 | (I-2-a-3) | Tetramethylammoniumlaktat | Gemäß Test |
| 834 | (I-2-a-3) | Tetramethylammoniumnitrat | Gemäß Test |
| 835 | (I-2-a-3) | Tetramethylammoniumthiosulfat | Gemäß Test |
| 836 | (I-2-a-3) | Tetramethylammoniumthiocyanat | Gemäß Test |
| 837 | (I-2-a-3) | Tetramethylammoniumcitrat | Gemäß Test |
| 838 | (I-2-a-3) | Tetramethylammoniumoxalat | Gemäß Test |
| 839 | (I-2-a-3) | Tetramethylammoniumformiat | Gemäß Test |
| 840 | (I-2-a-3) | Tetramethylammoniumhydrogenphosphat | Gemäß Test |
| 841 | (I-2-a-3) | Tetramethylammoniumdihydrogenphosphat | Gemäß Test |
| 842 | (I-2-a-3) | Tetraethylammoniumsulfat | Gemäß Test |
| 843 | (I-2-a-3) | Tetraethylammoniumlaktat | Gemäß Test |
| 844 | (I-2-a-3) | Tetraethylammoniumnitrat | Gemäß Test |
| 845 | (I-2-a-3) | Tetraethylammoniumthiosulfat | Gemäß Test |
| 846 | (I-2-a-3) | Tetraethylammoniumthiocyanat | Gemäß Test |
| 847 | (I-2-a-3) | Tetraethylammoniumcitrat | Gemäß Test |
| 848 | (I-2-a-3) | Tetraethylammoniumoxalat | Gemäß Test |
| 849 | (I-2-a-3) | Tetraethylammoniumformiat | Gemäß Test |
| 850 | (I-2-a-3) | Tetraethylammoniumhydrogenphosphat | Gemäß Test |
| 851 | (I-2-a-3) | Tetraethylammoniumdihydrogenphosphat | Gemäß Test |
| 852 | (I-2-a-4) | Ammoniumsulfat | Gemäß Test |
| 853 | (I-2-a-4) | Ammoniumlaktat | Gemäß Test |
| 854 | (I-2-a-4) | Ammoniumnitrat | Gemäß Test |
| 855 | (I-2-a-4) | Ammoniumthiosulfat | Gemäß Test |
| 856 | (I-2-a-4) | Ammoniumthiocyanat | Gemäß Test |
| 857 | (I-2-a-4) | Ammoniumcitrat | Gemäß Test |
| 858 | (I-2-a-4) | Ammoniumoxalat | Gemäß Test |
| 859 | (I-2-a-4) | Ammoniumformiat | Gemäß Test |
| 860 | (I-2-a-4) | Ammoniumhydrogenphosphat | Gemäß Test |
| 861 | (I-2-a-4) | Ammoniumdihydrogenphosphat | Gemäß Test |
| 862 | (I-2-a-4) | Ammoniumcarbonat | Gemäß Test |
| 863 | (I-2-a-4) | Ammoniumbenzoat | Gemäß Test |
| 864 | (I-2-a-4) | Ammoniumsulfit | Gemäß Test |
| 865 | (I-2-a-4) | Ammoniumbenzoat | Gemäß Test |
| 866 | (I-2-a-4) | Ammoniumhydrogenoxalat | Gemäß Test |
| 867 | (I-2-a-4) | Ammoniumhydrogencitrat | Gemäß Test |
| 868 | (I-2-a-4) | Ammoniumacetat | Gemäß Test |
| 869 | (I-2-a-4) | Tetramethylammoniumsulfat | Gemäß Test |
| 870 | (I-2-a-4) | Tetramethylammoniumlaktat | Gemäß Test |
| 871 | (I-2-a-4) | Tetramethylammoniumnitrat | Gemäß Test |
| 872 | (I-2-a-4) | Tetramethylammoniumthiosulfat | Gemäß Test |
| 873 | (I-2-a-4) | Tetramethylammoniumthiocyanat | Gemäß Test |
| 874 | (I-2-a-4) | Tetramethylammoniumcitrat | Gemäß Test |
| 875 | (I-2-a-4) | Tetramethylammoniumoxalat | Gemäß Test |
| 876 | (I-2-a-4) | Tetramethylammoniumformiat | Gemäß Test |
| 877 | (I-2-a-4) | Tetramethylammoniumhydrogenphosphat | Gemäß Test |
| 878 | (I-2-a-4) | Tetramethylammoniumdihydrogenphosphat | Gemäß Test |
| 879 | (I-2-a-4) | Tetraethylammoniumsulfat | Gemäß Test |
| 880 | (I-2-a-4) | Tetraethylammoniumlaktat | Gemäß Test |
| 881 | (I-2-a-4) | Tetraethylammoniumnitrat | Gemäß Test |
| 882 | (I-2-a-4) | Tetraethylammoniumthiosulfat | Gemäß Test |
| 883 | (I-2-a-4) | Tetraethylammoniumthiocyanat | Gemäß Test |
| 884 | (I-2-a-4) | Tetraethylammoniumcitrat | Gemäß Test |
| 885 | (I-2-a-4) | Tetraethylammoniumoxalat | Gemäß Test |
| 886 | (I-2-a-4) | Tetraethylammoniumformiat | Gemäß Test |
| 887 | (I-2-a-4) | Tetraethylammoniumhydrogenphosphat | Gemäß Test |
| 888 | (I-2-a-4) | Tetraethylammoniumdihydrogenphosphat | Gemäß Test |
| 889 | (I-2-b-1) | Ammoniumsulfat | Gemäß Test |
| 890 | (I-2-b-1) | Ammoniumlaktat | Gemäß Test |
| 891 | (I-2-b-1) | Ammoniumnitrat | Gemäß Test |
| 892 | (I-2-b-1) | Ammoniumthiosulfat | Gemäß Test |
| 893 | (I-2-b-1) | Ammoniumthiocyanat | Gemäß Test |
| 894 | (I-2-b-1) | Ammoniumcitrat | Gemäß Test |
| 895 | (I-2-b-1) | Ammoniumoxalat | Gemäß Test |
| 896 | (I-2-b-1) | Ammoniumformiat | Gemäß Test |
| 897 | (I-2-b-1) | Ammoniumhydrogenphosphat | Gemäß Test |
| 898 | (I-2-b-1) | Ammoniumdihydrogenphosphat | Gemäß Test |
| 899 | (I-2-b-1) | Ammoniumcarbonat | Gemäß Test |
| 900 | (I-2-b-1) | Ammoniumbenzoat | Gemäß Test |
| 901 | (I-2-b-1) | Ammoniumsulfit | Gemäß Test |
| 902 | (I-2-b-1) | Ammoniumbenzoat | Gemäß Test |
| 903 | (I-2-b-1) | Ammoniumhydrogenoxalat | Gemäß Test |
| 904 | (I-2-b-1) | Ammoniumhydrogencitrat | Gemäß Test |
| 905 | (I-2-b-1) | Ammoniumacetat | Gemäß Test |
| 906 | (I-2-b-1) | Tetramethylammoniumsulfat | Gemäß Test |
| 907 | (I-2-b-1) | Tetramethylammoniumlaktat | Gemäß Test |
| 908 | (I-2-b-1) | Tetramethylammoniumnitrat | Gemäß Test |
| 909 | (I-2-b-1) | Tetramethylammoniumthiosulfat | Gemäß Test |
| 910 | (I-2-b-1) | Tetramethylammoniumthiocyanat | Gemäß Test |
| 911 | (I-2-b-1) | Tetramethylammoniumcitrat | Gemäß Test |
| 912 | (I-2-b-1) | Tetramethylammoniumoxalat | Gemäß Test |
| 913 | (I-2-b-1) | Tetramethylammoniumformiat | Gemäß Test |
| 914 | (I-2-b-1) | Tetramethylammoniumhydrogenphosphat | Gemäß Test |
| 915 | (I-2-b-1) | Tetramethylammoniumdihydrogenphosphat | Gemäß Test |
| 916 | (I-2-b-1) | Tetraethylammoniumsulfat | Gemäß Test |
| 917 | (I-2-b-1) | Tetraethylammoniumlaktat | Gemäß Test |
| 918 | (I-2-b-1) | Tetraethylammoniumnitrat | Gemäß Test |
| 919 | (I-2-b-1) | Tetraethylammoniumthiosulfat | Gemäß Test |
| 920 | (I-2-b-1) | Tetraethylammoniumthiocyanat | Gemäß Test |
| 921 | (I-2-b-1) | Tetraethylammoniumcitrat | Gemäß Test |
| 922 | (I-2-b-1) | Tetraethylammoniumoxalat | Gemäß Test |
| 923 | (I-2-b-1) | Tetraethylammoniumformiat | Gemäß Test |
| 924 | (I-2-b-1) | Tetraethylammoniumhydrogenphosphat | Gemäß Test |
| 925 | (I-2-b-1) | Tetraethylammoniumdihydrogenphosphat | Gemäß Test |
| 926 | (I-2-b-2) | Ammoniumsulfat | Gemäß Test |
| 927 | (I-2-b-2) | Ammoniumlaktat | Gemäß Test |
| 928 | (I-2-b-2) | Ammoniumnitrat | Gemäß Test |
| 929 | (I-2-b-2) | Ammoniumthiosulfat | Gemäß Test |
| 930 | (I-2-b-2) | Ammoniumthiocyanat | Gemäß Test |
| 931 | (I-2-b-2) | Ammoniumcitrat | Gemäß Test |
| 932 | (I-2-b-2) | Ammoniumoxalat | Gemäß Test |
| 933 | (I-2-b-2) | Ammoniumformiat | Gemäß Test |
| 934 | (I-2-b-2) | Ammoniumhydrogenphosphat | Gemäß Test |
| 935 | (I-2-b-2) | Ammoniumdihydrogenphosphat | Gemäß Test |
| 936 | (I-2-b-2) | Ammoniumcarbonat | Gemäß Test |
| 937 | (I-2-b-2) | Ammoniumbenzoat | Gemäß Test |
| 938 | (I-2-b-2) | Ammoniumsulfit | Gemäß Test |
| 939 | (I-2-b-2) | Ammoniumbenzoat | Gemäß Test |
| 940 | (I-2-b-2) | Ammoniumhydrogenoxalat | Gemäß Test |
| 941 | (I-2-b-2) | Ammoniumhydrogencitrat | Gemäß Test |
| 942 | (I-2-b-2) | Ammoniumacetat | Gemäß Test |
| 943 | (I-2-b-2) | Tetramethylammoniumsulfat | Gemäß Test |
| 944 | (I-2-b-2) | Tetramethylammoniumlaktat | Gemäß Test |
| 945 | (I-2-b-2) | Tetramethylammoniumnitrat | Gemäß Test |
| 946 | (I-2-b-2) | Tetramethylammoniumthiosulfat | Gemäß Test |
| 947 | (I-2-b-2) | Tetramethylammoniumthiocyanat | Gemäß Test |
| 948 | (I-2-b-2) | Tetramethylammoniumcitrat | Gemäß Test |
| 949 | (I-2-b-2) | Tetramethylammoniumoxalat | Gemäß Test |
| 950 | (I-2-b-2) | Tetramethylammoniumformiat | Gemäß Test |
| 951 | (I-2-b-2) | Tetramethylammoniumhydrogenphosphat | Gemäß Test |
| 952 | (I-2-b-2) | Tetramethylammoniumdihydrogenphosphat | Gemäß Test |
| 953 | (I-2-b-2) | Tetraethylammoniumsulfat | Gemäß Test |
| 954 | (I-2-b-2) | Tetraethylammoniumlaktat | Gemäß Test |
| 955 | (I-2-b-2) | Tetraethylammoniumnitrat | Gemäß Test |
| 956 | (I-2-b-2) | Tetraethylammoniumthiosulfat | Gemäß Test |
| 957 | (I-2-b-2) | Tetraethylammoniumthiocyanat | Gemäß Test |
| 958 | (I-2-b-2) | Tetraethylammoniumcitrat | Gemäß Test |
| 959 | (I-2-b-2) | Tetraethylammoniumoxalat | Gemäß Test |
| 960 | (I-2-b-2) | Tetraethylammoniumformiat | Gemäß Test |
| 961 | (I-2-b-2) | Tetraethylammoniumhydrogenphosphat | Gemäß Test |
| 962 | (I-2-b-2) | Tetraethylammoniumdihydrogenphosphat | Gemäß Test |
| 963 | (I-4-a-1) | Ammoniumsulfat | Gemäß Test |
| 964 | (I-4-a-1) | Ammoniumlaktat | Gemäß Test |
| 965 | (I-4-a-1) | Ammoniumnitrat | Gemäß Test |
| 966 | (I-4-a-1) | Ammoniumthiosulfat | Gemäß Test |
| 967 | (I-4-a-1) | Ammoniumthiocyanat | Gemäß Test |
| 968 | (I-4-a-1) | Ammoniumcitrat | Gemäß Test |
| 969 | (I-4-a-1) | Ammoniumoxalat | Gemäß Test |
| 970 | (I-4-a-1) | Ammoniumformiat | Gemäß Test |
| 971 | (I-4-a-1) | Ammoniumhydrogenphosphat | Gemäß Test |
| 972 | (I-4-a-1) | Ammoniumdihydrogenphosphat | Gemäß Test |
| 973 | (I-4-a-1) | Ammoniumcarbonat | Gemäß Test |
| 974 | (I-4-a-1) | Ammoniumbenzoat | Gemäß Test |
| 975 | (I-4-a-1) | Ammoniumsulfit | Gemäß Test |
| 976 | (I-4-a-1) | Ammoniumbenzoat | Gemäß Test |
| 977 | (I-4-a-1) | Ammoniumhydrogenoxalat | Gemäß Test |
| 978 | (I-4-a-1) | Ammoniumhydrogencitrat | Gemäß Test |
| 979 | (I-4-a-1) | Ammoniumacetat | Gemäß Test |
| 980 | (I-4-a-1) | Tetramethylammoniumsulfat | Gemäß Test |
| 981 | (I-4-a-1) | Tetramethylammoniumlaktat | Gemäß Test |
| 982 | (I-4-a-1) | Tetramethylammoniumnitrat | Gemäß Test |
| 983 | (I-4-a-1) | Tetramethylammoniumthiosulfat | Gemäß Test |
| 984 | (I-4-a-1) | Tetramethylammoniumthiocyanat | Gemäß Test |
| 985 | (I-4-a-1) | Tetramethylammoniumcitrat | Gemäß Test |
| 986 | (I-4-a-1) | Tetramethylammoniumoxalat | Gemäß Test |
| 987 | (I-4-a-1) | Tetramethylammoniumformiat | Gemäß Test |
| 988 | (I-4-a-1) | Tetramethylammoniumhydrogenphosphat | Gemäß Test |
| 989 | (I-4-a-1) | Tetramethylammoniumdihydrogenphosphat | Gemäß Test |
| 990 | (I-4-a-1) | Tetraethylammoniumsulfat | Gemäß Test |
| 991 | (I-4-a-1) | Tetraethylammoniumlaktat | Gemäß Test |
| 992 | (I-4-a-1) | Tetraethylammoniumnitrat | Gemäß Test |
| 993 | (I-4-a-1) | Tetraethylammoniumthiosulfat | Gemäß Test |
| 994 | (I-4-a-1) | Tetraethylammoniumthiocyanat | Gemäß Test |
| 995 | (I-4-a-1) | Tetraethylammoniumcitrat | Gemäß Test |
| 996 | (I-4-a-1) | Tetraethylammoniumoxalat | Gemäß Test |
| 997 | (I-4-a-1) | Tetraethylammoniumformiat | Gemäß Test |
| 998 | (I-4-a-1) | Tetraethylammoniumhydrogenphosphat | Gemäß Test |
| 999 | (I-4-a-1) | Tetraethylammoniumdihydrogenphosphat | Gemäß Test |
| 1000 | (I-4-a-2) | Ammoniumsulfat | Gemäß Test |
| 1001 | (I-4-a-2) | Ammoniumlaktat | Gemäß Test |
| 1002 | (I-4-a-2) | Ammoniumnitrat | Gemäß Test |
| 1003 | (I-4-a-2) | Ammoniumthiosulfat | Gemäß Test |
| 1004 | (I-4-a-2) | Ammoniumthiocyanat | Gemäß Test |
| 1005 | (I-4-a-2) | Ammoniumcitrat | Gemäß Test |
| 1006 | (I-4-a-2) | Ammoniumoxalat | Gemäß Test |
| 1007 | (I-4-a-2) | Ammoniumformiat | Gemäß Test |
| 1008 | (I-4-a-2) | Ammoniumhydrogenphosphat | Gemäß Test |
| 1009 | (I-4-a-2) | Ammoniumdihydrogenphosphat | Gemäß Test |
| 1010 | (I-4-a-2) | Ammoniumcarbonat | Gemäß Test |
| 1011 | (I-4-a-2) | Ammoniumbenzoat | Gemäß Test |
| 1012 | (I-4-a-2) | Ammoniumsulfit | Gemäß Test |
| 1013 | (I-4-a-2) | Ammoniumbenzoat | Gemäß Test |
| 1014 | (I-4-a-2) | Ammoniumhydrogenoxalat | Gemäß Test |
| 1015 | (I-4-a-2) | Ammoniumhydrogencitrat | Gemäß Test |
| 1016 | (I-4-a-2) | Ammoniumacetat | Gemäß Test |
| 1017 | (I-4-a-2) | Tetramethylammoniumsulfat | Gemäß Test |
| 1018 | (I-4-a-2) | Tetramethylammoniumlaktat | Gemäß Test |
| 1019 | (I-4-a-2) | Tetramethylammoniumnitrat | Gemäß Test |
| 1020 | (I-4-a-2) | Tetramethylammoniumthiosulfat | Gemäß Test |
| 1021 | (I-4-a-2) | Tetramethylammoniumthiocyanat | Gemäß Test |
| 1022 | (I-4-a-2) | Tetramethylammoniumcitrat | Gemäß Test |
| 1023 | (I-4-a-2) | Tetramethylammoniumoxalat | Gemäß Test |
| 1024 | (I-4-a-2) | Tetramethylammoniumformiat | Gemäß Test |
| 1025 | (I-4-a-2) | Tetramethylammoniumhydrogenphosphat | Gemäß Test |
| 1026 | (I-4-a-2) | Tetramethylammoniumdihydrogenphosphat | Gemäß Test |
| 1027 | (I-4-a-2) | Tetraethylammoniumsulfat | Gemäß Test |
| 1028 | (I-4-a-2) | Tetraethylammoniumlaktat | Gemäß Test |
| 1029 | (I-4-a-2) | Tetraethylammoniumnitrat | Gemäß Test |
| 1030 | (I-4-a-2) | Tetraethylammoniumthiosulfat | Gemäß Test |
| 1031 | (I-4-a-2) | Tetraethylammoniumthiocyanat | Gemäß Test |
| 1032 | (I-4-a-2) | Tetraethylammoniumcitrat | Gemäß Test |
| 1033 | (I-4-a-2) | Tetraethylammoniumoxalat | Gemäß Test |
| 1034 | (I-4-a-2) | Tetraethylammoniumformiat | Gemäß Test |
| 1035 | (I-4-a-2) | Tetraethylammoniumhydrogenphosphat | Gemäß Test |
| 1036 | (I-4-a-2) | Tetraethylammoniumdihydrogenphosphat | Gemäß Test |
| 1037 | (I-4-a-3) | Ammoniumsulfat | Gemäß Test |
| 1038 | (I-4-a-3) | Ammoniumlaktat | Gemäß Test |
| 1039 | (I-4-a-3) | Ammoniumnitrat | Gemäß Test |
| 1040 | (I-4-a-3) | Ammoniumthiosulfat | Gemäß Test |
| 1041 | (I-4-a-3) | Ammoniumthiocyanat | Gemäß Test |
| 1042 | (I-4-a-3) | Ammoniumcitrat | Gemäß Test |
| 1043 | (I-4-a-3) | Ammoniumoxalat | Gemäß Test |
| 1044 | (I-4-a-3) | Ammoniumformiat | Gemäß Test |
| 1045 | (I-4-a-3) | Ammoniumhydrogenphosphat | Gemäß Test |
| 1046 | (I-4-a-3) | Ammoniumdihydrogenphosphat | Gemäß Test |
| 1047 | (I-4-a-3) | Ammoniumcarbonat | Gemäß Test |
| 1048 | (I-4-a-3) | Ammoniumbenzoat | Gemäß Test |
| 1049 | (I-4-a-3) | Ammoniumsulfit | Gemäß Test |
| 1050 | (I-4-a-3) | Ammoniumbenzoat | Gemäß Test |
| 1051 | (I-4-a-3) | Ammoniumhydrogenoxalat | Gemäß Test |
| 1052 | (I-4-a-3) | Ammoniumhydrogencitrat | Gemäß Test |
| 1053 | (I-4-a-3) | Ammoniumacetat | Gemäß Test |
| 1054 | (I-4-a-3) | Tetramethylammoniumsulfat | Gemäß Test |
| 1055 | (I-4-a-3) | Tetramethylammoniumlaktat | Gemäß Test |
| 1056 | (I-4-a-3) | Tetramethylammoniumnitrat | Gemäß Test |
| 1057 | (I-4-a-3) | Tetramethylammoniumthiosulfat | Gemäß Test |
| 1058 | (I-4-a-3) | Tetramethylammoniumthiocyanat | Gemäß Test |
| 1059 | (I-4-a-3) | Tetramethylammoniumcitrat | Gemäß Test |
| 1060 | (I-4-a-3) | Tetramethylammoniumoxalat | Gemäß Test |
| 1061 | (I-4-a-3) | Tetramethylammoniumformiat | Gemäß Test |
| 1062 | (I-4-a-3) | Tetramethylammoniumhydrogenphosphat | Gemäß Test |
| 1063 | (I-4-a-3) | Tetramethylammoniumdihydrogenphosphat | Gemäß Test |
| 1064 | (I-4-a-3) | Tetraethylammoniumsulfat | Gemäß Test |
| 1065 | (I-4-a-3) | Tetraethylammoniumlaktat | Gemäß Test |
| 1066 | (I-4-a-3) | Tetraethylammoniumnitrat | Gemäß Test |
| 1067 | (I-4-a-3) | Tetraethylammoniumthiosulfat | Gemäß Test |
| 1068 | (I-4-a-3) | Tetraethylammoniumthiocyanat | Gemäß Test |
| 1069 | (I-4-a-3) | Tetraethylammoniumcitrat | Gemäß Test |
| 1070 | (I-4-a-3) | Tetraethylammoniumoxalat | Gemäß Test |
| 1071 | (I-4-a-3) | Tetraethylammoniumformiat | Gemäß Test |
| 1072 | (I-4-a-3) | Tetraethylammoniumhydrogenphosphat | Gemäß Test |
| 1073 | (I-4-a-3) | Tetraethylammoniumdihydrogenphosphat | Gemäß Test |
| 1074 | (I-5-a-1) | Ammoniumsulfat | Gemäß Test |
| 1075 | (I-5-a-1) | Ammoniumlaktat | Gemäß Test |
| 1076 | (I-5-a-1) | Ammoniumnitrat | Gemäß Test |
| 1077 | (I-5-a-1) | Ammoniumthiosulfat | Gemäß Test |
| 1078 | (I-5-a-1) | Ammoniumthiocyanat | Gemäß Test |
| 1079 | (I-5-a-1) | Ammoniumcitrat | Gemäß Test |
| 1080 | (I-5-a-1) | Ammoniumoxalat | Gemäß Test |
| 1081 | (I-5-a-1) | Ammoniumformiat | Gemäß Test |
| 1082 | (I-5-a-1) | Ammoniumhydrogenphosphat | Gemäß Test |
| 1083 | (I-5-a-1) | Ammoniumdihydrogenphosphat | Gemäß Test |
| 1084 | (I-5-a-1) | Ammoniumcarbonat | Gemäß Test |
| 1085 | (I-5-a-1) | Ammoniumbenzoat | Gemäß Test |
| 1086 | (I-5-a-1) | Ammoniumsulfit | gemäß Test |
| 1087 | (I-5-a-1) | Ammoniumbenzoat | Gemäß Test |
| 1088 | (I-5-a-1) | Ammoniumhydrogenoxalat | Gemäß Test |
| 1089 | (I-5-a-1) | Ammoniumhydrogencitrat | Gemäß Test |
| 1090 | (I-5-a-1) | Ammoniumacetat | Gemäß Test |
| 1091 | (I-5-a-1) | Tetramethylammoniumsulfat | Gemäß Test |
| 1092 | (I-5-a-1) | Tetramethylammoniumlaktat | Gemäß Test |
| 1093 | (I-5-a-1) | Tetramethylammoniumnitrat | Gemäß Test |
| 1094 | (I-5-a-1) | Tetramethylammoniumthiosulfat | Gemäß Test |
| 1095 | (I-5-a-1) | Tetramethylammoniumthiocyanat | Gemäß Test |
| 1096 | (I-5-a-1) | Tetramethylammoniumcitrat | Gemäß Test |
| 1097 | (I-5-a-1) | Tetramethylammoniumoxalat | Gemäß Test |
| 1098 | (I-5-a-1) | Tetramethylammoniumformiat | Gemäß Test |
| 1099 | (I-5-a-1) | Tetramethylammoniumhydrogenphosphat | Gemäß Test |
| 1100 | (I-5-a-1) | Tetramethylammoniumdihydrogenphosphat | Gemäß Test |
| 1101 | (I-5-a-1) | Tetraethylammoniumsulfat | Gemäß Test |
| 1102 | (I-5-a-1) | Tetraethylammoniumlaktat | Gemäß Test |
| 1103 | (I-5-a-1) | Tetraethylammoniumnitrat | Gemäß Test |
| 1104 | (I-5-a-1) | Tetraethylammoniumthiosulfat | Gemäß Test |
| 1105 | (I-5-a-1) | Tetraethylammoniumthiocyanat | Gemäß Test |
| 1106 | (I-5-a-1) | Tetraethylammoniumcitrat | Gemäß Test |
| 1107 | (I-5-a-1) | Tetraethylammoniumoxalat | Gemäß Test |
| 1108 | (I-5-a-1) | Tetraethylammoniumformiat | Gemäß Test |
| 1109 | (I-5-a-1) | Tetraethylammoniumhydrogenphosphat | Gemäß Test |
| 1110 | (I-5-a-1) | Tetraethylammoniumdihydrogenphosphat | Gemäß Test |
| 1111 | (I-6-a-1) | Ammoniumsulfat | Gemäß Test |
| 1112 | (I-6-a-1) | Ammoniumlaktat | Gemäß Test |
| 1113 | (I-6-a-1) | Ammoniumnitrat | Gemäß Test |
| 1114 | (I-6-a-1) | Ammoniumthiosulfat | Gemäß Test |
| 1115 | (I-6-a-1) | Ammoniumthiocyanat | Gemäß Test |
| 1116 | (I-6-a-1) | Ammoniumcitrat | Gemäß Test |
| 1117 | (I-6-a-1) | Ammoniumoxalat | Gemäß Test |
| 1118 | (I-6-a-1) | Ammoniumformiat | Gemäß Test |
| 1119 | (I-6-a-1) | Ammoniumhydrogenphosphat | Gemäß Test |
| 1120 | (I-6-a-1) | Ammoniumdihydrogenphosphat | Gemäß Test |
| 1121 | (I-6-a-1) | Ammoniumcarbonat | Gemäß Test |
| 1122 | (I-6-a-1) | Ammoniumbenzoat | Gemäß Test |
| 1123 | (I-6-a-1) | Ammoniumsulfit | Gemäß Test |
| 1124 | (I-6-a-1) | Ammoniumbenzoat | Gemäß Test |
| 1125 | (I-6-a-1) | Ammoniumhydrogenoxalat | Gemäß Test |
| 1126 | (I-6-a-1) | Ammoniumhydrogencitrat | Gemäß Test |
| 1127 | (I-6-a-1) | Ammoniumacetat | Gemäß Test |
| 1128 | (I-6-a-1) | Tetramethylammoniumsulfat | Gemäß Test |
| 1129 | (I-6-a-1) | Tetramethylammoniumlaktat | Gemäß Test |
| 1130 | (I-6-a-1) | Tetramethylammoniumnitrat | Gemäß Test |
| 1131 | (I-6-a-1) | Tetramethylammoniumthiosulfat | Gemäß Test |
| 1132 | (I-6-a-1) | Tetramethylammoniumthiocyanat | Gemäß Test |
| 1133 | (I-6-a-1) | Tetramethylammoniumcitrat | Gemäß Test |
| 1134 | (I-6-a-1) | Tetramethylammoniumoxalat | Gemäß Test |
| 1135 | (I-6-a-1) | Tetramethylammoniumformiat | Gemäß Test |
| 1136 | (I-6-a-1) | Tetramethylammoniumhydrogenphosphat | Gemäß Test |
| 1137 | (I-6-a-1) | Tetramethylammoniumdihydrogenphosphat | Gemäß Test |
| 1138 | (I-6-a-1) | Tetraethylammoniumsulfat | Gemäß Test |
| 1139 | (I-6-a-1) | Tetraethylammoniumlaktat | Gemäß Test |
| 1140 | (I-6-a-1) | Tetraethylammoniumnitrat | Gemäß Test |
| 1141 | (I-6-a-1) | Tetraethylammoniumthiosulfat | Gemäß Test |
| 1142 | (I-6-a-1) | Tetraethylammoniumthiocyanat | Gemäß Test |
| 1143 | (I-6-a-1) | Tetraethylammoniumcitrat | Gemäß Test |
| 1144 | (I-6-a-1) | Tetraethylammoniumoxalat | Gemäß Test |
| 1145 | (I-6-a-1) | Tetraethylammoniumformiat | Gemäß Test |
| 1146 | (I-6-a-1) | Tetraethylammoniumhydrogenphosphat | Gemäß Test |
| 1147 | (I-6-a-1) | Tetraethylammoniumdihydrogenphosphat | Gemäß Test |
| 1148 | (I-6-a-2) | Ammoniumsulfat | Gemäß Test |
| 1149 | (I-6-a-2) | Ammoniumlaktat | Gemäß Test |
| 1150 | (I-6-a-2) | Ammoniumnitrat | Gemäß Test |
| 1151 | (I-6-a-2) | Ammoniumthiosulfat | Gemäß Test |
| 1152 | (I-6-a-2) | Ammoniumthiocyanat | Gemäß Test |
| 1153 | (I-6-a-2) | Ammoniumcitrat | Gemäß Test |
| 1154 | (I-6-a-2) | Ammoniumoxalat | Gemäß Test |
| 1155 | (I-6-a-2) | Ammoniumformiat | Gemäß Test |
| 1156 | (I-6-a-2) | Ammoniumhydrogenphosphat | Gemäß Test |
| 1157 | (I-6-a-2) | Ammoniumdihydrogenphosphat | Gemäß Test |
| 1158 | (I-6-a-2) | Ammoniumcarbonat | Gemäß Test |
| 1159 | (I-6-a-2) | Ammoniumbenzoat | Gemäß Test |
| 1160 | (I-6-a-2) | Ammoniumsulfit | Gemäß Test |
| 1161 | (I-6-a-2) | Ammoniumbenzoat | Gemäß Test |
| 1162 | (I-6-a-2) | Ammoniumhydrogenoxalat | Gemäß Test |
| 1163 | (I-6-a-2) | Ammoniumhydrogencitrat | Gemäß Test |
| 1164 | (I-6-a-2) | Ammoniumacetat | Gemäß Test |
| 1165 | (I-6-a-2) | Tetramethylammoniumsulfat | Gemäß Test |
| 1166 | (I-6-a-2) | Tetramethylammoniumlaktat | Gemäß Test |
| 1167 | (I-6-a-2) | Tetramethylammoniumnitrat | Gemäß Test |
| 1168 | (I-6-a-2) | Tetramethylammoniumthiosulfat | Gemäß Test |
| 1169 | (I-6-a-2) | Tetramethylammoniumthiocyanat | Gemäß Test |
| 1170 | (I-6-a-2) | Tetramethylammoniumcitrat | Gemäß Test |
| 1171 | (I-6-a-2) | Tetramethylammoniumoxalat | Gemäß Test |
| 1172 | (I-6-a-2) | Tetramethylammoniumformiat | Gemäß Test |
| 1173 | (I-6-a-2) | Tetramethylammoniumhydrogenphosphat | Gemäß Test |
| 1174 | (I-6-a-2) | Tetramethylammoniumdihydrogenphosphat | Gemäß Test |
| 1175 | (I-6-a-2) | Tetraethylammoniumsulfat | Gemäß Test |
| 1176 | (I-6-a-2) | Tetraethylammoniumlaktat | Gemäß Test |
| 1177 | (I-6-a-2) | Tetraethylammoniumnitrat | Gemäß Test |
| 1178 | (I-6-a-2) | Tetraethylammoniumthiosulfat | Gemäß Test |
| 1179 | (I-6-a-2) | Tetraethylammoniumthiocyanat | Gemäß Test |
| 1180 | (I-6-a-2) | Tetraethylammoniumcitrat | Gemäß Test |
| 1181 | (I-6-a-2) | Tetraethylammoniumoxalat | Gemäß Test |
| 1182 | (I-6-a-2) | Tetraethylammoniumformiat | Gemäß Test |
| 1183 | (I-6-a-2) | Tetraethylammoniumhydrogenphosphat | Gemäß Test |
| 1184 | (I-6-a-2) | Tetraethylammoniumdihydrogenphosphat | Gemäß Test |
| 1185 | (I-8-a-1) | Ammoniumsulfat | Gemäß Test |
| 1186 | (I-8-a-1) | Ammoniumlaktat | Gemäß Test |
| 1187 | (I-8-a-1) | Ammoniumnitrat | Gemäß Test |
| 1188 | (I-8-a-1) | Ammoniumthiosulfat | Gemäß Test |
| 1189 | (I-8-a-1) | Ammoniumthiocyanat | Gemäß Test |
| 1190 | (I-8-a-1) | Ammoniumcitrat | Gemäß Test |
| 1191 | (I-8-a-1) | Ammoniumoxalat | Gemäß Test |
| 1192 | (I-8-a-1) | Ammoniumformiat | Gemäß Test |
| 1193 | (I-8-a-1) | Ammoniumhydrogenphosphat | Gemäß Test |
| 1194 | (I-8-a-1) | Ammoniumdihydrogenphosphat | Gemäß Test |
| 1195 | (I-8-a-1) | Ammoniumcarbonat | Gemäß Test |
| 1196 | (I-8-a-1) | Ammoniumbenzoat | Gemäß Test |
| 1197 | (I-8-a-1) | Ammoniumsulfit | Gemäß Test |
| 1198 | (I-8-a-1) | Ammoniumbenzoat | Gemäß Test |
| 1199 | (I-8-a-1) | Ammoniumhydrogenoxalat | Gemäß Test |
| 1200 | (I-8-a-1) | Ammoniumhydrogencitrat | Gemäß Test |
| 1201 | (I-8-a-1) | Ammoniumacetat | Gemäß Test |
| 1202 | (I-8-a-1) | Tetramethylammoniumsulfat | Gemäß Test |
| 1203 | (I-8-a-1) | Tetramethylammoniumlaktat | Gemäß Test |
| 1204 | (I-8-a-1) | Tetramethylammoniumnitrat | Gemäß Test |
| 1205 | (I-8-a-1) | Tetramethylammoniumthiosulfat | Gemäß Test |
| 1206 | (I-8-a-1) | Tetramethylammoniumthiocyanat | Gemäß Test |
| 1207 | (I-8-a-1) | Tetramethylammoniumcitrat | Gemäß Test |
| 1208 | (I-8-a-1) | Tetramethylammoniumoxalat | Gemäß Test |
| 1209 | (I-8-a-1) | Tetramethylammoniumformiat | Gemäß Test |
| 1210 | (I-8-a-1) | Tetramethylammoniumhydrogenphosphat | Gemäß Test |
| 1211 | (I-8-a-1) | Tetramethylammoniumdihydrogenphosphat | Gemäß Test |
| 1212 | (I-8-a-1) | Tetraethylammoniumsulfat | Gemäß Test |
| 1213 | (I-8-a-1) | Tetraethylammoniumlaktat | Gemäß Test |
| 1214 | (I-8-a-1) | Tetraethylammoniumnitrat | Gemäß Test |
| 1215 | (I-8-a-1) | Tetraethylammoniumthiosulfat | Gemäß Test |
| 1216 | (I-8-a-1) | Tetraethylammoniumthiocyanat | Gemäß Test |
| 1217 | (I-8-a-1) | Tetraethylammoniumcitrat | Gemäß Test |
| 1218 | (I-8-a-1) | Tetraethylammoniumoxalat | Gemäß Test |
| 1219 | (I-8-a-1) | Tetraethylammoniumformiat | Gemäß Test |
| 1220 | (I-8-a-1) | Tetraethylammoniumhydrogenphosphat | Gemäß Test |
| 1221 | (I-8-a-1) | Tetraethylammoniumdihydrogenphosphat | Gemäß Test |
| 1222 | (I-8-a-2) | Ammoniumsulfat | Gemäß Test |
| 1223 | (I-8-a-2) | Ammoniumlaktat | Gemäß Test |
| 1224 | (I-8-a-2) | Ammoniumnitrat | Gemäß Test |
| 1225 | (I-8-a-2) | Ammoniumthiosulfat | Gemäß Test |
| 1226 | (I-8-a-2) | Ammoniumthiocyanat | Gemäß Test |
| 1227 | (I-8-a-2) | Ammoniumcitrat | Gemäß Test |
| 1228 | (I-8-a-2) | Ammoniumoxalat | Gemäß Test |
| 1229 | (I-8-a-2) | Ammoniumformiat | Gemäß Test |
| 1230 | (I-8-a-2) | Ammoniumhydrogenphosphat | Gemäß Test |
| 1231 | (I-8-a-2) | Ammoniumdihydrogenphosphat | Gemäß Test |
| 1232 | (I-8-a-2) | Ammoniumcarbonat | Gemäß Test |
| 1233 | (I-8-a-2) | Ammoniumbenzoat | Gemäß Test |
| 1234 | (I-8-a-2) | Ammoniumsulfit | Gemäß Test |
| 1235 | (I-8-a-2) | Ammoniumbenzoat | Gemäß Test |
| 1236 | (I-8-a-2) | Ammoniumhydrogenoxalat | Gemäß Test |
| 1237 | (I-8-a-2) | Ammoniumhydrogencitrat | Gemäß Test |
| 1238 | (I-8-a-2) | Ammoniumacetat | Gemäß Test |
| 1239 | (I-8-a-2) | Tetramethylammoniumsulfat | Gemäß Test |
| 1240 | (I-8-a-2) | Tetramethylammoniumlaktat | Gemäß Test |
| 1241 | (I-8-a-2) | Tetramethylammoniumnitrat | Gemäß Test |
| 1242 | (I-8-a-2) | Tetramethylammoniumthiosulfat | Gemäß Test |
| 1243 | (I-8-a-2) | Tetramethylammoniumthiocyanat | Gemäß Test |
| 1244 | (I-8-a-2) | Tetramethylammoniumcitrat | Gemäß Test |
| 1245 | (I-8-a-2) | Tetramethylammoniumoxalat | Gemäß Test |
| 1246 | (I-8-a-2) | Tetramethylammoniumformiat | Gemäß Test |
| 1247 | (I-8-a-2) | Tetramethylammoniumhydrogenphosphat | Gemäß Test |
| 1248 | (I-8-a-2) | Tetramethylammoniumdihydrogenphosphat | Gemäß Test |
| 1249 | (I-8-a-2) | Tetraethylammoniumsulfat | Gemäß Test |
| 1250 | (I-8-a-2) | Tetraethylammoniumlaktat | Gemäß Test |
| 1251 | (I-8-a-2) | Tetraethylammoniumnitrat | Gemäß Test |
| 1252 | (I-8-a-2) | Tetraethylammoniumthiosulfat | Gemäß Test |
| 1253 | (I-8-a-2) | Tetraethylammoniumthiocyanat | Gemäß Test |
| 1254 | (I-8-a-2) | Tetraethylammoniumcitrat | Gemäß Test |
| 1255 | (I-8-a-2) | Tetraethylammoniumoxalat | Gemäß Test |
| 1256 | (I-8-a-2) | Tetraethylammoniumformiat | Gemäß Test |
| 1257 | (I-8-a-2) | Tetraethylammoniumhydrogenphosphat | Gemäß Test |
| 1258 | (I-8-a-2) | Tetraethylammoniumdihydrogenphosphat | Gemäß Test |
| 1259 | (I-8-a-3) | Ammoniumsulfat | Gemäß Test |
| 1260 | (I-8-a-3) | Ammoniumlaktat | Gemäß Test |
| 1261 | (I-8-a-3) | Ammoniumnitrat | Gemäß Test |
| 1262 | (I-8-a-3) | Ammoniumthiosulfat | Gemäß Test |
| 1263 | (I-8-a-3) | Ammoniumthiocyanat | Gemäß Test |
| 1264 | (I-8-a-3) | Ammoniumcitrat | Gemäß Test |
| 1265 | (I-8-a-3) | Ammoniumoxalat | Gemäß Test |
| 1266 | (I-8-a-3) | Ammoniumformiat | Gemäß Test |
| 1267 | (I-8-a-3) | Ammoniumhydrogenphosphat | Gemäß Test |
| 1268 | (I-8-a-3) | Ammoniumdihydrogenphosphat | Gemäß Test |
| 1269 | (I-8-a-3) | Ammoniumcarbonat | Gemäß Test |
| 1270 | (I-8-a-3) | Ammoniumbenzoat | Gemäß Test |
| 1271 | (I-8-a-3) | Ammoniumsulfit | Gemäß Test |
| 1272 | (I-8-a-3) | Ammoniumbenzoat | Gemäß Test |
| 1273 | (I-8-a-3) | Ammoniumhydrogenoxalat | Gemäß Test |
| 1274 | (I-8-a-3) | Ammoniumhydrogencitrat | Gemäß Test |
| 1275 | (I-8-a-3) | Ammoniumacetat | Gemäß Test |
| 1276 | (I-8-a-3) | Tetramethylammoniumsulfat | Gemäß Test |
| 1277 | (I-8-a-3) | Tetramethylammoniumlaktat | Gemäß Test |
| 1278 | (I-8-a-3) | Tetramethylammoniumnitrat | Gemäß Test |
| 1279 | (I-8-a-3) | Tetramethylammoniumthiosulfat | Gemäß Test |
| 1280 | (I-8-a-3) | Tetramethylammoniumthiocyanat | Gemäß Test |
| 1281 | (I-8-a-3) | Tetramethylammoniumcitrat | Gemäß Test |
| 1282 | (I-8-a-3) | Tetramethylammoniumoxalat | Gemäß Test |
| 1283 | (I-8-a-3) | Tetramethylammoniumformiat | Gemäß Test |
| 1284 | (I-8-a-3) | Tetramethylammoniumhydrogenphosphat | Gemäß Test |
| 1285 | (I-8-a-3) | Tetramethylammoniumdihydrogenphosphat | Gemäß Test |
| 1286 | (I-8-a-3) | Tetraethylammoniumsulfat | Gemäß Test |
| 1287 | (I-8-a-3) | Tetraethylammoniumlaktat | Gemäß Test |
| 1288 | (I-8-a-3) | Tetraethylammoniumnitrat | Gemäß Test |
| 1289 | (I-8-a-3) | Tetraethylammoniumthiosulfat | Gemäß Test |
| 1290 | (I-8-a-3) | Tetraethylammoniumthiocyanat | Gemäß Test |
| 1291 | (I-8-a-3) | Tetraethylammoniumcitrat | Gemäß Test |
| 1292 | (I-8-a-3) | Tetraethylammoniumoxalat | Gemäß Test |
| 1293 | (I-8-a-3) | Tetraethylammoniumformiat | Gemäß Test |
| 1294 | (I-8-a-3) | Tetraethylammoniumhydrogenphosphat | Gemäß Test |
| 1295 | (I-8-a-3) | Tetraethylammoniumdihydrogenphosphat | Gemäß Test |
| 1296 | (I-8-a-4) | Ammoniumsulfat | Gemäß Test |
| 1297 | (I-8-a-4) | Ammoniumlaktat | Gemäß Test |
| 1298 | (I-8-a-4) | Ammoniumnitrat | Gemäß Test |
| 1299 | (I-8-a-4) | Ammoniumthiosulfat | Gemäß Test |
| 1300 | (I-8-a-4) | Ammoniumthiocyanat | Gemäß Test |
| 1301 | (I-8-a-4) | Ammoniumcitrat | Gemäß Test |
| 1302 | (I-8-a-4) | Ammoniumoxalat | Gemäß Test |
| 1303 | (I-8-a-4) | Ammoniumformiat | Gemäß Test |
| 1304 | (I-8-a-4) | Ammoniumhydrogenphosphat | Gemäß Test |
| 1305 | (I-8-a-4) | Ammoniumdihydrogenphosphat | Gemäß Test |
| 1306 | (I-8-a-4) | Ammoniumcarbonat | Gemäß Test |
| 1307 | (I-8-a-4) | Ammoniumbenzoat | Gemäß Test |
| 1308 | (I-8-a-4) | Ammoniumsulfit | Gemäß Test |
| 1309 | (I-8-a-4) | Ammoniumbenzoat | Gemäß Test |
| 1310 | (I-8-a-4) | Ammoniumhydrogenoxalat | Gemäß Test |
| 1311 | (I-8-a-4) | Ammoniumhydrogencitrat | Gemäß Test |
| 1312 | (I-8-a-4) | Ammoniumacetat | Gemäß Test |
| 1313 | (I-8-a-4) | Tetramethylammoniumsulfat | Gemäß Test |
| 1314 | (I-8-a-4) | Tetramethylammoniumlaktat | Gemäß Test |
| 1315 | (I-8-a-4) | Tetramethylammoniumnitrat | Gemäß Test |
| 1316 | (I-8-a-4) | Tetramethylammoniumthiosulfat | Gemäß Test |
| 1317 | (I-8-a-4) | Tetramethylammoniumthiocyanat | Gemäß Test |
| 1318 | (I-8-a-4) | Tetramethylammoniumcitrat | Gemäß Test |
| 1319 | (I-8-a-4) | Tetramethylammoniumoxalat | Gemäß Test |
| 1320 | (I-8-a-4) | Tetramethylammoniumformiat | Gemäß Test |
| 1321 | (I-8-a-4) | Tetramethylammoniumhydrogenphosphat | Gemäß Test |
| 1322 | (I-8-a-4) | Tetramethylammoniumdihydrogenphosphat | Gemäß Test |
| 1323 | (I-8-a-4) | Tetraethylammoniumsulfat | Gemäß Test |
| 1324 | (I-8-a-4) | Tetraethylammoniumlaktat | Gemäß Test |
| 1325 | (I-8-a-4) | Tetraethylammoniumnitrat | Gemäß Test |
| 1326 | (I-8-a-4) | Tetraethylammoniumthiosulfat | Gemäß Test |
| 1327 | (I-8-a-4) | Tetraethylammoniumthiocyanat | Gemäß Test |
| 1328 | (I-8-a-4) | Tetraethylammoniumcitrat | Gemäß Test |
| 1329 | (I-8-a-4) | Tetraethylammoniumoxalat | Gemäß Test |
| 1330 | (I-8-a-4) | Tetraethylammoniumformiat | Gemäß Test |
| 1331 | (I-8-a-4) | Tetraethylammoniumhydrogenphosphat | Gemäß Test |
| 1332 | (I-8-a-4) | Tetraethylammoniumdihydrogenphosphat | Gemäß Test |
| 1333 | (I-9-a-1) | Ammoniumsulfat | Gemäß Test |
| 1334 | (I-9-a-1) | Ammoniumlaktat | Gemäß Test |
| 1335 | (I-9-a-1) | Ammoniumnitrat | Gemäß Test |
| 1336 | (I-9-a-1) | Ammoniumthiosulfat | Gemäß Test |
| 1337 | (I-9-a-1) | Ammoniumthiocyanat | Gemäß Test |
| 1338 | (I-9-a-1) | Ammoniumcitrat | Gemäß Test |
| 1339 | (I-9-a-1) | Ammoniumoxalat | Gemäß Test |
| 1340 | (I-9-a-1) | Ammoniumformiat | Gemäß Test |
| 1341 | (I-9-a-1) | Ammoniumhydrogenphosphat | Gemäß Test |
| 1342 | (I-9-a-1) | Ammoniumdihydrogenphosphat | Gemäß Test |
| 1343 | (I-9-a-1) | Ammoniumcarbonat | Gemäß Test |
| 1344 | (I-9-a-1) | Ammoniumbenzoat | Gemäß Test |
| 1345 | (I-9-a-1) | Ammoniumsulfit | Gemäß Test |
| 1346 | (I-9-a-1) | Ammoniumbenzoat | Gemäß Test |
| 1347 | (I-9-a-1) | Ammoniumhydrogenoxalat | Gemäß Test |
| 1348 | (I-9-a-1) | Ammoniumhydrogencitrat | Gemäß Test |
| 1349 | (I-9-a-1) | Ammoniumacetat | Gemäß Test |
| 1350 | (I-9-a-1) | Tetramethylammoniumsulfat | Gemäß Test |
| 1351 | (I-9-a-1) | Tetramethylammoniumlaktat | Gemäß Test |
| 1352 | (I-9-a-1) | Tetramethylammoniumnitrat | Gemäß Test |
| 1353 | (I-9-a-1) | Tetramethylammoniumthiosulfat | Gemäß Test |
| 1354 | (I-9-a-1) | Tetramethylammoniumthiocyanat | Gemäß Test |
| 1355 | (I-9-a-1) | Tetramethylammoniumcitrat | Gemäß Test |
| 1356 | (I-9-a-1) | Tetramethylammoniumoxalat | Gemäß Test |
| 1357 | (I-9-a-1) | Tetramethylammoniumformiat | Gemäß Test |
| 1358 | (I-9-a-1) | Tetramethylammoniumhydrogenphosphat | Gemäß Test |
| 1359 | (I-9-a-1) | Tetramethylammoniumdihydrogenphosphat | Gemäß Test |
| 1360 | (I-9-a-1) | Tetraethylammoniumsulfat | Gemäß Test |
| 1361 | (I-9-a-1) | Tetraethylammoniumlaktat | Gemäß Test |
| 1362 | (I-9-a-1) | Tetraethylammoniumnitrat | Gemäß Test |
| 1363 | (I-9-a-1) | Tetraethylammoniumthiosulfat | Gemäß Test |
| 1364 | (I-9-a-1) | Tetraethylammoniumthiocyanat | Gemäß Test |
| 1365 | (I-9-a-1) | Tetraethylammoniumcitrat | Gemäß Test |
| 1366 | (I-9-a-1) | Tetraethylammoniumoxalat | Gemäß Test |
| 1367 | (I-9-a-1) | Tetraethylammoniumformiat | Gemäß Test |
| 1368 | (I-9-a-1) | Tetraethylammoniumhydrogenphosphat | Gemäß Test |
| 1369 | (I-9-a-1) | Tetraethylammoniumdihydrogenphosphat | Gemäß Test |
| 1370 | (I-10-a-1) | Ammoniumsulfat | Gemäß Test |
| 1371 | (I-10-a-1) | Ammoniumlaktat | Gemäß Test |
| 1372 | (I-10-a-1) | Ammoniumnitrat | Gemäß Test |
| 1373 | (I-10-a-1) | Ammoniumthiosulfat | Gemäß Test |
| 1374 | (I-10-a-1) | Ammoniumthiocyanat | Gemäß Test |
| 1375 | (I-10-a-1) | Ammoniumcitrat | Gemäß Test |
| 1376 | (I-10-a-1) | Ammoniumoxalat | Gemäß Test |
| 1377 | (I-10-a-1) | Ammoniumformiat | Gemäß Test |
| 1378 | (I-10-a-1) | Ammoniumhydrogenphosphat | Gemäß Test |
| 1379 | (I-10-a-1) | Ammoniumdihydrogenphosphat | Gemäß Test |
| 1380 | (I-10-a-1) | Ammoniumcarbonat | Gemäß Test |
| 1381 | (I-10-a-1) | Ammoniumbenzoat | Gemäß Test |
| 1382 | (I-10-a-1) | Ammoniumsulfit | Gemäß Test |
| 1383 | (I-10-a-1) | Ammoniumbenzoat | Gemäß Test |
| 1384 | (I-10-a-1) | Ammoniumhydrogenoxalat | Gemäß Test |
| 1385 | (I-10-a-1) | Ammoniumhydrogencitrat | Gemäß Test |
| 1386 | (I-10-a-1) | Ammoniumacetat | Gemäß Test |
| 1387 | (I-10-a-1) | Tetramethylammoniumsulfat | Gemäß Test |
| 1388 | (I-10-a-1) | Tetramethylammoniumlaktat | Gemäß Test |
| 1389 | (I-10-a-1) | Tetramethylammoniumnitrat | Gemäß Test |
| 1390 | (I-10-a-1) | Tetramethylammoniumthiosulfat | Gemäß Test |
| 1391 | (I-10-a-1) | Tetramethylammoniumthiocyanat | Gemäß Test |
| 1392 | (I-10-a-1) | Tetramethylammoniumcitrat | Gemäß Test |
| 1393 | (I-10-a-1) | Tetramethylammoniumoxalat | Gemäß Test |
| 1394 | (I-10-a-1) | Tetramethylammoniumformiat | Gemäß Test |
| 1395 | (I-10-a-1) | Tetramethylammoniumhydrogenphosphat | Gemäß Test |
| 1396 | (I-10-a-1) | Tetramethylammoniumdihydrogenphosphat | Gemäß Test |
| 1397 | (I-10-a-1) | Tetraethylammoniumsulfat | Gemäß Test |
| 1398 | (I-10-a-1) | Tetraethylammoniumlaktat | Gemäß Test |
| 1399 | (I-10-a-1) | Tetraethylammoniumnitrat | Gemäß Test |
| 1400 | (I-10-a-1) | Tetraethylammoniumthiosulfat | Gemäß Test |
| 1401 | (I-10-a-1) | Tetraethylammoniumthiocyanat | Gemäß Test |
| 1402 | (I-10-a-1) | Tetraethylammoniumcitrat | Gemäß Test |
| 1403 | (I-10-a-1) | Tetraethylammoniumoxalat | Gemäß Test |
| 1404 | (I-10-a-1) | Tetraethylammoniumformiat | Gemäß Test |
| 1405 | (I-10-a-1) | Tetraethylammoniumhydrogenphosphat | Gemäß Test |
| 1406 | (I-10-a-1) | Tetraethylammoniumdihydrogenphosphat | Gemäß Test |

Erfindungsgemäße Pflanzenschutzmittel können auch weitere Komponente, beispielsweise Tenside bzw. Dispergierhilfsmittel oder Emulgatoren enthalten.

Als nicht-ionische Tenside bzw. Dispergierhilfsmittel kommen alle üblicherweise in agrochemischen Mitteln einsetzbaren Stoffe dieses Typs in Betracht. Vorzugsweise genannt seien Polyethylenoxid-polypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, wobei Sorbitolethoxylate beispielhaft genannt seien, sowie Polyoxyalkylenamin-Derivate.

Als anionische Tenside kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Eine weitere bevorzugte Gruppe von anionischen Tensiden bzw. Dispergierhilfsmitteln sind in Pflanzenöl wenig lösliche Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfonsäure, Phenolsulfonsäure und Formaldehyd sowie Salze von Ligninsulfonsäure.

Als Zusatzstoffe, die in den erfindungsgemäßen Formulierungen enthalten sein können, kommen Emulgatoren, schaumhemmende Mittel, Konservierungsmittel, Antioxydantien, Farbstoffe und inerte Füllmaterialien in Betracht.

Bevorzugte Emulgatoren sind ethoxylierte Nonylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. -ethoxy-propoxylate, wobei Sorbitan-Derivate, wie Polyethylenoxid-Sorbitan-Fettsäureester und Sorbitan-Fettsäureester, beispielhaft genannt seien.

Die folgenden Beispiele dienen zur Verdeutlichung der Erfindung und sind in keiner Weise beschränkend auszulegen.

### Beispiel A-1: Steigerung der Penetration in die Pflanze durch Ammonium- oder Phosphoniumsalze und synergistische Steigerung der Penetration in die Pflanze durch Ammonium- / Phosphoniumsalze in Kombination mit Penetrationsförderern

In diesem Test wurde die Penetration von Wirkstoffen durch enzymatisch isolierte Kutikeln von Apfelbaumblättern gemessen.

Verwendet wurden Blätter, die in voll entwickeltem Zustand von Apfelbäumen der Sorte Golden Delicious abgeschnitten wurden. Die Isolierung der Kutikeln erfolgte in der Weise, dass
- zunächst auf der Unterseite mit Farbstoff markierte und ausgestanzte Blattscheiben mittels Vakuuminfiltration mit einer auf einen pH Wert zwischen 3 und 4 gepufferten Pectinase-Lösung (0,2 bis 2 %ig) gefüllt wurden,
- dann Natriumazid hinzugefügt wurde und
- die so behandelten Blattscheiben bis zur Auflösung der ursprünglichen Blattstruktur und zur Ablösung der nicht zellulären Kutikula stehen gelassen wurden.

Danach wurden nur die von Spaltöffnungen und Haaren freien Kutikeln der Blattoberseiten weiter verwendet. Sie wurden mehrfach abwechselnd mit Wasser und einer Pufferlösung vom pH Wert 7 gewaschen. Die erhaltenen sauberen Kutikel wurden schließlich auf Teflonplättchen aufgezogen und mit einem schwachen Luftstrahl geglättet und getrocknet.

Im nächsten Schritt wurden die so gewonnenen Kutikelmembranen für Membran-Transport-Untersuchungen in Diffusionszellen (= Transportkammern) aus Edelstahl eingelegt. Dazu wurden die Kutikeln mit einer Pinzette mittig auf die mit Silikonfett bestrichenen Ränder der Diffusionszellen plaziert und mit einem ebenfalls gefetteten Ring verschlossen. Die Anordnung war so gewählt worden, dass die morphologische Außenseite der Kutikeln nach außen, also zur Luft, gerichtet war, während die ursprüngliche Innenseite dem Inneren der Diffusionszelle zugewandt war.

Die Diffusionszellen waren mit einer 30%igen Ethylenglykol/Wasser-Lösung befüllt. Zur Bestimmung der Penetration wurden jeweils 10 µl der Spritzbrühe der nachstehenden Zusammensetzung auf die Außenseite der Kutikula appliziert. Das Ansetzen der Spritzbrühe erfolgt mit lokalem Leitungswasser mittlerer Wasserhärte.

Nach dem Auftragen der Spritzbrühen ließ man das Wasser verdunsten, drehte die Kammern um und stellte sie in thermostatisierte Wannen, in denen die Temperatur und Luftfeuchte über der Kutikula durch einen leichten Luftstrom auf die Kutikula mit dem Spritzbelag einstellbar war (20°C, 60 % rh). In regelmäßigen Abständen wurden von einem Autosampler Aliquots entnommen und der Wirkstoffgehalt mit HPLC bestimmt.

Die Versuchsergebnisse gehen aus der folgenden Tabelle hervor. Bei den angegebenen Zahlen handelt es sich um Durchschnittswerte aus 8 bis 10 Messungen. Deutlich ist zu sehen, dass bereits Ammoniumsulfat alleine die Penetration deutlich verbessert und zusammen mit RME ein überadditiver (synergistischer) Effekt auftritt.

**Tabelle A-1**

| Wirkstoff | Penetration nach 24h / % | | | |
|---|---|---|---|---|
| | EC | EC + AS (1 g/l) | EC + RME (1 g/l) | EC + RME (1 g/l) + AS (1 g/l) |
| 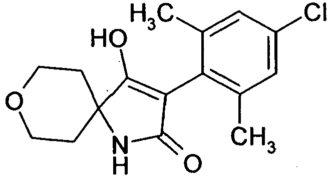 | 0,6 | 2,5 | 13,5 | 41 |
| Beispiel I-1-a-1 500 ppm in DMF / Emulgator W 7:1 (w/w) | | | | |

| | | | | |
|---|---|---|---|---|
| RME = Rapsölmethylester (Einsatz formuliert als 500 EW, Konzentrationsangabe in g Wirkstoff /l) AS = Ammoniumsulfat EC = Emulgierbares Konzentrat | | | | |

### Beispiel A-2

Beispiel A-2 wurde analog zum Beispiel A-1 durchgerührt.

**Tabelle A-2**

| Wirkstoff | Penetration nach 24h / % | | |
|---|---|---|---|
| | EC | EC + RME (1 g/l) | EC + RME (1 g/l) + AT (1 g/l) |
| 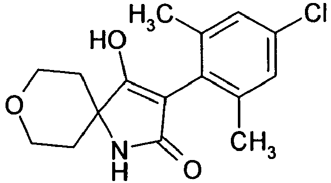 | < 0,2 | 3,5 | 12 |
| Beispiel I-1-a-1 500 ppm in DMF / Emulgator W 7:1 (w/w) | | | |

| | | | |
|---|---|---|---|
| RME = Rapsölmethylester (Einsatz formuliert als 500 EW, Konzentrationsangabe in g Wirkstoff / l) AT = Ammoniumthiocyanat EC = Emulgierbares Konzentrat | | | |

### Beispiel A-3

Beispiel A-3 wurde analog zum Beispiel A-1 durchgerührt.

**Tabelle A-3**

| Wirkstoff | Penetration nach 24h / % | | |
|---|---|---|---|
| | EC + RME (1 g/l) | EC + RME (1 g/l) + Salz (1 g/l) | |
| | | Salz | Penetration nach 24h / % |
| 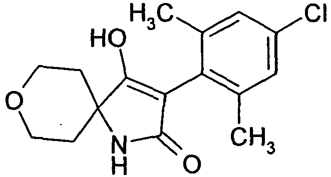 | 10 | Diammoniumhydrogenphosphat | 26 |
| Beispiel I-1-a-1 500 ppm in DMF / Emulgator W 7:1 (w/w) | | Ammoniumdihydrogenphosphat | 42 |

| | | | |
|---|---|---|---|
| RME = Rapsölmethylester (Einsatz formuliert als 500 EW, Konzentrationsangabe in g Wirkstoff / l) EC = Emulgierbares Konzentrat | | | |

### Beispiel B: Wirkungssteigerung durch Ammonium- / Phosphoniumsalze

### (Vergleichsbeispiel, nicht unter die Erfindung fallend))

Die folgenden Daten belegen, dass Ammonium- bzw. Phosphoniumsalze in der Lage sind, die Wirkung von Ketoenol-haltigen Pflanzenschutzmitteln noch weiter zu verstärken.

### Myzus persicae - Test

| | | |
|---|---|---|
| Lösungsmittel: | 7 | Gewichtsteile Dimethylformamid |
| Emulgator: | 1 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration. Bei erforderlicher Zugabe von Ammoniumsalzen, Phosphoniumsalzen oder Penetrationsförderer wird die entsprechende Menge nach dem Verdünnen jeweils der fertigen Präparatelösung zupipettiert. Einblättrige Paprikapflanzen (*Capsicum annuum*), die stark von der Grünen Pfirsichblattlaus (*Myzus persicae*) befallen sind, werden durch Sprühen der Blattoberseite (Spritzvolumen 600 l/ha) mit der Wirkstoffzubereitung in der gewünschten Konzentration behandelt. Nach der gewünschten Zeit wird die Abtötung in % bestimmt. Dabei bedeutet 100 %, dass alle Tiere abgetötet wurden; 0 % bedeutet, dass keine Tiere abgetötet wurden.

**Tabelle B**

| Wirkstoff | Wirkstoff g/ha | Abtötungsgrad / % nach 3 Tagen | |
|---|---|---|---|
| | | Ohne AS | AS (1 g/l) |
| 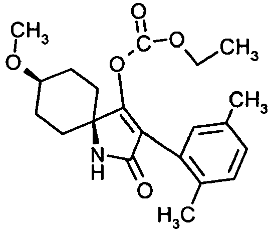 | 120 | 37 | 67 |
| Bsp. I-1-c-1 | | | |

| | | | |
|---|---|---|---|
| AS = Ammoniumsulfat | | | |

### Beispiel C: Wirkungssteigerung durch Ammonium- / Phosphoniumsalze in Kombination mit Penetrationsförderern

Die folgenden Daten belegen, dass Ammonium- bzw. Phosphoniumsalze in der Lage sind, auch beim Ausbringen von anwendungsfertigen Pflanzenschutzmitteln, die Penetrationsförderer zur Wirkungssteigerung enthalten, die Wirkung noch weiter zu verstärken.

### Myzus persicae -Test

| | | |
|---|---|---|
| Lösungsmittel: | 7 | Gewichtsteile Dimethylformamid |
| | | |
| Emulgator: | 1 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration. Bei erforderlicher Zugabe von Ammoniumsalzen, Phosphoniumsalzen oder Penetrationsförderer wird die entsprechende Menge nach dem Verdünnen jeweils der fertigen Präparatelösung zupipettiert. Einblättrige Paprikapflanzen (*Capsicum annuum*), die stark von der Grünen Pfirsichblattlaus (*Myzus persicae*) befallen sind, werden durch Sprühen der Blattoberseite (Spritzvolumen 600 l/ha) mit der Wirkstoffzubereitung in der gewünschten Konzentration behandelt. Nach der gewünschten Zeit wird die Abtötung in % bestimmt. Dabei bedeutet 100 %, dass alle Tiere abgetötet wurden; 0 % bedeutet, dass keine Tiere abgetötet wurden.

**Tabelle C**

| Wirkstoff | Wirkstoff g/ha | Abtötungsgrad / % nach 4 Tagen | |
|---|---|---|---|
| | | RME (1 g/l) | RME (1 g/l) + AS (1 g/l) |
| 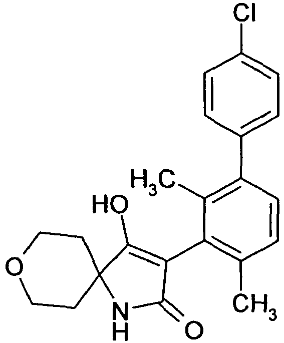 | 120 | 37 | 92 |
| Bsp. I-1-a-2 | | | |

| | | | |
|---|---|---|---|
| RME = Rapsölmethylester (Einsatz formuliert als 500 EW, Konzentrationsangabe in g Wirkstoff /l) AS = Ammoniumsulfat | | | |

**Beispiel D: Wirkungssteigerung durch Ammonium- / Phosphoniumsalze**

### (Vergleichsbeispiel, nicht unter die Erfindung fallend)) Myzus persicae -Test

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration. Für die Anwendung mit Ammonium- oder Phosphoniumsalzen werden diese in einer Konzentration von 1000 ppm der Spritzbrühe hinzugegeben.

Paprikapflanzen (*Capsicum annuum*), die stark von der Grünen Pfirsichblattlaus (*Myzus persicae*) befallen sind, werden durch Tropfnassspritzung mit der Wirkstoffzubereitung in der gewünschten Konzentration behandelt. Nach der gewünschten Zeit wird die Abtötung in % bestimmt. Dabei bedeutet 100 %, dass alle Tiere abgetötet wurden; 0 % bedeutet, dass keine Tiere abgetötet wurden.

**Tabelle D**

| Wirkstoff | Wirkstoff ppm | Abtötungsgrad / % nach 6 Tagen | |
|---|---|---|---|
| | | | + AS (1000 ppm) |
| I-1-a-3 | 20 | 60 | 75 |
| I-1-a-3 | 4 | 0 | 20 |
| I-1-a-4 | 20 | 95 | 98 |
| I-1-a-4 | 4 | 40 | 65 |
| I-1-a-5 | 4 | 90 | 98 |
| I-1-a-7 | 4 | 40 | 80 |
| I-1-a-8 | 0,8 | 20 | 55 |
| I-1-a-10 | 20 | 40 | 85 |
| I-1-a-10 | 4 | 0 | 35 |
| I-1-a-11 | 20 | 0 | 70 |
| I-1-a-12 | 20 | 55 | 65 |
| I-2-a-1 | 4 | 90 | 98 |
| I-2-a-1 | 0,8 | 20 | 65 |
| I-2-a-2 | 4 | 65 | 90 |
| I-2-a-2 | 0,8 | 0 | 25 |
| I-2-a-3 | 20 | 0 | 15 |
| I-2-a-4 | 20 | 60 | 80 |
| I-4-a-1 | 20 | 75 | 95 |
| I-4-a-1 | 4 | 0 | 45 |
| I-4-a-3 | 20 | 40 | 85 |
| I-4-a-3 | 4 | 5 | 70 |
| I-5-a-1 | 20 | 0 | 55 |
| I-10-a-1 | 20 | 0 | 25 |

| | | | |
|---|---|---|---|
| AS = Ammoniumsulfat | | | |

**Beispiel E** (Vergleichsbeispiel, nicht unter die Erfindung fallend)

### Aphis gossypii -Test

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration. Für die Anwendung mit Ammonium- oder Phosphoniumsalzen werden diese in einerKonzentration von 1000 ppm der Spritzbrühe hinzugegeben.

Baumwollpflanzen (*Gossypium hirsutum*), die stark von der Baumwollblattlaus (*Aphis gossypii*) befallen sind, werden durch Tropfnassspritzung mit der Wirkstoffzubereitung der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden.

**Tabelle E**

| Wirkstoff | Wirkstoff ppm | Abtötungsgrad / % nach 6 Tagen | |
|---|---|---|---|
| | | | + AS (1000 ppm) |
| I-1-a-3 | 20 | 20 | 80 |
| I-1-a-3 | 4 | 5 | 35 |
| I-1-a-4 | 4 | 60 | 85 |
| I-1-a-4 | 0,8 | 15 | 65 |
| I-1-a-5 | 0,8 | 35 | 55 |
| I-1-a-6 | 4 | 25 | 55 |
| I-1-a-6 | 0,8 | 15 | 30 |
| I-1-a-7 | 20 | 85 | 99 |
| I-1-a-7 | 4 | 55 | 90 |
| I-1-a-8 | 0,8 | 0 | 40 |
| I-1-a-10 | 20 | 40 | 75 |
| I-1-a-10 | 4 | 20 | 65 |
| I-1-a-11 | 20 | 45 | 80 |
| I-1-a-11 | 4 | 5 | 35 |
| I-1-a-12 | 4 | 65 | 95 |
| I-1-a-12 | 0,8 | 5 | 45 |
| I-1-a-14 | 4 | 55 | 90 |
| I-1-a-14 | 0,8 | 25 | 40 |
| I-1-a-15 | 20 | 80 | 95 |
| I-1-a-15 | 4 | 40 | 75 |
| I-1-a-16 | 20 | 75 | 85 |
| I-1-a-16 | 4 | 40 | 75 |
| I-1-a-17 | 20 | 70 | 85 |
| I-1-a-17 | 4 | 50 | 80 |
| I-2-a-1 | 4 | 80 | 95 |
| I-2-a-1 | 0,8 | 0 | 85 |
| I-2-a-2 | 4 | 85 | 95 |
| I-2-a-2 | 0,8 | 30 | 70 |
| I-2-a-3 | 20 | 0 | 30 |
| I-2-a-4 | 4 | 70 | 90 |
| I-2-a-4 | 0,8 | 10 | 45 |
| I-4-a-1 | 4 | 0 | 40 |
| I-4-a-2 | 4 | 50 | 60 |
| I-4-a-3 | 4 | 25 | 70 |
| I-4-a-3 | 0,8 | 0 | 40 |
| I-10-a-1 | 20 | 0 | 45 |
| I-10-a-2 | 20 | 10 | 80 |
| I-10-a-2 | 4 | 0 | 50 |

| | | | |
|---|---|---|---|
| AS = Ammoniumsulfat | | | |

**Beispiel F: Wirkungssteigerung durch Ammonium- / Phosphoniumsalze in Kombination mit Penetrationsförderern**

### Myzus persicae -Test

| | | |
|---|---|---|
| Lösungsmittel: | 7 | Gewichtsteile Dimethylformamid |
| | | |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration. Für die Anwendung mit Ammonium- oder Phosphoniumsalzen und Penetrationsförderer (Rapsölmethylester 500 EW) werden diese jeweils in einer-Konzen-tration von 1000 ppm der Spritzbrühe hinzugegeben.

Paprikapflanzen (*Capsicum annuum*), die stark von der Grünen Pfirsichblattlaus (*Myzus persicae*) befallen sind, werden durch Tropfnassspritzung mit der Wirkstoffzubereitung in der gewünschten Konzentration behandelt. Nach der gewünschten Zeit wird die Abtötung in % bestimmt. Dabei bedeutet 100 %, dass alle Tiere abgetötet wurden; 0 % bedeutet, dass keine Tiere abgetötet wurden.

**Tabelle F**

| Wirkstoff | Konzentration / ppm | Abtötungsgrad / % nach 6 Tagen | | | |
|---|---|---|---|---|---|
| | | | + AS (1000 ppm) | + RME (1000 ppm) | + RME + AS (je 1000 ppm) |
| I-1-a-3 | 4 | 0 | 20 | 10 | 90 |
| I-1-a-4 | 4 | 40 | 65 | 95 | 98 |
| I-1-a-4 | 0,8 | 0 | 5 | 0 | 20 |
| I-1-a-5 | 4 | 90 | 98 | 98 | 100 |
| I-1-a-5 | 0,8 | 0 | 0 | 95 | 99 |
| I-1-a-7 | 0,8 | 0 | 10 | 35 | 75 |
| I-1-a-8 | 0,8 | 20 | 55 | 60 | 80 |
| I-1-a-9 | 0,8 | 0 | 5 | 35 | 75 |
| I-1-a-10 | 4 | 0 | 35 | 75 | 85 |
| I-1-a-11 | 4 | 0 | 5 | 55 | 99 |
| I-1-a-12 | 20 | 55 | 65 | 70 | 98 |
| I-1-a-12 | 4 | 0 | 5 | 0 | 50 |
| I-1-a-13 | 4 | 0 | 0 | 65 | 75 |
| I-1-a-13 | 0,8 | 0 | 0 | 0 | 30 |
| I-1-a-15 | 0,8 | 15 | 0 | 50 | 80 |
| I-1-a-18 | 4 | 0 | 0 | 35 | 55 |
| I-2-a-1 | 0,8 | 20 | 65 | 95 | 100 |
| I-2-a-2 | 0,8 | 0 | 25 | 15 | 99 |
| I-2-a-3 | 20 | 0 | 15 | 35 | 80 |
| I-2-a-4 | 4 | 0 | 0 | 0 | 70 |
| I-4-a-1 | 0,8 | 0 | 5 | 0 | 40 |
| I-4-a-3 | 0,8 | 0 | 5 | 20 | 98 |
| I-5-a-1 | 4 | 0 | 5 | 55 | 95 |
| I-8-a-1 | 100 | 15 | 30 | 30 | 45 |
| I-8-a-2 | 100 | 0 | 15 | 15 | 55 |
| I-9-a-1 | 100 | 15 | 0 | 5 | 50 |
| I-10-a-1 | 20 | 0 | 25 | 65 | 99 |
| I-10-a-1 | 4 | 0 | 5 | 20 | 55 |
| I-10-a-2 | 20 | 5 | 10 | 0 | 65 |

| | | | | | |
|---|---|---|---|---|---|
| RME = Rapsölmethylester (formuliert als 500 EW, Konzentrationsangabe in g Wirkstoff / 1) AS = Ammoniumsulfat | | | | | |

### Beispiel G

### Aphis gossypii -Test

| | | |
|---|---|---|
| Lösungsmittel: | 7 | Gewichtsteile Dimethylformamid |
| | | |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration. Für die Anwendung mit Ammonium- oder Phosphoniumsalzen und Penetrationsförderern (Rapsölmethylestern 500 EW) werden diese jeweils in einerKonzentration von 1000 ppm a.i. der Spritzbrühe hinzugegeben.

Baumwollpflanzen (*Gossypium hirsutum*), die stark von der Baumwollblattlaus (*Aphis gossypii*) befallen sind, werden durch Tropfnassspritzung mit der Wirkstoffzubereitung der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden.

**Tabelle G**

| Wirkstoff | Konzentration / ppm | Abtötungsgrad / % nach 6 Tagen | | | |
|---|---|---|---|---|---|
| | | | + AS (1000 ppm) | + RME (1000 ppm) | + RME + AS (je 1000 ppm) |
| I-1-a-4 | 0,8 | 15 | 65 | 30 | 80 |
| I-1-a-5 | 0,8 | 35 | 55 | 45 | 85 |
| I-1-a-6 | 4 | 25 | 55 | 50 | 80 |
| I-1-a-7 | 4 | 55 | 90 | 85 | 95 |
| I-1-a-7 | 0,8 | 35 | 45 | 50 | 75 |
| I-1-a-8 | 0,8 | 0 | 40 | 20 | 60 |
| I-1-a-11 | 4 | 5 | 35 | 45 | 80 |
| I-1-a-12 | 0,8 | 5 | 45 | 45 | 65 |
| I-1-a-16 | 20 | 75 | 85 | 95 | 99 |
| I-1-c-2 | 20 | 85 | 85 | 90 | 99 |
| I-2-a-2 | 0,8 | 30 | 70 | 50 | 95 |
| I-2-a-3 | 20 | 0 | 30 | 0 | 65 |
| I-2-a-3 | 4 | 0 | 5 | 0 | 15 |
| I-2-a-4 | 0,8 | 10 | 45 | 45 | 70 |
| I-4-a-1 | 0,8 | 0 | 15 | 0 | 45 |
| I-4-a-2 | 4 | 5 | 60 | 0 | 65 |
| I-4-a-3 | 0,8 | 0 | 40 | 0 | 80 |
| I-6-a-1 | 100 | 40 | 40 | 60 | 80 |
| I-6-a-2 | 100 | 0 | 30 | 15 | 40 |
| 1-8-a-1 | 100 | 0 | 15 | 15 | 40 |
| I-8-a-3 | 20 | 15 | 50 | 50 | 90 |
| I-8-a-4 | 20 | 30 | 35 | 30 | 75 |
| I-10-a-1 | 20 | 0 | 45 | 45 | 70 |

| | | | | | |
|---|---|---|---|---|---|
| RME = Rapsölmethylester (formuliert als 500 EW, Konzentrationsangabe in g Wirkstoff / 1) AS = Ammoniumsulfat | | | | | |

## Patentansprüche

1. Zusammensetzung umfassend
- mindestens einen insektiziden und/oder akariziden Wirkstoff aus der Klasse der phenylsubstituierten cyclischen Ketoenole der allgemeinen Formel (I) 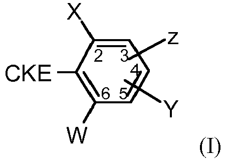 in welcher
W für Wasserstoff, Alkyl, Alkenyl, Alkinyl, Halogen, Alkoxy, Halogenalkyl, Halogenalkoxy oder Cyano steht,
X für Halogen, Alkyl, Alkenyl, Alkinyl, Alkoxy, Alkoxy-alkoxy, Halogenalkyl, Halogenalkoxy oder Cyano steht,
Y für Wasserstoff, Halogen, Alkyl, Alkenyl, Alkinyl, Alkoxy, Cyano, Halogenalkyl, Halogenalkoxy oder für jeweils gegebenenfalls substituiertes Phenyl oder Hetaryl steht,
Z für Wasserstoff, Halogen, Alkyl, Halogenalkyl, Cyano, Alkoxy oder Halogenalkoxy steht,
CKE für eine der Gruppen 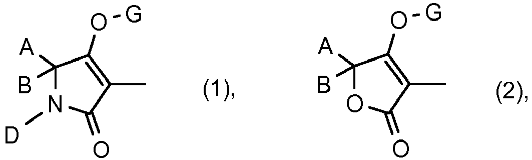 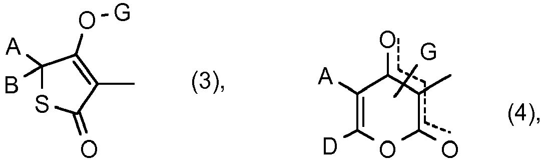 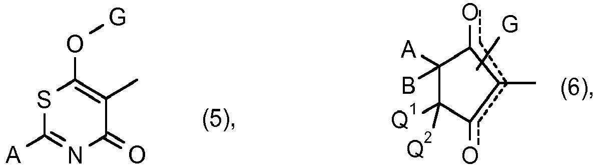 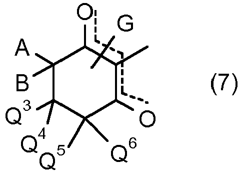 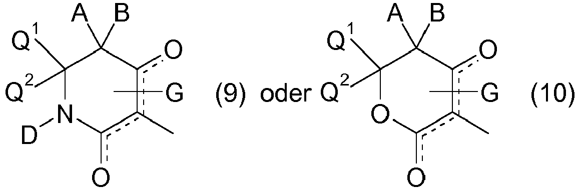 steht,
worin
A für Wasserstoff, jeweils gegebenenfalls durch Halogen substituiertes Alkyl, Alkenyl, Alkoxyalkyl, Alkylthioalkyl, gesättigtes oder ungesättigtes, gegebenenfalls substituiertes Cycloalkyl, in welchem gegebenenfalls mindestens ein Ringatom durch ein Heteroatom ersetzt ist, oder jeweils gegebenenfalls durch Halogen, Alkyl, Halogenalkyl, Alkoxy, Halogenalkoxy, Cyano oder Nitro substituiertes Aryl, Arylalkyl oder Hetaryl steht,
B für Wasserstoff, Alkyl oder Alkoxyalkyl steht, oder
A und B gemeinsam mit dem Kohlenstoffatom an das sie gebunden sind für einen gesättigten oder ungesättigten, gegebenenfalls mindestens ein Heteroatom enthaltenden unsubstituierten oder substituierten Cyclus stehen,
D für Wasserstoff oder einen gegebenenfalls substituierten Rest aus der Reihe Alkyl, Alkenyl, Alkinyl, Alkoxyalkyl, gesättigtes oder ungesättigtes Cycloalkyl, in welchem gegebenenfalls eines oder mehrere Ringglieder durch Heteroatome ersetzt sind, Arylalkyl, Aryl, Hetarylalkyl oder Hetaryl steht oder
A und D gemeinsam mit den Atomen an die sie gebunden sind für einen gesättigten oder ungesättigten und gegebenenfalls mindestens ein Heteroatom enthaltenden, im A,D-Teil unsubstituierten oder substituierten Cyclus stehen, bzw.
A und Q¹ gemeinsam für gegebenenfalls durch Hydroxy, jeweils gegebenenfalls substituiertes Alkyl, Alkoxy, Alkylthio, Cycloalkyl, Benzyloxy oder Aryl substituiertes Alkandiyl oder Alkendiyl stehen oder
D und Q¹ gemeinsam mit den Atomen, an die sie gebunden sind, für einen gesättigten oder ungesättigten und gegebenenfalls mindestens ein Heteroatom enthaltenden, im D, Q¹-Teil unsubstituierten oder substituierten Cyclus stehen,
Q¹ für Wasserstoff, Alkyl, Alkoxyalkyl, gegebenenfalls substituiertes Cycloalkyl (worin gegebenenfalls eine Methylengruppe durch Sauerstoff oder Schwefel ersetzt ist) oder gegebenenfalls substituiertes Phenyl steht,
Q², Q⁴, Q⁵ und Q⁶ unabhängig voneinander für Wasserstoff oder Alkyl stehen,
Q³ für Wasserstoff, für gegebenenfalls substituiertes Alkyl, Alkoxyalkyl, Alkylthioalkyl, gegebenenfalls substituiertes Cycloalkyl (worin gegebenenfalls eine Methylengruppe durch Sauerstoff oder Schwefel ersetzt ist) oder gegebenenfalls substituiertes Phenyl steht, oder
Q¹ und Q² gemeinsam mit dem Kohlenstoffatom, an das sie gebunden sind, für einen gegebenenfalls ein Heteroatom enthaltenden unsubstituierten oder substituierten Cyclus stehen, oder
Q³ und Q⁴ gemeinsam mit dem Kohlenstoffatom, an das sie gebunden sind, für einen gesättigten oder ungesättigten, gegebenenfalls ein Heteroatom enthaltenden unsubstituierten oder substituierten Cyclus stehen,
G für Wasserstoff (a) oder für eine der Gruppen 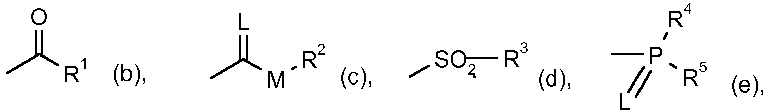 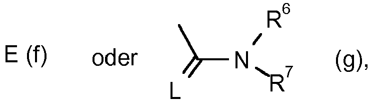
steht,
worin
E für ein Metallionäquivalent oder ein Ammoniumion steht,
L für Sauerstoff oder Schwefel steht,
M für Sauerstoff oder Schwefel steht,
R¹ für jeweils gegebenenfalls durch Halogen substituiertes Alkyl, Alkenyl, Alkoxyalkyl, Alkylthioalkyl, Polyalkoxyalkyl oder gegebenenfalls durch Halogen, Alkyl oder Alkoxy substituiertes Cycloalkyl, das durch mindestens ein Heteroatom unterbrochen sein kann, jeweils gegebenenfalls substituiertes Phenyl, Phenylalkyl, Hetaryl, Phenoxyalkyl oder Hetaryloxyalkyl steht,
R² für jeweils gegebenenfalls durch Halogen substituiertes Alkyl, Alkenyl, Alkoxyalkyl, Polyalkoxyalkyl oder für jeweils gegebenenfalls substituiertes Cycloalkyl, Phenyl oder Benzyl steht,
R³, R⁴ und R⁵ unabhängig voneinander für jeweils gegebenenfalls durch Halogen substituiertes Alkyl, Alkoxy, Alkylamino, Dialkylamino, Alkylthio, Alkenylthio, Cycloalkylthio oder für jeweils gegebenenfalls substituiertes Phenyl, Benzyl, Phenoxy oder Phenylthio stehen,
R⁶ und R⁷ unabhängig voneinander für Wasserstoff, jeweils gegebenenfalls durch Halogen substituiertes Alkyl, Cycloalkyl, Alkenyl, Alkoxy, Alkoxyalkyl, für gegebenenfalls substituiertes Phenyl, für gegebenenfalls substituiertes Benzyl stehen, oder gemeinsam mit dem N-Atom, an das sie gebunden sind, für einen gegebenenfalls durch Sauerstoff oder Schwefel unterbrochenen Cyclus stehen;
- mindestens ein Salz der Formel (II) 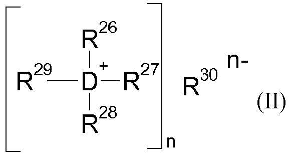 in welcher
D für Stickstoff oder Phosphor steht,
R²⁶, R²⁷, R²⁸ und R²⁹ unabhängig voneinander für Wasserstoff oder jeweils gegebenenfalls substituiertes C₁-C₈-Alkyl oder einfach oder mehrfach ungesättigtes, gegebenenfalls substituiertes C₁-C₈-Alkylen stehen, wobei die Substituenten aus Halogen, Nitro und Cyano ausgewählt sein können,
n für 1, 2, 3 oder 4 steht,
R³⁰ für ein anorganisches oder organisches Anion steht und
mindestens einen Penetrationsförderer, wobei der Penetrationsförderer ein Fettalkohol-Alkoxylat der Formel (III)
R-O-(-AO)_{V}-R' (III)
in welcher
R für geradkettiges oder verzweigtes Alkyl mit 4 bis 20 Kohlenstoffatomen steht,
R' für Wasserstoff, Methyl, Ethyl, n-Propyl, i-Propyl, n-Butyl, i-Butyl, t-Butyl, n-Pentyl oder n-Hexyl steht,
AO für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
v für Zahlen von 2 bis 30 steht,
- oder ein mineralisches oder vegetabiles Öl oder der Ester eines mineralischen oder vegetabilen Öls ist.

2. Zusammensetzung gemäß Anspruch 1, **dadurch gekennzeichnet, dass** die Substituenten in der Formel (I) folgendermaßen definiert sind:
W steht für Wasserstoff, C₁-C₆-Alkyl, C₂-C₆-Alkenyl, C₂-C₆-Alkinyl, Halogen, C₁-C₆-Alkoxy, C₁-C₄-Halogenalkyl, C₁-C₄-Halogenalkoxy oder Cyano,
X steht für Halogen, C₁-C₆-Alkyl, C₂-C₆-Alkenyl, C₂-C₆-Alkinyl, C₁-C₆-Alkoxy, C₁-C₆-Alkoxy-C₁-C₄-alkoxy, C₁-C₄-Halogenalkyl, C₁-C₄-Halogenalkoxy oder Cyano,
Y steht für Wasserstoff, Halogen, C₁-C₆-Alkyl, C₂-C₆-Alkenyl, C₂-C₆-Alkinyl, C₁-C₆-Alkoxy, Cyano, C₁-C₄-Halogenalkyl, Halogenalkoxy, für durch V¹ und V² substituiertes Phenyl oder Pyridyl,
V¹ steht für Halogen, C₁-C₁₂-Alkyl, C₁-C₆-Alkoxy, C₁-C₄-Halogenalkyl, C₁-C₄-Halogenalkoxy, Cyano oder Nitro,
V² steht für Wasserstoff, Halogen, C₁-C₆-Alkyl, C₁-C₆-Alkoxy oder C₁-C₄-Halogenalkyl,
V¹ und V² stehen gemeinsam für C₃-C₄-Alkandiyl, welches gegebenenfalls durch Halogen und/oder C₁-C₂-Alkyl substituiert sein kann und welches gegebenenfalls durch ein oder zwei Sauerstoffatome unterbrochen sein kann,
Z steht für Wasserstoff, Halogen, C₁-C₆-Alkyl, C₁-C₄-Halogenalkyl, Cyano, C₁-C₆-Alkoxy oder C₁-C₄-Halogenalkoxy.
CKE steht für eine der Gruppen 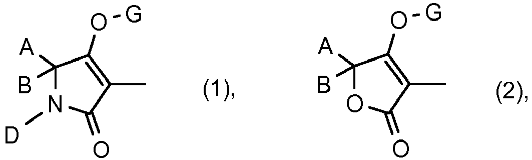 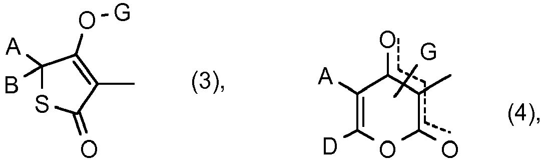 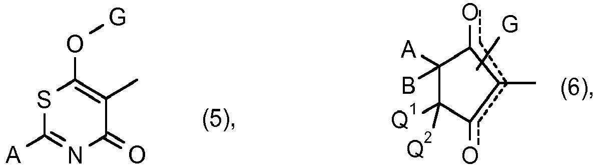 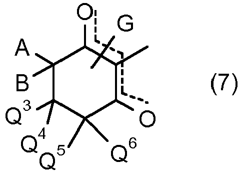 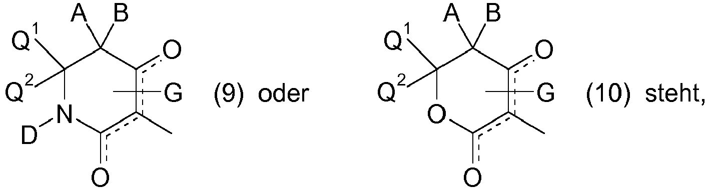
A steht bevorzugt für Wasserstoff oder jeweils gegebenenfalls durch Halogen substituiertes C₁-C₁₂-Alkyl, C₃-C₈-Alkenyl, C₁-C₁₀-Alkoxy-C₁-C₈-alkyl, C₁-C₁₀-Alkylthio-C₁-C₆-alkyl, gegebenenfalls durch Halogen, C₁-C₆-Alkyl oder C₁-C₆-Alkoxy substituiertes C₃-C₈-Cycloalkyl, in welchem gegebenenfalls ein oder zwei nicht direkt benachbarte Ringglieder durch Sauerstoff und/oder Schwefel ersetzt sind oder für jeweils gegebenenfalls durch Halogen, C₁-C₆-Alkyl, C₁-C₆-Halogenalkyl, C₁-C₆-Alkoxy, C₁-C₆-Halogenalkoxy, Cyano oder Nitro substituiertes Phenyl, Naphthyl, Hetaryl mit 5 bis 6 Ringatomen (beispielsweise Furanyl, Pyridyl, Imidazolyl, Triazolyl, Pyrazolyl, Pyrimidyl, Thiazolyl oder Thienyl), Phenyl-C₁-C₆-alkyl oder Naphthyl-C₁-C₆-alkyl,
B steht für Wasserstoff, C₁-C₁₂-Alkyl oder C₁-C₈-Alkoxy-C₁-C₆-alkyl oder
A, B und das Kohlenstoffatom an das sie gebunden sind, stehen für gesättigtes C₃-C₁₀-Cycloalkyl oder ungesättigtes C₅-C₁₀-Cycloalkyl, worin gegebenenfalls ein Ringglied durch Sauerstoff oder Schwefel ersetzt ist und welche gegebenenfalls einfach oder zweifach durch C₁-C₈-Alkyl, C₃-C₁₀-Cycloalkyl, C₁-C₈-Halogenalkyl, C₁-C₈-Alkoxy, C₁-C₄-Alkoxy-C₁-C₄-alkoxy, C₁-C₈-Alkylthio, Halogen oder Phenyl substituiert sind oder
A, B und das Kohlenstoffatom, an das sie gebunden sind, stehen für C₃-C₆-Cycloalkyl, welches durch eine gegebenenfalls ein oder zwei nicht direkt benachbarte Sauerstoff- und/oder Schwefelatome enthaltende gegebenenfalls durch C₁-C₄-Alkyl substituierte Alkylendiyl-, oder durch eine Alkylendioxyl- oder durch eine Alkylendithioyl-Gruppe substituiert ist, die mit dem Kohlenstoffatom, an das sie gebunden ist, einen weiteren fünf- bis achtgliedrigen Ring bildet oder
A, B und das Kohlenstoffatom, an das sie gebunden sind, stehen für C₃-C₈-Cycloalkyl oder C₅-C₈-Cycloalkenyl, in welchen zwei Substituenten gemeinsam mit den Kohlenstoffatomen, an die sie gebunden sind, für jeweils gegebenenfalls durch C₁-C₆-Alkyl, C₁-C₆-Alkoxy oder Halogen substituiertes C₂-C₆-Alkandiyl, C₂-C₆-Alkendiyl oder C₄-C₆-Alkandiendiyl stehen, worin gegebenenfalls eine Methylengruppe durch Sauerstoff oder Schwefel ersetzt ist,
D steht für Wasserstoff, jeweils gegebenenfalls durch Halogen substituiertes C₁-C₁₂-Alkyl, C₃-C₈-Alkenyl, C₃-C₈-Alkinyl, C₁-C₁₀-Alkoxy-C₂-C₈-alkyl, gegebenenfalls durch Halogen, C₁-C₄-Alkyl, C₁-C₄-Alkoxy oder C₁-C₄-Halogenalkyl substituiertes C₃-C₈-Cycloalkyl, in welchem gegebenenfalls ein Ringglied durch Sauerstoff oder Schwefel ersetzt ist oder jeweils gegebenenfalls durch Halogen, C₁-C₆-Alkyl, C₁-C₆-Halogenalkyl, C₁-C₆-Alkoxy, C₁-C₆-Halogenalkoxy, Cyano oder Nitro substituiertes Phenyl, Hetaryl mit 5 oder 6 Ringatomen (beispielsweise Furanyl, Imidazolyl, Pyridyl, Thiazolyl, Pyrazolyl, Pyrimidyl, Pyrrolyl, Thienyl oder Triazolyl), Phenyl-C₁-C₆-alkyl oder Hetaryl-C₁-C₆-alkyl mit 5 oder 6 Ringatomen (beispielsweise Furanyl, Imidazolyl, Pyridyl, Thiazolyl, Pyrazolyl, Pyrimidyl, Pyrrolyl, Thienyl oder Triazolyl) oder
A und D stehen gemeinsam für jeweils gegebenenfalls substituiertes C₃-C₆-Alkandiyl oder C₃-C₆-Alkendiyl, worin gegebenenfalls eine Methylengruppe durch eine Carbonylgruppe, Sauerstoff oder Schwefel ersetzt ist und
wobei als Substituenten jeweils in Frage kommen:
Halogen, Hydroxy, Mercapto oder jeweils gegebenenfalls durch Halogen substituiertes C₁-C₁₀-Alkyl, C₁-C₆-Alkoxy, C₁-C₆-Alkylthio, C₃-C₇-Cycloalkyl, Phenyl oder Benzyloxy, oder eine weitere C₃-C₆-Alkandiylgruppierung, C₃-C₆-Alkendiylgruppierung oder eine Butadienylgruppierung, die gegebenenfalls durch C₁-C₆-Alkyl substituiert ist oder in der gegebenenfalls zwei benachbarte Substituenten mit den Kohlenstoffatomen, an die sie gebunden sind, einen weiteren gesättigten oder ungesättigten Cyclus mit 5 oder 6 Ringatomen bilden (im Fall der Verbindung der Formel (I-1) stehen A und D dann gemeinsam mit den Atomen, an die sie gebunden sind beispielsweise für die weiter unten genannten Gruppen AD-1 bis AD-10), der Sauerstoff oder Schwefel enthalten kann, oder worin gegebenenfalls eine der folgenden Gruppen 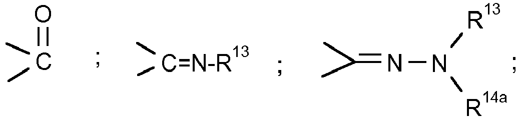 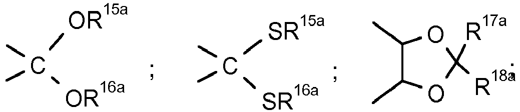 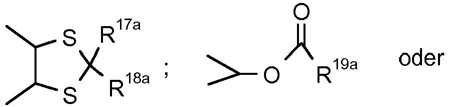 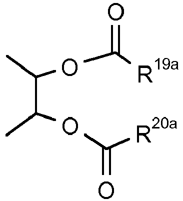 enthalten ist, oder
A und Q¹ stehen gemeinsam bevorzugt für jeweils gegebenenfalls einfach oder zweifach, gleich oder verschieden durch Halogen, Hydroxy, durch jeweils gegebenenfalls einfach bis dreifach, gleich oder verschieden durch Halogen substituiertes C₁-C₁₀-Alkyl, C₁-C₆-Alkoxy, C₁-C₆-Alkylthio, C₃-C₇-Cycloalkyl oder durch jeweils gegebenenfalls einfach bis dreifach, gleich oder verschieden durch Halogen, C₁-C₆-Alkyl oder C₁-C₆-Alkoxy substituiertes Benzyloxy oder Phenyl substituiertes C₃-C₆-Alkandiyl oder C₄-C₆-Alkendiyl, welches außerdem gegebenenfalls eine der nachstehenden Gruppen 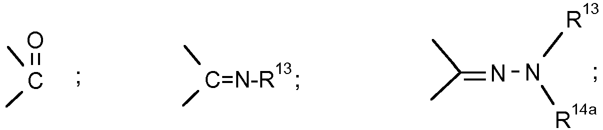 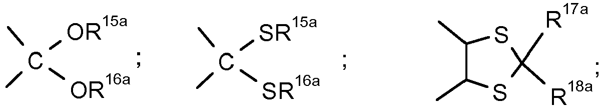 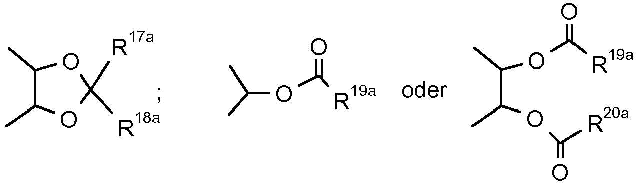
enthält oder durch eine C₁-C₂-Alkandiylgruppe oder durch ein Sauerstoffatom überbrückt ist oder
D und Q¹ stehen gemeinsam bevorzugt für jeweils gegebenenfalls einfach oder zweifach, gleich oder verschieden durch C₁-C₄-Alkyl, C₁-C₄-Alkoxy substituiertes C₃-C₆-Alkandiyl.
Q¹ steht für Wasserstoff, C₁-C₆-Alkyl, C₁-C₆-Alkoxy-C₁-C₂-alkyl, gegebenenfalls durch Fluor, Chlor, C₁-C₄-Alkyl, C₁-C₂-Halogenalkyl oder C₁-C₄-Alkoxy substituiertes C₃-C₈-Cycloalkyl, worin gegebenenfalls eine Methylengruppe durch Sauerstoff oder Schwefel ersetzt ist oder gegebenenfalls durch Halogen, C₁-C₄-Alkyl, C₁-C₄-Alkoxy, C₁-C₂-Halogenalkyl, C₁-C₂-Halogenalkoxy, Cyano oder Nitro substituiertes Phenyl oder
Q² Q⁴ und Q⁶ stehen unabhängig voneinander bevorzugt für Wasserstoff oder C₁-C₄-Alkyl,
Q³ steht für Wasserstoff, C₁-C₆-Alkyl, C₁-C₆-Alkoxy-C₁-C₂-alkyl, C₁-C₆-Alkylthio-C₁-C₂-alkyl, gegebenenfalls durch C₁-C₄-Alkyl oder C₁-C₄-Alkoxy substituiertes C₃-C₈-Cycloalkyl, worin gegebenenfalls eine Methylengruppe durch Sauerstoff oder Schwefel ersetzt ist oder gegebenenfalls durch Halogen, C₁-C₄-Alkyl, C₁-C₄-Alkoxy, C₁-C₂-Halogenalkyl, C₁-C₂-Halogenalkoxy, Cyano oder Nitro substituiertes Phenyl.
Q1 und Q2 stehen mit dem Kohlenstoffatom, an das sie gebunden sind, für gegebenenfalls durch C₁-C₆-Alkyl, C₁-C₆-Alkoxy oder C₁-C₂-Halogenalkyl substituierten C₃-C₇-Ring, in welchem gegebenenfalls ein Ringglied durch Sauerstoff oder Schwefel ersetzt ist,
Q³ und Q⁴ stehen gemeinsam mit dem Kohlenstoffatom, an das sie gebunden sind, für einen gegebenenfalls durch C₁-C₄-Alkyl, C₁-C₄-Alkoxy oder C₁-C₂-Halogenalkyl substituierten C₃-C₇-Ring, in welchem gegebenenfalls ein Ringglied durch Sauerstoff oder Schwefel ersetzt ist,
G steht bevorzugt für Wasserstoff (a) oder für eine der Gruppen 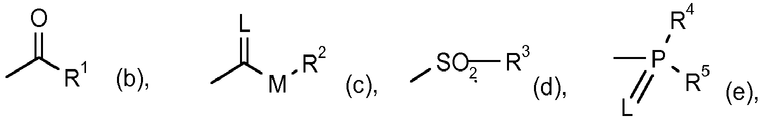 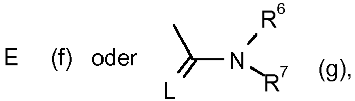 insbesondere für (a), (b), (c) oder (g)
in welchen
E für ein Metallionäquivalent oder ein Ammoniumion steht,
L für Sauerstoff oder Schwefel steht und
M für Sauerstoff oder Schwefel steht,
R¹ steht bevorzugt für jeweils gegebenenfalls durch Halogen substituiertes C₁-C₂₀-Alkyl, C₂-C₂₀-Alkenyl, C₁-C₈-Alkoxy-C₁-C₈-alkyl, C₁-C₈-Alkylthio-C₁-C₈-alkyl, Poly-C₁-C₈-alkoxy-C₁-C₈-alkyl oder gegebenenfalls durch Halogen, C₁-C₆-Alkyl oder C₁-C₆-Alkoxy substituiertes C₃-C₈-Cycloalkyl, in welchem gegebenenfalls ein oder mehrere (bevorzugt nicht mehr als zwei) nicht direkt benachbarte Ringglieder durch Sauerstoff und/oder Schwefel ersetzt sind,
für gegebenenfalls durch Halogen, Cyano, Nitro, C₁-C₆-Alkyl, C₁-C₆-Alkoxy, C₁-C₆-Halogenalkyl, C₁-C₆-Halogenalkoxy, C₁-C₆-Alkylthio oder C₁-C₆-Alkylsulfonyl substituiertes Phenyl,
für gegebenenfalls durch Halogen, Nitro, Cyano, C₁-C₆-Alkyl, C₁-C₆-Alkoxy, C₁-C₆-Halogenalkyl oder C₁-C₆-Halogenalkoxy substituiertes Phenyl-C₁-C₆-alkyl, für gegebenenfalls durch Halogen oder C₁-C₆-Alkyl substituiertes 5- oder 6-gliedriges Hetaryl (beispielsweise Pyrazolyl, Thiazolyl, Pyridyl, Pyrimidyl, Furanyl oder Thienyl),
für gegebenenfalls durch Halogen oder C₁-C₆-Alkyl substituiertes Phenoxy-C₁-C₆-alkyl oder
für gegebenenfalls durch Halogen, Amino oder C₁-C₆-Alkyl substituiertes 5- oder 6-gliedriges Hetaryloxy-C₁-C₆-alkyl (beispielsweise Pyridyloxy-C₁-C₆-alkyl, Pyrimidyloxy-C₁-C₆-alkyl oder Thiazolyloxy-C₁-C₆-alkyl),
R² steht für jeweils gegebenenfalls durch Halogen substituiertes C₁-C₂₀-Alkyl, C₂-C₂₀-Alkenyl, C₁-C₈-Alkoxy-C₂-C₈-alkyl, Poly-C₁-C₈-alkoxy-C₂-C₈-alkyl,
für gegebenenfalls durch Halogen, C₁-C₆-Alkyl oder C₁-C₆-Alkoxy substituiertes C₃-C₈-Cycloalkyl oder
für jeweils gegebenenfalls durch Halogen, Cyano, Nitro, C₁-C₆-Alkyl, C₁-C₆-Alkoxy, C₁-C₆-Halogenalkyl oder C₁-C₆-Halogenalkoxy substituiertes Phenyl oder Benzyl,
R³ steht für gegebenenfalls durch Halogen substituiertes C₁-C₈-Alkyl oder für jeweils gegebenenfalls durch Halogen, C₁-C₆-Alkyl, C₁-C₆-Alkoxy, C₁-C₄-Halogenalkyl, C₁-C₄-Halogenalkoxy, Cyano oder Nitro substituiertes Phenyl oder Benzyl,
R⁴ und R⁵ stehen unabhängig voneinander für jeweils gegebenenfalls durch Halogen substituiertes C₁-C₈-Alkyl, C₁-C₈-Alkoxy, C₁-C₈-Alkylamino, Di-(C₁-C₈-alkyl)amino, C₁-C₈-Alkylthio, C₂-C₈-Alkenylthio, C₃-C₇-Cycloalkylthio oder für jeweils gegebenenfalls durch Halogen, Nitro, Cyano, C₁-C₄-Alkoxy, C₁-C₄-Halogenalkoxy, C₁-C₄-Alkylthio, C₁-C₄-Halogenalkylthio, C₁-C₄-Alkyl oder C₁-C₄-Halogenalkyl substituiertes Phenyl, Phenoxy oder Phenylthio,
R⁶ und R⁷ stehen unabhängig voneinander für Wasserstoff, für jeweils gegebenenfalls durch Halogen substituiertes C₁-C₈-Alkyl, C₃-C₈-Cycloalkyl, C₁-C₈-Alk_{O}x_{Y}, C₃-C₈-Alkenyl, C₁-C₈-Alkoxy-C₁-C₈-alkyl, für gegebenenfalls durch Halogen, C₁-C₈-Halogenalkyl, C₁-C₈-Alkyl oder C₁-C₈-Alkoxy substituiertes Phenyl, gegebenenfalls durch Halogen, C₁-C₈-Alkyl, C₁-C₈-Halogenalkyl oder C₁-C₈-Alkoxy substituiertes Benzyl oder zusammen für einen gegebenenfalls durch C₁-C₄-Alkyl substituierten C₃-C₆-Alkylenrest, in welchem gegebenenfalls ein Kohlenstoffatom durch Sauerstoff oder Schwefel ersetzt ist,
R¹³ steht für Wasserstoff, für jeweils gegebenenfalls durch Halogen substituiertes C₁-C₈-Alkyl oder C₁-C₈-Alkoxy, für gegebenenfalls durch Halogen, C₁-C₄-Alkyl oder C₁-C₄-Alkoxy substituiertes C₃-C₈-Cycloalkyl, in welchem gegebenenfalls eine Methylengruppe durch Sauerstoff oder Schwefel ersetzt ist, oder für jeweils gegebenenfalls durch Halogen, C₁-C₆-Alkyl, C₁-C₆-Alkoxy, C₁-C₄-Halogenalkyl, C₁-C₄-Halogenalkoxy, Nitro oder Cyano substituiertes Phenyl, Phenyl-C₁-C₄-alkyl oder Phenyl-C₁-C₄-alkoxy,
R^{14a} steht für Wasserstoff oder C₁-C₈-Alkyl oder
R¹³ und R^{14a} stehen gemeinsam für C₄-C₆-Alkandiyl,
R^{15a} und R^{16a} sind gleich oder verschieden und stehen für C₁-C₆-Alkyl oder
R^{15a} und R^{16a} stehen gemeinsam für einen C₂-C₄-Alkandiylrest, der gegebenenfalls durch C₁-C₆-Alkyl, C₁-C₆-Halogenalkyl oder durch gegebenenfalls durch Halogen, C₁-C₆-Alkyl, C₁-C₄-Halogenalkyl, C₁-C₆-Alkoxy, C₁-C₄-Halogenalkoxy, Nitro oder Cyano substituiertes Phenyl substituiert ist,
R^{17a} und R^{18a} stehen unabhängig voneinander für Wasserstoff, für gegebenenfalls durch Halogen substituiertes C₁-C₈-Alkyl oder für gegebenenfalls durch Halogen, C₁-C₆-Alkyl, C₁-C₆-Alkoxy, C₁-C₄-Halogenalkyl, C₁-C₄-Halogenalkoxy, Nitro oder Cyano substituiertes Phenyl oder
R^{17a} und R^{18a} stehen gemeinsam mit dem Kohlenstoffatom, an das sie gebunden sind, für eine Carbonylgruppe oder für gegebenenfalls durch Halogen, C₁-C₄-Alkyl oder C₁-C₄-Alkoxy substituiertes C₅-C₇-Cycloalkyl, in dem gegebenenfalls eine Methylengruppe durch Sauerstoff oder Schwefel ersetzt ist,
R^{19a} und R^{20a} stehen unabhängig voneinander für C₁-C₁₀-Alkyl, C₂-C₁₀-Alkenyl, C₁-C₁₀-Alkoxy, C₁-C₁₀-Alkylamino, C₃-C₁₀-Alkenylamino, Di-(C₁-C₁₀-alkyl)amino oder Di-(C₃-C₁₀-alkenyl)amino.

3. Zusammensetzung gemäß Anspruch 1 oder 2, **dadurch gekennzeichnet, dass** die Substituenten in der Formel (I) folgendermaßen definiert sind:
W steht für Wasserstoff, Fluor, Chlor, Brom, C₁-C₄-Alkyl, C₂-C₄-Alkenyl, C₂-C₄-Alkinyl, C₁-C₄-Alkoxy, C₁-C₂-Halogenalkyl oder C₁-C₂-Halogenalkoxy,
X steht für Chlor, Brom, Iod, C₁-C₄-Alkyl, C₂-C₄-Alkenyl, C₂-C₄-Alkinyl, C₁-C₄-Alkoxy, C₁-C₄-Alkoxy-C₁-C₃-alkoxy, C₁-C₂-Halogenalkyl, C₁-C₂-Halogenalkoxy oder Cyano,
Y steht in der 4-Position für Wasserstoff, C₂-C₄-Alkenyl, C₂-C₄-Alkinyl, Fluor, Chlor, Brom, Iod, Methoxy, Ethoxy, Cyano, Trifluormethyl, Difluormethoxy oder Trifluormethoxy,
Z steht für Wasserstoff,
W steht auch für Wasserstoff, Fluor, Chlor, Brom oder C₁-C₄-Alkyl,
X steht auch für Chlor, Brom, C₁-C₄-Alkyl, C₁-C₄-Alkoxy, C₁-C₂-Halogenalkyl, C₁-C₂-Halogenalkoxy oder Cyano,
Y steht auch in der 4-Position für den Rest 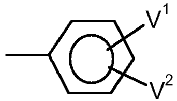
Z steht auch für Wasserstoff,
V¹ steht auch für Fluor, Chlor, C₁-C₄-Alkyl, C₁-C₄-Alkoxy, C₁-C₂-Halogenalkyl oder C₁-C₂-Halogenalkoxy, Cyano oder Nitro,
V² steht auch für Wasserstoff, Fluor, Chlor, C₁-C₄-Alkyl, C₁-C₄-Alkoxy oder C₁-C₂-Halogenalkyl,
V¹ und V² stehen gemeinsam auch für -O-CH₂-O- und -O-CF₂-O-,
W steht ebenfalls für Wasserstoff, Fluor, Chlor, Brom oder C₁-C₄-Alkyl,
X steht ebenfalls für Chlor, Brom, C₁-C₄-Alkyl, C₁-C₄-Alkoxy, C₁-C₂-Halogenalkyl, C₁-C₂-Halogenalkoxy oder Cyano,
Y steht ebenfalls in der 5-Position für C₂-C₄-Alkenyl, C₂-C₄-Alkinyl oder den Rest 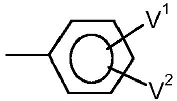
Z steht ebenfalls in der 4-Position für Wasserstoff, C₁-C₄-Alkyl oder Chlor,
V¹ steht ebenfalls für Fluor, Chlor, C₁-C₄-Alkyl, C₁-C₄-Alkoxy, C₁-C₂-Halogenalkyl oder C₁-C₂-Halogenalkoxy, Cyano oder Nitro,
V² steht ebenfalls für Wasserstoff, Fluor, Chlor, C₁-C₄-Alkyl, C₁-C₄-Alkoxy oder C₁-C₂-Halogenalkyl,
V¹ und V² stehen gemeinsam ebenfalls für -O-CH₂-O- und -O-CF₂-O-,
W steht außerdem für Wasserstoff, C₁-C₄-Alkyl, C₂-C₄-Alkenyl, C₂-C₄-Alkinyl, C₁-C₄-Alkoxy, Fluor, Chlor, Brom oder Trifluormethyl,
X steht außerdem für Fluor, Chlor, Brom, Iod, C₁-C₄-Alkyl, C₂-C₄-Alkenyl, C₂-C₄-Alkinyl, C₁-C₄-Alkoxy, C₁-C₄-Alkoxy-C₁-C₃-alkoxy, C₁-C₂-Halogenalkyl, C₁-C₂-Halogenalkoxy oder Cyano,
Y steht außerdem in der 4-Position für C₁-C₄-Alkyl,
Z steht außerdem für Wasserstoff,
W steht weiterhin für Wasserstoff, Fluor, Chlor, Brom, C₁-C₄-Alkyl oder C₁-C₄-Alkoxy,
X steht weiterhin für Chlor, Brom, Iod, C₁-C₄-Alkyl, C₁-C₄-Alkoxy, C₁-C₂-Halogenalkyl, C₁-C₂-Halogenalkoxy oder Cyano,
Y steht weiterhin in der 4-Position für Wasserstoff, Chlor, Brom, Iod, C₁-C₄-Alkyl, C₁-C₂-Halogenalkyl oder C₁-C₂-Halogenalkoxy,
Z steht weiterhin in der 3- oder 5-Position für Fluor, Chlor, Brom, Iod, C₁-C₄-Alkyl, C₁-C₂-Halogenalkyl, C₁-C₄-Alkoxy oder C₁-C₂-Halogenalkoxy.
CKE steht besonders bevorzugt für eine der Gruppen 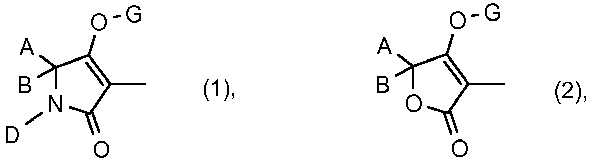 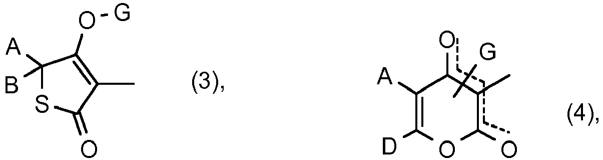 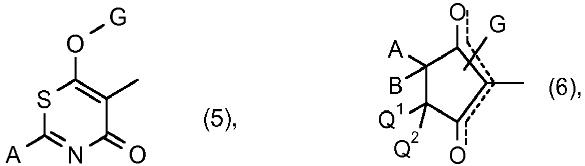 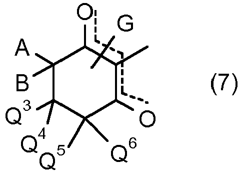 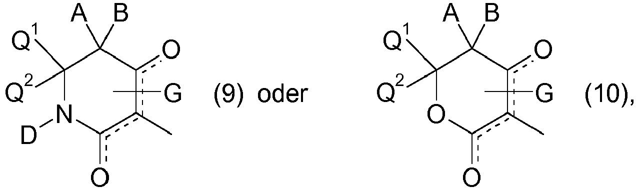
A steht für Wasserstoff, jeweils gegebenenfalls einfach bis dreifach durch Fluor oder Chlor substituiertes C₁-C₆-Alkyl, C₁-C₄-Alkoxy-C₁-C₂-alkyl, gegebenenfalls einfach bis zweifach durch C₁-C₂-Alkyl oder C₁-C₂-Alkoxy substituiertes C₃-C₆-Cycloalkyl oder (jedoch nicht im Fall der Verbindungen der Formeln (I-3), (I-4), (I-6) und (I-7)) jeweils gegebenenfalls einfach bis zweifach durch Fluor, Chlor, Brom, C₁-C₄-Alkyl, C₁-C₂-Halogenalkyl, C₁-C₄-Alkoxy, C₁-C₂-Halogenalkoxy, Cyano oder Nitro substituiertes Phenyl oder Benzyl,
B steht für Wasserstoff, C₁-C₄-Alkyl oder C₁-C₂-Alkoxyl-C₁-C₂-alkyl oder
A, B und das Kohlenstoffatom an das sie gebunden sind, stehen für gesättigtes oder ungesättigtes C₅-C₇-Cycloalkyl, worin gegebenenfalls ein Ringglied durch Sauerstoff oder Schwefel ersetzt ist und welches gegebenenfalls einfach bis zweifach durch C₁-C₆-Alkyl, Trifluormethyl, C₁-C₆-Alkoxy oder C₁-C₃-Alkoxy-C₁-C₃-alkoxy substituiert ist mit der Maßgabe, dass dann Q³ für Wasserstoff oder Methyl steht oder
A, B und das Kohlenstoffatom, an das sie gebunden sind, stehen für C₅-C₆-Cycloalkyl, welches durch eine gegebenenfalls ein oder zwei nicht direkt benachbarte Sauerstoff- oder Schwefelatome enthaltende gegebenenfalls durch Methyl oder Ethyl substituierte Alkylendiyl- oder durch eine Alkylendioxyl- oder durch eine Alkylendithiol-Gruppe substituiert ist, die mit dem Kohlenstoffatom, an das sie gebunden ist, einen weiteren fünf- oder sechsgliedrigen Ring bildet mit der Maßgabe, dass dann Q³ für Wasserstoff oder Methyl steht, oder
A, B und das Kohlenstoffatom, an das sie gebunden sind, stehen für C₃-C₆-Cycloalkyl oder C₅-C₆-Cycloalkenyl, in welchen zwei Substituenten gemeinsam mit den Kohlenstoffatomen, an die sie gebunden sind, für jeweils gegebenenfalls durch C₁-C₂-Alkyl oder C₁-C₂-Alkoxy substituiertes C₂-C₄-Alkandiyl, C₂-C₄-Alkendiyl oder Butadiendiyl stehen, mit der Maßgabe, dass dann Q³ für Wasserstoff oder Methyl steht,
D steht für Wasserstoff, für jeweils gegebenenfalls einfach bis dreifach durch Fluor substituiertes C₁-C₆-Alkyl, C₃-C₆-Alkenyl, C₁-C₄-Alkoxy-C₂-C₃-alkyl, für gegebenenfalls einfach bis zweifach durch C₁-C₄-Alkyl, C₁-C₄-Alkoxy oder C₁-C₂-Halogenalkyl substituiertes C₃-C₆-Cycloalkyl, in welchem gegebenenfalls eine Methylengruppe durch Sauerstoff ersetzt ist oder (jedoch nicht im Fall der Verbindungen der Formeln (I-1)) für jeweils gegebenenfalls einfach bis zweifach durch Fluor, Chlor, Brom, C₁-C₄-Alkyl, C₁-C₄-Halogenalkyl, C₁-C₄-Alkoxy oder C₁-C₄-Halogenalkoxy substituiertes Phenyl oder Pyridyl, oder
A und D stehen gemeinsam für gegebenenfalls einfach bis zweifach substituiertes C₃-C₅-Alkandiyl, in welchem eine Methylengruppe durch eine Carbonylgruppe (nicht jedoch im Fall der Verbindungen der Formel (I-1)), Sauerstoff oder Schwefel ersetzt sein kann, wobei als Substituenten C₁-C₂-Alkyl oder C₁-C₂-Alkoxy in Frage kommen oder
A und D stehen (im Fall der Verbindungen der Formel (I-1)) gemeinsam mit den Atomen, an die sie gebunden sind, für eine der Gruppen AD-1 bis AD-10: 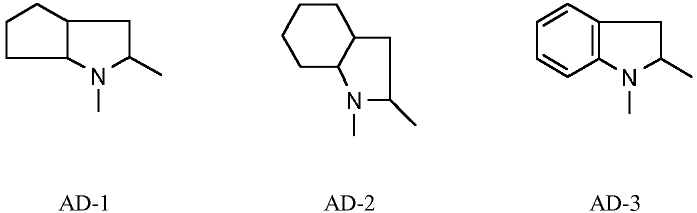 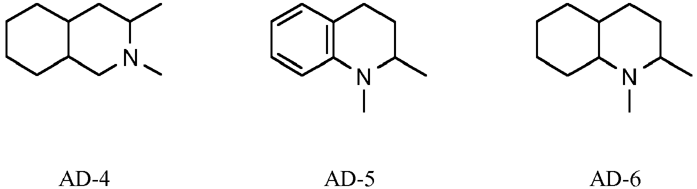 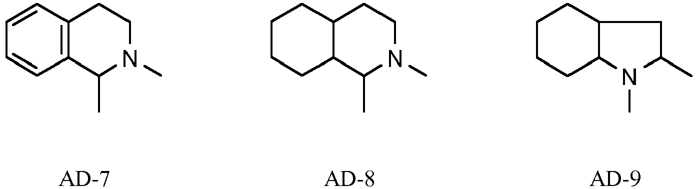 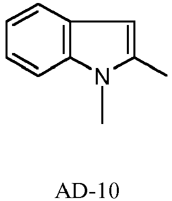
oder
A und Q¹ stehen gemeinsam für jeweils gegebenenfalls einfach oder zweifach, gleich oder verschieden durch C₁-C₂-Alkyl oder C₁-C₂-Alkoxy substituiertes C₃-C₄-Alkandiyl oder
D und Q¹ stehen gemeinsam für C₃-C₄-Alkandiyl, oder
Q¹ steht für Wasserstoff, C₁-C₄-Alkyl, C₁-C₄-Alkoxy-C₁-C₂-alkyl, oder gegebenenfalls durch Methyl oder Methoxy substituiertes C₃-C₆-Cycloalkyl, worin gegebenenfalls eine Methylengruppe durch Sauerstoff ersetzt ist,
Q² steht für Wasserstoff, Methyl oder Ethyl,
Q⁴, Q⁵ und Q⁶ stehen unabhängig voneinander für Wasserstoff oder C₁-C₃-Alkyl,
Q³ steht für Wasserstoff, C₁-C₄-Alkyl, oder gegebenenfalls einfach bis zweifach durch Methyl oder Methoxy substituiertes C₃-C₆-Cycloalkyl, oder
Q¹ und Q² steht für Wasserstoff, C₁-C₄-Alkyl, C₁-C₄-Alkoxy-C₁-C₂-alkyl, oder gegebenenfalls durch Methyl oder Methoxy substituiertes C₃-C₆-Cycloalkyl, worin gegebenenfalls eine Methylengruppe durch Sauerstoff ersetzt ist, oder
Q³ und Q⁴ stehen gemeinsam mit dem Kohlenstoff, an das sie gebunden sind, für einen gegebenenfalls durch C₁-C₂-Alkyl oder C₁-C₂-Alkoxy substituierten gesättigten C₅-C₆-Ring, in welchem gegebenenfalls ein Ringglied durch Sauerstoff oder Schwefel ersetzt ist, mit der Maßgabe, dass dann A für Wasserstoff oder Methyl steht,
G steht für Wasserstoff (a) oder für eine der Gruppen 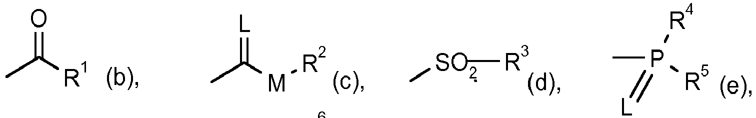 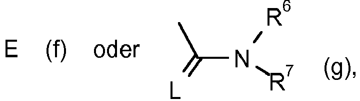 insbesondere für (a), (b) oder (c),
in welchen
E für ein Metallionäquivalent oder ein Ammoniumion steht,
L für Sauerstoff oder Schwefel steht und
M für Sauerstoff oder Schwefel steht,
R¹ steht für jeweils gegebenenfalls einfach bis dreifach durch Fluor oder Chlor substituiertes C₁-C₈-Alkyl, C₂-C₁₈-Alkenyl, C₁-C₄-Alkoxy-C₁-C₂-alkyl, C₁-C₄-Alkylthio-C₁-C₂-alkyl oder gegebenenfalls einfach bis zweifach durch Fluor, Chlor, C₁-C₂-Alkyl oder C₁-C₂-Alkoxy substituiertes C₃-C₆-Cycloalkyl, in welchem gegebenenfalls ein oder zwei nicht direkt benachbarte Ringglieder durch Sauerstoff ersetzt sind,
für gegebenenfalls einfach bis zweifach durch Fluor, Chlor, Brom, Cyano, Nitro, C₁-C₄-Alkyl, C₁-C₄-Alkoxy, C₁-C₂-Halogenalkyl oder C₁-C₂-Halogenalkoxy substituiertes Phenyl,
R² steht für jeweils gegebenenfalls einfach bis dreifach durch Fluor substituiertes C₁-C₈-Alkyl, C₂-C₈-Alkenyl oder C₁-C₄-Alkoxy-C₂-C₄-alkyl,
für gegebenenfalls einfach durch C₁-C₂-Alkyl oder C₁-C₂-Alkoxy substituiertes C₃-C₆-Cycloalkyl oder
für jeweils gegebenenfalls einfach bis zweifach durch Fluor, Chlor, Brom, Cyano, Nitro, C₁-C₄-Alkyl, C₁-C₃-Alkoxy, Trifluormethyl oder Trifluormethoxy substituiertes Phenyl oder Benzyl,
R³ steht für gegebenenfalls einfach bis dreifach durch Fluor substituiertes C₁-C₆-Alkyl oder für gegebenenfalls einfach durch Fluor, Chlor, Brom, C₁-C₄-Alkyl, C₁-C₄-Alkoxy, Trifluormethyl, Trifluormethoxy, Cyano oder Nitro substituiertes Phenyl,
R⁴ steht für C₁-C₆-Alkyl, C₁-C₆-Alkoxy, C₁-C₆-Alkylamino, Di-(C₁-C₆-alkyl)amino, C₁-C₆-Alkylthio, C₃-C₄-Alkenylthio, C₃-C₆-Cycloalkylthio oder für jeweils gegebenenfalls einfach durch Fluor, Chlor, Brom, Nitro, Cyano, C₁-C₃-Alkoxy, C₁-C₃-Halogenalkoxy, C₁-C₃-Alkylthio, C₁-C₃-Halogenalkylthio, C₁-C₃-Alkyl oder Trifluormethyl substituiertes Phenyl, Phenoxy oder Phenylthio,
R⁵ steht für C₁-C₆-Alkoxy oder C₁-C₆-Alkylthio,
R⁶ steht für Wasserstoff, C₁-C₆-Alkyl, C₃-C₆-Cycloalkyl, C₁-C₆-Alkoxy, C₃-C₆-Alkenyl, C₁-C₆-Alkoxy-C₁-C₄-alkyl, für gegebenenfalls einfach durch Fluor, Chlor, Brom, Trifluormethyl, C₁-C₄-Alkyl oder C₁-C₄-Alkoxy substituiertes Phenyl, für gegebenenfalls einfach durch Fluor, Chlor, Brom, C₁-C₄-Alkyl, Trifluormethyl oder C₁-C₄-Alkoxy substituiertes Benzyl,
R⁷ steht für C₁-C₆-Alkyl, C₃-C₆-Alkenyl oder C₁-C₆-Alkoxy-C₁-C₄-alkyl,
R⁶ und R⁷ stehen zusammen für einen gegebenenfalls durch Methyl oder Ethyl substituierten C,₄-C₅-Alkylenrest, in welchem gegebenenfalls eine Methylengruppe durch Sauerstoff oder Schwefel ersetzt ist.

4. Zusammensetzung gemäß einem der Ansprüche 1 bis 3, **dadurch gekennzeichnet, dass** der Wirkstoff aus der folgenden Liste ausgewählt ist

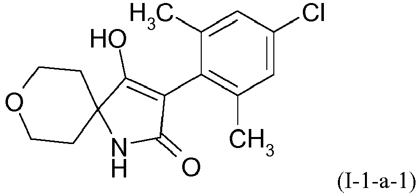

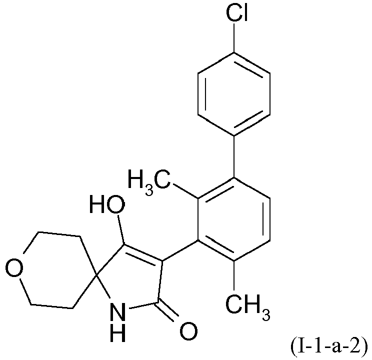

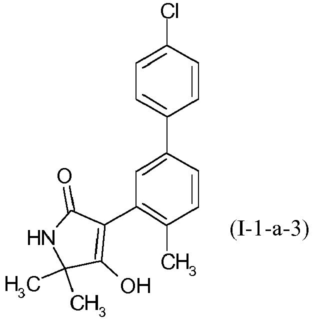

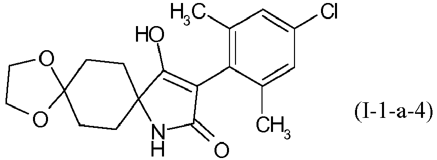

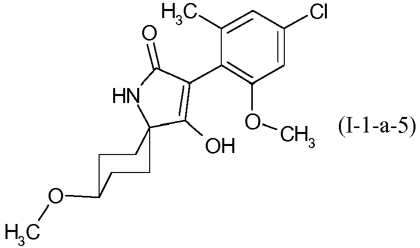

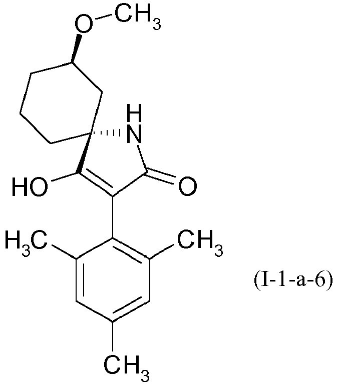

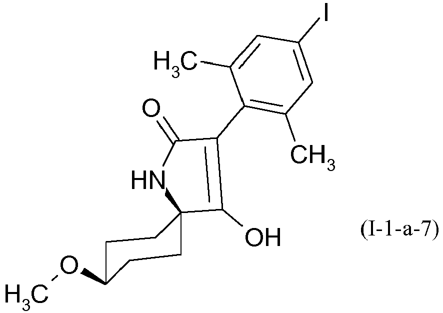

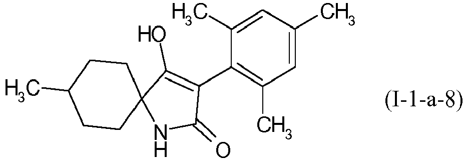

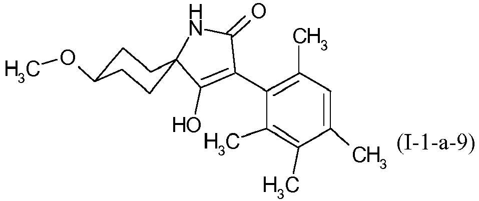

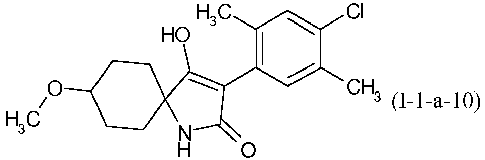

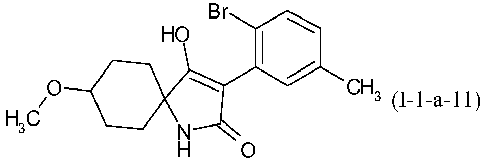

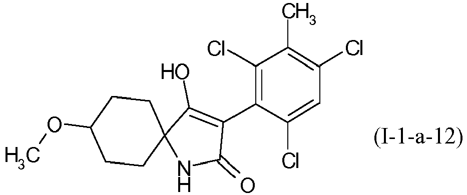

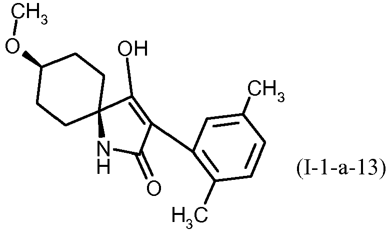

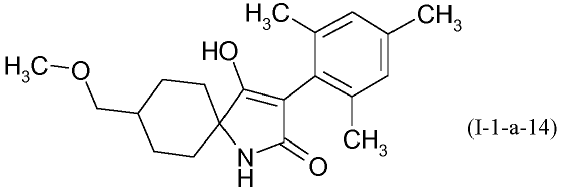

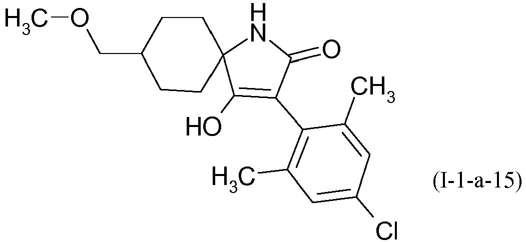

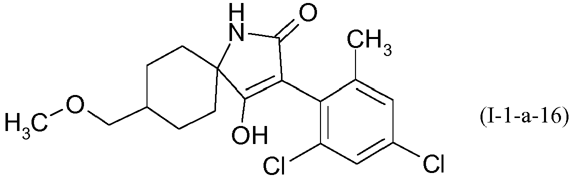

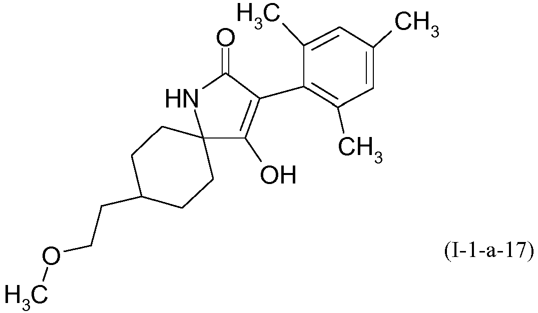

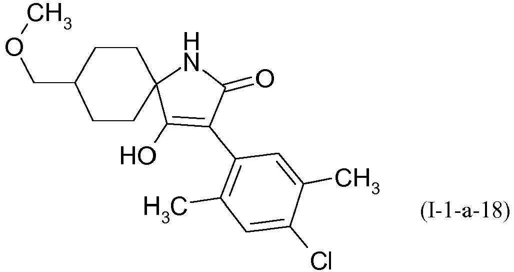

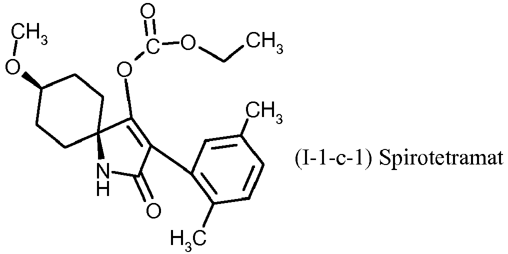

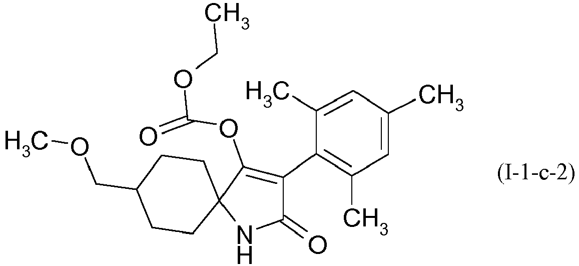

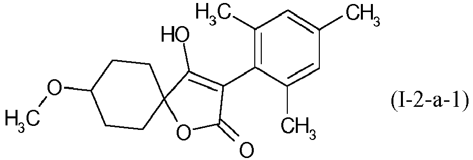

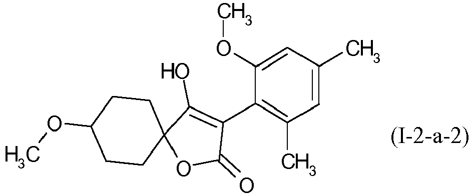

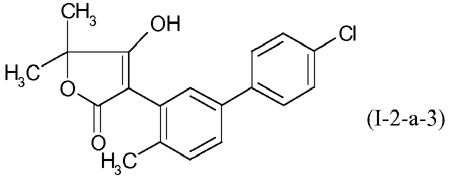

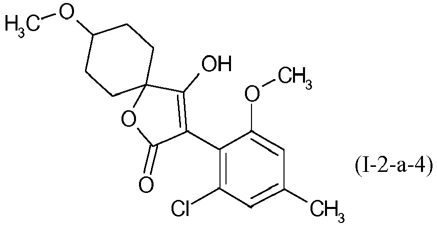

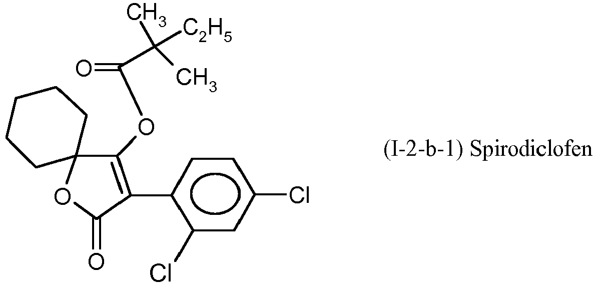

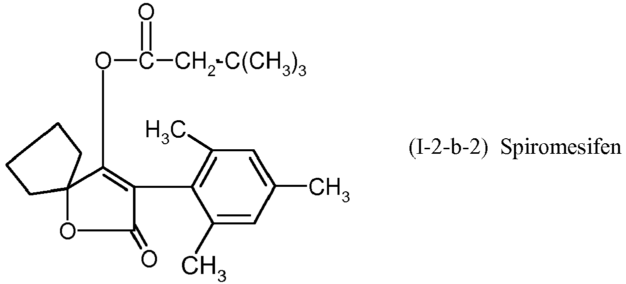

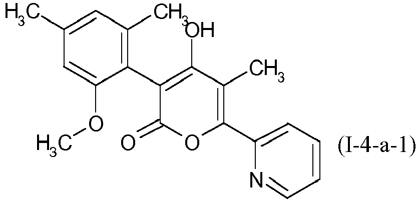

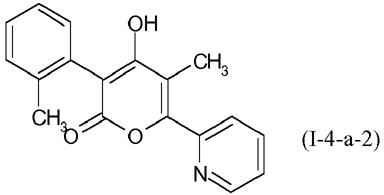

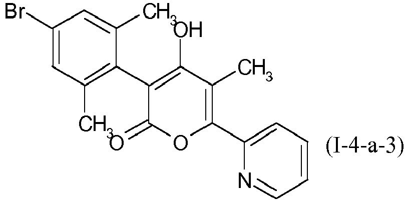

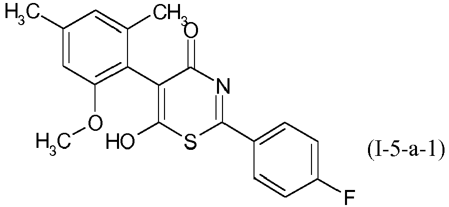

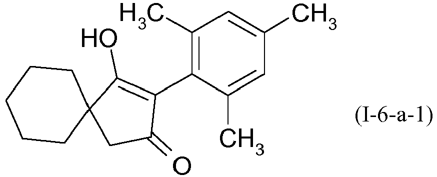

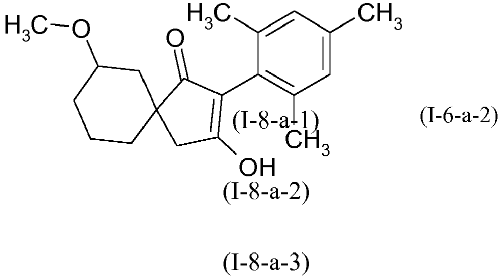

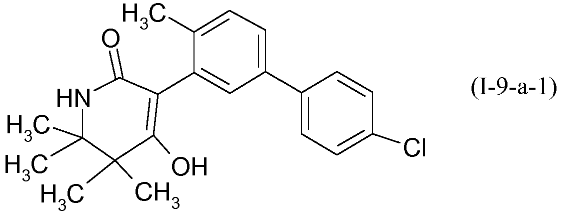

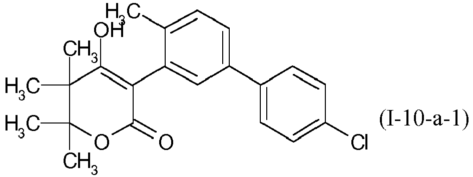

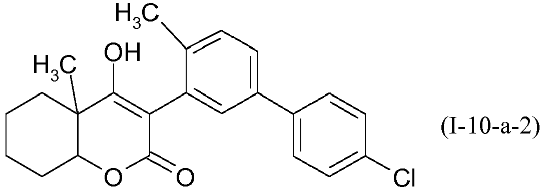

5. Zusammensetzung gemäß einem oder mehreren der Ansprüche 1 bis 4, **dadurch gekennzeichnet, dass** der Wirkstoffgehalt zwischen 0,5 und 50 Gew.-% beträgt.

6. Zusammensetzung gemäß einem oder mehreren der Ansprüche 1 bis 5, **dadurch gekennzeichnet, dass** der Gehalt an Ammonium- oder Phosphoniumsalz zwischen 0,5 und 80 mmol/l beträgt.

7. Zusammensetzung gemäß einem der Ansprüche 1 bis 6, **dadurch gekennzeichnet, dass** D für Stickstoff steht.

8. Zusammensetzung gemäß Anspruch 7, **dadurch gekennzeichnet, dass** R³⁰ für Hydrogencarbonat, Tetraborat, Fluorid, Bromid, Jodid, Chlorid, Monohydrogenphosphat, Dihydrogenphosphat, Hydrogensulfat, Tartrat, Sulfat, Nitrat, Thiosulfat, Thiocyanat, Formiat, Laktat, Acetat, Propionat, Butyrat, Pentanoat, Citrat oder Oxalat steht.

9. Zusammensetzung gemäß Anspruch 7, **dadurch gekennzeichnet, dass** R³⁰ für Carbonat, Pentaborat, Sulfit, Benzoat, Hydrogenoxalat, Hydrogencitrat, Methylsulfat oder Tetrafluoroborat steht.

10. Zusammensetzung gemäß Anspruch 7, **dadurch gekennzeichnet, dass** R³⁰ für Laktat, Sulfat, Nitrat, Thiosulfat, Thiocyanat, Citrat, Oxalat oder Formiat steht.

11. Zusammensetzung gemäß Anspruch 7, **dadurch gekennzeichnet, dass** R³⁰ für Thiocyanat, Dihydrogenphosphat, Monohydrogenphosphat oder Sulfat steht.

12. Zusammensetzung gemäß einem der Ansprüche 1 bis 11, **dadurch gekennzeichnet, dass** der Penetrationsförderer Ester eines vegetabilen Öls ist.

13. Zusammensetzung gemäß einem der Ansprüche 1 bis 11, **dadurch gekennzeichnet, dass** der Penetrationsförderer Rapsölmethylester ist.

14. Zusammensetzung gemäß einem der Ansprüche 1 bis 13, **dadurch gekennzeichnet, dass** der Gehalt an Penetrationsförderer 1 bis 95 Gew.-% beträgt.

15. Verfahren zur Bekämpfung von Schadinsekten und/oder Spinnmilben, **dadurch gekennzeichnet, dass** eine Zusammensetzung gemäß einem oder mehreren der Ansprüche 1 bis 14 unverdünnt oder verdünnt in solcher Menge auf Insekten und/oder Spinnmilben oder ihren Lebensraum appliziert wird, dass eine wirksame Menge der enthaltenen Wirkstoffe auf die Insekten und/oder Spinnmilben oder ihren Lebensraum wirkt.

16. Verfahren zur Steigerung der Wirkung von Pflanzenschutzmitteln enthaltend einen Wirkstoff aus der Klasse der phenylsubstituierten cyclischen Ketoenole der Formel (I) gemäß Anspruch 1, **dadurch gekennzeichnet, dass** das anwendungsfertige Mittel (Spritzbrühe) unter Einsatz eines Salzes der Formel (II) sowie einem Penetrationsförderer gemäß Anspruch 1 zubereitet wird.

17. Verfahren gemäß Anspruch 16, **dadurch gekennzeichnet, dass** das Salz der Formel (II) in einer Endkonzentration von 0,5 bis 80 mmol/l vorliegt.

18. Verfahren gemäß Anspruch 16, **dadurch gekennzeichnet, dass** der Penetrationsförderer in einer Endkonzentration von 0,1 bis 10 g/l vorliegt.

19. Verfahren gemäß Anspruch 16, **dadurch gekennzeichnet, dass** der Penetrationsförderer in einer Endkonzentration von 0,1 bis 10 g/l und das Salz der Formel (II) in einer Endkonzentration von 0,5 bis 80 mmol/l vorliegt.

20. Verwendung eines Salzes der Formel (II) gemäß Anspruch 1 zur Steigerung der Wirkung eines Pflanzenschutzmittels enthaltend einen Wirkstoff aus der Klasse der phenylsubstituierten cyclischen Ketoenole, **dadurch gekennzeichnet, dass** das Salz der Formel (II) sowie ein Penetrationsförderer gemäß Anspruch 1 bei der Zubereitung eines anwendungsfertigen Pflanzenschutzmittels (Spritzbrühe) eingesetzt wird.

21. Verwendung gemäß Anspruch 20, **dadurch gekennzeichnet, dass** das Salz der Formel (II) in dem anwendungsfertigen Pflanzenschutzmittel in einer Konzentration von 0,5 bis 80 mmol/l vorliegt.

## Claims

1. Composition comprising
- at least one active insecticidal and/or acaricidal ingredient from the class of the phenyl-substituted cyclic ketoenols of the general formula (I) 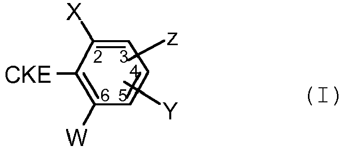 in which
W is hydrogen, alkyl, alkenyl, alkynyl, halogen, alkoxy, haloalkyl, haloalkoxy or cyano,
X is halogen, alkyl, alkenyl, alkynyl, alkoxy, alkoxy-alkoxy, haloalkyl, haloalkoxy or cyano,
Y is hydrogen, halogen, alkyl, alkenyl, alkynyl, alkoxy, cyano, haloalkyl, haloalkoxy or in each case optionally substituted phenyl or hetaryl,
Z is hydrogen, halogen, alkyl, haloalkyl, cyano, alkoxy or haloalkoxy,
CKE is one of the groups 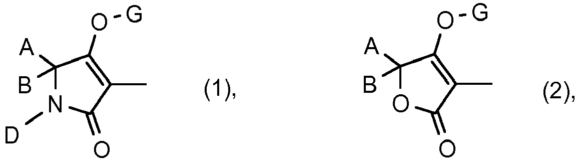 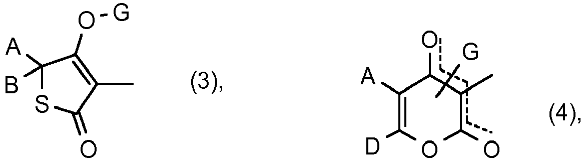 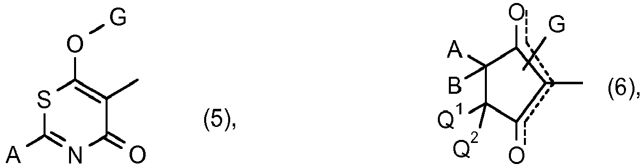 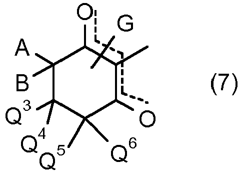 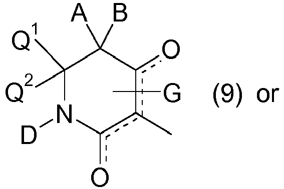 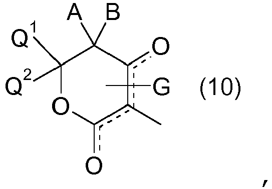 in which
A is hydrogen, in each case optionally halogen-substituted alkyl, alkenyl, alkoxyalkyl, alkylthioalkyl, saturated or unsaturated, optionally substituted cycloalkyl in which optionally at least one ring atom is replaced by a heteroatom, or in each case optionally halogen-, alkyl-, haloalkyl-, alkoxy-, haloalkoxy-, cyano- or nitro-substituted aryl, arylalkyl or hetaryl,
B is hydrogen, alkyl or alkoxyalkyl, or
A and B, together with the carbon atom to which they are attached, are a saturated or unsaturated, unsubstituted or substituted ring optionally containing at least one heteroatom,
D is hydrogen or an optionally substituted radical from the series alkyl, alkenyl, alkynyl, alkoxyalkyl, saturated or unsaturated cycloalkyl in which optionally one or more ring members are replaced by heteroatoms, or is arylalkyl, aryl, hetarylalkyl or hetaryl, or
A and D, together with the atoms to which they are attached, are a saturated or unsaturated ring which optionally contains at least one heteroatom and is substituted or unsubstituted in the A,D moiety, or
A and Q¹ together are alkenediyl or alkanediyl optionally substituted by hydroxyl or by in each case optionally substituted alkyl, alkoxy, alkylthio, cycloalkyl, benzyloxy or aryl, or
D and Q¹, together with the atoms to which they are attached, are a saturated or unsaturated ring which optionally contains at least one heteroatom and is substituted or unsubstituted in the D, Q¹ moiety,
Q¹ is hydrogen, alkyl, alkoxyalkyl, optionally substituted cycloalkyl (in which optionally one methylene group is replaced by oxygen or sulphur) or optionally substituted phenyl.
Q², Q⁴, Q⁵ and Q⁶ independently of one another are hydrogen or alkyl,
Q³ is hydrogen, is optionally substituted alkyl, alkoxyalkyl, alkylthioalkyl, optionally substituted cycloalkyl (in which optionally one methylene group is replaced by oxygen or sulphur) or optionally substituted phenyl, or
Q¹ and Q², together with the carbon atom to which they are attached, are a substituted or unsubstituted ring optionally containing a heteroatom, or
Q³ and Q⁴, together with the carbon atom to which they are attached, are a saturated or unsaturated, unsubstituted or substituted ring optionally containing a heteroatom,
G is hydrogen (a) or is one of the groups 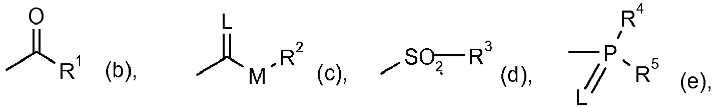 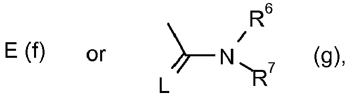
in which
E is one metal ion equivalent or an ammonium ion,
L is oxygen or sulphur,
M is oxygen or sulphur,
R¹ is in each case optionally halogensubstituted alkyl, alkenyl, alkoxyalkyl, alkylthioalkyl, polyalkoxyalkyl or optionally halogen-, alkyl- or alkoxy-substituted cycloalkyl, which may be interrupted by at least one heteroatom, or is in each case optionally substituted phenyl, phenylalkyl, hetaryl, phenoxyalkyl or hetaryloxyalkyl,
R² is in each case optionally halogensubstituted alkyl, alkenyl, alkoxyalkyl, polyalkoxyalkyl or is in each case optionally substituted cycloalkyl, phenyl or benzyl,
R³, R⁴ and R⁵ independently of one another are in each case optionally halogensubstituted alkyl, alkoxy, alkylamino, dialkylamino, alkylthio, alkenylthio, cycloalkylthio or are in each case optionally substituted phenyl, benzyl, phenoxy or phenylthio,
R⁶ and R⁷ independently of one another are hydrogen, in each case optionally halogen-substituted alkyl, cycloalkyl, alkenyl, alkoxy, alkoxyalkyl, are optionally substituted phenyl, are optionally substituted benzyl, or, together with the N atom to which they are attached, are a ring which is optionally interrupted by oxygen or sulphur;
- at least one salt of the formula (II) 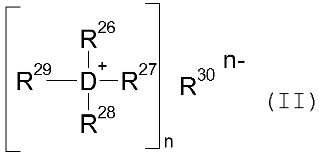 in which
D is nitrogen or phosphorus,
R²⁶, R²⁷ , R²⁸ and R²⁹ independently of one another are hydrogen or in each case optionally substituted C₁-C₈-alkyl or singly or multiply unsaturated, optionally substituted C₁-C₈-alkylene, the substituents being selectable from halogen, nitro and cyano,
n is 1, 2, 3 or 4,
R³⁰ is an organic or inorganic anion and
at least one penetrant, wherein the penetrant is a fatty alcohol alkoxylate of the formula (III)
R-O-(-AO)ᵥ-R' (III)
in which
R is linear or branched alkyl having 4 to 20 carbon atoms,
R' is hydrogen, methyl, ethyl, n-propyl, isopropyl, n-butyl, isobutyl, tert-butyl, n-pentyl or n-hexyl,
AO is an ethylene oxide radical, a propylene oxide radical, a butylene oxide radical or is mixtures of ethylene oxide and propylene oxide radicals or butylene oxide radicals, and
V is a number from 2 to 30,
or a mineral or vegetable oil or the ester of a mineral or vegetable oil.

2. Composition according to Claim 1, **characterized in that** the substituents in the formula (I) are as defined below:
W is hydrogen, C₁-C₆-alkyl, C₂-C₆-alkenyl, C₂-C₆-alkynyl, halogen, C₁-C₆-alkoxy, C₁-C₄-haloalkyl, C₁-C₄-haloalkoxy or cyano,
X is halogen, C₁-C₆-alkyl, C₂-C₆-alkenyl, C₂-C₆-alkynyl, C₁-C₆-alkoxy, C₁-C₆-alkoxy-C₁-C₄-alkoxy, C₁-C₄-haloalkyl, C₁-C₄-haloalkoxy or cyano,
Y is hydrogen, halogen, C₁-C₆-alkyl, C₂-C₆-alkenyl, C₂-C₆-alkynyl, C₁-C₆-alkoxy, cyano, C₁-C₄-haloalkyl, haloalkoxy, or is V¹- and V²-substituted phenyl or pyridyl,
V¹ is halogen, C₁-C₁₂-alkyl, C₁-C₆-alkoxy, C₁-C₄-haloalkyl, C₁-C₄-haloalkoxy, cyano or nitro,
V² is hydrogen, halogen, C₁-C₆-alkyl, C₁-C₆-alkoxy or C₁-C₄-haloalkyl,
V¹ and V² are together C₃-C₄-alkanediyl which optionally can be substituted by halogen and/or C₁-C₂-alkyl and which optionally can be interrupted by one or two oxygen atoms,
Z is hydrogen, halogen, C₁-C₆-alkyl, C₁-C₄-haloalkyl, cyano, C₁-C₆-alkoxy or C₁-C₄-haloalkoxy,
CKE is one of the groups 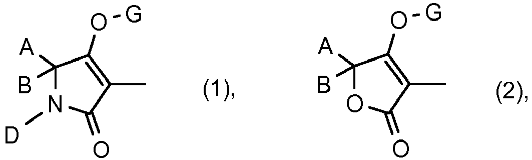 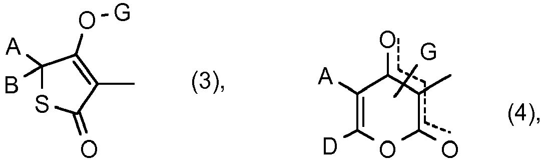 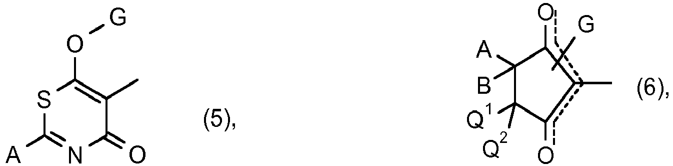 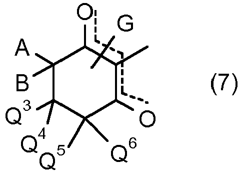 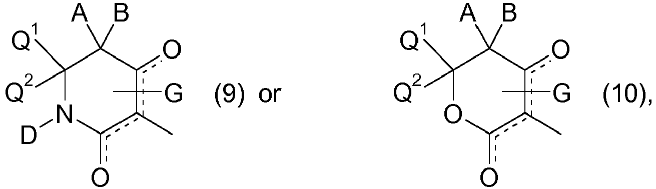
A is preferably hydrogen or in each case optionally halogen-substituted C₁-C₁₂-alkyl, C₃-C₈-alkenyl, C₁-C₁₀-alkoxy-C₁-C₈-alkyl, C₁-C₁₀-alkylthio-C₁-C₆-alkyl, optionally halogen-, C₁-C₆-alkyl- or C₁-C₆-alkoxy-substituted C₃-C₆-cycloalkyl in which optionally one or two ring members not directly adjacent are replaced by oxygen and/or sulphur, or is in each case optionally halogen-, C₁-C₆-alkyl-, C₁-C₆-haloalkyl-, C₁-C₆-alkoxy-, C₁-C₆-haloalkoxy-, cyano- or nitro-substituted phenyl, naphthyl, hetaryl having 5 to 6 ring atoms (for example furanyl, pyridyl, imidazolyl, triazolyl, pyrazolyl, pyrimidyl, thiazolyl or thienyl), phenyl-C₁-C₆-alkyl or naphthyl-C₁-C₆-alkyl,
B is hydrogen, C₁-C₁₂-alkyl or C₁-C₈-alkoxy-C₁-C₆-alkyl or
A, B and the carbon atom to which they are attached are saturated C₃-C₁₀-cycloalkyl or unsaturated C₅-C₁₀-cycloalkyl, in which optionally one ring member is replaced by oxygen or sulphur and which optionally are singly or doubly substituted by C₁-C₈-alkyl, C₃-C₁₀-cycloalkyl, C₁-C₈-haloalkyl, C₁-C₈-alkoxy, C₁-C₄-alkoxy-C₁-C₄-alkoxy, C₁-C₈-alkylthio, halogen or phenyl, or
A, B and the carbon atom to which they are attached are C₃-C₆-cycloalkyl which is substituted by an alkylenediyl group which is optionally substituted by C₁-C₄-alkyl and optionally contains one or two oxygen and/or sulphur atoms not directly adjacent, or by an alkylenedioxyl group or by an alkylenedithioyl group, which with the carbon atom to which it is attached forms a further five- to eightmembered ring, or
A, B and the carbon atom to which they are attached are C₃-C₈-cycloalkyl or C₅-C₈-cycloalkenyl in which two substituents, together with the carbon atoms to which they are attached, are in each case optionally C₁-C₆-alkyl-, C₁-C₆-alkoxy- or halogen-substituted C₂-C₆-alkanediyl, C₂-C₆-alkenediyl or C₄-C₆-alkanedienediyl, in which optionally one methylene group is replaced by oxygen or sulphur,
D is hydrogen, in each case optionally halogensubstituted C₁-C₁₂-alkyl, C₃-C₈-alkenyl, C₃-C₈-alkynyl, C₁-C₁₀-alkoxy-C₂-C₈-alkyl, optionally halogen-, C₁-C₄-alkyl-, C₁-C₄-alkoxy- or C₁-C₄-haloalkyl-substituted C₃-C₈-cycloalkyl in which optionally one ring member is replaced by oxygen or sulphur, or is in each case optionally halogen-, C₁-C₆-alkyl-, C₁-C₆-haloalkyl-, C₁-C₆-alkoxy-, C₁-C₆-haloalkoxy-, cyano- or nitro-substituted phenyl, hetaryl having 5 or 6 ring atoms (for example furanyl, imidazolyl, pyridyl, thiazolyl, pyrazolyl, pyrimidyl, pyrrolyl, thienyl or triazolyl), phenyl-C₁-C₆-alkyl or hetaryl-C₁-C₆-alkyl having 5 or 6 ring atoms (for example furanyl, imidazolyl, pyridyl, thiazolyl, pyrazolyl, pyrimidyl, pyrrolyl, thienyl or triazolyl) or
A and D are together in each case optionally substituted C₃-C₆-alkanediyl or C₃-C₆-alkenediyl, in which optionally one methylene group is replaced by a carbonyl group, oxygen or sulphur, and
suitable substituents are in each case as follows:
halogen, hydroxyl, mercapto or in each case optionally halogen-substituted C₁-C₁₀-alkyl, C₁-C₆-alkoxy, C₁-C₆-alkylthio, C₃-C₇-cycloalkyl, phenyl or benzyloxy, or a further C₃-C₆-alkanediyl moiety, C₃-C₆-alkenediyl moiety or a butadienyl moiety, which is optionally substituted by C₁-C₆-alkyl or in which optionally two adjacent substituents, with the carbon atoms to which they are attached, form a further saturated or unsaturated ring having 5 or 6 ring atoms (in the case of the compound of the formula (I-1) A and D, together with the atoms to which they are attached, then are, for example, the groups AD-1 to AD-10 specified later on below), which can contain oxygen or sulphur, or in which optionally one of the following groups 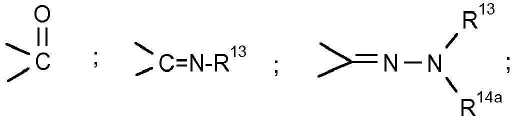 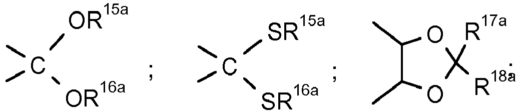 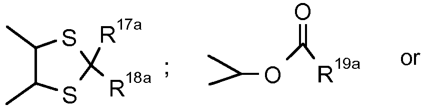 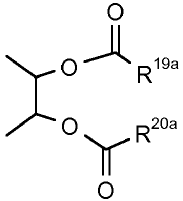 is present, or
A and Q¹ are together preferably C₄-C₆-alkenediyl or C₃-C₆-alkanediyl which are in each case optionally substituted one or two times by identical or different substituents selected from halogen, hydroxyl, C₃-C₇-cycloalkyl, C₁-C₆-alkylthio, C₁-C₆-alkoxy or C₁-C₁₀-alkyl in each case optionally substituted one to three times by identical or different halogen substituents, and phenyl or benzyloxy in each case optionally substituted one to three times by identical or different halogen, C₁-C₆-alkyl or C₁-C₆-alkoxy substituents, and which, moreover, optionally contains one of the following groups 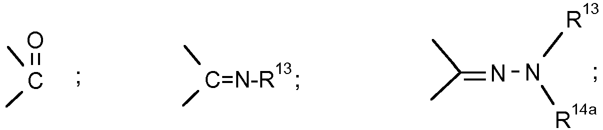 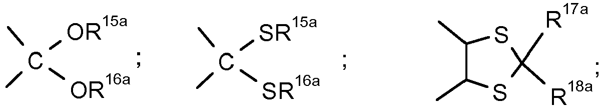 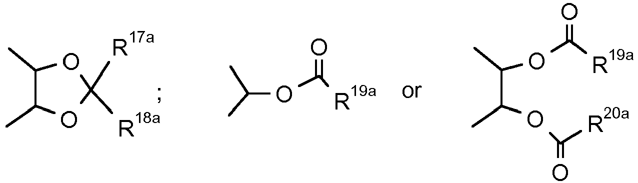 or is bridged by a C₁-C₂-alkanediyl group or by an oxygen atom, or
D and Q¹ are together preferably C₃-C₆-alkanediyl which is in each case optionally substituted one or two times by identical or different substituents selected from C₁-C₄-alkyl and C₁-C₄-alkoxy,
Q¹ is hydrogen, C₁-C₆-alkyl, C₁-C₆-alkoxy-C₁-C₂-alkyl, optionally fluorine-, chlorine-, C₁-C₄-alkyl-, C₁-C₂-haloalkyl- or C₁-C₄-alkoxy-substituted C₃-C₈-cycloalkyl, in which optionally one methylene group is replaced by oxygen or sulphur, or is optionally halogen-, C₁-C₄-alkyl-, C₁-C₄-alkoxy-, C₁-C₂-haloalkyl-, C₁-C₂-haloalkoxy-, cyano- or nitro-substituted phenyl, or
Q², Q⁴, Q⁵ and Q⁶ independently of one another are preferably hydrogen or C₁-C₄-alkyl,
Q³ is hydrogen, C₁-C₆-alkyl, C₁-C₆-alkoxy-C₁-C₂-alkyl, C₁-C₆-alkylthio-C₁-C₂-alkyl, optionally C₁-C₄-alkyl- or C₁-C₄-alkoxy-substituted C₃-C₈-cycloalkyl, in which optionally one methylene group is replaced by oxygen or sulphur, or is optionally halogen-, C₁-C₄-alkyl-, C₁-C₄-alkoxy-, C₁-C₂-haloalkyl-, C₁-C₂-haloalkoxy-, cyano- or nitro-substituted phenyl,
Q¹ and Q2, with the carbon atom to which they are attached, are optionally C₁-C₆-alkyl-, C₁-C₆-alkoxy- or C₁-C₂-haloalkyl-substituted C₃-C₇ ring in which optionally one ring member is replaced by oxygen or sulphur,
Q³ and Q⁴, together with the carbon atom to which they are attached, are an optionally C₁-C₄-alkyl-, C₁-C₄-alkoxy- or C₁-C₂-haloalkyl-substituted C₃-C₇ ring in which optionally one ring member is replaced by oxygen or sulphur,
G is preferably hydrogen (a) or is one of the groups 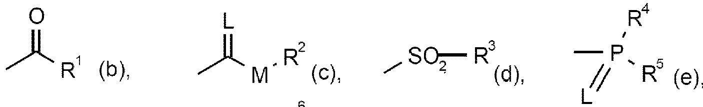 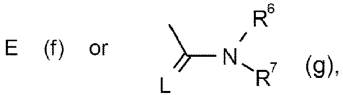 in particular is (a), (b), (c) or (g),
in which
E is one metal ion equivalent or ammonium ion,
L is oxygen or sulphur and
M is oxygen or sulphur,
R¹ is preferably in each case optionally halogensubstituted C₁-C₂₀-alkyl, C₂-C₂₀-alkenyl, C₁-C₈-alkoxy-C₁-C₈-alkyl, C₁-C₈-alkylthio-C₁-C₈-alkyl, poly-C₁-C₈-alkoxy-C₁-C₈-alkyl or optionally halogen-, C₁-C₆-alkyl- or C₁-C₆-alkoxy-substituted C₃-C₈-cycloalkyl in which optionally one or more (preferably not more than two) ring members not directly adjacent are replaced by oxygen and/or sulphur,
is optionally halogen-, cyano-, nitro-, C₁-C₆-alkyl-, C₁-C₆-alkoxy-, C₁-C₆-haloalkyl-, C₁-C₆-haloalkoxy-, C₁-C₆-alkylthio- or C₁-C₆-alkylsulphonyl-substituted phenyl,
is optionally halogen-, nitro-, cyano-, C₁-C₆-alkyl-, C₁-C₆-alkoxy-, C₁-C₆-haloalkyl- or C₁-C₆-haloalkoxy-substituted phenyl-C₁-C₆-alkyl,
is optionally halogen- or C₁-C₆-alkyl-substituted 5- or 6-membered hetaryl (for example pyrazolyl, thiazolyl, pyridyl, pyrimidyl, furanyl or thienyl),
is optionally halogen- or C₁-C₆-alkyl-substituted phenoxy-C₁-C₆-alkyl or
is optionally halogen-, amino- or C₁-C₆-alkyl-substituted 5- or 6-membered hetaryloxy-C₁-C₆-alkyl (for example pyridyloxy-C₁-C₆-alkyl, pyrimidyloxy-C₁-C₆-alkyl or thiazolyloxy-C₁-C₆-alkyl),
R² is in each case optionally halogen-substituted C₁-C₂₀-alkyl, C₂-C₂₀-alkenyl, C₁-C₈-alkoxy-C₂-C₈-alkyl, poly-C₁-C₈-alkoxy-C₂-C₈-alkyl,
is optionally halogen-, C₁-C₆-alkyl- or C₁-C₆-alkoxy-substituted C₃-C₈-cycloalkyl or
is in each case optionally halogen-, cyano-, nitro-, C₁-C₆-alkyl-, C₁-C₆-alkoxy-, C₁-C₆-haloalkyl- or C₁-C₆-haloalkoxy-substituted phenyl or benzyl,
R³ is optionally halogen-substituted C₁-C₈-alkyl or is in each case optionally halogen-, C₁-C₆-alkyl-, C₁-C₆-alkoxy-, C₁-C₄-haloalkyl-, C₁-C₄-haloalkoxy-, cyano- or nitro-substituted phenyl or benzyl,
R⁴ and R⁵ independently of one another are in each case optionally halogen-substituted C₁-C₈-alkyl, C₁-C₈-alkoxy, C₁-C₈-alkylamino, di-(C₁-C₈-alkyl)amino, C₁-C₈-alkylthio, C₂-C₈-alkenylthio, C₃-C₇-cycloalkylthio or are in each case optionally halogen-, nitro-, cyano-, C₁-C₄-alkoxy-, C₁-C₄-haloalkoxy-, C₁-C₄-alkylthio-, C₁-C₄-haloalkylthio-, C₁-C₄-alkyl- or C₁-C₄-haloalkyl-substituted phenyl, phenoxy or phenylthio,
R⁶ and R⁷ are independently of one another hydrogen, are in each case optionally halogen-substituted C₁-C₈-alkyl, C₃-C₈-cycloalkyl, C₁-C₈-alkoxy, C₃-C₈-alkenyl, C₁-C₈-alkoxy-C₁-C₈-alkyl, are optionally halogen-, C₁-C₈-haloalkyl-, C₁-C₈-alkyl- or C₁-C₈-alkoxy-substituted phenyl, optionally halogen-, C₁-C₈-alkyl-, C₁-C₈-haloalkyl- or C₁-C₈-alkoxy-substituted benzyl or together are an optionally C₁-C₄-alkyl-substituted C₃-C₆-alkylene radical in which optionally one carbon atom is replaced by oxygen or sulphur,
R¹³ is hydrogen, is in each case optionally halogen-substituted C₁-C₈-alkyl or C₁-C₈-alkoxy, is optionally halogen-, C₁-C₄-alkyl- or C₁-C₄-alkoxy-substituted C₃-C₈-cycloalkyl in which optionally one methylene group is replaced by oxygen or sulphur, or is in each case optionally halogen-, C₁-C₆-alkyl-, C₁-C₆-alkoxy-, C₁-C₄-haloalkyl-, C₁-C₄-haloalkoxy-, nitro- or cyano-substituted phenyl, phenyl-C₁-C₄-alkyl or phenyl-C₁-C₄-alkoxy,
R^{14a} is hydrogen or C₁-C₈-alkyl or
R³ and R^{14a} are together C₄-C₆-alkanediyl,
R^{15a} and R^{16a} are alike or different and are C₁-C₆-alkyl or
R^{15a} and R^{16a} are together a C₂-C₄-alkanediyl radical which is optionally substituted by C₁-C₆-alkyl, C₁-C₆-haloalkyl or by optionally halogen-, C₁-C₆-alkyl-, C₁-C₄-haloalkyl-, C₁-C₆-alkoxy-, C₁-C₄-haloalkoxy-, nitro- or cyano-substituted phenyl,
R^{17a} and R^{18a} are independently of one another hydrogen, are optionally halogen-substituted C₁-C₈-alkyl or are optionally halogen-, C₁-C₆-alkyl-, C₁-C₆-alkoxy-, C₁-C₄-haloalkyl-, C₁-C₄-haloalkoxy-, nitro- or cyano-substituted phenyl or
R^{17a} and R^{18a}, together with the carbon atom to which they are attached, are a carbonyl group or are optionally halogen-, C₁-C₄-alkyl- or C₁-C₄-alkoxy-substituted C₅-C₇-cycloalkyl in which optionally one methylene group is replaced by oxygen or sulphur,
R^{19a} and R^{20a} are independently of one another C₁-C₁₀-alkyl, C₂-C₁₀-alkenyl, C₁-C₁₀-alkoxy, C₁-C₁₀-alkylamino, C₃-C₁₀-alkenylamino, di-(C₁-C₁₀-alkyl) amino or di-(C₃-C₁₀-alkenyl)amino.

3. Composition according to Claim 1 or 2, **characterized in that** the substituents in the formula (I) are as defined below:
W is hydrogen, fluorine, chlorine, bromine, C₁-C₄-alkyl, C₂-C₄-alkenyl, C₂-C₄-alkynyl, C₁-C₄-alkoxy, C₁-C₂-haloalkyl or C₁-C₂-haloalkoxy,
X is chlorine, bromine, iodine, C₁-C₄-alkyl, C₂-C₄-alkenyl, C₂-C₄-alkynyl, C₁-C₄-alkoxy, C₁-C₄-alkoxy-C₁-C₃-alkoxy, C₁-C₂-haloalkyl, C₁-C₂-haloalkoxy or cyano,
Y is in position 4 hydrogen, C₂-C₄-alkenyl, C₂-C₄-alkynyl, fluorine, chlorine, bromine, iodine, methoxy, ethoxy, cyano, trifluoromethyl, difluoromethoxy or trifluoromethoxy,
Z is hydrogen,
W is also hydrogen, fluorine, chlorine, bromine or C₁-C₄-alkyl,
X is also chlorine, bromine, C₁-C₄-alkyl, C₁-C₄-alkoxy, C₁-C₂-haloalkyl, C₁-C₂-haloalkoxy or cyano,
Y is also in position 4 the radical 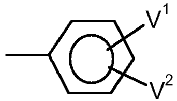
Z is also hydrogen,
V¹ is also fluorine, chlorine, C₁-C₄-alkyl, C₁-C₄-alkoxy, C₁-C₂-haloalkyl or C₁-C₂-haloalkoxy, cyano or nitro,
V² is also hydrogen, fluorine, chlorine, C₁-C₄-alkyl, C₁-C₄-alkoxy or C₁-C₂-haloalkyl,
V¹ and V² together are also -O-CH₂-O- and -O-CF₂-O-,
W is likewise hydrogen, fluorine, chlorine, bromine or C₁-C₄-alkyl,
X is likewise chlorine, bromine, C₁-C₄-alkyl, C₁-C₄-alkoxy, C₁-C₂-haloalkyl, C₁-C₂-haloalkoxy or cyano,
Y is likewise in position 5 C₂-C₄-alkenyl, C₂-C₄-alkynyl or the radical 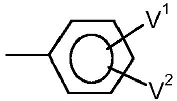
Z is likewise in position 4 hydrogen, C₁-C₄-alkyl or chlorine,
V¹ is likewise fluorine, chlorine, C₁-C₄-alkyl, C₁-C₄-alkoxy, C₁-C₂-haloalkyl or C₁-C₂-haloalkoxy, cyano or nitro,
V² is likewise hydrogen, fluorine, chlorine, C₁-C₄-alkyl, C₁-C₄-alkoxy or C₁-C₂-haloalkyl,
V¹ and V² together are likewise -O-CH₂-O- and -O-CF₂-O-,
W moreover is hydrogen, C₁-C₄-alkyl, C₂-C₄-alkenyl, C₂-C₄-alkynyl, C₁-C₄-alkoxy, fluorine, chlorine, bromine or trifluoromethyl,
X moreover is fluorine, chlorine, bromine, iodine, C₁-C₄-alkyl, C₂-C₄-alkenyl, C₂-C₄-alkynyl, C₁-C₄-alkoxy, C₁-C₄-alkoxy-C₁-C₃-alkoxy, C₁-C₂-haloalkyl, C₁-C₂-haloalkoxy or cyano,
Y moreover in position 4 is C₁-C₄-alkyl,
Z moreover is hydrogen,
W additionally is hydrogen, fluorine, chlorine, bromine, C₁-C₄-alkyl or C₁-C₄-alkoxy,
X additionally is chlorine, bromine, iodine, C₁-C₄-alkyl, C₁-C₄-alkoxy, C₁-C₂-haloalkyl, C₁-C₂-haloalkoxy or cyano,
Y additionally in position 4 is hydrogen, chlorine, bromine, iodine, C₁-C₄-alkyl, C₁-C₂-haloalkyl or C₁-C₂-haloalkoxy,
Z additionally in position 3 or 5 is fluorine, chlorine, bromine, iodine, C₁-C₄-alkyl, C₁-C₂-haloalkyl, C₁-C₄-alkoxy or C₁-C₂-haloalkoxy;
CKE is particularly preferably one of the groups 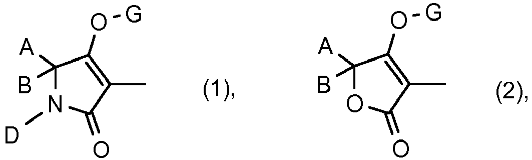 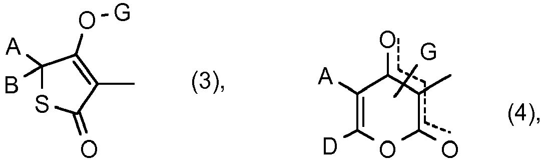 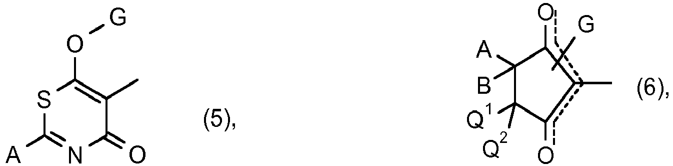 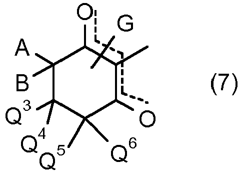 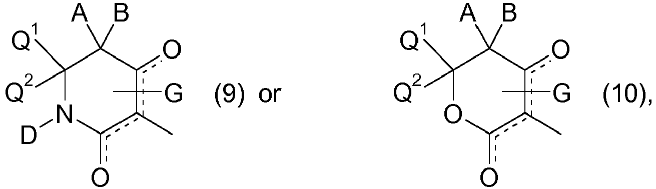
A is hydrogen, in each case optionally mono- to tri-fluorine- or -chlorine-substituted C₁-C₆-alkyl, C₁-C₄-alkoxy-C₁-C₂-alkyl, optionally singly to doubly C₁-C₂-alkyl- or C₁-C₂-alkoxy-substituted C₃-C₆-cycloalkyl or (but not in the case of the compounds of the formulae (1-3), (1-4), (1-6) and (1-7)) in each case optionally singly to doubly fluorine-, chlorine-, bromine-, C₁-C₄-alkyl-, C₁-C₂-haloalkyl-, C₁-C₄-alkoxy-, C₁-C₂-haloalkoxy-, cyano- or nitro-substituted phenyl or benzyl,
B is hydrogen, C₁-C₄-alkyl or C₁-C₂-alkoxy-C₁-C₂-alkyl, or
A, B and the carbon atom to which they are attached are saturated or unsaturated C₅-C₇-cycloalkyl in which optionally one ring member is replaced by oxygen or sulphur and which is optionally singly to doubly substituted by C₁-C₆-alkyl, trifluoromethyl, C₁-C₆-alkoxy or C₁-C₃-alkoxy-C₁-C₃-alkoxy, with the proviso that in that case Q³ is hydrogen or methyl, or
A, B and the carbon atom to which they are attached are C₅-C₆-cycloalkyl which is substituted by an alkylenedithiol group or by an alkylenedioxyl group or by an alkylenediyl group which is optionally substituted by methyl or ethyl and optionally contains one or two oxygen or sulphur atoms not directly adjacent, and which, with the carbon atom to which it is attached, forms a further five- or six-membered ring, with the proviso that **in that** case Q³ is hydrogen or methyl, or
A, B and the carbon atom to which they are attached are C₃-C₆-cycloalkyl or C₅-C₆-cycloalkenyl in which two substituents, together with the carbon atoms to which they are attached, are in each case optionally C₁-C₂-alkyl- or C₁-C₂-alkoxy-substituted C₂-C₄-alkanediyl, C₂-C₄-alkenediyl or butadienediyl, with the proviso that **in that** case Q³ is hydrogen or methyl,
D is hydrogen, is in each case optionally mono- to tri-fluoro-substituted C₁-C₆-alkyl, C₃-C₆-alkenyl, C₁-C₄-alkoxy-C₂-C₃-alkyl, is optionally C₃-C₆-cycloalkyl which is singly to doubly substituted by C₁-C₄-alkyl, C₁-C₄-alkoxy or C₁-C₂-haloalkyl and in which optionally one methylene group is replaced by oxygen, or (but not in the case of the compounds of the formulae (I-1)) is pyridyl or phenyl in each case optionally substituted singly to doubly by fluorine, chlorine, bromine, C₁-C₄-alkyl, C₁-C₄-haloalkyl, C₁-C₄-alkoxy or C₁-C₄-haloalkoxy, or
A and D together are optionally singly to doubly substituted C₃-C₅-alkanediyl in which one methylene group can be replaced by a carbonyl group (but not in the case of the compounds of the formula (I-1)), oxygen or sulphur, suitable substituents being C₁-C₂-alkyl or C₁-C₂-alkoxy, or
A and D (in the case of the compounds of the formula (I-1)), together with the atoms to which they are attached, are one of the groups AD-1 to AD-10: 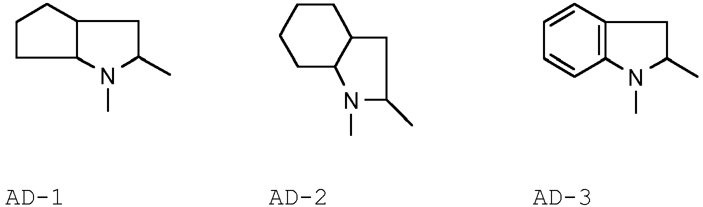 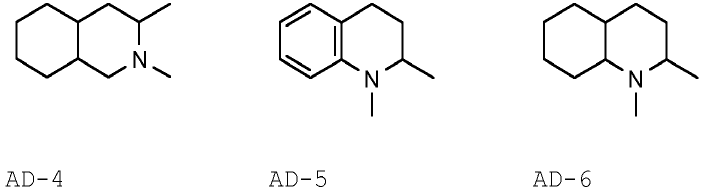 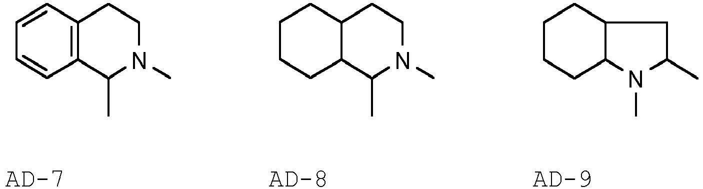 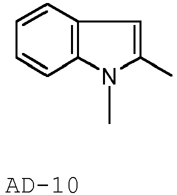
or
A and Q¹ together are C₃-C₄-alkanediyl in each case optionally substituted singly or doubly by identical or different substituents selected from C₁-C₂-alkyl or C₁-C₂-alkoxy, or
D and Q¹ together are C₃-C₄-alkanediyl, or
Q¹ is hydrogen, C₁-C₄-alkyl, C₁-C₄-alkoxy-C₁-C₂-alkyl, or optionally methyl- or methoxy-substituted C₃-C₆-cycloalkyl in which optionally one methylene group is replaced by oxygen,
Q² is hydrogen, methyl or ethyl,
Q⁴, Q⁵ and Q⁶ independently of one another are hydrogen or C₁-C₃-alkyl,
Q³ is hydrogen, C₁-C₄-alkyl, or optionally singly to doubly methyl- or methoxy-substituted C₃-C₆-cycloalkyl, or
Q¹ and Q² are hydrogen, C₁-C₄-alkyl, C₁-C₄-alkoxy-C₁-C₂-alkyl, or optionally methyl- or methoxy-substituted C₃-C₆-cycloalkyl in which optionally one methylene group is replaced by oxygen, or
Q³ and Q⁴, together with the carbon to which they are attached, are an optionally C₁-C₂-alkyl- or C₁-C₂-alkoxy-substituted saturated C₅-C₆ ring in which optionally one ring member is replaced by oxygen or sulphur, with the proviso that **in that** case A is hydrogen or methyl,
G is hydrogen (a) or is one of the groups 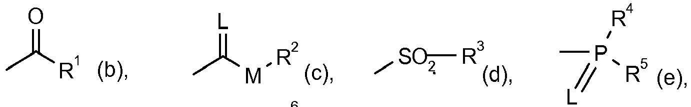 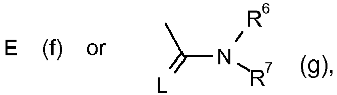 in particular is (a), (b) or (c),
in which
E is one metal ion equivalent or an ammonium ion,
L is oxygen or sulphur and
M is oxygen or sulphur,
R¹ is in each case optionally mono- to tri-fluorine- or -chlorine-substituted C₁-C₈-alkyl, C₂-C₁₈-alkenyl, C₁-C₄-alkoxy-C₁-C₂-alkyl, C₁-C₄-alkylthio-C₁-C₂-alkyl or optionally singly to doubly fluorine-, chlorine-, C₁-C₂-alkyl- or C₁-C₂-alkoxy-substituted C₃-C₆-cycloalkyl in which optionally one or two ring members not directly adjacent are replaced by oxygen,
is phenyl optionally substituted singly to doubly by fluorine, chlorine, bromine, cyano, nitro, C₁-C₄-alkyl, C₁-C₄-alkoxy, C₁-C₂-haloalkyl or C₁-C₂-haloalkoxy,
R² is in each case optionally mono- to tri-fluorine-substituted C₁-C₈-alkyl, C₂-C₈-alkenyl or C₁-C₄-alkoxy-C₂-C₄-alkyl,
is optionally mono-C₁-C₂-alkyl- or -C₁-C₂-alkoxy-substituted C₃-C₆-cycloalkyl or
is benzyl or phenyl in each case optionally substituted singly to doubly by fluorine, chlorine, bromine, cyano, nitro, C₁-C₄-alkyl, C₁-C₃-alkoxy, trifluoromethyl or trifluoromethoxy,
R³ is C₁-C₆-alkyl optionally substituted one to three times by fluorine or is phenyl optionally substituted once by fluorine, chlorine, bromine, C₁-C₄-alkyl, C₁-C₄-alkoxy, trifluoromethyl, trifluoromethoxy, cyano or nitro,
R⁴ is C₁-C₆-alkyl, C₁-C₆-alkoxy, C₁-C₆-alkylamino, di-(C₁-C₆-alkyl) amino, C₁-C₆-alkylthio, C₃-C₄-alkenylthio, C₃-C₆-cycloalkylthio or is phenylthio, phenoxy or phenyl in each case optionally substituted once by fluorine, chlorine, bromine, nitro, cyano, C₁-C₃-alkoxy, C₁-C₃-haloalkoxy, C₁-C₃-alkylthio, C₁-C₃-haloalkylthio, C₁-C₃-alkyl or trifluoromethyl,
R⁵ is C₁-C₆-alkoxy or C₁-C₆-alkylthio,
R⁶ is hydrogen, C₁-C₆-alkyl, C₃-C₆-cycloalkyl, C₁-C₆-alkoxy, C₃-C₆-alkenyl, C₁-C₆-alkoxy-C₁-C₄-alkyl, is phenyl optionally substituted once by fluorine, chlorine, bromine, trifluoromethyl, C₁-C₄-alkyl or C₁-C₄-alkoxy, or is benzyl optionally substituted once by fluorine, chlorine, bromine, C₁-C₄-alkyl, trifluoromethyl or C₁-C₄-alkoxy,
R⁷ is C₁-C₆-alkyl, C₃-C₆-alkenyl or C₁-C₆-alkoxy-C₁-C₄-alkyl,
R⁶ and R⁷ together are an optionally methyl- or ethyl-substituted C₄-C₅-alkylene radical in which optionally one methylene group is replaced by oxygen or sulphur.

4. Composition according to one of Claims 1 to 3, **characterized in that** the active ingredient is chosen from the following list

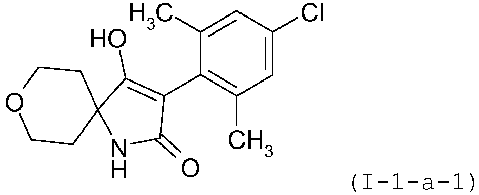

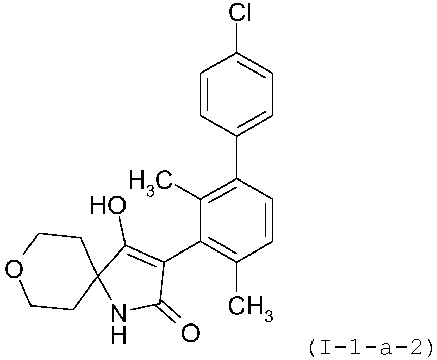

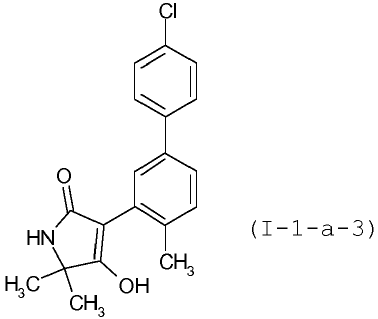

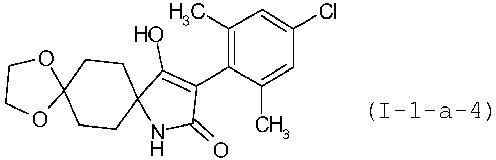

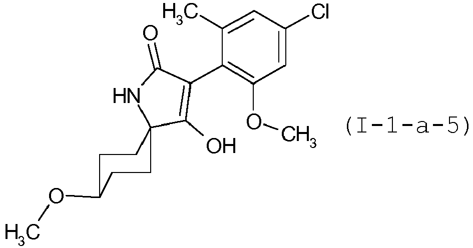

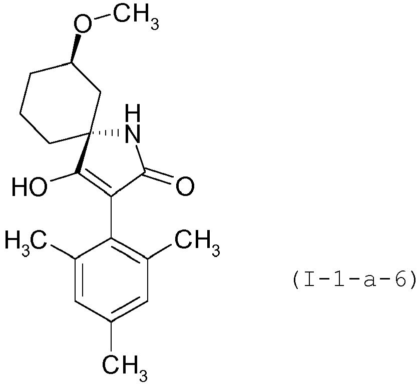

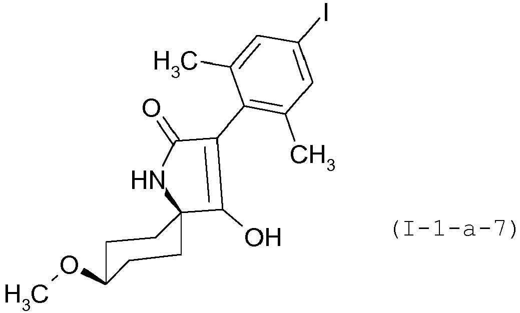

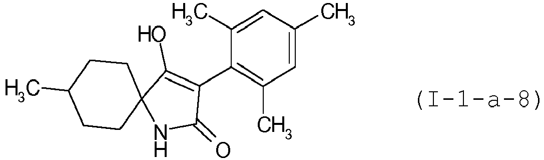

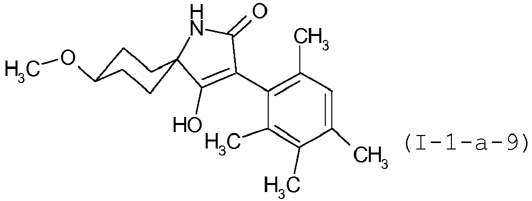

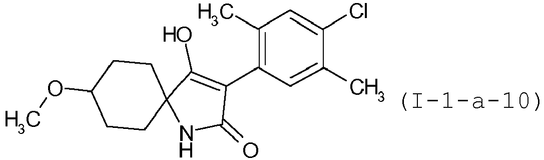

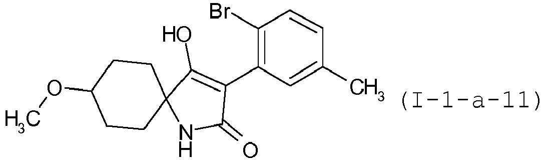

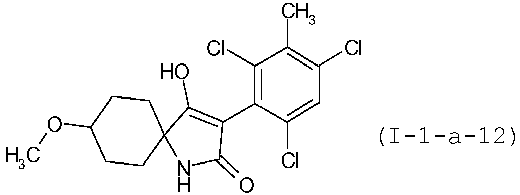

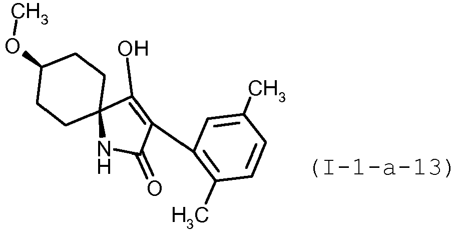

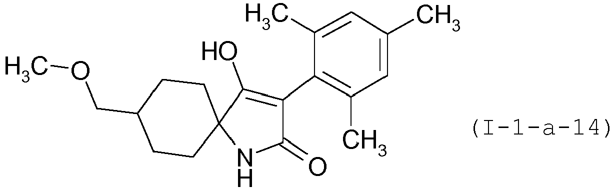

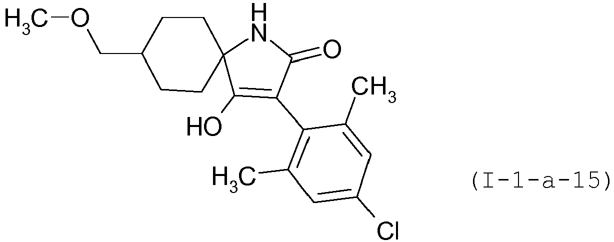

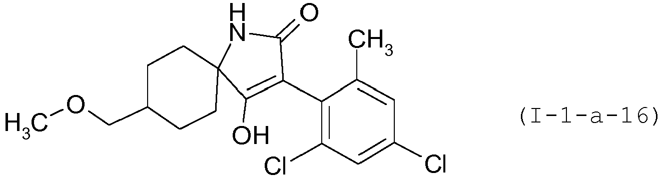

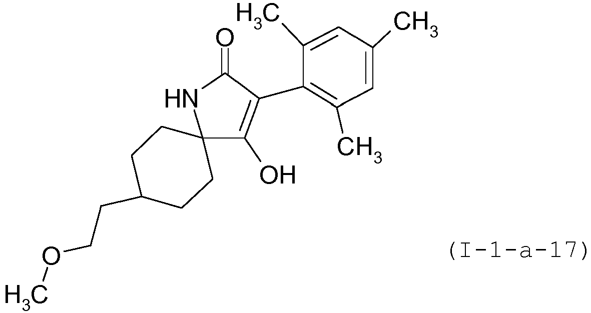

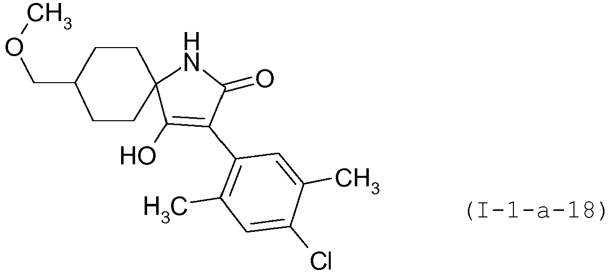

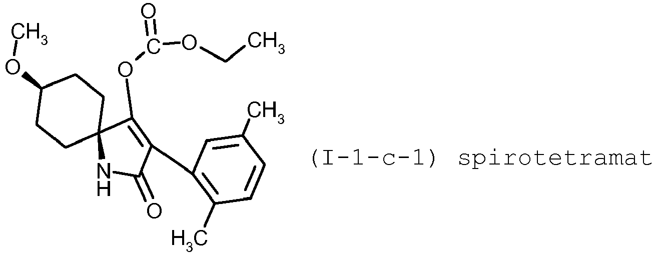

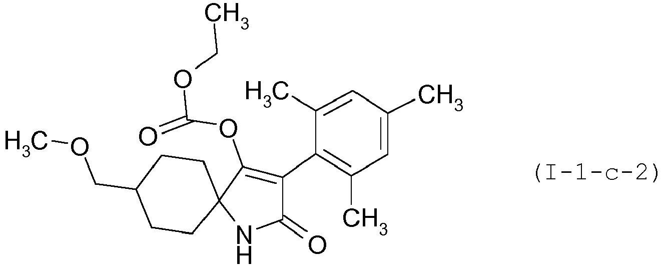

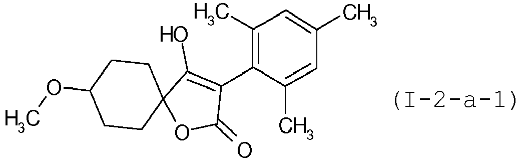

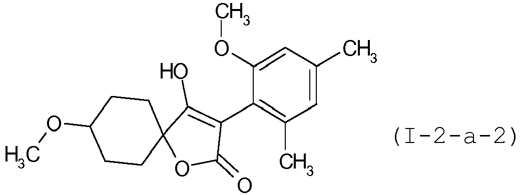

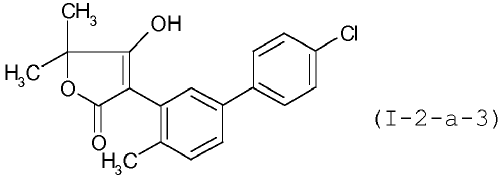

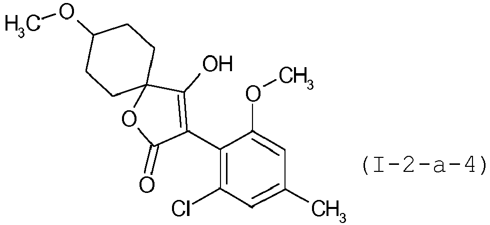

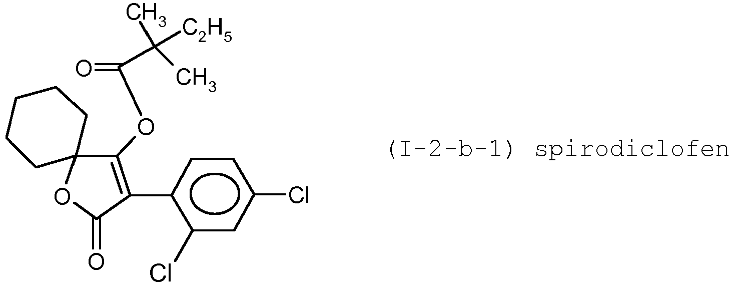

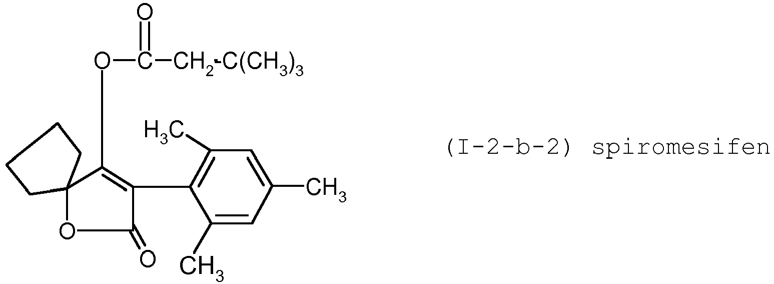

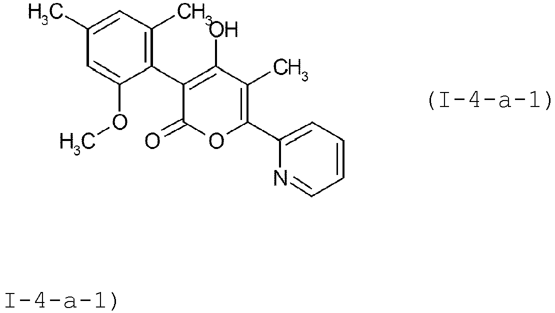

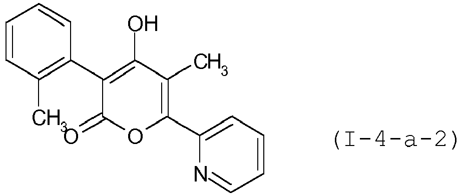

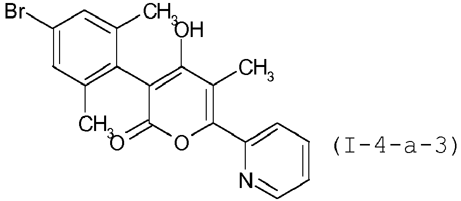

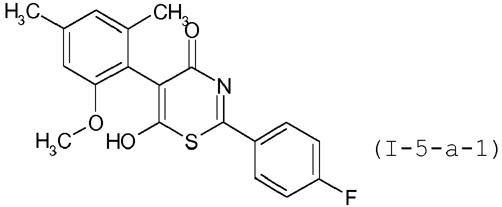

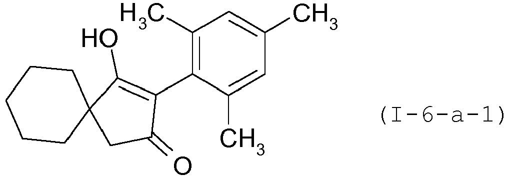

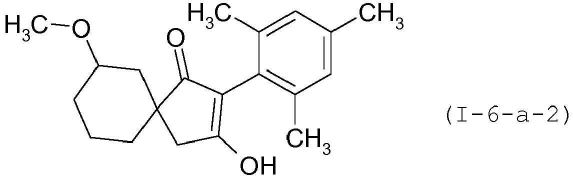

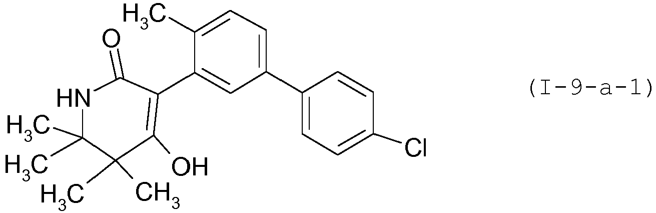

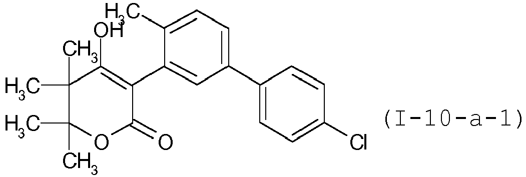

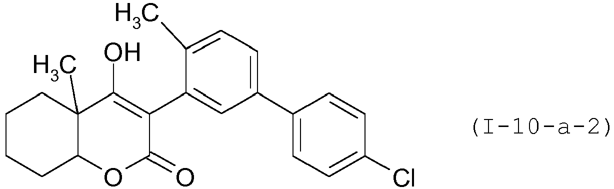

5. Composition according to one or more of Claims 1 to 4, **characterized in that** the active ingredient content is between 0.5% and 50% by weight.

6. Composition according to one or more of Claims 1 to 5, **characterized in that** the amount of ammonium salt or phosphonium salt is between 0.5 and 80 mmol/l.

7. Composition according to one of Claims 1 to 6, **characterized in that** D is nitrogen.

8. Composition according to Claim 7, **characterized in that** R³⁰ is hydrogencarbonate, tetraborate, fluoride, bromide, iodide, chloride, monohydrogenphosphate, dihydrogenphosphate, hydrogensulphate, tartrate, sulphate, nitrate, thiosulphate, thiocyanate, formate, lactate, acetate, propionate, butyrate, pentanoate, citrate or oxalate.

9. Composition according to Claim 7, **characterized in that** R³⁰ is carbonate, pentaborate, sulphite, benzoate, hydrogenoxalate, hydrogencitrate, methylsulphate or tetrafluoroborate.

10. Composition according to Claim 7, **characterized in that** R³⁰ is lactate, sulphate, nitrate, thiosulphate, thiocyanate, citrate, oxalate or formate.

11. Composition according to Claim 7, **characterized in that** R³⁰ is thiocyanate, dihydrogenphosphate, monohydrogenphosphate or sulphate.

12. Composition according to one of Claims 1 to 11, **characterized in that** the penetrant is an ester of a vegetable oil.

13. Composition according to one of Claims 1 to 11, **characterized in that** the penetrant is rapeseed oil methyl ester.

14. Composition according to any one of Claims 1 to 13, **characterized in that** the amount of penetrant is 1% to 95% by weight.

15. Method of controlling parasitic insects and/or spider mites, **characterized in that** a composition according to one or more of Claims 1 to 14 is applied neat or diluted to insects and/or spider mites or their habitat in an amount such that an effective amount of the active ingredients contained acts on the insects and/or spider mites or their habitat.

16. Method of boosting the activity of crop protection materials comprising an active ingredient from the class of the phenyl-substituted cyclic ketoenols of the formula (I) according to Claim 1, **characterized in that** the application-ready material (spray liquor) is prepared using a salt of the formula (II) and a penetrant according to Claim 1.

17. Method according to Claim 16, **characterized in that** the salt of the formula (II) is present in a final concentration of 0.5 to 80 mmol/l.

18. Method according to Claim 16, **characterized in that** the penetrant is present in a final concentration of 0.1 to 10 g/l.

19. Method according to Claim 16, **characterized in that** the penetrant is present in an end concentration of 0.1 to 10 g/l and the salt of the formula (II) in an end concentration of 0.5 to 80 mmol/l.

20. Use of a salt of the formula (II) according to Claim 1 for boosting the activity of a crop protection material comprising an active ingredient from the class of the phenyl-substituted cyclic ketoenols, **characterized in that** the salt of the formula (II) and also a penetrant according to Claim 1 is used in preparing an application-ready crop protection material (spray liquor).

21. Use according to Claim 20, **characterized in that** in the application-ready crop protection material the salt of the formula (II) is present in a concentration of 0.5 to 80 mmol/l.

## Revendications

1. Composition comprenant
- au moins une substance active insecticide et/ou acaricide de la classe des cétoénols cycliques substitués par phényle de formule générale (I) 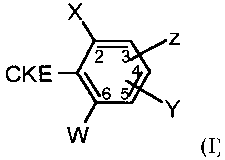 dans laquelle
W représente hydrogène, alkyle, alcényle, alcynyle, halogène, alcoxy, halogénoalkyle, halogénoalcoxy ou cyano,
X représente halogène, alkyle, alcényle, alcynyle, alcoxy, alcoxy-alcoxy, halogénoalkyle, halogénoalcoxy ou cyano,
Y représente hydrogène, halogène, alkyle, alcényle, alcynyle, alcoxy, cyano, halogénoalkyle, halogénoalcoxy ; ou phényle ou hétéroaryle à chaque fois le cas échéant substitué,
Z représente hydrogène, halogène, alkyle, halogénoalkyle, cyano, alcoxy ou halogénoalcoxy,
CKE représente un des groupes 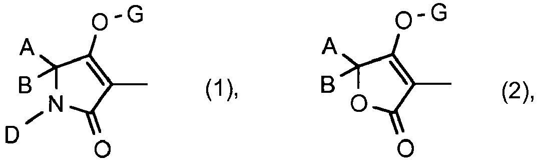 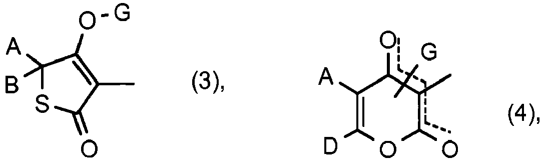 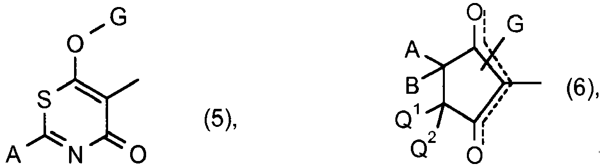 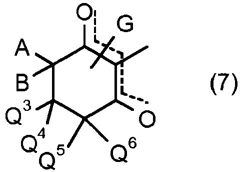 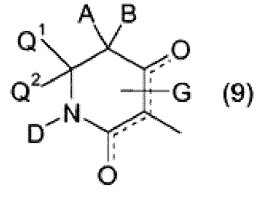 ou 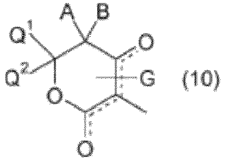 dans lesquels
A représente hydrogène ; alkyle, alcényle, alcoxyalkyle, alkylthioalkyle à chaque fois le cas échéant substitué par halogène ; ou cycloalkyle saturé ou insaturé, le cas échéant substitué, dans lequel le cas échéant au moins un atome de cycle est remplacé par un hétéroatome ; ou aryle, arylalkyle ou hétéroaryle à chaque fois le cas échéant substitué par halogène, alkyle, halogénoalkyle, alcoxy, halogénoalcoxy, cyano ou nitro,
B représente hydrogène, alkyle ou alcoxyalkyle, ou
A et B représentent, ensemble avec l'atome de carbone auquel ils sont liés, un cycle saturé ou insaturé, non substitué ou substitué, contenant le cas échéant au moins un hétéroatome,
D représente hydrogène ou un radical le cas échéant substitué de la série alkyle, alcényle, alcynyle, alcoxyalkyle ; cycloalkyle saturé ou insaturé, dans lequel le cas échéant un ou plusieurs chaînons de cycle sont remplacés par des hétéroatomes, arylalkyle, aryle, hétéroarylalkyle ou hétéroaryle ou
A et D représentent, ensemble avec les atomes auxquels ils sont liés, un cycle saturé ou insaturé et contenant le cas échéant au moins un hétéroatome, non substitué ou substitué dans la partie A,D, ou
A et Q¹ représentent ensemble alcanediyle ou alcènediyle, le cas échéant substitué par hydroxy ; à chaque fois le cas échéant substitué par alkyle, alcoxy, alkylthio, cycloalkyle, benzyloxy ou aryle, ou
D et Q¹ représentent, ensemble avec les atomes auxquels ils sont liés, un cycle saturé ou insaturé et contenant le cas échéant au moins un hétéroatome, non substitué ou substitué dans la partie D, Q¹,
Q¹ représente hydrogène, alkyle, alcoxyalkyle ; cycloalkyle le cas échéant substitué (dans lequel le cas échéant un groupe méthylène est remplacé par oxygène ou soufre) ou phényle le cas échéant substitué, ou
Q², Q⁴, Q⁵ et Q⁶ représentent, indépendamment les uns des autres, hydrogène ou alkyle,
Q³ représente hydrogène ; alkyle, alcoxyalkyle, alkylthioalkyle le cas échéant substitués ; cycloalkyle le cas échéant substitué (dans lequel le cas échéant un groupe méthylène est remplacé par oxygène ou soufre) ou phényle le cas échéant substitué, ou
Q¹ et Q² représentent, ensemble avec l'atome de carbone auquel ils sont liés, un cycle non substitué ou substitué, contenant le cas échéant un hétéroatome, ou
Q³ et Q⁴ représentent, ensemble avec l'atome de carbone auquel ils sont liés, un cycle saturé ou insaturé, non substitué ou substitué, contenant le cas échéant un hétéroatome,
G représente hydrogène (a) ou un des groupes 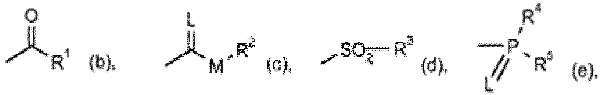 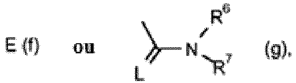 dans lesquels
E représente un équivalent d'ion métallique ou un ion d'ammonium,
L représente oxygène ou soufre,
M représente oxygène ou soufre,
R¹ représente alkyle, alcényle, alcoxyalkyle, alkylthioalkyle, polyalcoxyalkyle à chaque fois le cas échéant substitué par halogène ; ou cycloalkyle le cas échéant substitué par halogène, alkyle ou alcoxy, qui peut être interrompu par au moins un hétéroatome ; phényle, phénylalkyle, hétéroaryle, phénoxyalkyle ou hétéroaryloxyalkyle à chaque fois le cas échéant substitué,
R² représente alkyle, alcényle, alcoxyalkyle, polyalcoxyalkyle à chaque fois le cas échéant substitué par halogène ; ou cycloalkyle, phényle ou benzyle à chaque fois le cas échéant substitué,
R³, R⁴ et R⁵ représentent, indépendamment les uns des autres, alkyle, alcoxy, alkylamino, dialkylamino, alkylthio, alcénylthio, cycloalkylthio à chaque fois le cas échéant substitué par halogène ; ou phényle, benzyle, phénoxy ou phénylthio à chaque fois le cas échéant substitué,
R⁶ et R⁷ représentent, indépendamment l'un de l'autre, hydrogène ; alkyle, cycloalkyle, alcényle, alcoxy, alcoxyalkyle à chaque fois le cas échéant substitué par halogène ; phényle le cas échéant substitué ; benzyle le cas échéant substitué ; ou ensemble avec l'atome de N auquel ils sont liés, un cycle le cas échéant interrompu par oxygène ou soufre ;
- au moins un sel de formule (II) 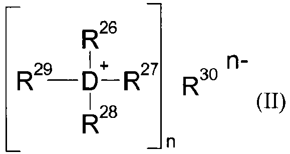 dans laquelle
D représente azote ou phosphore,
R²⁶, R²⁷, R²⁸ et R²⁹ représentent, indépendamment les uns des autres, hydrogène ; ou C₁-C₈-alkyle à chaque fois le cas échéant substitué ; ou C₁-C₈-alkylène monoinsaturé ou polyinsaturé, le cas échéant substitué, les substituants pouvant être choisis parmi halogène, nitro et cyano,
n vaut 1, 2, 3 ou 4,
R³⁰ représente un anion inorganique ou organique et
au moins un agent favorisant la pénétration, l'agent favorisant la pénétration étant un alcoxylate d'alcool gras de formule (III)
R-O-(-AO)ᵥ-R' (III)
dans laquelle
R représente alkyle linéaire ou ramifié comprenant 4 à 20 atomes de carbone,
R' représente hydrogène, méthyle, éthyle, n-propyle, i-propyle, n-butyle, i-butyle, t-butyle, n-pentyle ou n-hexyle,
AO représente un radical d'oxyde d'éthylène, un radical d'oxyde de propylène, un radical d'oxyde de butylène ou des mélanges de radicaux d'oxyde d'éthylène et d'oxyde de propylène ou de radicaux d'oxyde de butylène et
v représente des nombres de 2 à 30,
- ou une huile minérale ou végétale ou l'ester d'une huile minérale ou végétale.

2. Composition selon la revendication 1, **caractérisée en ce que** les substituants dans la formule (I) sont définis comme suit :
W représente hydrogène, C₁-C₆-alkyle, C₂-C₆-alcényle, C₂-C₆-alcynyle, halogène, C₁-C₆-alcoxy, C₁-C₄-halogénoalkyle, C₁-C₄-halogénoalcoxy ou cyano,
X représente halogène, C₁-C₆-alkyle, C₂-C₆-alcényle, C₂-C₆-alcynyle, C₁-C₆-alcoxy, C₁-C₆-alcoxy-C₁-C₄-alcoxy, C₁-C₄-halogénoalkyle, C₁-C₄-halogénoalcoxy ou cyano,
Y représente hydrogène, halogène, C₁-C₆-alkyle, C₂-C₆-alcényle, C₂-C₆-alcynyle, C₁-C₆-alcoxy, cyano, C₁-C₄-halogénoalkyle, halogénoalcoxy ; phényle ou pyridyle substitué par V¹ et V²,
V¹ représente halogène, C₁-C₁₂-alkyle, C₁-C₆-alcoxy, C₁-C₄-halogénoalkyle, C₁-C₄-halogénoalcoxy, cyano ou nitro,
V² représente hydrogène, halogène, C₁-C₆-alkyle, C₁-C₆-alcoxy ou C₁-C₄-halogénoalkyle,
V¹ et V² représentent ensemble C₃-C₄-alcanediyle, qui peut le cas échéant être substitué par halogène et/ou C₁-C₂-alkyle et qui peut le cas échéant être interrompu par un ou deux atomes d'oxygène,
Z représente hydrogène, halogène, C₁-C₆-alkyle, C₁-C₄-halogénoalkyle, cyano, C₁-C₆-alcoxy ou C₁-C₄-halogénoalcoxy,
CKE représente un des groupes 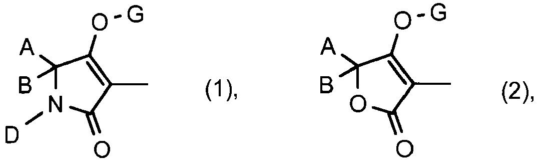 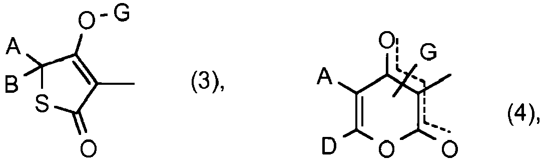 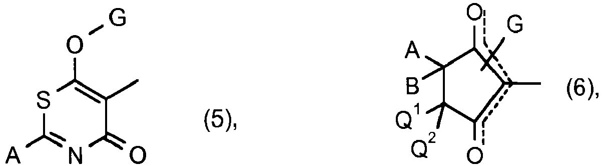 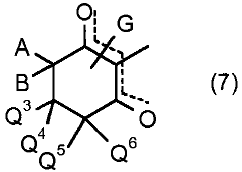 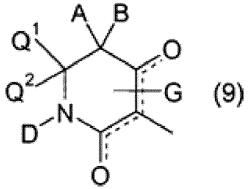 ou 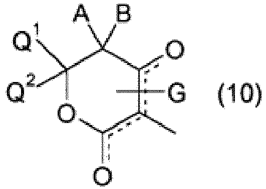
A représente de préférence hydrogène ; ou C₁-C₁₂-alkyle, C₃-C₈-alcényle, C₁-C₁₀-alcoxy-C₁-C₈-alkyle, C₁-C₁₀-alkylthio-C₁-C₆-alkyle à chaque fois le cas échéant substitué par halogène ; C₃-C₈-cycloalkyle le cas échéant substitué par halogène, C₁-C₆-alkyle ou C₁-C₆-alcoxy, dans lequel le cas échéant un ou deux chaînons de cycle non directement adjacents sont remplacés par oxygène et/ou soufre ; ou phényle, naphtyle, hétéroaryle présentant 5 ou 6 atomes de cycle (par exemple furannyle, pyridyle, imidazolyle, triazolyle, pyrazolyle, pyrimidyle, thiazolyle ou thiényle), phényl-C₁-C₆-alkyle ou naphtyl-C₁-C₆-alkyle à chaque fois le cas échéant substitué par halogène, C₁-C₆-alkyle, C₁-C₆-halogénoalkyle, C₁-C₆-alcoxy, C₁-C₆-halogénoalcoxy, cyano ou nitro,
B représente hydrogène, C₁-C₁₂-alkyle ou C₁-C₈-alcoxy-C₁-C₆-alkyle, ou
A, B et l'atome de carbone auquel ils sont liés représentent C₃-C₁₀-cycloalkyle saturé ou C₅-C₁₀-cycloalkyle insaturé, dans lesquels le cas échéant un chaînon de cycle est remplacé par oxygène ou soufre et qui sont le cas échéant monosubstitués ou disubstitués par C₁-C₈-alkyle, C₃-C₁₀-cycloalkyle, C₁-C₈-halogénoalkyle, C₁-C₈-alcoxy, C₁-C₄-alcoxy-C₁-C₄-alcoxy, C₁-C₈-alkylthio, halogène ou phényle, ou
A, B et l'atome de carbone auquel ils sont liés représentent C₃-C₆-cycloalkyle, qui est substitué par un groupe alkylènediyle contenant le cas échéant un ou deux atomes d'oxygène et/ou de soufre non directement adjacents, le cas échéant substitué par C₁-C₄-alkyle ou par un groupe alkylènedioxyle ou alkylènedithioyle, qui forme avec l'atome de carbone auquel il est lié un autre cycle de cinq à huit chaînons ou
A, B et l'atome de carbone auquel ils sont liés représentent C₃-C₈-cycloalkyle ou C₅-C₈-cycloalcényle, dans lesquels deux substituants, ensemble avec les atomes de carbone auxquels ils sont liés, représentent C₂-C₆-alcanediyle, C₂-C₆-alcènediyle ou C₄-C₆-alcanediènediyle à chaque fois le cas échéant substitué par C₁-C₆-alkyle, C₁-C₆-alcoxy ou halogène, dans lequel le cas échéant un groupe méthylène est remplacé par oxygène ou soufre,
D représente de préférence hydrogène ; C₁-C₁₂-alkyle, C₃-C₈-alcényle, C₃-C₈-alcynyle, C₁-C₁₀-alcoxy-C₂-C₈-alkyle, à chaque fois le cas échéant substitué par halogène ; C₃-C₈-cycloalkyle le cas échéant substitué par halogène, C₁-C₄-alkyle, C₁-C₄-alcoxy ou C₁-C₄-halogénoalkyle, dans lequel le cas échéant un chaînon de cycle est remplacé par oxygène ou soufre ; ou phényle, hétéroaryle présentant 5 ou 6 atomes de cycle (par exemple furannyle, imidazolyle, pyridyle, thiazolyle, pyrazolyle, pyrimidyle, pyrrolyle, thiényle ou triazolyle), phényl-C₁-C₆-alkyle ou hétéroaryl-C₁-C₆-alkyle présentant 5 ou 6 atomes de cycle (par exemple furannyle, imidazolyle, pyridyle, thiazolyle, pyrazolyle, pyrimidyle, pyrrolyle, thiényle ou triazolyle) à chaque fois le cas échéant substitué par halogène, C₁-C₆-alkyle, C₁-C₆-halogénoalkyle, C₁-C₆-alcoxy, C₁-C₆-halogénoalcoxy, cyano ou nitro, ou
A et D représentent ensemble C₃-C₆-alcanediyle ou C₃-C₆-alcènediyle à chaque fois le cas échéant substitué, dans lequel le cas échéant un groupe méthylène est remplacé par un groupe carbonyle, oxygène ou soufre et
où les substituants qui entrent en considération sont :
halogène, hydroxy, mercapto ; ou C₁-C₁₀-alkyle, C₁-C₆-alcoxy, C₁-C₆-alkylthio, C₃-C₇-cycloalkyle, phényle ou benzyloxy à chaque fois le cas échéant substitué par halogène ; ou un autre groupe C₃-C₆-alcanediyle, C₃-C₆-alcènediyle ; ou un groupe butadiényle, qui est le cas échéant substitué par C₁-C₆-alkyle ou dans lequel le cas échéant deux substituants adjacents, avec les atomes de carbone auxquels ils sont liés, forment un autre cycle saturé ou insaturé, comprenant 5 ou 6 atomes de cycle (dans le cas du composé de formule (1-1), A et D représentent alors ensemble avec les atomes auxquels ils sont liés par exemple les autres groupes mentionnés ci-dessous AD-1 à AD-10), qui peut contenir oxygène ou soufre, ou qui contient le cas échéant un des groupes suivants 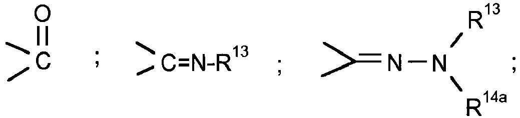 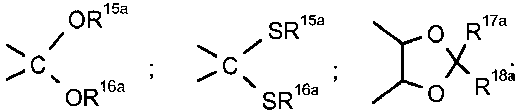 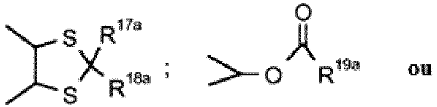 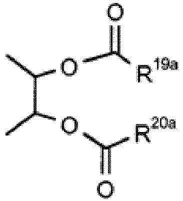 ou
A et Q¹ représentent ensemble de préférence C₃-C₆-alcanediyle ou C₄-C₆-alcènediyle, à chaque fois le cas échéant monosubstitué ou disubstitué, de manière identique ou différente par halogène, hydroxy ; par C₁-C₁₀-alkyle, C₁-C₆-alcoxy, C₁-C₆-alkylthio, C₃-C₇-cycloalkyle à chaque fois le cas échéant monosubstitué à trisubstitué, de manière identique ou différente par halogène ; ou par benzyloxy ou phényle à chaque fois monosubstitué ou trisubstitué, de manière identique ou différente par halogène, C₁-C₆-alkyle ou C₁-C₆-alcoxy, qui contient en outre le cas échéant un des groupes suivants 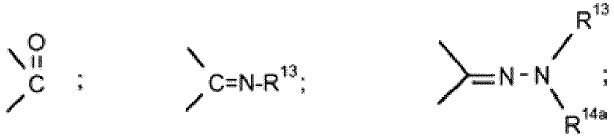 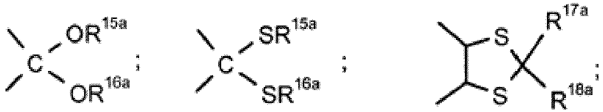 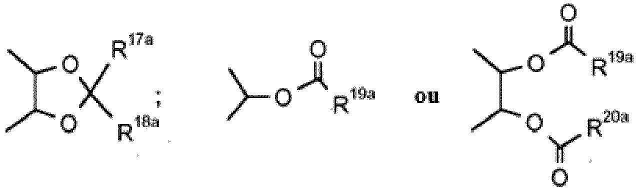
ou qui est ponté par un groupe C₁-C₂-alcanediyle ou par un atome d'oxygène ou
D et Q¹ représentent, ensemble, de préférence C₃-C₆-alcanediyle à chaque fois le cas échéant monosubstitué ou disubstitué, de manière identique ou différente, par C₁-C₄-alkyle ou C₁-C₄-alcoxy.
Q¹ représente hydrogène, C₁-C₆-alkyle, C₁-C₆-alcoxy-C₁-C₂-alkyle ; C₃-C₈-cyloalkyle le cas échéant substitué par fluor, chlore, C₁-C₄-alkyle, C₁-C₂-halogénoalkyle ou C₁-C₄-alcoxy, dans lequel le cas échéant un groupe méthylène est remplacé par oxygène ou soufre ; ou phényle le cas échéant substitué par halogène, C₁-C₄-alkyle, C₁-C₄-alcoxy, C₁-C₂-halogénoalkyle, C₁-C₂-halogénoalcoxy, cyano ou nitro, ou
Q², Q⁴, Q⁵ et Q⁶ représentent, indépendamment les uns des autres, de préférence hydrogène ou C₁-C₄-alkyle,
Q³ représente hydrogène, C₁-C₆-alkyle, C₁-C₆-alcoxy-C₁-C₂-alkyle C₁-C₆-alkylthio-C₁-C₂-alkyle ; C₃-C₈-cycloalkyle le cas échéant substitué par C₁-C₄-alkyle ou C₁-C₄-alcoxy, dans lequel le cas échéant un groupe méthylène est remplacé par oxygène ou soufre ; ou phényle le cas échéant substitué par halogène, C₁-C₄-alkyle, C₁-C₄-alcoxy, C₁-C₂-halogénoalkyle, C₁-C₂-halogénoalcoxy, cyano ou nitro.
Q¹ et Q² représentent avec l'atome de carbone auquel ils sont liés, un cycle en C₃-C₇ le cas échéant substitué par C₁-C₆-alkyle, C₁-C₆-alcoxy ou C₁-C₂-halogénoalkyle, dans lequel le cas échéant un chaînon de cycle est remplacé par oxygène ou soufre,
Q³ et Q⁴ représentent, ensemble avec l'atome de carbone auquel ils sont liés, un cycle en C₃-C₇ le cas échéant substitué par C₁-C₄-alkyle, C₁-C₄-alcoxy ou C₁-C₂-halogénoalkyle, dans lequel le cas échéant un chaînon de cycle est remplacé par oxygène ou soufre,
G représente de préférence hydrogène (a) ou un des groupes 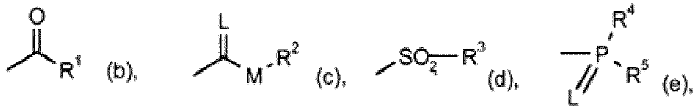 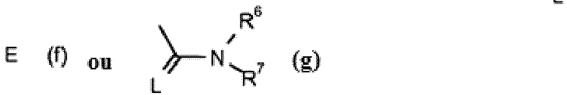 en particulier (a), (b), (c) ou (g)
dans lesquels
E représente un équivalent d'ion métallique ou un ion d'ammonium,
L représente oxygène ou soufre et
M représente oxygène ou soufre,
R¹ représente de préférence C₁-C₂₀-alkyle, C₂-C₂₀-alcényle, C₁-C₈-alcoxy-C₁-C₈-alkyle, C₁-C₈-alkylthio-C₁-C₈-alkyle, poly-C₁-C₈-alcoxy-C₁-C₈-alkyle à chaque fois le cas échéant substitué par halogène ; ou C₃-C₈-cycloalkyle le cas échéant substitué par halogène, C₁-C₆-alkyle ou C₁-C₆-alcoxy, dans lequel le cas échéant un ou plusieurs (de préférence pas plus de deux) chaînons de cycle non directement adjacents sont remplacés par oxygène et/ou soufre, représente phényle, le cas échéant substitué par halogène, cyano, nitro, C₁-C₆-alkyle, C₁-C₆-alcoxy, C₁-C₆-halogénoalkyle, C₁-C₆-halogénoalcoxy, C₁-C₆-alkylthio ou C₁-C₆-alkylsulfonyle, représente phényl-C₁-C₆-alkyle le cas échéant substitué par halogène, nitro, cyano, C₁-C₆-alkyle, C₁-C₆-alcoxy, C₁-C₆-halogénoalkyle ou C₁-C₆-halogénoalcoxy, représente hétéroaryle de 5 ou 6 chaînons (par exemple pyrazolyle, thiazolyle, pyridyle, pyrimidyle, furannyle ou thiényle), le cas échéant substitué par halogène ou C₁-C₆-alkyle, représente phénoxy-C₁-C₆-alkyle le cas échéant substitué par halogène ou C₁-C₆-alkyle, ou représente hétéroaryloxy-C₁-C₆-alkyle de 5 ou 6 chaînons (par exemple pyridyloxy-C₁-C₆-alkyle, pyrimidyloxy-C₁-C₆-alkyle ou thiazoloxy-C₁-C₆-alkyle), le cas échéant substitué par halogène, amino ou C₁-C₆-alkyle,
R² représente C₁-C₂₀-alkyle, C₂-C₂₀-alcényle, C₁-C₈-alcoxy-C₂-C₈-alkyle, poly-C₁-C₈-alcoxy-C₂-C₈-alkyle à chaque fois le cas échéant substitué par halogène, représente C₃-C₈-cycloalkyle le cas échéant substitué par halogène, C₁-C₆-alkyle ou C₁-C₆-alcoxy ou représente phényle ou benzyle à chaque fois le cas échéant substitué par halogène, cyano, nitro, C₁-C₆-alkyle, C₁-C₆-alcoxy, C₁-C₆-halogénoalkyle ou C₁-C₆-halogénoalcoxy,
R³ représente C₁-C₈-alkyle le cas échéant substitué par halogène ; ou phényle ou benzyle à chaque fois le cas échéant substitué par halogène, C₁-C₆-alkyle, C₁-C₆-alcoxy, C₁-C₄-halogénoalkyle, C₁-C₄-halogénoalcoxy, cyano ou nitro,
R⁴ et R⁵ représentent, indépendamment l'un de l'autre, C₁-C₈-alkyle, C₁-C₈-alcoxy, C₁-C₈-alkylamino, di-(C₁-C₈-alkyl)amino, C₁-C₈-alkylthio, C₂-C₈-alcénylthio, C₃-C₇-cycloalkylthio à chaque fois le cas échéant substitué par halogène ; ou phényle, phénoxy ou phénylthio à chaque fois le cas échéant substitué par halogène, nitro, cyano, C₁-C₄-alcoxy, C₁-C₄-halogénoalcoxy, C₁-C₄-alkylthio, C₁-C₄-halogénoalkylthio, C₁-C₄-alkyle ou C₁-C₄-halogénoalkyle,
R⁶ et R⁷ représentent, indépendamment l'un de l'autre, hydrogène ; C₁-C₈-alkyle, C₃-C₈-cycloalkyle, C₁-C₈-alcoxy, C₃-C₈-alcényle, C₁-C₈-alcoxy-C₁-C₈-alkyle à chaque fois le cas échéant substitué par halogène ; phényle le cas échéant substitué par halogène, C₁-C₈-halogénoalkyle, C₁-C₈-alkyle ou C₁-C₈-alcoxy ; benzyle le cas échéant substitué par halogène, C₁-C₈-alkyle, C₁-C₈-halogénoalkyle ou C₁-C₈-alcoxy; ou ensemble un radical C₃-C₆-alkylène le cas échéant substitué par C₁-C₄-alkyle, dans lequel le cas échéant un atome de carbone est remplacé par oxygène ou soufre,
R¹³ représente hydrogène ; C₁-C₈-alkyle ou C₁-C₈-alcoxy à chaque fois le cas échéant substitué par halogène ; C₃-C₈-cycloalkyle le cas échéant substitué par halogène, C₁-C₄-alkyle ou C₁-C₄-alcoxy, dans lequel le cas échéant un groupe méthylène est remplacé par oxygène ou soufre ; ou phényle, phényl-C₁-C₄-alkyle ou phényl-C₁-C₄-alcoxy à chaque fois le cas échéant substitué par halogène, C₁-C₆-alkyle, C₁-C₆-alcoxy, C₁-C₄-halogénoalkyle, C₁-C₄-halogénoalcoxy, nitro ou cyano,
R^{14a} représente hydrogène ou C₁-C₈-alkyle, ou
R¹³ et R^{14a} représentent ensemble C₄-C₆-alcanediyle,
R^{15a} et R^{16a} sont identiques ou différents et représentent C₁-C₆-alkyle ou
R^{15a} et R^{16a} représentent ensemble un radical C₂-C₄-alcanediyle, qui est le cas échéant substitué par C₁-C₆-alkyle, C₁-C₆-halogénoalkyle ; ou par phényle, le cas échéant substitué par halogène, C₁-C₆-alkyle, C₁-C₄-halogénoalkyle, C₁-C₆-alcoxy, C₁-C₄-halogénoalcoxy, nitro ou cyano,
R^{17a} et R^{18a} représentent, indépendamment l'un de l'autre, hydrogène ; C₁-C₈-alkyle le cas échéant substitué par halogène ; ou phényle le cas échéant substitué par halogène, C₁-C₆-alkyle, C₁-C₆-alcoxy, C₁-C₄-halogénoalkyle, C₁-C₄-halogénoalcoxy, nitro ou cyano, ou
R^{17a} et R^{18a} représentent, ensemble avec l'atome de carbone auquel ils sont liés, un groupe carbonyle ; ou C₅-C₇-cycloalkyle le cas échéant substitué par halogène, C₁-C₄-alkyle ou C₁-C₄-alcoxy, dans lequel le cas échéant un groupe méthylène est remplacé par oxygène ou soufre,
R^{19a} et R^{20a} représentent, indépendamment l'un de l'autre, C₁-C₁₀-alkyle, C₂-C₁₀-alcényle, C₁-C₁₀-alcoxy, C₁-1C₁₀-alkylamino, C₃-C₁₀-alcénylamino, di-(C₁-C₁₀-alkyl) amino ou di-(C₃-C₁₀-alcényl)amino.

3. Composition selon la revendication 1 ou 2, **caractérisée en ce que** les substituants dans la formule (I) sont définis comme suit :
W représente hydrogène, fluor, chlore, brome, C₁-C₄-alkyle, C₂-C₄-alcényle, C₂-C₄-alcynyle, C₁-C₄-alcoxy, C₁-C₂-halogénoalkyle, C₁-C₂-halogénoalcoxy,
X représente chlore, brome, iode, C₁-C₄-alkyle, C₂-C₄-alcényle, C₂-C₄-alcynyle, C₁-C₄-alcoxy, C₁-C₄-alcoxy-C₁-C₃-alcoxy, C₁-C₂-halogénoalkyle, C₁-C₂-halogénoalcoxy ou cyano,
Y représente, en 4ème position, hydrogène, C₂-C₄-alcényle, C₂-C₄-alcynyle, fluor, chlore, brome, iode, méthoxy, éthoxy, cyano, trifluorométhyle, difluorométhoxy ou trifluorométhoxy,
Z représente hydrogène,
W représente également hydrogène, fluor, chlore, brome ou C₁-C₄-alkyle,
X représente également chlore, brome, C₁-C₄-alkyle, C₁-C₄-alcoxy, C₁-C₂-halogénoalkyle, C₁-C₂-halogénoalcoxy ou cyano,
Y représente également, en 4ème position, le radical 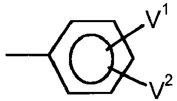
Z représente également hydrogène,
V¹ représente également fluor, chlore, C₁-C₄-alkyle, C₁-C₄-alcoxy, C₁-C₂-halogénoalkyle, C₁-C₂-halogénoalcoxy, cyano ou nitro,
V² représente également hydrogène, fluor, chlore, C₁-C₄-alkyle, C₁-C₄-alcoxy ou C₁-C₂-halogénoalkyle,
V¹ et V² représentent ensemble également -O-CH₂-O- et -O-CF₂-O-,
W représente également hydrogène, fluor, chlore, brome ou C₁-C₄-alkyle,
X représente également chlore, brome, C₁-C₄-alkyle, C₁-C₄-alcoxy, C₁-C₂-halogénoalkyle, C₁-C₂-halogénoalcoxy ou cyano,
Y représente également, en 5ème position, C₂-C₄-alcényle, C₂-C₄-alcynyle ou le radical 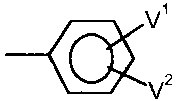
Z représente également, en 4ème position, hydrogène, C₁-C₄-alkyle ou chlore,
V¹ représente également fluor, chlore, C₁-C₄-alkyle, C₁-C₄-alcoxy, C₁-C₂-halogénoalkyle ou C₁-C₂-halogénoalcoxy, cyano ou nitro,
V² représente également hydrogène, fluor, chlore, C₁-C₄-alkyle, C₁-C₄-alcoxy ou C₁-C₂-halogénoalkyle,
V¹ et V² représentent ensemble également -O-CH₂-O- et -O-CF₂-O-,
W représente en outre hydrogène, C₁-C₄-alkyle, C₂-C₄-alcényle, C₂-C₄-alcynyle, C₁-C₄-alcoxy, fluor, chlore, brome ou trifluorométhyle,
X représente en outre fluor, chlore, brome, iode, C₁-C₄-alkyle, C₂-C₄-alcényle, C₂-C₄-alcynyle, C₁-C₄-alcoxy, C₁-C₄-alcoxy-C₁-C₃-alcoxy, C₁-C₂-halogénoalkyle, C₁-C₂-halogénoalcoxy ou cyano,
Y représente en outre, en 4ème position, C₁-C₄-alkyle,
Z représente en outre hydrogène,
W représente en outre hydrogène, fluor, chlore, brome, C₁-C₄-alkyle ou C₁-C₄-alcoxy,
X représente en outre chlore, brome, iode, C₁-C₄-alkyle, C₁-C₄-alcoxy, C₁-C₂-halogénoalkyle, C₁-C₂-halogénoalcoxy ou cyano,
Y représente en outre, en 4ème position, hydrogène, chlore, brome, iode, C₁-C₄-alkyle, C₁-C₂-halogénoalkyle ou C₁-C₂-halogénoalcoxy,
Z représente en outre, en 3ème ou 5ème position, fluor, chlore, brome, iode, C₁-C₄-alkyle, C₁-C₂-halogénoalkyle, C₁-C₄-alcoxy ou C₁-C₂-halogénoalcoxy,
CKE représente de manière particulièrement préférée un des groupes 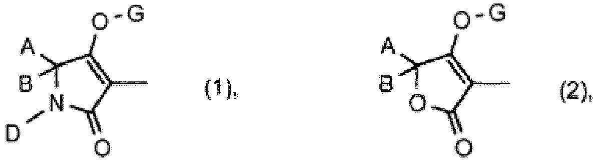 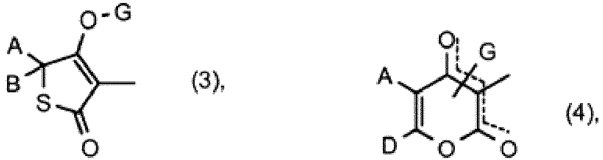 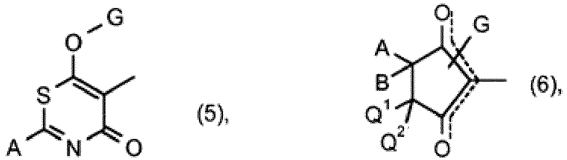 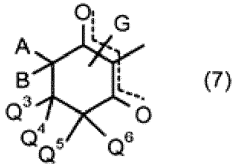 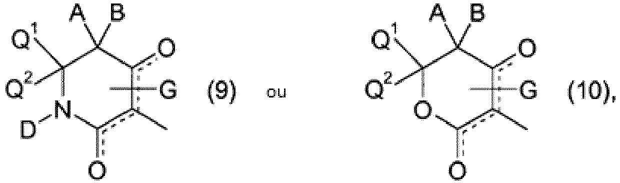
A représente hydrogène ; C₁-C₆-alkyle, C₁-C₄-alcoxy-C₁-C₂-alkyle à chaque fois le cas échéant monosubstitué à trisubstitué par fluor ou chlore ; C₃-C₆-cycloalkyle le cas échéant monosubstitué à disubstitué par C₁-C₂-alkyle ou C₁-C₂-alcoxy ; ou (mais pas dans le cas des composés des formules (1-3), (1-4), (1-6) et (1-7)) phényle ou benzyle à chaque fois le cas échéant monosubstitué à disubstitué par fluor, chlore, brome, C₁-C₄-alkyle, C₁-C₂-halogénoalkyle, C₁-C₄-alcoxy, C₁-C₂-halogénoalcoxy, cyano ou nitro,
B représente hydrogène, C₁-C₄-alkyle ou C₁-C₂-alcoxy-C₁-C₂-alkyle, ou
A, B et l'atome de carbone auquel ils sont liés représentent C₅-C₇-cycloalkyle saturé ou insaturé, dans lequel le cas échéant un élément de cycle est remplacé par oxygène ou soufre et qui est le cas échéant monosubstitué à disubstitué par C₁-C₆-alkyle, trifluorométhyle, C₁-C₆-alcoxy ou C₁-C₃-alcoxy-C₁-C₃-alkyle, à condition que Q³ représente alors hydrogène ou méthyle ou
A, B et l'atome de carbone, auquel ils sont liés, représentent C₅-C₆-cycloalkyle, qui est substitué par un groupe alkylènediyle, contenant le cas échéant un ou deux atomes d'oxygène ou de soufre non directement adjacents, le cas échéant substitué par méthyle ou éthyle ; ou par un groupe alkylènedioxyle ou alkylènedithiol, qui forme, avec l'atome de carbone auquel il est lié, un autre cycle de cinq ou six chaînons, à condition que Q³ représente alors hydrogène ou méthyle ou
A, B et l'atome de carbone auquel ils sont liés représentent C₃-C₆-cycloalkyle ou C₅-C₆-cycloalcényle, dans lesquels deux substituants, ensemble avec les atomes de carbone auxquels ils sont liés, représentent C₂-C₄-alcanediyle, C₂-C₄-alcènediyle ou butadiènediyle à chaque fois le cas échéant substitué par C₁-C₂-alkyle ou C₁-C₂-alcoxy, à condition que Q³ représente alors hydrogène ou méthyle,
D représente hydrogène ; C₁-C₆-alkyle, C₃-C₆-alcényle, C₁-C₄-alcoxy-C₂-C₃-alkyle à chaque fois le cas échéant monosubstitué à trisubstitué par fluor ; C₃-C₆-cycloalkyle, le cas échéant monosubstitué à disubstitué par C₁-C₄-alkyle, C₁-C₄-alcoxy ou C₁-C₂-halogénoalkyle, dans lequel le cas échéant un groupe méthylène est remplacé par oxygène ; ou (mais pas dans le cas des composés de formule (I-1)) phényle ou pyridyle à chaque fois le cas échéant monosubstitué à disubstitué par fluor, chlore, brome, C₁-C₄-alkyle, C₁-C₄-halogénoalkyle, C₁-C₄-alcoxy ou C₁-C₄-halogénoalcoxy, ou
A et D représentent ensemble C₃-C₅-alcanediyle le cas échéant monosubstitué à disubstitué, dans lequel un groupe méthylène peut être remplacé par un groupe carbonyle (mais pas dans le cas des composés de formule (I-1)), oxygène ou soufre et où les substituants qui entrent en considération sont C₁-C₂-alkyle ou C₁-C₂-alcoxy, ou
A et D représentent (dans le cas des composés de formule (I-1)) ensemble avec les atomes, auxquels ils sont liés, un des groupes AD-1 à AD-10 : 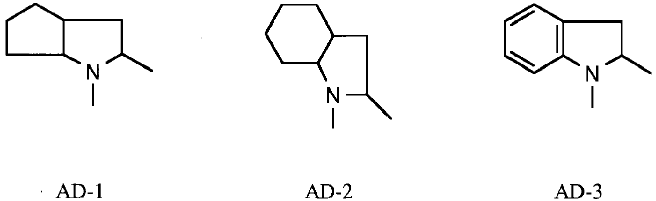 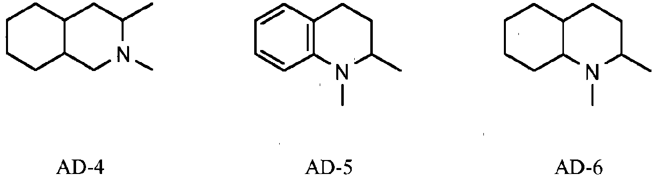 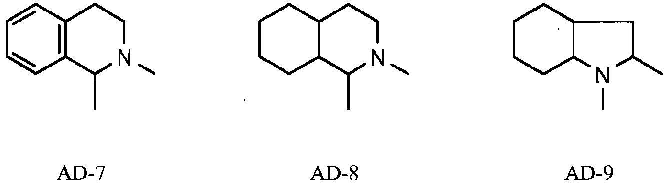 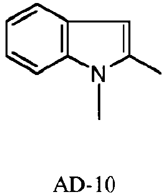 ou
A et Q¹ représentent, ensemble, C₃-C₄-alcanediyle à chaque fois le cas échéant monosubstitué ou disubstitué, de manière identique ou différente, par C₁-C₂-alkyle ou C₁-C₂-alcoxy, ou
D et Q¹ représentent ensemble C₃-C₄-alcanediyle, ou
Q¹ représente hydrogène, C₁-C₄-alkyle, C₁-C₄-alcoxy-C₁-C₂-alkyle ; ou C₃-C₆-cycloalkyle le cas échéant substitué par méthyle ou méthoxy, dans lequel le cas échéant un groupe méthylène est remplacé par oxygène ou soufre,
Q² représente hydrogène, méthyle ou éthyle,
Q⁴, Q⁵ et Q⁶ représentent, indépendamment les uns des autres, hydrogène ou C₁-C₃-alkyle,
Q³ représente hydrogène, C₁-C₄-alkyle ; ou C₃-C₆-cycloalkyle le cas échéant monosubstitué à disubstitué par méthyle ou méthoxy, ou
Q¹ et Q² représentent hydrogène, C₁-C₄-alkyle, C₁-C₄-alcoxy-C₁-C₂-alkyle ; ou C₃-C₆-cycloalkyle le cas échéant substitué par méthyle ou méthoxy, dans lequel le cas échéant un groupe méthylène est remplacé par oxygène, ou
Q³ et Q⁴ représentent, ensemble avec l'atome de carbone auquel ils sont liés, un cycle en C₅-C₆ saturé, le cas échéant substitué par C₁-C₂-alkyle ou C₁-C₂-alcoxy, dans lequel le cas échéant un chaînon de cycle est remplacé par oxygène ou soufre, à condition que A représente alors hydrogène ou méthyle,
G représente hydrogène (a) ou un des groupes 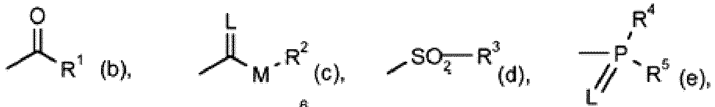 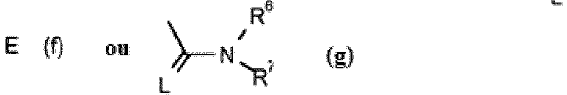 en particulier (a), (b) ou (c), dans lesquels
E représente un équivalent d'ion métallique ou un ion d'ammonium,
L représente oxygène ou soufre et
M représente oxygène ou soufre,
R¹ représente C₁-C₈-alkyle, C₂-C₁₈-alcényle, C₁-C₄-alcoxy-C₁-C₂-alkyle, C₁-C₄-alkylthio-C₁-C₂-alkyle à chaque fois le cas échéant monosubstitué à trisubstitué par fluor ou chlore ; ou C₃-C₆-cycloalkyle le cas échéant monosubstitué à disubstitué par fluor, chlore, C₁-C₂-alkyle ou C₁-C₂-alcoxy, dans lequel le cas échéant un ou deux chaînons de cycle non directement adjacents sont remplacés par oxygène, représente phényle le cas échéant monosubstitué à disubstitué par fluor, chlore, brome, cyano, nitro, C₁-C₄-alkyle, C₁-C₄-alcoxy, C₁-C₂-halogénoalkyle ou C₁-C₂-halogénoalcoxy,
R² représente C₁-C₈-alkyle, C₂-C₈-alcényle ou C₁-C₄-alcoxy-C₂-C₄-alkyle à chaque fois le cas échéant monosubstitué à trisubstitué par fluor, représente C₃-C₆-cycloalkyle le cas échéant monosubstitué par C₁-C₂-alkyle ou C₁-C₂-alcoxy ou représente phényle ou benzyle à chaque fois le cas échéant monosubstitué à disubstitué par fluor, chlore, brome, cyano, nitro, C₁-C₄-alkyle, C₁-C₃-alcoxy, trifluorométhyle ou trifluorométhoxy,
R³ représente C₁-C₆-alkyle le cas échéant monosubstitué à trisubstitué par fluor ; ou phényle le cas échéant monosubstitué par fluor, chlore, brome, C₁-C₄-alkyle, C₁-C₄-alcoxy, trifluorométhyle, trifluorométhoxy, cyano ou nitro,
R⁴ représente C₁-C₆-alkyle, C₁-C₆-alcoxy, C₁-C₆-alkylamino, di-(C₁-C₆-alkyl)amino, C₁-C₆-alkylthio, C₃-C₄-alcénylthio, C₃-C₆-cycloalkylthio ; ou phényle, phénoxy ou phénylthio à chaque fois le cas échéant monosubstitué par fluor, chlore, brome, nitro, cyano, C₁-C₃-alcoxy, C₁-C₃-halogénoalcoxy, C₁-C₃-alkylthio, C₁-C₃-halogénoalkylthio, C₁-C₃-alkyle ou trifluorométhyle,
R⁵ représente C₁-C₆-alcoxy ou C₁-C₆-alkylthio,
R⁶ représente hydrogène, C₁-C₆-alkyle, C₃-C₆-cycloalkyle, C₁-C₆-alcoxy, C₃-C₆-alcényle, C₁-C₆-alcoxy-C₁-C₄-alkyle ; phényle le cas échéant monosubstitué par fluor, chlore, brome, trifluorométhyle, C₁-C₄-alkyle ou C₁-C₄-alcoxy ; benzyle le cas échéant monosubstitué par fluor, chlore, brome, C₁-C₄-alkyle, trifluorométhyle ou C₁-C₄-alcoxy,
R⁷ représente C₁-C₆-alkyle, C₃-C₆-alcényle ou C₁-C₆-alcoxy-C₁-C₄-alkyle,
R⁶ et R⁷ représentent ensemble un radical C₄-C₅-alkylène le cas échéant substitué par méthyle ou éthyle, dans lequel le cas échéant un groupe méthylène est remplacé par oxygène ou soufre.

4. Composition selon l'une quelconque des revendications 1 à 3, **caractérisée en ce que** la substance active est choisie dans la liste suivante

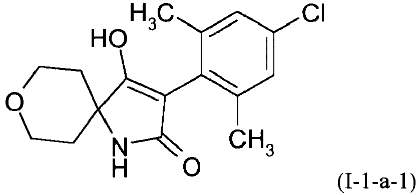

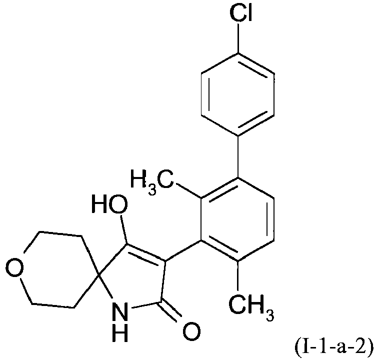

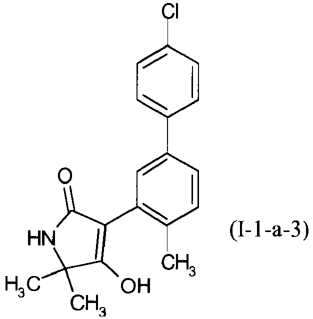

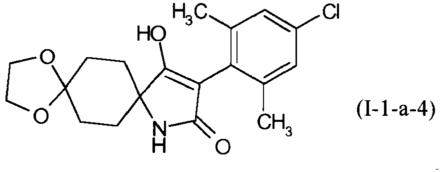

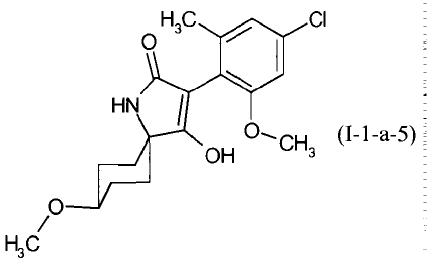

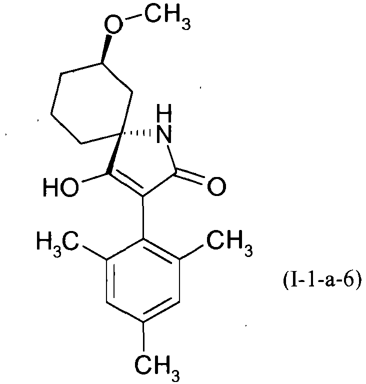

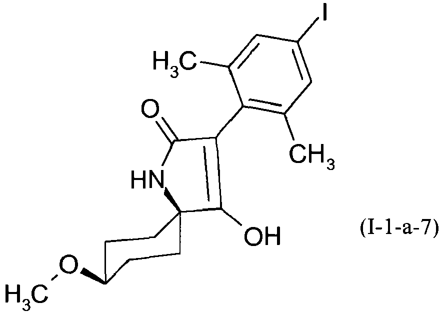

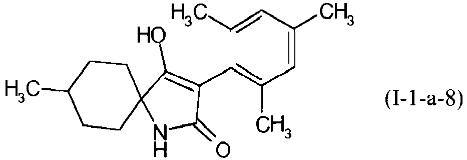

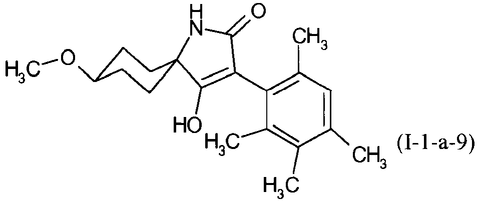

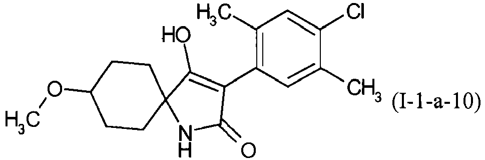

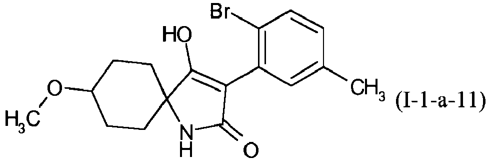

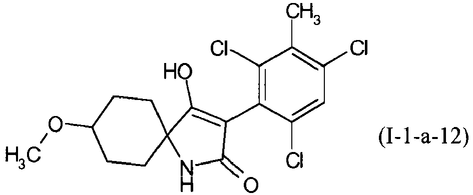

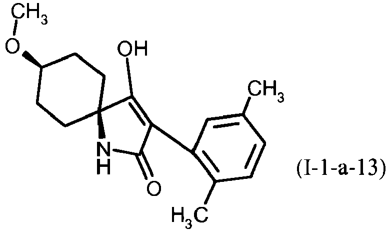

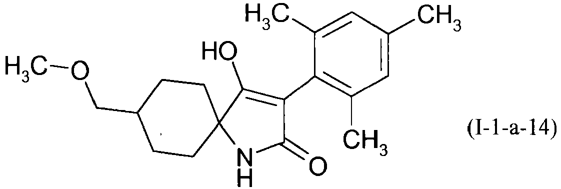

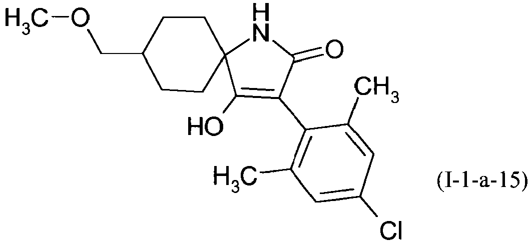

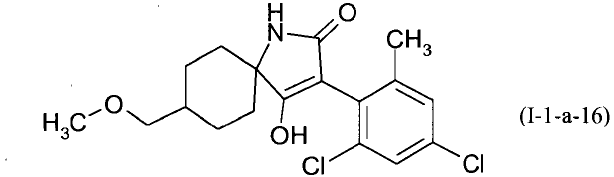

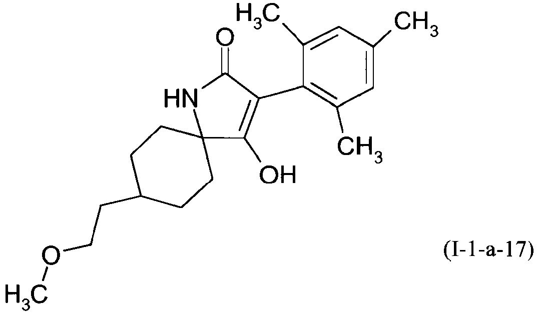

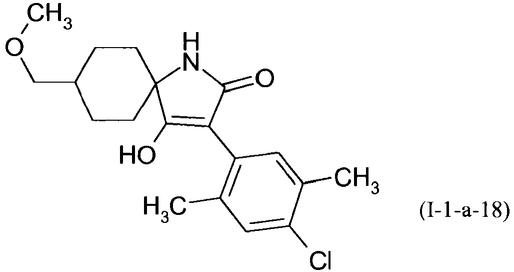

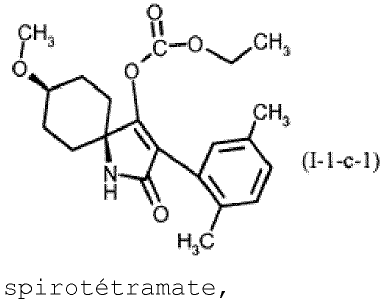

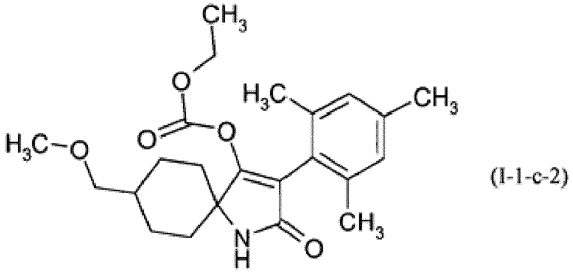

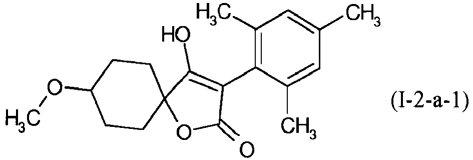

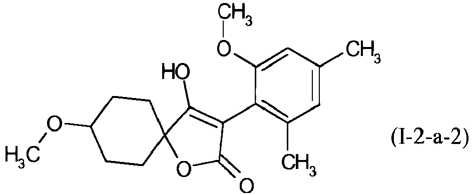

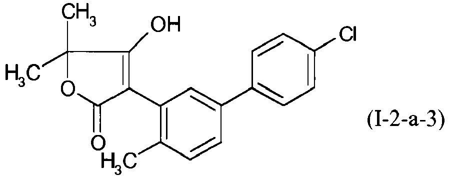

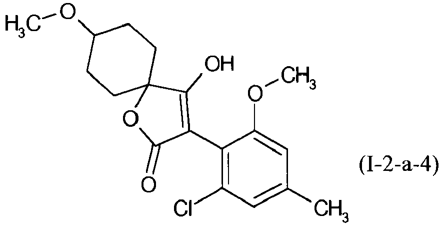

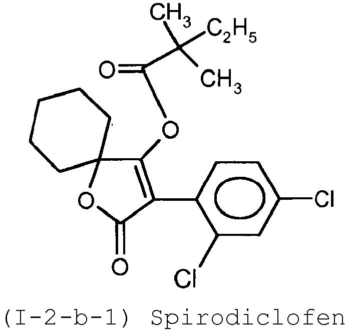

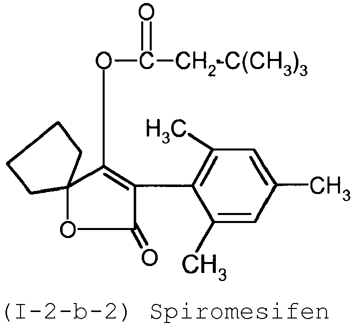

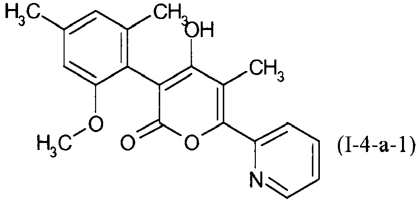

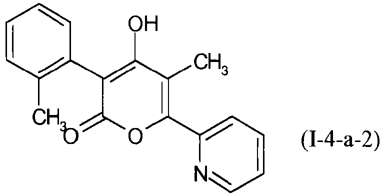

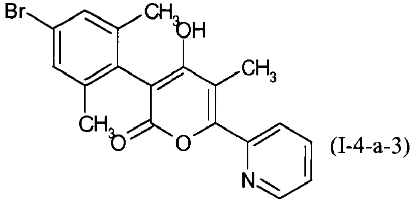

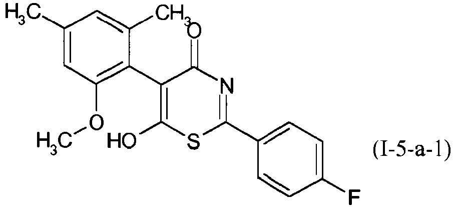

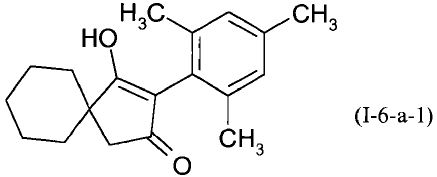

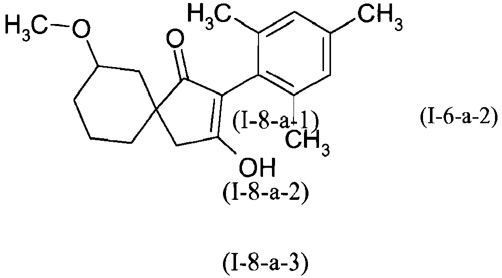

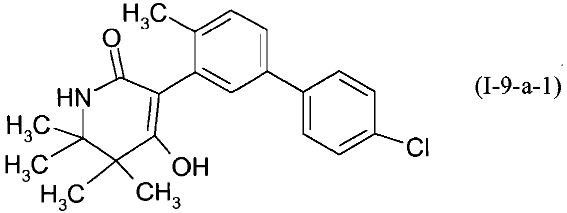

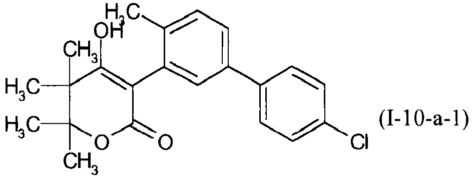

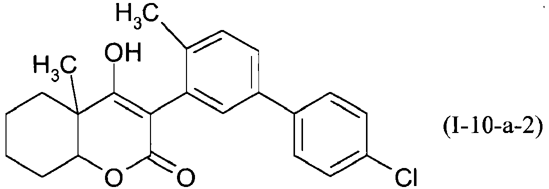

5. Composition selon l'une ou plusieurs des revendications 1 à 4, **caractérisée en ce que** la teneur en substance active est située entre 0,5 et 50% en poids.

6. Composition selon l'une ou plusieurs des revendications 1 à 5, **caractérisée en ce que** la teneur en sel d'ammonium ou de phosphonium est située entre 0,5 et 80 mmoles/l.

7. Composition selon l'une quelconque des revendications 1 à 6, **caractérisée en ce que** D représente azote.

8. Composition selon la revendication 7, **caractérisée en ce que** R³⁰ représente hydrogénocarbonate, tétraborate, fluorure, bromure, iodure, chlorure, monohydrogénophosphate, dihydrogénophosphate, hydrogénosulfate, tartrate, sulfate, nitrate, thiosulfate, thiocyanate, formiate, lactate, acétate, propionate, butyrate, pentanoate, citrate ou oxalate.

9. Composition selon la revendication 7, **caractérisée en ce que** R³⁰ représente carbonate, pentaborate, sulfite, benzoate, hydrogénoxalate, hydrogénocitrate, méthylsulfate ou tétrafluoroborate.

10. Composition selon la revendication 7, **caractérisée en ce que** R³⁰ représente lactate, sulfate, nitrate, thiosulfate, thiocyanate, citrate, oxalate ou formiate.

11. Composition selon la revendication 7, **caractérisée en ce que** R³⁰ représente thiocyanate, dihydrogénophosphate, monohydrogénophosphate ou sulfate.

12. Composition selon l'une quelconque des revendications 1 à 11, **caractérisée en ce que** l'agent favorisant la pénétration est un ester d'une huile végétale.

13. Composition selon l'une quelconque des revendications 1 à 11, **caractérisée en ce que** l'agent favorisant la pénétration est l'ester méthylique de l'huile de colza.

14. Composition selon l'une quelconque des revendications 1 à 13, **caractérisée en ce que** la teneur en agent favorisant la pénétration est de 1 à 95% en poids.

15. Procédé pour lutter contre des insectes nuisibles et/ou des acariens, **caractérisé en ce qu'**une composition selon l'une ou plusieurs des revendications 1 à 14 est appliquée, sous forme non diluée ou diluée, sur des insectes et/ou des acariens ou leur espace de vie en une quantité telle qu'une quantité active des substances actives contenues agit sur les insectes et/ou les acariens ou leur espace de vie.

16. Procédé pour augmenter l'action d'agents phytoprotecteurs contenant une substance active de la classe des cétoénols cycliques substitués par phényle de formule (I) selon la revendication 1, **caractérisé en ce que** l'agent prêt à l'emploi (bouillon à pulvériser) est préparé avec utilisation d'un sel de formule (II) ainsi que d'un agent favorisant la pénétration selon la revendication 1.

17. Procédé selon la revendication 16, **caractérisé en ce que** le sel de formule (II) est présent en une concentration finale de 0,5 à 80 mmoles/l.

18. Procédé selon la revendication 16, **caractérisé en ce que** l'agent favorisant la pénétration est présent en une concentration finale de 0,1 à 10 g/l.

19. Procédé selon la revendication 16, **caractérisé en ce que** l'agent favorisant la pénétration est présent en une concentration finale de 0,1 à 10 g/l et le sel de formule (II) est présent en une concentration finale de 0,5 à 80 mmoles/l.

20. Utilisation d'un sel de formule (II) selon la revendication 1 pour augmenter l'action d'un agent phytoprotecteur contenant une substance active de la classe des cétoénols cycliques substitués par phényle, **caractérisée en ce que** le sel de formule (II) ainsi qu'un agent favorisant la pénétration selon la revendication 1 sont utilisés lors de la préparation d'un agent phytoprotecteur prêt à l'emploi (bouillon à pulvériser).

21. Utilisation selon la revendication 20, **caractérisée en ce que** le sel de formule (II) est présent dans l'agent phytoprotecteur prêt à l'emploi en une concentration de 0,5 à 80 mmoles/l.
